(19) Europäisches Patentamt
European Patent Office
Office européen des brevets

(11) EP 0 836 167 B1

(12) EUROPEAN PATENT SPECIFICATION

(45) Date of publication and mention of the grant of the patent:
**17.05.2006 Bulletin 2006/20**

(51) Int Cl.:
***G08G 1/00*** *(2006.01)* ***G08G 1/0969*** *(2006.01)*

(21) Application number: **97114483.7**

(22) Date of filing: **21.08.1997**

(54) **Device for displaying map and method**

Gerät zur Anzeige von Karten und Verfahren dazu

Appareil d'affichage de carte et méthode

(84) Designated Contracting States:
**DE FR GB IT**

(30) Priority: **21.08.1996 JP 23979596**
**07.09.1996 JP 25784796**
**01.10.1996 JP 26107596**
**11.10.1996 JP 28924696**
**15.10.1996 JP 27200996**
**04.08.1997 EP 97113424**

(43) Date of publication of application:
**15.04.1998 Bulletin 1998/16**

(73) Proprietor: **AISIN AW CO., LTD.**
**Anjo-shi**
**Aichi-ken (JP)**

(72) Inventors:
- **Hayashida, Kihachi**
**Fujii-cho,**
**Anjo-shi,**
**Aichi-ken (JP)**
- **Yanagikubo, Takeshi**
**Fujii-cho,**
**Anjo-shi,**
**Aichi-ken (JP)**
- **Hayashi, Chihiro**
**Fujii-cho,**
**Anjo-shi,**
**Aichi-ken (JP)**

(74) Representative: **Vossius & Partner**
**Siebertstrasse 4**
**81675 München (DE)**

(56) References cited:
**EP-A- 0 579 451** **US-A- 5 274 387**
**US-A- 5 315 298** **US-A- 5 371 497**
**US-A- 5 398 188**

- **PATENT ABSTRACTS OF JAPAN vol. 096, no. 010, 31 October 1996 & JP 08 145708 A (SUMITOMO ELECTRIC IND LTD), 7 June 1996,**
- **PATENT ABSTRACTS OF JAPAN vol. 096, no. 002, 29 February 1996 & JP 07 270172 A (SUMITOMO ELECTRIC IND LTD), 20 October 1995,**
- **PATENT ABSTRACTS OF JAPAN vol. 096, no. 009, 30 September 1996 & JP 08 128835 A (SUMITOMO ELECTRIC IND LTD), 21 May 1996,**
- **PATENT ABSTRACTS OF JAPAN vol. 096, no. 005, 31 May 1996 & JP 08 005721 A (NEC HOME ELECTRON LTD), 12 January 1996,**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 836 167 B1

Printed by Jouve, 75001 PARIS (FR)

## Description

This invention is related to a map display device to guide and search a route along which a vehicle is to move based on the map information, especially this invention relates to the improvement of the display of the map information.

A map is shown on a conventional map display device, e.g. a conventional navigation device, a requested destination is set and an optimal guide route which links this destination and a present position of the vehicle is retrieved and is shown. Then when another route is required while the vehicle is traveling this route, this other route is searched and is guided. In the search of this other route, the search cost of the road on which the car travels at present is raised and the another route is re-searched by a condition which is different from a search condition of the route which is guiding at present. In this way, the road travelled at present is excluded and a new guide route is searched.

Also in the conventional device, when a vehicle deviates from a guide route, new route is automatically re-searched from the present position. Or when a re-search key is operated, this re-search is executed. At this conventional device, a neighborhood of a present position is searched first and a whole route is searched by a request of a user. In the search of the neighborhood, a route which returns to a previous route is searched and in a whole route searching, a whole route to the destination is searched.

US-5,398,188 relates to a navigation apparatus and a method for a vehicle for displaying positional information of the same. The navigation apparatus used in a vehicle and associated display method are designed to spot the current position of the vehicle on maps displayed in a base field and a window field of a display screen. The apparatus includes a memory for storing map information and sensors for detecting the position and moving direction of the vehicle. A portion of the map information is retrieved from the memory in accordance with the sensor outputs and displayed in the base field such that certain azimuth, e.g., the north, faces upwards. Another portion of the map information is retrieved from the memory and displayed in the window field such that the moving direction faces upwards. However, a different scale and a different place is displayed in a first and a second screen.

US-5,315,298 discloses an apparatus and a method of displaying a car navigating map. The apparatus comprises a storage storing data of a map including a plurality of areas at different levels of detailedness, a determinant determining whether or not there is a boundary of the areas having different levels of detailedness on the screen of a display, and controller controlling the display to display the entire map on the screen at a lower level of detailedness when the determinant determines that there is the boundary of the areas on the screen of the display. However, there is no disclosure regarding displaying map information that has the same reduced scale and different road classification on a plurality of screens.

It is the object of the invention to provide an improved map display device wherein map information can be easily recognized.

The object is achieved by the features of the claims.

In the following it is shown how some problems of the conventional navigation devices are overcome by the invention.

In the conventional navigation device, one map is shown in a whole screen of a display device. However recently the price of the liquid crystal display declined and the screens also get wider. Therefore geographical information of a wider range is displayed, and a more detailed geographical information is shown.

However, in some movement conditions, the wide range geographical information isn't necessary at times. For example when the vehicle (car) approaches the destination, only a geographical relation between the vehicle and the destination should be shown. The other geographical information isn't necessary. In this case the necessary geographical information is sufficiently displayed in a part of the screen together with unnecessary geographical information. Further information which isn't too necessary in some movement situation is sometimes shown in screens with conventional areas.

Moreover when several routes are retrieved from a present position of the car to the destination, each guide route is alternately displayed in one screen and, therefore, the routes cannot be compared sufficiently with each other. The routes are not clearly distinguished from each other when several guide routes are displayed at once on one screen and parts of the routes overlap.

To solve the above problem, in this invention, a screen which displays a map is divided into more than one screen, according to the travel condition of the car. A simple map which shows the geographical relation between a present position of the car and a destination is shown in a 1st screen, detailed map information is shown in a 2nd screen. Therefore a person can see the direction of the destination immediately and can see detailed geographical information around the present position of the car at the same time.

Also when the car approaches a point where it is to turn to the right or left, a geographical information on the right or left turn on the identified route is shown in the 1st screen. Moreover at this time, a detailed map is displayed in the 2nd screen. In this detailed map, an information quantity which is displayed according to a travel condition of the car is adjusted. Therefore the user can know the direction in which the car should progress and receives geographical information around the car.

Moreover, an oriented map, i.e. a map whose (upper) margin is north, is displayed in the 1st screen, and a direction map, i.e. a map whose (upper) margin is :the direction of the progress, is displayed in the 2nd screen.

Also when another route is searched at the conventional navigation device, based on this other new route, it is guided to the destination. For example this other route is searched according to a request of a user when the route is congested during traveling. This other route is sometimes a great detour compared to a previous route, but as the previous route has been erased and cannot be compared to the other route. Further, plural routes which are searched by the different search condition can not be compared with each other.

Moreover the other route is searched when the vehicle deviates from a route or at the time of an indication of a user, and guidance is executed by the other new route. However when another re-searched route makes a fairly big round compared to the previous route, the previous route would be a better guide. However the previous route has been erased and can not be compared with the other route. Also the route can not be compared by the above neighborhood searching and by the wide range searches.

Moreover, this is also the case in the following situation. The car deviates from the guide route temporarily because the vehicle deviates from the guide route while traveling and returns to the above guide route after that. For example, it is to finish a suddenly occurring occupation or to bypass a road which is crowded. However in the conventional navigation device, a mark of the car (vehicle) becomes the center of a map screen, therefore the previous guide route isn't included in the screen and sometimes the guide route isn't shown at all. In this case, a direction and a position of the previous guide route can not be immediately confirmed in the screen. Therefore it is necessary for the scale of the map to be reduced and for the previous guide route to be displayed.

Moreover a new guide route which is re-searched when the car deviates from the guide route is not always a better route. Rather it would sometimes be better to return to the previous guide route. When the present position of the car and the previous guide route aren't displayed in one screen, this return is difficult. Moreover a position of the car and a new guide route can not be compared with each other.

Also when the facilities in the neighborhood are dropped during the travel on the guide route, it is not possible to display a return route to this guide route and the neighborhood of the car together in the center of the screen. Moreover, the information with the retrieving condition which is necessary when a destination or a drop in place is set can be sufficiently shown in a part of a screen, and therefore a wide display screen isn't sufficiently utilized. Also, because a user switches the screen when he wants to specify a retrieving condition, he must switch the previous screen back or return to the first input screen when he wants to see a previous specification condition.

To solve the above problem, in this invention, the screen which displays a map is divided into more than one screen, when the car deviates from the guide route, the new searched route is displayed in the 1st screen and the guide route which was searched previously is shown in the 2nd screen. In the map which is displayed in this 2nd screen, an information quantity which is displayed according to a traveling condition of the car is adjusted. Therefore, the direction in which the car should progress and a geographical information around the car can be seen together.

Also a guide route and a map around the present position of the car are displayed in the 1st screen, and the map and the destination which connects with the guide route of the 1st screen are shown in the 2nd screen. According to the travel position of the car, the direction of a right or left turn in the guide route, the direction of the destination or information about the destination and so on are alternately shown in this 1st screen.

Moreover different guide routes from the present position of the car to the destination are displayed in the above 1st screen and the 2nd screen and can be chosen.

Also a whole return route which returns to the guide route and a part of the guide route are shown in the 1st screen when the car deviates from the guide route. A map centered on the present position of the car or a re-searched new guide route is shown in the above 2nd screen. Further the return route of the 1st screen is displayed when guidance beginning is instructed and is shown at a maximum in a whole screen.

Moreover a destination or a drop in place is set, the result of a facility retrieving by the 1st retrieving condition is displayed in the 1st screen and a choice branch of another new retrieving condition is shown in the above 2nd screen. After this, the result of a facility extraction by a new retrieving condition is displayed in the 2nd screen and a choice branch of this new retrieving condition is shown in the 1st screen. Therefore, the retrieving condition to extract facilities and the retrieving result are shown in parallel in the divided screen.

All the words "destination", "drop-in place" or "guidance ending point" respectively in this application papers include "destination", "drop-in place" and "guidance ending point". All the words "present position", "start point", "drop-in place" or "guidance beginning" respectively in this application papers include "present position", "start point", "drop-in place" and "guidance beginning".

Figure 1 shows a whole circuit of a navigation device.
Figure 2 shows a data structure which is memorized in data 38c at an information memory unit 37.
Figure 3 shows data which is memorized in RAM 5.
Figure 4 shows the structure of a road data file F4.
Figure 5 shows a flow chart of a whole processing.

Figure 6 shows a flow chart of a guidance/display processing of 1st embodiment.
Figure 7 shows a subroutine of single screen display processing of 1st embodiment.
Figure 8 shows a subroutine of screen division processing of 1st embodiment.
Figure 9 shows a screen which is shown in a display 33.
Figure 10 shows a divided screen of a display 33.
Figure 11 shows a subroutine of 3rd screen display processing of 1st embodiment.
Figure 12 shows a subroutine of a display processing of a fore route of a 1st embodiment.
Figure 13 shows a subroutine of calculation processing of a possible display range of 1st embodiment.
Figure 14 shows a screen in which a fore guide route is displayed.
Figure 15 shows a subroutine of display processing of a whole route (fore) of 1st embodiment.
Figure 16 shows a screen where the remainder of a guide route, i.e. a whole route to a destination is displayed.
Figure 17 shows a simple map which is displayed in a display 33.
Figure 18 shows a circuit which is provided between a image memory 10 and a display 33.
Figure 19 shows a flow chart of a guidance/display processing of 2nd embodiment.
Figure 20 shows a divided screen of a display 33 by 2nd an embodiment.
Figure 21 shows a flow chart of a guidance/display processing of 3rd embodiment.
Figure 22 shows a flow chart of a guidance/display processing of 4th embodiment.
Figure 23 shows a screen of a display 33 before the screen is divided.
Figure 24 shows a divided screen of a display 33.
Figure 25 shows a divided screen of a display 33.
Figure 26 shows a single screen whose division of a display 33 was canceled.
Figure 27 shows a flow chart of a guidance/display processing of 5th embodiment.
Figure 28 shows a screen of a display 33 before a screen is divided.
Figure 29 shows a divided screen of a display 33.
Figure 30 shows a divided screen of a display 33.
Figure 31 shows a single screen whose division of a display 33 was canceled.
Figure 32 shows a divided screen of a display 33.
Figure 33 shows a divided screen of a display 33.
Figure 34 shows a flow chart of a guidance/display processing of 6th embodiment.
Figure 35 shows a flow chart of a processing of a deviating route.
Figure 36 shows a flow chart of the initial showing of a 2nd screen of Figure 35 in 1st embodiment.
Figure 37 shows a flow chart of the initial showing of a 2nd screen of figure 35 in 2nd embodiment.
Figure 38 shows a flow chart of a display adjustment of a 2nd screen in a guidance/display processing of Figure 34 of 1st embodiment.
Figure 39 shows a flow chart of a display adjustment of a 2nd screen in a guidance/display processing of Figure 34 of 2nd embodiment.
Figure 40 shows a screen of a display 33 before a screen is divided.
Figure 41 shows a divided screen of a display 33 immediately after deviation from a guide route.
Figure 42 shows a state in which a return route 258 is displayed in a 2nd screen.
Figure 43 shows a divided screen of a display 33 when a car leaves a guide route greatly.
Figure 44 shows a state in which a return route 260 is displayed in a 2nd screen of Figure 43.
Figure 45 shows a state in which a return route 260 is displayed in a 2nd screen of Figure 43.
Figure 46 shows an example of applying a display of a display 33 immediately after leaving a guide route.
Figure 47 shows each node of the guide route etc.
Figure 48 shows an area of a display when a map is displayed in a 2nd screen.
Figure 49 shows a flow chart of setting processing of the nearest facilities.
Figure 50 shows an example of a genre list.
Figure 51 shows a state where facilities which correspond to a specification genre are displayed at a divided screen.
Figure 52 shows a state of a divided screen.
Figure 53 shows a subroutine of extraction of facilities along a route.
Figure .54 shows a subroutine which calculates the shortest straight line distance between retrieved facilities and a guide route.
Figure 55 shows the position relation between retrieved facilities and a guide route.
Figure 56 explains processing of a step SX36.
Figure 57 explains calculation of the shortest straight line distance.
Figure 58 shows postcode choice data 50.
Figure 59 shows contents of street list data 55.
Figure 60 shows contents of facility genre list data 60.

Figure 61 shows contents of street shape data 65.
Figure 62 shows contents of facility list data 70.
Figure 63 shows contents of area shape data 75.
Figure 64 shows a flow chart of destination setting processing (a step SA3).
Figure 65 shows a subroutine of a representative point map display and destination setting.
Figure 66 shows a subroutine of a display of a street name and destination setting.
Figure 67 shows a subroutine of a genre list display and destination setting.
Figure 68 shows a screen of a postcode and an item choice.
Figure 69 shows a display example in a specification area.
Figure 70 shows a street list.
Figure 71 shows a state in which a street is displayed.
Figure 72 shows a display example of a genre list.
Figure 73 shows a state where facilities which correspond to a specification genre and facilities which correspond to a specific brand are displayed at a divided screen.

PRO(S).:PROCESSING(S), DIR.:DIRECTION, DIS(S).:DISTANCE(S), DISS.:DISTANCES, CLA.:CLASSIFICATION, POS.:POSITION, No(s).:NUMBER(S), IDN.:IDENTIFIED, IND.:INDICATE, INDD.:INDICATED, INDN.:INDICATION, INSC(S).:INTERSECTION(S), INSCG.:INTERSECTING, PRED.:PREDETERMINED, PAR.:PARTICULAR, DES(S).:DESTINATION, DET.:DETERMINE, DETG.:DETERMINING, DETD.:DETERMINED, DETN. :DETERMINATION, OVE.:OVERLAPPED, PER.:PERIPHERAL, DELG.:DELETING, DEL.:DELETE, DELD.:DELETED, REPR.:REPRESENTATIVE, ST:STREET, FAC.:FACILTIES, RED.:REDUCED, CON.:CONNECTION.

1. Summary of the embodiments

(1) When a single screen (a 1st screen) is divided (step SC4), a direction map or an oriented map is shown in one part of the screen (a 2nd screen) which was divided (Steps SC20, SC22). The present position of a car and the distance to a direction, and the destination etc. are shown in the other part of the divided screen (a 3rd screen) (step SC24). This is a simple map with the necessary minimum information. After this, an other guidance/display processing is executed (step SC18).

(2) When a single screen (a 1st screen) is divided (steps SB10, SB12), the fore route is displayed (step SB18) or the whole route with the remainder is shown (step SB22) in one part of the screen (a 2nd screen) which was divided. All the words "fore" in this application papers include "front" and "forward". A map which was displayed in a single screen (a 1st screen) before division is shown in the other part of the divided screen (a 3rd screen) (step SB14). After this, an other guidance/display processing is executed (step SB8).

(3) When another route is searched (steps SL4, SL8), a single screen (a 1st screen) is divided (step SL10). A guide route which was searched at a N-th is displayed in one part of the screens (a 2nd screen) which was divided and a guide route which was searched at a (N-1)th is shown in the other part of the divided screen (a 3rd screen) (step SL12). A guide route in a 2nd screen or in 3rd a screen is selected after this (step SL30).

(4) When a car deviates from a guide route (step SQ2), a processing to deviating route is executed (step SQ4), and a return route is searched (step SR14) and a single screen (a 1st screen) is divided (step SR16). A return route which includes a car is shown in one of the screens (a 2nd screen) which were divided (step SR16B). A map which was displayed in a screen (a 1st screen) before division is shown in the other which divided screen (a 3rd screen) (step SQ28).

(5) When a genre selection is directed (step SX2), a list for a genre choice is shown in a screen before division (step SX4). When one genre is chosen and specified, a single screen (a 1st screen) is divided (step SX10) and all facilities corresponding to a specified genre are shown in one of the screens (a 2nd screen) which were divided (step SX12). A list of an sales article which is the following selection condition is shown in the other screen (a 3rd screen) which is divided (step SX14). If facilities are chosen and specified after this, screen division is canceled and specified facilities are set as drop-in places (step SX28).

2. Overall Circuitry

Figure 1 illustrates the overall circuitry of the navigation device. A central processor 1 controls the operation of the whole navigation device. The central processor 1 comprises with a CPU 2, a flush memory 3, a RAM 5, a ROM 4, a sensor input interface 7, a communication interface 8, an image (picture) processor 9, an image (picture) memory 10, a voice processor 11 and a clock (clock generator) 6. The CPU 2 and the devices up to the clock 6 are connected together through a CPU local bus 15 , and the data are exchanged among these devices.

A flash memory 3 is composed of a memory (EEPROM) etc. by which it can to be erased electrically and stored. Computer programs 38b which are memorized at an information memory unit 37 (a outside storage media/means) are copied and are memorized (Installed/transferred) in this flash memory 3 (an inner storage media/means). Also programs 38b which are sent through a data sending and a data transmitter/receiver (sending/receiving) unit 27 from an outside system are copied and are memorized in a flash memory 3. These programs 38b correspond to different processing in each flow chart explained later and are executed in CPU 2. For example, these programs 38b correspond to a display control of information and a guidance control by sound (voice) and so on.

This installation (transferring/copy) is automatically executed when an information memory unit 37 is set in this navigation device, and is also automatically executed when the power of this navigation device is turned on or is executed by an operator. This information memory unit 37 can be replaced with the other information memory unit 37 and it is replaced with a newer one or the latest one in the above program and data. As a result, the latest navigation system is supplied by this replacement.

The flush memory 3 stores a variety of parameters required for the programs. The ROM 4 stores figure data to be displayed and various general-purpose data. The figure data to be displayed are used for route guidance and map showing on the display 33. The general-purpose data include voice waveforms recording synthetic or human voice for voice guidance, and are used for the navigation operation.

The RAM 5 stores data input from external units, a variety of parameters used for the arithmetic operation, the operation results and programs for navigation. The clock 6 comprises a counter, a battery backed-up RAM or EPROM, etc., and outputs time data.

The sensor input interface 7 comprises an A/D converter circuit or a buffer circuit. The sensor input interface 7 receives analog or digital sensor data from the sensors 21 to 24 of a present position detector 20. The present position detector 20 includes an absolute direction sensor 21, a relative direction sensor 22, a distance sensor 23 and a vehicle speed sensor 24.

The absolute direction sensor 21 is, for example, a terrestrial magnetism sensor and detects terrestrial magnetism. The absolute direction sensor 21 outputs data indicating a south-and-north direction which serves as the absolute direction. The relative direction sensor 22 is, for example, a steering angle sensor and detects the steering angle of the wheel based upon a gyroscope such as optical fiber gyroscope or piezo-electric vibration gyroscope. The relative direction sensor 22 outputs a relative angle of a direction of progress of the car with respect to the absolute direction detected by the absolute direction sensor 21.

The distance sensor 23 comprises a counter or the like interlocked with, for example, an odometer. The distance sensor 23 outputs data indicating the distance travelled by the car. The vehicle speed sensor 24 comprises a counter or the like connected to a speedometer. The vehicle speed sensor 24 outputs data that vary in proportion to the running speed of the car.

An I/O data bus 28 is connected to the communication interface 8 of the central processor 1. To the I/O data bus 28 are connected the GPS receiver unit 25, the beacon receiver unit 26 and the data transmitter/receiver unit 27 of the present position detector 20. To the I/O data bus 28 are further connected a touch switch 34 and a printer 35 of the input/output unit 30, and an information memory unit 37. That is, a variety of data are exchanged between the external accessory equipment and the CPU local bus 15 through the communication interface 8.

The present position detector 20 outputs data for detecting the present position of the car. In other words, the absolute direction sensor 21 detects the absolute direction. The relative direction sensor 22 detects the relative direction with respect to the absolute direction. Furthermore, the distance sensor 23 detects the distance travelled. The vehicle speed sensor 24 detects the running speed of the car. The GPS receiver unit 25 receives GPS (Global Positioning System) signals to detect position data such as the longitude and latitude of the car. The GPS signals are microwaves transmitted from a plurality of satellites orbiting round the earth.

Similarly the beacon receiver unit 26 receives beacon signals from a data offering system such as VICS (Vehicle Information and Communication System) or the like, and the received data and the corrected data of GPS are outputted to the I/O data bus 28.

The data transmitter/receiver unit 27 exchanges a variety of information related to the present position or the road conditions near the car relative to the bi-directional present position information offering system or the ATIS (advanced traffic information service), etc. by utilizing a cellular phone, FM multiplex signals or a telephone circuit. This information is used as an information to detect the car position or a support information of movement. The beacon receiver unit 26 and the data transmitter/receiver unit 27 need not be provided, as for this data sending and transmitter/receiver unit 27, a radio receiver, a television receiver, a carrying telephone, a pager or the other radio communication machine can be used.

The input/output device 30 comprises a display 33, a transparent touch panel 34, a printer 35 and a speaker 13. The display 33 displays guide data during the navigation operation. The touch panel 34 is constituted by a plurality of transparent touch switches arranged in the form of a matrix on a plane, and adheres to the screen of the display 33.

By using the touch panel 34, data necessary for setting the destination, such as the start point, destination, passing points, drop-in places, etc. are inputted into the navigation device.

A printer 35 is used for printing a variety of data such as the map and guide routes to facilities outputted through the communication interface 8. Information of various kinds is transmitted by voice to the user from the speaker 13. The printer 35 may be omitted.

The display 33 may be a CRT, a liquid crystal display or a plasma display, and displays pictures. Desirably, however, the liquid crystal display is preferred as a display 33 because it consumes only small amounts of electric power, provides very clear pictures, and is light in weight. In this embodiment (invention), the display 33 is a liquid crystal display having a wider screen.

Furthermore, this display 33 may be composed of more than 2 liquid crystal displays which can be separated. Then each liquid crystal display is connected with an image processor 9 respectively with an independent video signal cable and is placed in the same or a different position to each other.

An image memory 10 such as DRAM (dynamic RAM) or dual port DRAM is connected to the image processor 9 that is connected to the display 33. The picture data are written into the image memory 10 by the image processor 9. Furthermore, being controlled by the image processor 9, the data are read from the image memory 10 and are displayed on the display 33.

Depending on the division of the screen of a display 33, an image memory 10 is also divided into an area for a 2nd screen and an area for a 3rd screen and independent image data is written in each. Depending on this division, an address of each memory element of a image memory 10 is also divided within a 2nd screen and a 3rd screen.

In accordance with a drawing command from the CPU 2, the image processor 9 converts the map data and character data into picture data for display and writes them into the image memory 10. At this moment, the peripheral picture on the screen is also formed and is written into the image memory 10. Therefore the peripheral picture can be also readily displayed upon scrolling.

When the screen of the display 33 is divided, a memory area of image memory 10 is divided corresponding to the divided screen. And image data which are different each other are written into each divided memory area of image memory 10.

A voice processor 11 is connected to the speaker 13. The voice processor 11 is connected to the CPU 2 and to the ROM 4 through the CPU local bus 15. The voice waveform data for voice guidance read out from the ROM 4 by the CPU 2 are inputted into the voice processor 11. The voice waveform data are converted into analog signals by the voice processor 11, and are outputted from the speaker 13. The voice processor 11 and the image processor 9 comprise general-purpose DSPs (digital signal processors) or the like.

The information memory unit 37, is connected to the I/O data bus 28 through the data transmitter/receiver 39. In a nonvolatile manner, disk management information 38a, programs 38b and data 38c such as road map data necessary for the navigation operation are stored in the information memory unit 37. The disk management information 38a is related data or programs stored in the information memory unit 37, for example version information of the programs 38b. The information memory unit 37 is provided with a data transmitter/receiver 39 for reading data written into the information memory unit 37 and outputting them onto the I/O data bus 28.

The information memory unit 37 may be an optical memory (CD-ROM, etc.), a semiconductor memory (IC memory, card, etc.), or a magnetic memory (opto-magnetic disk, hard disk, floppy disk, etc.). The data transmitter/receiver 39 is equipped with a data pickup adapted to the recording medium so as to be adapted to a change in the data recording medium. When, for example, the recording medium is a hard disk, a core head is provided.

A part or all of the above programs 38b may be stored in an area center which is different from the navigation -device, data which was sent from the navigation device to the area center through the data sending and data transmitter/receiver unit 27 is processed based on these programs 38b. This processed data may be sent from the area center to this navigation device through the data sending and data transmitter/receiver unit 27.

The data 38c of the information memory unit 37 stores map data, intersection data, node data, road data, photographic data, destination data, guide point data, detailed destination data, destination road data, house shape data, as well as other data and programs that are necessary for the navigation operation as the data 38c. In accordance with these programs, the navigation operation is executed by using the road map data stored in the information memory unit 37. The program for navigation is read by the data transmitter/receiver 39 from the information memory unit 37, copied and written into the flush memory 3. Other data include indication guide data, voice guidance data, picture data showing simple guide routes, etc.

The data 38c of the information memory unit 37 stores map data of a plurality of reduced scales or one scale. In other words, the data 38c have map data of a plurality of reduced scales of the same region. Or, the data 38c have map data of an one scale of the same region. When the map of a large scale is to be shown on the display 33, the map data stored in the information memory unit 37 is shown on a reduced scale. In this case, not only the lengths of the roads, etc. are shortened but also signs and data representing buildings and facilities are reduced.

3. Data 38c of information memory unit 37

Figure 2 is a diagram illustrating the contents of data files stored in the data 38c of the information memory unit 37. A map data file F1 stores the map data such as road maps of the whole of the country, road maps of a district, and house maps. Each lane of a main turnpike, an expressway and a backlane and so on and a target (facilities and so on) on the ground are shown in a road map. A diagram which shows an outward form of a building on the ground and so on and a road name and so on are shown in a house map. For example, in the case of a backlane, the road width is narrowed below a specific value, and a municipal road and a driveway, except for a national highway, or a local road, are not used during route search processing of Figure 5 which is mentioned later.

An intersection data file F2 stores the coordinates of geographical positions of the intersections and data related to the intersections. A node data file F3 stores geographical coordinate data of the nodes utilized for searching a route on the map. A road data file F4 stores data related to the positions and kinds of the roads, number of the lanes, connections among the roads, etc.. A photographic data file F5 stores photographic image data of places where a visual display is required such as of various facilities, sightseeing spots, major intersections, etc..

A destination data file F6 stores data related to the positions and names of various facilities that may be destinations. The facilities may be sightseeing spots, buildings, sites, companies and offices listed in a telephone book. A guide point data file F7 stores guide data of points that require guidance. The points may be the contents of information boards and branch points. A detailed destination data file F8 stores detailed data related to destinations stored in the destination data file F6. A road name data file F9 stores name data of principal roads among the roads stored in the road data file F4. A branch point name data file F10 stores name data of principal branch points. An address data file F11 stores a list of data allowing the destinations stored in the destination data file F6 to be identified from the addresses.

A file F12 of a list of toll numbers and local office numbers stores only the toll numbers and local office numbers of the destinations stored in the destination data file F6. A registered telephone number file F13 stores telephone number data of clients inputted by the user. A landmark data file F14 stores data related to positions and names of points that serve as landmarks while driving and of the places that should be remembered and are inputted by the user. The point data file F15 stores detailed data of landmark points stored in the landmark data file F14. A facility data file F16 stores data related to positions and descriptions of destinations such as gas stations, drug stores, parking lots and positions of places where the driver may wish to drop in, in addition to the destinations.

4. Contents which are memorized in RAM 5

Figure 3 illustrates some of a group of data stored in the RAM 5. The present position data MP represent the present position of the vehicle and are detected by a present position detector 20. The absolute direction data ZD represents the south-north direction relying upon the terrestrial magnetism and are found based upon the data from an absolute direction sensor 21. The relative direction angle data D $\theta$ represents an angle of the direction in which the vehicle is traveling with respect to the absolute position data ZD and are found based upon the data from a relative direction sensor 22.

The traveled distance data ML represent a distance traveled by the vehicle and are found based on the data from a distance sensor 23. The present position data PI are related to the present position and are inputted from a beacon receiver 26 or the data transmitter-receiver 27. The VICS data VD and ATIS data AD are inputted from the beacon receiver 26 or the data transmitter-receiver 27. The VICS data VD are used for correcting an error in the position of the vehicle detected by a GPS receiver 25. The ATIS data AD are used for determining traffic regulations and traffic jamming in the areas.

The inputted destination data TP are related to the coordinate positions and names of the destinations and are inputted by the user. The start point of route data SP are map coordinate data of a point from where the navigation operation starts. The end points of route data ED are map coordinate data of a point where the navigation operation ends.

The start point of route data SP utilize node coordinates on a guide route closest to the present position of the vehicle or to the point of departure. This is because the present position of the vehicle may be on a site such as golf course or parking lot, but may not necessarily be on the guide route. Similarly the end point of route data ED utilize node coordinates on a guide route closest to the inputted destination data TP. This is because often the coordinates of the inputted destination data TP are not on the guide route.

The guide route data MW stored in the RAM 5 represent an optimum route or a recommended route up to the destination, and are found by processing for searching a route that will be described later. Specific road numbers are attached to the individual roads in the road map stored in the data 38c of the information memory unit 37. The guide route data MW are constituted by the road numbers or by the link numbers described later, from the start point of route data SP to the end point of route data ED.

Mode set data MD is used in processing to set a later described destination by a touch switch 34 integrated in a display 33 in a product layer by a laminate. Mode contents which are displayed on display 33 are decided by this mode set data MD. Drop in place data DP shows facilities in which the car drops in on the way of a guide route. A screen condition data GJ shows a display condition of a display 33 and shows whether a display screen is in a division condition or the single (non-division) condition. A screen condition data GJ is rewritten every time a display condition of a display 33 is changed.

Crossing point data CSP is used by processing of a display of a fore route and so on which is described later, and indicates an end point geographical coordinate of a guide route which is displayed in one of the above divided screens. It makes this crossing point CSP a start point and therefore the guide route is shown in the other divided screen.

A reduced scale WDA of a 1st screen shows a reduced scale of a map which is displayed in a single screen before division of a display 33. A reduced scale WDB of a 2nd screen shows a reduced scale of a map which is displayed in a divided screen of the display 33 which is near an assistant's seat after division. A reduced scale WDC of 3rd a screen shows a reduced scale of a map which is displayed in a screen which is near a driver's seat after division. Therefore the 2nd screen is situated on the side of the assistant's seat and the 3rd screen is situated on the side of the driver's seat. Furthermore, these screens may replace each other.

A horizontal distance XLM shows a geographical maximum straight line distance which can be displayed in a horizontal direction of the map screen of display 33. A perpendicular distance YLM shows the geographical maximum straight line distance which can display in a perpendicular direction of the map screen of display 33.

A point node NDP is used by the program performing "a calculation processing of a possible display range" which is described later and is the coordinate value of the node of the guide route which is displayed at the edge of the divided screen.

5. Road Data.

Figure 4 is a diagram illustrating some road data of the road data file F4 stored in the information memory unit 37. The road data file F4 includes data related to all roads wider than a predetermined width in all the areas stored in the map data file. When the number of roads contained in the road data file F4 is n, the road data related to the roads of a number n are stored in the information memory unit 37. Each road data is constituted by road number data, object-of-guide flag, road attribute data, shape data, guide data and length data.

The road number data are discrimination numbers attached to all roads contained in the map data of the information memory unit 37, the roads being sectionalized by the branch points. The object-of-guide flag becomes "1" in the case of a guide road and becomes "0" in the case of a non-guide road. The guide road is the one whose width is wider than a predetermined width, such as a main trunk road or a general road, and may be selected as a route. The non-guide road is a road(backlane) narrower than a predetermined width, such as footpath or lane, and is seldom selected as a route.

The road attribute data represent road attributes such as elevated road, underpass, speedway or toll road. The shape data represent the shape of a road and are constituted by coordinate data of start points and end points of the roads, and of the nodes between the start point and the end point.

The guide data are constituted by intersection name data, caution point data, road name data, road name voice data and connection data. When the end point of a road is an intersection, the intersection name data represent the name of the intersection. The caution point data represent caution points on the road such as railway crossing, tunnel entry, tunnel exit, point where the width of the road decreases, etc.. The road name voice data are voice data of road names, and are used for guidance by voice.

The connection data refer to a road that connects to the end point of the above-mentioned road, and are constituted by a number k of connections and data of the connections. The data for each connection are constituted by connection road number data, connection name data, connection name voice data, connection direction data and travel guide data.

The connection road number data represent the number of a connecting road. The connection name data represent the name of a road that is connected. The connection name voice data store voice data for guidance by voice based on the name of connection. The connection direction data represent the direction in which the road of connection runs. The travel guide data include guide data for guiding the driver to enter the right lane or the left lane of the road to proceed to a connecting road, or to travel on the center lane. The length data represent a length from the start point to the end point of a road, the length from the start point to the nodes, and the length between the nodes.

6. Overall processing

Figure 5 is a flow chart of the overall processing executed by a CPU 2 in the navigation device according to the present invention. The processing starts upon closing the power source circuit and ends upon breaking the power source circuit. The power source is turned on or off as the power source of the navigation device is turned on or off, or as the engine start key (ignition switch) of the vehicle is turned on or off.

First, the processing for initiation is executed (step SA1). In this processing, a program for navigation is read from the data 38c of the information memory unit 37, copied into a flush memory 3, and is executed. The CPU 2 clears the general-purpose storage areas in the RAMs, such as work memory of a first RAM 5 and an image memory 10.

Then a present position processing (step SA2), a destination-setting processing (step SA3), a route search processing (step SA4), a guide/display processing (step SA5) and another processing (step SA6) are cyclically executed.

Furthermore, a destination-setting processing (step SA3) and a route search processing (step SA4) are not executed again when a destination is not changed or the car does not leave a route.

Then a processing for detecting the present position (step SA2) and the subsequent processing are executed. The processing for detecting the present position (step SA2) detects the geographical coordinates (latitude, longitude, altitude, etc.) of an overland moving body, i.e., of a vehicle mounting the navigation device. That is, a GPS receiver 25 receives signals from a plurality of satellites orbiting around the earth, detects coordinate positions of the satellites, the times at which the electromagnetic waves are emitted from the satellites and the time at which the electromagnetic waves are received by the GPS receiver 25, and calculates the distances to the satellites. The coordinate position of the vehicle is calculated from the distances to the satellites, to detect the present position of the vehicle. The thus found geographical coordinate data of the vehicle are stored in the RAM 5 as present position data MP. The present position data MP are often corrected by the data input through a beacon receiver 26 or the data transmitter/receiver 27.

In the processing for detecting the present position (step SA2), furthermore the absolute direction data ZD, relative direction angle data Dâ ╞ and the traveled distance data ML are simultaneously found by using an absolute direction sensor 21, a relative direction sensor 22 and a distance sensor 23. The absolute direction data ZD, relative direction angle data D θ and traveled distance data ML are processed to determine the position of the vehicle. The thus determined position of the vehicle is collated with map data stored in a data 38c of the information memory unit 37, and the present position on the map screen is corrected and is indicated more correctly. Therefore, the present position of the vehicle is correctly indicated even when the GPS signals are not received for instance when traveling through a tunnel.

In setting the destination(step SA3), the geographical coordinates of the destination desired by the user are stored as inputted destination data TP. For example, a coordinate position is specified by the user on a road map or on a house map shown on a display 33. The destination is selected by the operator from a list of destinations shown on the display 33. Thereafter, a central processing unit 1 stores the data related to the geographical coordinates of the destination in the RAM 5 as inputted destination data TP.

Present position data MP is set as the above guidance beginning point data SP or a node data of the guidable road which is near present position data MP is set. All the words "beginning" and "begin" in this application papers include "starting" and "start". Furthermore, when the car deviates from the guide route, an optimal route from this deviating position to an end point of guide route is automatically re-searched. This is an auto re-route mode. If this auto re-route mode is not set, the re-search of the route is not done. Further when a drop-in place is set, the guide route which goes via the drop-in place is sometimes searched.

In the processing for guiding and displaying the route (step SA5), the guide route identified by the above-mentioned processing for searching a route (step SA4) is shown on the display 33 with the present position of the vehicle as a center. The guide route is displayed on the map in a manner that it can be easily discriminated. For example, the guide route and the non-guide route are indicated in different colors, so that the two can be discriminated from each other. Furthermore, guide information is given by voice from a speaker 13 or is shown on the display 33 at all times, so that the vehicle is allowed to travel favorably along the guide route. The image data of the guide route are the road map data around the present position or are the house map data around the present position stored in the data 38c of the information memory unit 37.

The road map data and the house map data are switched depending upon the conditions such as the distance from the present position to a guide point (destination, place to be dropped in or intersection), traveling speed of the vehicle, the size of the area that can be displayed, or the switching operation by the user. Near the guide point (destination, place to be dropped in or intersection), the map is shown on an enlarged scale on the display 33. Instead of displaying the road map, a minimum amount of necessary data only may be displayed, such as the guide route, direction of the destination or the place to be dropped in and the present position, but omitting geographical data.

Furthermore, as described later, the screen of display 33 is divided in 2 by the operation of the operator or automatically and an information of the map etc. is shown. Then a variety of guidance information and road information is shown in these two screens by processing and the operation which was independent, respectively.

After the guide/display processing of step SA5, the other processing (step SA6) is executed. In "the other processing" of this step SA6, nearest facility processing is sometimes executed. A drop-in place (the facilities and so on) except for the above entry destination data TP is retrieved and is specified by this nearest facilities processing. Data about this drop-in place is set, using the map or each item information etc. which is displayed in display 33. This nearest facilities processing is executed in the same way as the destination-setting processing of the above step SA3.

For example; in the above other processing it is determined whether or not the traveling position of the car moves along a calculated guide route. Also, it is determined whether or not the destination is changed by the switch operation of the operator and so on. After processing of step SA6, processing is repeated from "the present position processing" (step SA2). Furthermore when the car reaches a destination, the guide/display processing of the route is ended and processing returns to step SA2 once again. In this way, the processing of step SA2 to step SA6 is repeated in this order.

7. Guide/display processing of 1st embodiment

This guide/display processing is the processing to report the information to make the car travel along the guide route. In other words, a guide route is searched and this searched guide route is shown in display 33. This guide route is displayed for the car to be always in the screen center and information about points at which it should turn right or left in the guide route is reported at any time. In this guide/display processing, various information is reported and is shown at any time for the car to travel along a guide route smoothly.

Figure 6 shows the flow chart of the guide/display processing. Firstly it is determined whether a display screen of display 33 is divided or not (step SB2). In the division of the display screen of this display 33, for example, the display screen is broad, the screen is divided into the right and the left at the about center. Furthermore this screen may be divided into the top and the bottom. Then an independent map is shown at each divided screen. In this embodiment, the divided screen of the side of the assistant's seat is a 2nd screen and the screen of the side of the driver's seat is the 3rd screen. Therefore in the car with the steering at the right side, the 2nd screen is on the left side and in a car with the steering at the left side, the 2nd screen is on the right.

It is determined whether a screen division cancellation is required or not (step SB4), if the screen is divided (step SB2). This request is executed by the operation of the specific switch of touch switch 34. Furthermore the touch switch 34 may be replaced with a push switch etc. which is provided for the lower part of the screen of display 33.

If a cancellation of the screen division is required, display processing of a single screen of the subroutine is executed (step SB6). In the display processing of the single screen, at the reduced scale of the 1st screen before the division, a map is shown in the whole screen of display 33. This "display processing of a single screen" is described later in detail. Then the "other guide/display processing" of the subroutine is executed and the flow returns to the overall processing (step SB8). Each information about the guide route which the car travels is displayed and reported at any time in this step SB8. On the other hand, if the cancellation of the screen division isn't required at step SB4, "display processing of the 3rd screen" of the subroutine is executed (step SB14). This "display processing of the 3rd screen" is described later.

Further, it is determined whether screen division is required or not when the screen of display 33 isn't divided in the above step SB2 (step SB10). The request of this screen division is also based upon an operation of a switch which is set by touch switch 34. When screen division isn't required, the "other guide/display processing" of step SE8 is executed. However when screen division is required, "screen division processing" of the subroutine is executed (step SB12). In this "screen division processing", the screen of display 33 is divided at the center and a map or a guidance information which is independent is shown in each divided screen. This "screen division processing" is described later in detail.

When "screen division processing" of step SB12 is executed, subroutine "display processing of the 3rd screen" is further executed (step SB14). In this "display processing of the 3rd screen", an information which is displayed in the 3rd screen is changed according to the traveling condition of the car. This "display processing of the 3rd screen" is described later.

Next if a display mode for the fore route is selected (step SB16) by the operator, "display processing of the fore route" of a subroutine is executed (step SB18). In this processing, a guide route which connects with the upper end (crossing point CSP) of the guide route which is displayed in the 3rd screen is shown in the 2nd screen. This "display processing of the fore route" is described later in detail. Then the "other guide/display processing" of step SB8 is executed and the flow returns to "the overall processing" of Figure 5.

On the other hand, "display processing of the whole route" of the subroutine is executed (step SB22), if a display mode of the whole route isn't selected (step SB16) and a display mode of a whole route is selected (step SB20). The selection of the display mode of the whole route is executed by operation of a specific switch which is set by touch switch 34. When the display mode of whole route isn't selected, the "other guide/display processing" of step SB8 is executed.

In the above "whole route display processing", a guide route to the destination which is connected with a upper end of a guide route in the 3rd screen is shown in the 2nd screen. Furthermore, this subroutine "display processing of the whole route" is described later in detail. After this, the "other guide/display processing" of step SB8 is executed and the flow returns to "the overall processing" of Figure 5.

8. Display processing of a single screen

Figure 7 shows a subroutine of the "display processing of a single screen". In this processing, the divided screen of display 33 is returned to a single screen. Firstly, the screen condition GJ of RAM 5 is read (step SH2). This screen condition GJ indicates a display condition of a map which is displayed in the divided 3rd screen.

For example, when the map which includes a backlane is displayed in the divided 3rd screen, the information which shows the display condition is memorized as the screen condition GJ in RAM 5. Then a map is shown in the screen in which division was canceled based on this screen condition GJ. Therefore, when the map which includes a backlane is displayed in the divided 3rd screen, the map which includes a backlane is shown in the 1st screen after division cancellation (combination). Furthermore, the 1st screen means the whole single screen of display 33 which isn't divided.

If a backlane is included in the map which was displayed in the 3rd screen based on the screen condition GJ that was read (step SH4), "the reduced scale WDC of the 3rd screen" of RAM 5 is read (step SH6), based on the screen condition GJ, a map with reduced scale WDC is shown in the whole screen of display 33 (step SH8) and a map which includes a backlane is shown in the 1st screen which isn't divided.

On the other hand, when the map which includes a backlane isn't displayed in the 3rd screen, "the reduced scale WDA of the 1st screen" of RAM 5 is read (step SH10) and a map with reduced scale WDA is shown in the whole screen of display 33 (step SH12) based on the screen condition GJ. Furthermore, when a simple map is displayed on the divided 3rd screen, a display condition is memorized as the screen condition GJ. Therefore this simple map is shown in the 1st screen after division cancellation. When screen division of display 33 is canceled in step SH8 or step SH12, the flow returns to the guide/display processing of Figure 6.

9. Screen division processing

Figure 8 shows a flow chart of subroutine "screen division processing" of Figure 6. In this screen division processing, the whole screen of display 33 is divided and a 2nd screen and a 3rd screen are formed. Furthermore, in this screen division, a memory area of image memory 10 is divided to correspond to the divided screen and map information which are different from each other and are written into each memory area of the divided image memory 10 by image processor 9. The display screen of display 33 is thereby divided into two and different map information is shown in both screens. Furthermore, in this embodiment, the screen is divided approximately in the center but may be divided on the right side of the center or on the left side of the center.

At the beginning of screen division processing, the display condition of the 1st screen, i.e. the screen before the division is detected (step SC2), and if the road map which includes a backlane is displayed on the 1st screen (step SC4), a road map which excludes the backlane is shown after the division on the 2nd screen (a screen at the side of an assistant's seat) (step SC6). A road map which is the same as the one in the 1st screen before the division is shown on the 3rd screen (the screen on the side of the driver's seat) after the division (step SC8) . This road map which is shown in the 3rd screen includes the backlane.

On the other hand, when a road map which doesn't include a backlane is displayed on the 1st screen before the division, a road map which includes a backlane is displayed on the 2nd screen (a screen on the side of an assistant's seat) (step SC18) and a road map which does not include a backlane is displayed in the 3rd screen (step SC20). In this way, a different map from the one in the 1st screen before the division is displayed in the divided 2nd screen and the same map as the one in the 1st screen before the division is shown in the divided 3rd screen.

After this, a display condition of the road map which is displayed in the 3rd screen is memorized as the screen condition GJ in RAM 5 (step SC10). If a road map which includes a backlane is displayed in the 3rd screen, the data which indicates a condition is set as the screen condition GJ. Furthermore, a display condition of the simple map or a display condition of the figure which shows only a turn to the right or left and so on are also set as this screen condition GJ.

Also, when a road map except the simple map is displayed in the 3rd screen, the geographical coordinate of the guide route which breaks off at the edge of the screen is detected and is stored as crossing point CSP in RAM 5 (step SC12). Furthermore, this crossing point CSP designates a point ahead of the present position of the car on the guide route and a point in the guide route which breaks off from the displayed map in the 3rd screen. All the words "front" in this application papers include "fore" and "forward".

Then a reduced scale of the 1st screen before division is stored as "the reduced scale WDA of the 1st screen" to RAM 5 (step SC14) and is copied as "the reduced scale WDB of the 2nd screen" and "the reduced scale WDC of the 3rd screen" into RAM 5 (step SC16). Immediately after the screen of display 33 is divided, a map with the same reduced scale is shown in the 2nd screen and the 3rd screen. If each reduced scale of the 2nd screen and the 3rd screen is changed, each value of reduced scales WDB and WDC is changed. After this, the flow is returned to the guide/display processing of Figure 6.

Figure 9 shows the map of display 33 before the division, i.e. the 1st screen. Symbol 100 in this map designates the present position and the traveling direction of the car. Only the principal turnpike 102 is shown in this screen 104. Symbol 130 shows the north which is an absolute azimuth, and a numerical value "132" of this symbol 130 indicates a reduced scale of the map which is displayed in the screen 104. This Figure 9 shows that a reduced scale is 1/400 in numerical value 132.

Figure 10 shows that the display screen 104 of the display 33 which is shown in Figure 9 is divided into the right and the left. The symbol 112 of Figure 10 designates the present position and the traveling direction of the car. A principal turnpike 102 and a backlane 116 are displayed in a 2nd screen 108 and only the principal turnpike 102 is shown in a 3rd screen 110. In this way, the same road map as in the 1st screen before the division is shown in the 3rd screen.

The symbols 134 and 138 of Figure 10 designate the north of an absolute azimuth, numerical value 136 shows a reduced scale of the 2nd screen, numerical value 140 shows a reduced scale of the 3rd screen and numerical value 136 is stored as a table. Furthermore, in the division processing of the above screen, a different map from the one in the 3rd screen is displayed in the 2nd screen but the same map as the one in the 3rd screen may be shown in the 2nd screen.

10. Display processing of 3rd screen

Figure 11 shows a flow chart of a subroutine of "display processing of the 3rd screen" of Figure 6. In this "display processing of the 3rd screen", a reduced scale of a road map which is displayed in the 3rd screen is changed.

Firstly, if a distance between a present position of the car and a next turning point to the right or the left of the guide route becomes less than a specific value and the car approaches the next turning point in the guide route (step SD2), a simple map with the turn to the right or the left relative to the traveling direction of the car is shown in the 3rd screen (step SD4), and the data which indicates a display condition of this 3rd screen is stored as the screen condition GJ in RAM 5 (step SD22). After this, the processing returns to the flow chart of Figure 6.

Further if a change of a reduced scale of the map which is displayed in the 3rd screen is required, when the distance between the car and the next turning point to the right or the left becomes more specific (step SD6), a map with changed reduced scale is displayed in the 3rd screen and the changed reduced scale is stored as "the reduced scale WDC of the 3rd screen" in RAM 5 (step SD8). The change of this reduced scale is executed by operation of a specific switch provided for touch switch 34. When a road map which includes a backlane in the 3rd screen is displayed before change of this reduced scale, and if the reduced scale is changed such that the backlane is insufficiently displayed, a road map which excluded the backlane is shown in the 3rd screen.

After this, if a speed of the car is less than a specific value (0 Km (stop) or a small value of Km per hour) (very slow speed) and the car goes slowly and stops (step SD10), a road map which includes the backlane is shown in the 3rd screen (step SD12). Also, if the speed of the car becomes more than a specific value, a road map which excludes the backlane is shown in the 3rd screen (step SD14).

After this, if the car moves in a specific distance (step SD16), "scroll processing of the screen" of a subroutine is executed (step SD18). In this scroll processing of the screen, a displayed map is scrolled and the present position of the car is shown in the center of the 3rd screen. After the screen is scrolled (step SD18) or the car doesn't move in the specific distance (step SD16), a geographical coordinate of the guide route which was displayed in the 3rd screen is detected at the side of the screen (step SD20). In other words, the guide route which is displayed in the 3rd screen breaks off at the side of the screen and this breaking point is detected.

A coordinate value of this detected point is stored in RAM 5 as crossing point CSP and data which shows a display condition of the 3rd screen is stored in RAM 5 as the screen condition GJ (step SD22). After this, the processing is returned to the guide/display processing of Figure 6.

11. Display processing of fore route

Figure 12 shows a flow chart of a subroutine "display processing of fore route" in the guide/display processing of Figure 6.In this display processing of fore route, a remaining guide route which continues from the guide route which was displayed in the 3rd screen is shown in the 2nd screen.

Firstly, if the map which is displayed in the 2nd screen is not in the display condition of the fore route (step SE2), it is determined whether a front display is required or not (step SE12). This request for front display is executed by operation of a specific switch provided for touch switch 34.

If the front display isn't required (step SE12), the "display processing of fore route" is ended and processing is returned to the guide/display processing of Figure 6. On the other hand, if the front display is required (step SE12), "calculation processing of the possible display range" of a subroutine is executed (step SE8).

Further, if a change of the reduced scale isn't required (step SE4) when the 2nd screen is not in a condition of front display (step SE2), "calculation processing of the possible display range" of a subroutine is executed (step SE8). Conversely if a reduced scale change is required, the value of the data with "reduced scale WDB of the 2nd screen" of RAM 5 is changed (step SE6). Furthermore, this change of reduced scale is also executed by operation of a specific switch provided for touch switch 34.

Point node NDP is found by calculation processing of the possible display range and a guide route is shown in the 2nd screen using this point node NDP and crossing point CSP. Furthermore, the point node NDP is a value of a geographical coordinate of an end point of the guide route which can be to shown by the above reduced scale WDB.

In other words, a guide route from crossing point CSP to point node NDP is shown on the map which is displayed in reduced scale WDB.

A halfway point of each east longitude coordinate of crossing point CSP and point node NDP is located on a central perpendicular line of the 2nd screen, and crossing point CSP is situated on the bottom tip of the screen. A road map which includes the guide route is shown in the 2nd screen (step SE10). When a remaining guide route of the guide route which was displayed in the 3rd screen is displayed in the 2nd screen in this way, the flow returns to the guide/display processing of Figure 6.

12. Calculation processing of the possible display range

Figure 13 shows a flow chart of the subroutine "calculation processing of the possible display range" which was shown in Figure 12. Firstly, a geographical range of a map which can be displayed in the 2nd screen in reduced scale WDB is calculated (step SF2). Here in the case that a map with reduced scale WDB is displayed in the 2nd screen, a straight line distance of a horizontal direction of a screen map which can be shown on the screen is calculated and is stored in RAM 5 as horizontal distance XLM. Similarly, a straight line distance of a perpendicular direction of a screen map which can be shown is similarly calculated and stored in RAM 5 as perpendicular distance YLM.

Next, the processing of step SF6-SF10 is repeated until it is satisfied the condition of step SF12. By this processing, the crossing point CSP of the guide route is made a start point and the guide route is effectively shown in the 2nd screen. In other words, if the crossing point CSP is a basic point, the guide route which can be shown by the reduced scale WDB is in an area of a rectangle which is composed of the above horizontal distance XLM and perpendicular distance YLM.

And then, it is checked as to whether a coordinate value of each node on the guide route is in the square composed of the crossing point CSP as one of the corners formed by the horizontal distance XLM and perpendicular distance YLM. Therefore, value N with the number of times of step SF4 indicates a N-th node on the guide route, whose starting point is the crossing point CSP. Then each processing of step SF4 to SF22 is repeatedly executed based on value N with the number of times that is increased one by one.

Moreover, value N with the number of times is initialized by "1", interval XN is initialized by "0" and the coordinate value of the east longitude of crossing point CSP is stored as the horizontal XP (step SF4). Next, a coordinate value of the N-th node of the guide route which connects with crossing point CSP is read from road data file F4 and node data file F3, and is stored in RAM 5 as point node NDP (step SF6). The value of the north latitude of crossing point CSP is subtracted from the value of the north latitude of this point node NDP and this subtraction result is stored in RAM 5 as perpendicular value YM (step SF8).

Moreover, the value of the above horizontal XP is subtracted from the east longitude value of point node NDP and an absolute value of the subtraction value is stored in RAM 5 as horizontal value XM (step SF10). Next, if the horizontal value XM is bigger than the interval XN (step SF12), the horizontal value XM is substituted for interval XN (step SF14).

On the other hand, when the horizontal value XM is less than the interval XN, the east longitude value of a (N-1)-th node of the guide route is stored as the horizontal XP (step SF20). Then, interval XN is cleared to 0 (step SF22). At these steps SF12, SF20 and SF22, it is detected that the guide route curves to the east and west.

In other words, the crossing point CSP is displayed in the lower margin of the 2nd screen and when the guide route has a curved part in the east and west direction, the guide route which includes the curve part must be efficiently shown in the 2nd screen. Therefore, the curve part of the guide route is made as a new basic point (the horizontal XP) and subsequently the point node NDP which is the end of the displayed guide route is retrieved.

Next, the horizontal value XM, perpendicular value YM, each horizontal distance XLM and perpendicular distance YLM which is found by the above steps SF8 and SF10 are compared with each other as follows.

$$XM > XLM \quad (A)$$

$$0 > YM > YLM \quad (B)$$

In other words, it is determined by expression (A) that the horizontal value XM is bigger than the horizontal distance XLM. Further, it is determined by expression (B) that the perpendicular value YM is smaller than "0" or is bigger than the perpendicular distance YLM.

If the processing of this expression (A) or (B) is completed, a series of processing of steps SF6 to SF22 is ended. Then the flow returns to the display processing of fore route of Figure 12. However if expression (A) reaching (B) is not concluded, "1" is added to the value N with the number of times and a next node of the guide route is processed (step SF18).

By the processing of above steps SF6 to SF22, the crossing point CSP is made as a starting point and the coordinate value of an end point of the guide route which is efficiently displayed in the 2nd screen is stored as point node NDP. Furthermore, a part of the crossing point CSP of the guide route which is displayed in the 2nd screen points in a perpendicular direction.

Figure 14 shows the 2nd screen in which a fore part of the guide route is displayed by the display processing of fore route of Figure 12. A guide route 144 of the 2nd screen is connected with the crossing point CSP of the guide route 146 which is displayed at 3rd screen 110. Then, when the road map which includes the guide route 144 is displayed in the 2nd screen by reduced scale WDB, a point on the guide route which can be displayed is point node NDP. Further, a curve part 148 in an east and west direction of the guide route is detected by steps SF12 to SF22 in the Figure 13. In other words, an east longitude value which is stored newly as the horizontal XP by the step SF22 is a coordinate of this curve part 148.

13. Display processing of the whole route ahead (fore)

Figure 15 shows the subroutine of the display processing of whole route (fore) at Figure 6. In this processing, the whole remaining guide route to a destination to crossing point CSP at a end of the guide route which is displayed in the 3rd screen is shown in the 2nd screen. Moreover, the display in reduced scale can be changed and a wider road map which includes the remaining guide route can be shown in the display processing of whole route (fore).

Firstly, if a whole route is displayed in the 2nd screen (step SG2), it is determined whether a reduced scale change was required or not (step SG4). This reduced scale change is executed by the user's operation of a specific switch which is provided for touch switch 34.

When the reduced scale change is required, the value of reduced scale WDB is changed (step SG6) and a map is shown in the 2nd screen at the changed reduced scale WDB (step SG8). Furthermore, when this reduced scale becomes bigger and a whole guide route to a destination from the crossing point CSP can not be displayed in the 2nd screen, the processing which is the same as the display processing of fore route of Figure 12 is executed.

In other words, a display position of the guide route is adjusted and the guide route is most efficiently shown in the 2nd screen.

Also, when the reduced scale change isn't required (step SG4), the processing of Figure 15 is ended and the flow returns to the guide/display processing of Figure 6. Moreover when the whole route isn't displayed in the 2nd screen (step SG2), it is determined whether a display of a whole route is required or not (step SG10). The request for a display of a whole route is executed by operation of a specific switch which is set by touch switch 34.

When the display of the whole route isn't required, the processing of Figure 15 is ended and the flow returns to the guide/display processing of Figure 6. On the other hand, when the display of the whole route is required, with all nodes of the guide route from the crossing point CSP to a end point of guide route data ED, then maximum latitude, minimum latitude, maximum longitude and minimum longitude are detected (step SG12). A reduced scale with all maximum latitude, minimum latitude, maximum longitude and minimum longitude values which can be held in the 2nd screen is found (step SG14). In the calculation of this reduced scale, a change table of numerical values which was beforehand determined may be used.

A road map which includes the guide route by the found reduced scale is displayed in the 2nd screen (step SG16) and the reduced scale which is found by the step SG14 is stored in RAM 5 as the "reduced scale WDB of the 2nd screen" (step SG18). After this, change processing of a reduced scale since the step SG4 is executed.

Figure 16 shows the 2nd screen 108 where the guide route from crossing point CSP to destination 152 is displayed by the display processing of this whole route (fore). In this way, in the display processing of the whole route (fore), a whole guide route in front of the crossing point CSP which is an end of the guide route of the 3rd screen is shown in the 2nd screen.

When screen division instruction according to the above embodiment is given, a map information which is necessary for travel is displayed in the 3rd screen and a map information which isn't so necessary for travel is shown in the 2nd screen. For example, when the car approaches an intersection where it is to turn right or left, the information which indicates a right or left turn is more necessary than the information of the whole guide route, and therefore the information which indicates a right or left turn is shown in the 3rd screen, then a road information which isn't so necessary is shown in the 2nd screen. In this case a general road map which includes the guide route is shown in the 2nd screen.

Furthermore, when the car is not approaching a point to turn right or left, the map which includes a backlane and the map which doesn't include a backlane are automatically shown. For example, when the speed of the car exceeds a constant value, the road map which includes a backlane is not important to a driver, therefore a road map only for the main turnpike is displayed in the 3rd screen and a road map which includes a backlane is shown in the 2nd screen.

Furthermore, the 3rd screen in the above embodiment is situated on the right side of the divided screen of display 33 in a car with the steering wheel on the right side and is situated on the left side of the divided screen of display 33 in the case of a car with the steering wheel on the left side. The 3rd screen is a divided screen near the driver.

Therefore more important guidance information is displayed with priority on a divided screen near the driver and supplementary guide route information is shown in a divided screen near the assistant's seat. Furthermore, an orientated map may be shown in addition to the direction map in the 1st, the 2nd and/or the 3rd screen of the above embodiment. In the direction map, the direction of travel of the car always points upwards in the screen map and in the orientated map, the north direction as the absolute direction always points upwards in the screen map.

Figure 17 shows the simple map which is displayed in the screen of display 33. The symbol 120 which designates the absolute direction (the north direction of the terrestrial magnetism), the symbol 126 which designates the present position of the car, the arrow 122 which designates the direction to the destination, and characters 124 which designate the distance to the destination are shown in screen 104. Such a simple map may be shown in either of the 1st, the 2nd and/or the 3rd screen.

Furthermore, this simple map isn't limited to the one of Figure 17, e.g. a traveling direction of the car may always point upward in the screen 104. In this case, the symbol 120 which designates the absolute direction is turned on screen 104 according to the relative azimuth data D $\theta$.

Figure 18 shows a part of a circuit composition of the above image processor 9 which is inserted between image memory 10 and display 33. When the screen of display 33 is divided as in Figure 10, the circuit of this Figure 18 is also used. An output terminal of image memory 10 is connected with a palette RAM 204 and a palette RAM 208 in parallel and the same image data is inputted into the palette RAM 204 and the palette RAM 208. An output terminal of palette RAM 204 is connected with a terminal 222 of digital switch 214, an output terminal of palette RAM 208 is connected with a terminal 224 of switch 214 and an output terminal of switch 214 is connected with a digital/analog converter (DAC) 218.

An analog video signal which is outputted from DAC 218 is inputted into a display control circuit of display 33 and various control signals to drive a liquid crystal display are generated. A control signal 202 of image processor 9 is inputted into image memory 10. A switching control signal 216 of digital switch 214 is generated by image processor 9.

Furthermore, although it isn't illustrated, the other circuit of the image processor 9 is connected with the palette RAM 204 and 208 and data of a change table is written into said RAM. The data of a change table which is written in the palette RAM 204 and data of a change table which is written in the palette RAM 208 are different from each other and this different part is data about a display color of the backlane. For example, data in which a color of the backlane is different from a background color of the screen is stored in the change table of the palette RAM 204 and data a color of the backlane is the same as or resembles the background color of the screen and is stored at the change table of palette RAM 208.

A color of the other one which was displayed in the map is made almost identical by the change table of each palette RAM 204. Digital image data which is read from the image memory 10 is changed into serial/parallel and inputted into the address terminals of each palette RAM 204 and 208. A digital color signal which is outputted from palette RAM 204 and 208 is inputted into switch 214 and the switching control of this switch 214 is done by image processor 9. When this switching is done in a division part of the 2nd screen 108 and the 3rd screen 110 and an image data of the 2nd screen 108 is read from image memory 10, the switch 214 is switched to a side of the palette RAM 204. Therefore a color signal which is outputted from palette RAM 204 is inputted into DAC 218.

Also, when the image data of the 3rd screen 110 is read from image memory 10, the switch 214 is switched to a side of the palette RAM 208. As mentioned above, data which displays the backlane is written in the change table of the palette RAM 204 and data which does not display the backlane is written in the change table of palette RAM 208. Therefore, as shown in Figure 10, the backlane is displayed in the 2nd screen 108 and the backlane is not shown in the 3rd screen 110.

Furthermore, only palette RAM 204 or 208 is shown in Figure 18 but this palette RAM is composed of three palette RAMs of red, green and blue colour.

14. Guide/display processing of 2nd embodiment

Figure 19 shows a flow chart of the guide/display processing of the 2nd embodiment. In this 2nd embodiment, as in the 1st embodiment, the display screen of display 33 is divided, an image in the orientated map is shown in one screen of the divided screen and an image in the direction map is shown in the other screen. In the orientated map, the north is always in the uppermost part of the screen and in the direction map, the direction of travel of the car is always towards the top of the screen.

In the processing of Figure 19, first, if the display of a sketch is chosen by the user (step SK2), the sketch is shown on the whole screen of display 33 (step SK16). This sketch is the same as the 1st embodiment and is shown in Figure 17. A direction of this sketch display is executed by operation of a specific switch of touch switch 34. When the sketch display is not chosen (step SK2), and if the division display of the screen is not selected (step SK4), the other guide/display processing of step SK18 is executed. Various information about the guide route where the car travels is displayed and reported at any time at this step SK18.

On the other hand, when the division display of the screen is selected (step SK4), a display condition of the 1st screen before the division is detected (step SK6). This display condition indicates the orientated screen or the direction screen and so on. When the direction map is displayed in the 1st screen before the division, the orientated map is displayed in the 2nd screen (step SK8) and the direction map is shown in the 3rd screen (step SK10).

Furthermore, when the travel direction map is not displayed in the 1st screen before the division (step SK7), the travel direction map is displayed in the 2nd screen (step SK12), the orientated map is displayed in the 3rd screen (step SK14) and the map which was displayed before the division is always shown in the 3rd screen. Then the map which is different from the 3rd screen is shown in the 2nd screen. After this, the other guide/display processing is executed (step SK18), the subroutine of Figure 19 is ended and the flow returns to the overall processing of Figure 5.

Furthermore, as with the 2nd screen and the 3rd screen in the 1st embodiment, the divided screen on the driver's side is the 3rd screen and the divided screen on the side of the assistant's seat is the 2nd screen.

Figure 20 shows a divided screen of this 2nd embodiment.

A direction map is shown in the 1st screen before the division as depicted in Figure 9. When division instruction is given, the orientated map is displayed on the 2nd screen 108. In this 2nd screen 108, a symbol 120 which shows an absolute azimuth points upwardly and a symbol 100 which shows the direction of travel of the car points to the left.

Also, the direction map is displayed in the 3rd screen 110 and, a symbol 100 which designates the direction of travel of the car points upwards in the 3rd screen and a symbol 122 which designates a northern direction points to the right in the 3rd screen.

15. Guide/display processing of the 3rd embodiment

Figure 21 designates the flow chart of the guide/display processing of the 3rd embodiment. In this 3rd embodiment, an identical mark is put to the processing which is the same as the 2nd embodiment. In this 3rd embodiment, the display screen of display 33 is divided, the map which was displayed before the division is shown just as it is in one of the screens which are divided and the sketch is shown in the other screen.

When a sketch display is first chosen (step SK2) in the processing of Figure 21, the sketch is shown on the whole screen of display 33 (step SK16). This sketch is the same as the 1st embodiment and is shown in Figure 17. The direction of this sketch display is executed by operation of the specific switch by touch switch 34.

When the sketch display isn't chosen (step SK2) and, if the screen division is not selected (step SK4), the other guide/display processing of step SK18 is executed. Various information about the guide route which the car travels is displayed and reported at any time in this step SK18.

On the other hand, when screen division is selected (step SK4), the display condition of the 1st screen before the division is detected (step SK6), when the travel direction (head up) map is displayed in the 1st screen, the travel direction (head up) map is displayed on the 2nd screen (step SK20) and the simple map of Figure 17 is shown on the 3rd screen (step SK24).

Furthermore, when the travel direction (head up) map is not displayed in the 1st screen before the division, the orientated (north up) map is displayed in the 2nd screen (step SK22) and the simple map like Figure 17 is shown in the 3rd screen (step SK24). In other words, the map which was displayed in the 1st screen before the division is always shown in the 2nd screen and minimum guidance information like the direction of the destination and so on is shown in the 3rd screen. After this, the other guide/display processing is executed (step SK18), the subroutine of Figure 21 is ended and the execution returns to the overall processing of Figure 5.

Furthermore, as with the 2nd screen and the 3rd screen in the 1st embodiment, the divided screen on the side of the driver's seat is the 3rd screen and the divided screen on the side of the assistant's seat is the 2nd screen.

16. Guide/display processing of the 4th embodiment

Figure 22 shows a flow chart of the guide/display processing of the 4th embodiment of this invention. In this embodiment, in addition to the guide route which is identified first, another guide route is newly searched according to the request of the operator (the user). Then, the newly found guide route and the earlier found guide route are shown each on one of the two divided screens. Also, another guide route newly searched upon further search instruction, a newly identified guide route, is shown on one of the screens, and one of the other guide routes is shown on the other screen. Therefore, the previous route, the new route or the various other routes are compared with each other in the divided screen and the operator can select the guide route which agrees with the request, by contrasting them.

In the flow chart of Figure 22, firstly, it is determined whether the screen of display 33 is divided or not (step SL2). If it is in a division condition, a different guide route which is searched independently is shown in each screen. When a decision of the guide route isn't inputted even if a re-search is ordered by the operator in this embodiment, the whole subroutine of Figure 22 is repeated, the division condition of the screen of display 33 is maintained until a decision regarding the guide route is made by the operator. In other words, when the decision regarding the guide route by the operator is not made after the re-search is ordered, the processing of Figure 22 is ended and the flow returns to the main processing of Figure 5. If the subroutine of Figure 22 is again called, the processing which was executed just before is repeated once again.

When the search of another route isn't ordered (step SL4) and if the screen is not divided (step SL2), "the other guide/display processing" is executed (step SL38). In "the other guide/display processing", based on the guide route which was found first or based on the chosen guide route with re-search, various sound information and image information is reported for the car's smooth driving. After this, the guide/display processing of Figure 22 is ended and the flow returns to the overall processing of Figure 5. The direction of the beginning of a search for the other route is executed by a touch by the operator to an icon in "the re-search" or "another route" etc. which was displayed in display 33.

On the other hand, in case of the instruction of the search for another route (step SL4), number N of the routes is initialized by "1" (step SL6). The number N of routes means the number of the identified guide routes. Furthermore, for example, the instruction to search for another route is given by an operator touching a place of the letter in "another route" (Figure 23) which is displayed in the screen of display 33. Then, when the instruction for search of another route is given, a guide route from the present position of the car to the entry destination is searched newly (step SL8). This searched other guide route is different from the present guide route.

In the searching of another route of this step SL8, processing like the route search processing of Figure 5 is executed. The route which connects from the present position of the car to the end point of guide route using each road data and each intersection data which is stored to information memory unit 37 is searched. For example, when the car is on the guidable road, an intersection at the end of the guidable road is retrieved based on the road data and the intersection data. Then, the next intersection which approaches the destination is retrieved and the road which reaches a destination by the shortest distance is searched from each road which connects from this intersection, this processing is repeated in the indicated order and the guide route is searched.

In the following, the searching processing of the guide route is simply explained. Information about the road is stored, for example, as 1 unit for a road which links two forks (intersection etc.), at information memory unit 37 (Figure 4). The information about each road includes length data of the road, shape data which indicates the direction etc. of the road and road attribute data which indicates the classification etc. of the road. Therefore, a search cost to convert the length of the road to these data values is set. For example, the wider the width of the road is, the smaller the value of the searching cost becomes. Concretely, if the number of lanes of the road is 3, the searching cost of "10" is given, and conversely if the number of the lanes is 1 the searching cost of "30" is given. Therefore the searching cost becomes small when the road width is wide, the searching cost becomes big when the road width is narrow.

Similarly, a searching cost is also set to the road attribute data, the shape data and so on. The direction (the geographical direction) of the connection at this road is determined by the connection direction data which is included in the previous data of the road connecting with the present road. Therefore, the more accurately this connection direction data points to the destination, the smaller the searching cost becomes. Furthermore, the searching cost may be also set about the local road, the municipal road, the national highway and so on, and the general road may be primarily selected.

Furthermore, in the computation of this searching cost, a beforehand set table for the numerical value calculation is used. In the case of the above-mentioned number of the lanes, the numerical value correspondence tables (the table) such as the searching cost is "10" at 3 lanes, the searching cost is "30" at 1 lane, is stored in information memory unit 37 or in ROM 4.

Then, the searching cost which corresponds to the value of the attribute, the connection direction of the road and so on respectively is found by each table. The total of these thus found searching cost is the synthetic searching cost (hereinafter referred to as total searching cost) of this road. Furthermore, the length of the road may be used as the searching cost just as it is and may be multiplied by a coefficient. In other words, a coefficient value which is principally set by the length of the road is multiplied by the value of the length and the result is the searching cost for length. Furthermore, this coefficient may be also calculated by the numerical value correspondence table (the table), and a correspondence table with the coefficient which is principally set according to the length of the road is stored in the information memory unit 37 or the ROM 4.

For example, the coefficient "1.0" is given if the length of the road is less than 10 km, the searching cost for this length is 10 x 1.0 = 10. The coefficient "3.0" is given if the length of the road is longer than 10 km and is less than 20 km. The searching cost for this length becomes 20 x 3.0 = 60. In this way, a coefficient according to the length of the road is given in order and a comparison of the size with searching cost according to a relative length with distance becomes easy. Furthermore, these values are one example and this invention isn't limited to this numerical value and the calculation of these searching costs may be executed using the computation expression.

In this way, the total searching cost of each road is calculated. Then the total searching cost of each of these roads is found if the number of the connecting roads at the starting point (the node or the intersection) of the searching is more than one. Then the thus found value of the total searching cost of the each road is separately added to the total searching cost of each road in the searched route, the road which has the smallest value of the total searching cost is selected as the optimal route.

A road with the smallest value of total searching cost is selected in order in the same way as the road which connects with this selected road. The road which continues from the starting place (guidance beginning point) to the destination (guidance ending point) which is searched in this way is stored in RAM 5 as the guide route data MW. In the above-mentioned case, the road which points to the destination and is wider is primarily selected.

Also, when the roads are connected to each other in the intersection by a right or left turn, the searching cost of the route may become bigger. Thus, a right or left turn in the intersection is excluded from the guide route as much as possible. Similarly, the searching cost may fluctuate with the existence or non-existence of the traffic signal in the intersection or the existence or non-existence of the name of the intersection and so on. For example, the searching cost value at the intersection which do not have a traffic signal is bigger than that at the intersection which has traffic signal.

Therefore, an intersection in better conditions to be passed more smoothly is primarily selected as the guide route. Furthermore, in the foregoing explanations, the total searching cost of the road in the better condition becomes smaller. However, the total searching cost of the road in better conditions may become bigger. In this case, the searching cost value of the shorter road becomes bigger and the coefficient value which is multiplied by the value of length is in inverse proportion to the value of length. Similarly, the searching cost of the wider road becomes bigger.

For example, the coefficient "3.0" is given if the length of the road is less than 10 km and the searching cost for the length of the road is 10 x 3.0 = 30, the coefficient "0.1" is given if the length of the road is longer than 10 km and is less than 20 km and the searching cost with the length of the road is 20 x 0.1 = 2. In this case, the searching cost of the road of shorter length becomes big.

Furthermore, when the car is not on the guidable road, a node on the guidable road which is in the specific distance and is nearer to the car is selected as the starting point of the search. If this node of the guidable road which is near the car is more than one, the node which is nearer to the destination is referred to as the guidance beginning point. This is the same in the searching processing of another route of step SL8 (Figure 22) and the route search processing (Figure 5) of step SA4.

Also, the road of the guide route which was searched in the route search processing of Figure 5 or the present guide route is less likely than the new guide route to be selected in the above step SL8. For example, a new search cost is added to the road which has already been used for the previous guide route. The numerical search cost value "50" is added extra to each road which composes the guide route that was searched in the route search processing of Figure 5. Therefore, the selection of the road which has already been used as the guide route becomes difficult, and the selection of the road becomes difficult in the search of a new guide route.

The new guide route which was searched in the step SL8 in this way is stored in the RAM 5 as the N-th guide route. The display screen of display 33 is divided into the right and the left side (step SL10), the left side of the divided screen is referred to as a 2nd screen and the right of the divided screen is referred to as a 3rd screen.

Then, the N-th guide route which is identified by the above step SL8 is displayed in the 2nd screen (step SL12) and (N-1)-th guide route is shown in the 3rd screen (step SL12). This (N-1)-th guide route is the first guide route which was identified in the route search processing of Figure 5 or a route with guidance at present and it is N - 1 = 0. For example, the this N=0 route is the route which was searched when the destination and so on are set before the beginning of guidance by the navigation system, or is the new guide route which is re-searched in the guide/display processing of Figure 22 and is selected or is the route which is re-searched on the travel and with guidance at present.

But when the re-searching of the guide route is repeated, the latest guide route is shown on the 2nd screen and a guide routesearched immediately before the lastest one is shown on the 3rd screen.

Next, when a icon, i.e. a "RETURN" key which is displayed in display 33 is pushed (step SL16), each of the guide routes displayed in the 2nd screen and the 3rd screen is turned into the previous guide route.

By the way, after the instruction for the search of another route in the guide/display processing of Figure 22 is repeated, a N piece of the guide route is searched. Then, as mentioned above, the latest N-th guide route is displayed in the 2nd screen and the (N-1)-th guide route is shown in the 3rd screen.

When the return key is pushed in this condition, the (N-1)-th guide route is displayed in the 2nd screen and (N-2)-th guide route is shown in the 3rd screen. In this way, after the return key is pushed, the display condition of display 33 returns to the previous one. A series of these processings is executed by steps SL12 to SL20.

That is, "1" is subtracted form the N number of routes (step SL18) and when the N number of routes is not smaller than "1" (step SL20), the program returns to the step SL12 again and the searched previous guide route is displayed in the 2nd screen and the former guide route which was searched before the previous one is shown in the 3rd screen.

Conversely, when the value of the N number of routes is smaller than "1" (step SL20), there is no identified route which is older than the N=0 guide route. Therefore, the first route which was searched in the route search processing of Figure 5 or the present guide route is selected (step SL22). In this case, the division of the screen is canceled and the map which was displayed before the division is shown without changing to a reduced scale (step SL23). After this, the other guide/display processing is executed (step SL38) and the guide/display processing of Figure 22 is ended.

Furthermore, when the N number of routes becomes smaller than "1" (steps SL22 and SL23), another route which was re-searched first may be displayed in the 2nd screen and the previous route may be shown in the 3rd screen. In this case, when either one of the routes of the 2nd screen and the 3rd screen is selected, the division of the screen is canceled.

Furthermore, when a screen is divided and the subroutine of the guide/display processing of Figure 22 is called, the processing of step SL16 is also executed. In other words, it is determined whether or not the return key is pushed when a screen is divided or whether or not a route decision key which is described later is pushed. In the case of an instruction of search for another route, the screen of display 33 is divided. Here, this division condition continues until the guide route of the 2nd screen or the 3rd screen is chosen by the operator, or the "RETURN" key is repeatedly pushed and the N number of routes becomes "0".

However this division is canceled, a divided screen is combined and guidance processing is executed on the basis of the guide route as soon as the guide route is chosen or the "RETURN" key is repeatedly pushed until the N number of routes becomes "0". Furthermore the guide/display processing of Figure 22 is repeatedly executed until the car reaches an end point of the guide route. But a search instruction for another route is permitted only when the car stops or goes slowly.

To several N routes "1" is added (step SL24) when a return key, i.e. "RETURN" key isn’t pushed in the step SL16 and another route key is pushed (step SL28). Then, a new guide route is searched once again and a searched new guide route is stored in RAM 5 as the N-th guide route (step SL26). Furthermore, also in the case of searching the guide route of this step SL26, the road which was previously used as the guide route is made difficult to be chosen. In other words, when a road with the smaller total searching cost is selected, a new searching cost is added to the road which was already selected as the road which composes a guide route. Various guide routes which are composed by the different roads are searched.

Furthermore, the searching condition of the guide routes in this step SL8 or SL26 may be different from the searching condition of the 1st guide route. For example, the 1st guide route is a toll road (expressway) primarily, the 2nd guide route doesn’t use a toll road at all. Also, the 1st guide route is the shortest distance to the destination and the 2nd guide route is a wide road primarily. In this way, in the case of the repeated searching of a guide route, a searching condition of each route is changed.

The guide route which is searched by the step SL26 is displayed in the 2nd screen and the guide route which was displayed in the 2nd screen is shown in the 3rd screen (step SL12). Furthermore, the guide route which was searched first in the route search processing of Figure 5, or the guide route with guidance at present may be always shown in the 3rd screen. In other words, the latest guide route which is searched every time the "another route" key is pushed is shown in the 2nd screen. On the other hand, the route with guidance at present is always shown in the 3rd screen. Therefore, the previous guide route and the re-searched new guide route can be directly compared.

Furthermore, when the N number of route is "1", a route except the guide route which is searched in the route search processing of Figure 5 is shown on the 3rd screen. In other words, when the route which was searched newly at the guide/display processing of Figure 22 is selected as the guide route, this new guidance road is referred to as a basic guide route. When a new guide route is used on account of the instruction for search of another route, this new guide route is shown in the 3rd screen.

"The other guide/display processing" of the step SL38 is executed and the processing of Figure 22 is ended when another route key isn’t pushed in the step SL28 of Figure 22 and a route decision key (icon) isn’t pushed (step SL30). Conversely, when a route decision key is pushed, it is determined which one of the guide route (icon) of the 2nd screen or the 3rd screen was chosen (step SL32). If the guide route of the 2nd screen is chosen, the screen division of display 33 is canceled. Then, the guide route which was displayed in the 2nd screen is shown in the single screen (the 1st screen) after division cancellation (step SL34). Then, "the other guide/display processing" is executed and the information according to the chosen guide route is displayed and reported and so on (step SL38).

Also, when the guide route of the 3rd screen is chosen, screen division by display 33 is also canceled. Then, the guide route of the chosen 3rd screen is shown in the combined single screen (step SL36). Moreover "the other guide/display processing" is executed and the information according to the chosen guide route is displayed and reported and so on (step SL38). After this, the processing of Figure 22 is ended and the processing returns to the flow chart of Figure 5.

Figure 23 shows the display screen of display 33 before the division. The first guide route 162 which is searched by the route search processing of Figure 5 is shown in screen 104, the symbol 100 which designates the present position and the direction of travel of the car which is traveling on this guide route 162 is shown and the "another route" icon 160 which is to be determined in the step SL4 is shown in screen 104.

Figure 24 shows the divided screen of display 33 and shows the screen of the display 33 immediately after the process of the step SL8 of Figure 22 is executed for the first time. The new guide route 170 which is searched by the route search processing of the step SL8 is shown in the 2nd screen 108, the guide route 162 which is displayed as depicted in Figure 23 is shown in the 3rd screen 110. Further icons 164, 166 and 168 are shown in the 2nd screen 108 and the 3rd screen 110, icon 164 designates "another route", icon 166 designates the "route decision" which is to be determined in step SL30, icon 168 designates the "RETURN" key which is the determine object of the step SL16, i.e. a return key.

Figure 25 shows the display screen of display 33 immediately after execution in the processing of the step SL26 of Figure 22. The guide route 172 which was searched newly in step SL26 is shown in the 2nd screen 108. The guide route 170 which was displayed in the 2nd screen of Figure 24 is shown in the 3rd screen. Furthermore, icons 164, 166 and 168 are the same as the icon of Figure 24.

Figure 26 shows the screen of the display 33 which is returned to the single screen by the step SL36 of Figure 22. For example, screen division is canceled when icon 166 is pushed in the Figure 25 and the guide route 170 of the 3rd screen 110 is chosen, the guide route 170 is shown on the whole single 1st screen 104. Furthermore, icon 160 is also shown on the screen 104 after screen division cancellation.

The route which is displayed in each of the 2nd screens and the 3rd screens at the 4th embodiment may be freely selected. In other words, when another route are searched N times, an optional one of the N pieces of the another routes is shown in the 2nd screen. Likewise, the other optional one of the other routes may be shown in the 3rd screen.

Moreover, the route which is displayed in the 2nd screen or the 3rd screen may be fixed, for example, the previous route immediately before another route is re-searched may be always shown in the 3rd screen. The reduced scale of the map which is displayed in the 2nd screen and the 3rd screen isn't especially limited. In order to display the whole route from the present position of the car to the destination in each portion of the divided screen, the reduced scale may be automatically adjusted. When using the reduced scale before the screen division, the map of each divided screen may be shown.

17. Guide/display processing of the 5th embodiment

Figure 27 shows a flow chart of the guide/display processing of the 5th embodiment. When the car deviates from the guide route during the guide, at the guide/display processing of this 5th embodiment, a return route which returns to the guide route and another route which is searched newly or the previous route are shown respectively at the divided screen.

Firstly "The other guide/display processing" is executed (step SP42) and information according to the guide route is reported and displayed and so on, if the car doesn't deviate from the guide route and the car is traveling on the guide route (step SP2). After this, the processing of Figure 27 is ended and the processing is returned to the flow chart of Figure 5. In the detection of the deviations from the guide route of the step SP2, a present position information PI which is stored in RAM 5 and a geographical coordinate of the road which composes the guide route data MW are compared.

However when the car deviates from the guide route, if the screen is divided (step SP4), two of already searched guide routes are shown in both the right and the left screens. In this case, when the return key is pushed or the route identity key is pushed, and if the screen is divided, the processing of step SP18 is executed.

However, if the screen is not divided, it is determined whether or not a re-searching instruction is inputted (step SP6) and it is determined whether a re-searching of the route which returns to the guide route on guiding is instructed or not. This re-searching instruction is executed by the operator's touch of the icon such as "re-searching" or "another route" which is displayed in the screen of display 33 and this touch is based on on/off of the touch switch 34.

When this re-searching is not ordered, the map in which the car deviated from the guide route is continuously shown in the display 33. Furthermore, in this case, an information also warns that when the car deviates from the guide route it may be reported at any time. Moreover, if the re-searching is ordered, number N of the routes is initialized by "1" (step SP8) and a route which returns to the guide route from the present position of the car is searched. A searching of this return route is a search processing of surrounding routes and a road which approximates the guide route is primarily selected. For example, in the case of a road of opposite direction to that of the moving of the car, a fixed searching cost is added to the total searching cost and the total searching cost becomes big. Similarly, a specified value is also added to the search cost of the road which leaves the guide route and the search cost becomes big. As the result, a road which approaches the guide route is primarily selected.

After this the return route which is identified is set as the N(N=1)-th route (step SP10) and the screen of display 33 is divided (step SP12). The N-th guide route is shown on the divided 2nd screen (step SP14). Here N=1 and the return route to the present guide route is shown in the 2nd screen. Further this N-th guide route is shown in a different color, etc. from the one of the previous guide route from which the car deviates and the previous guide route can be distinguished from the return route.

Furthermore, the (N-1)-th guide route is shown in the 3rd screen. Here N-1=0, this (N-1)-th guide route is the first guide route which was identified with the route search processing of Figure 5 or is the guide route when the car deviates. Next if the "RETURN" icon (the return key) which was displayed in the screen of display 33 is pushed (step SP18), the guide route which is displayed in the 2nd screen and the 3rd screen is changed to the immediate previous guide route respectively. Furthermore, if the search processing of whole route in step SP30 which is described later is repeated, the N piece of the guide route is identified. Immediately before the above return key is pushed, the latest N-th guide route is showing on the 2nd screen and the (N-1)-th guide route is showing on the 3rd screen. The push of the icon of the above "RETURN" (the return key) depends on the on/off position of the touch switch 34.

Then, if the return key is pushed, the (N-1)-th guide route is shown in the 2nd screen and (N-2)-th guide route is shown in the 3rd screen. In this way, when the return key is pushed, the display condition of display 33 is returned to the immediate previous condition. A series of these processings is executed by steps SP14 to SP22.

That is, when the "RETURN" key is pushed, "1" is subtracted from the value of number N of routes (step SP20). When the value of number N of routes is not smaller than "1" (step SP22), step SP14 is again returned to, and the guide route which was searched once before is shown in the 2nd screen and the guide route which was searched twice before is shown in the 3rd screen.

When the value of number N of routes is smaller than "1" (step SP22), because there is no identified route before the guide route of N=0, the guide route which was guided when the car deviated is selected (step SP24). Then the image before the division is shown, and the previous route and the car which deviated from this route are shown in one map screen (step SP25). After this, the other guide/display processing is executed (step SP42) and the guide/display processing of Figure 27 is ended. In this case, the guiding processing of a route isn’t executed.

Moreover, if the "RETURN" key is pushed when the number N of routes is "1", division isn’t canceled. The return route is shown in the 2nd screen and the guide route from which the car deviated may be continuously shown in the 3rd screen. In this case, when 2nd screen or 3rd screen route is chosen, screen division is canceled. Moreover if the "RETURN" key is pushed when the number N of routes is "1", the return route of the 2nd screen may be compulsorily selected, and it is determined that a return to the previous guide route is required.

Furthermore, when the car deviates from the previous guide route, the screen is moreover divided and the subroutine of the guide/display processing of Figure 27 is called, and the processing of step SP18 is also executed first. In other words, when a screen was divided, it is determined whether the return key is pushed or not or it is determined whether the route identifying key etc. which is described later is pushed or not. Moreover, once re-search instruction is inputted, the screen of display 33 is divided. Then, if the guide routes of the 2nd screen or the 3rd screen are not chosen by the operator or the return key (RETURN) isn’t repeatedly pushed until the number N of the routes becomes "0", this division is continued. However, if the guide route is chosen, the division is canceled and the screen is restored to its undivided state and the guiding processing by the identified guide route is executed.

Furthermore, the guide/display processing of Figure 27 is repeated until the car reaches the end point of guide route. Furthermore, the reduced scale of the map which is displayed in the 2nd screen and the 3rd screen isn’t especially limited to this embodiment. When another re-searched route is displayed, the whole route may be shown on the screen. Or in case of the reduced scale of the map which was displayed in the 1st screen before the division, the map of the 2nd screen and the 3rd screen may be shown.

To the number N of routes "1" is added by (step SP28) and a new guide route is searched when the return key is pushed, i.e. the "RETURN" key is not found in step SP18 to have been pushed and the re-search key is pushed (step SP32). An identified new guide route is stored in the RAM 5 as the N-th guide route (step SP30). Furthermore, in the searching of the guide route in this step SP30, the road which is used as guide route and was identified before is difficult to be selected. In this case, the new searching cost is added to the already selected road which composes the guide route and plural guide route which was composed by the different road is searched. In the whole route searching at this step SP30, processing as in the step SL8 etc. of the above Figure 22 is executed.

Further, the searching condition of the guide route in this step SP30 may be different from the searching condition of the first guide route. For example, the first guide route is a toll road (expressway) primarily and the second guide route doesn’t use a toll road. Moreover, the first guide route is the shortest distance to the destination and the second guide route is a wide road primarily. In this way, each route search condition may be changed in repeated guide route searching.

The guide route which is searched in the step SP30 is displayed in the 2nd screen and the guide route which is displayed in the 2nd screen is shown in the 3rd screen (step SP14). Furthermore the guide route which was searched first by the route search processing of Figure 5 or the present guide route may be always shown in the 3rd screen. In other words, the latest guide route which was searched every time the "re-searching" key is pushed is shown in the 2nd screen. The guide route from which the car has deviated is shown in the 3rd screen. Thus, the previous guide route and the new guide route of every search processing executed can be directly compared.

Moreover each route which is displayed in the 2nd screen and the 3rd screen may be freely specified and be shown by number N of the routes. In other words, when re-searching is executed in the N time, one of the N pieces of routes is selected and may be shown by each of the 2nd and the 3rd screens.

Furthermore, when the N number of routes is "1", a route except the guide route which was identified by the route search processing of Figure 5 is shown in the 3rd screen. In other words, when the new route which is searched at the guide/display processing of Figure 27 is selected as the guide route, this new guiding road is referred to as a basic guide route. Therefore while guiding processing is executed by the new guide route which is searched by the re-searching, the new guide route is shown in the 3rd screen if re-search is instructed once again.

Further, when a re-search key isn't pushed in the step SP32, it is determined whether a guidance beginning (route identifying) key is pushed or not (step SP34). Furthermore, when the search processing of the surrounding route of the step SP10 is executed, a return route is displayed in the 2nd screen and the previous guide route is displayed in the 3rd screen, but the car is not on this guide route. Therefore, when guidance by the guide route of this 3rd screen is required, the guiding can be executed using the return route of the 2nd screen. Then when a return route is displayed in the 2nd screen, the icon "guidance beginning" is displayed in the 2nd screen and it is determined whether this guidance beginning key is pushed or not in the step SP34.

Further, if a 3rd screen (the deviations from the guide route) is chosen when the number N of the routes is "1", nothing may be guided. In this case, this screen is returned to the single screen before the division, the guide route from which the car have deviated and the car is displayed and similar processing to the processing (steps SP24 and 25) when the "RETURN" key is pushed is executed when the number N of the routes is "1".

However when whole route searching in step SP30 is repeated, as in the 4th embodiment, the icon of "route identifying" is shown in the screen of display 33. Then, if the guidance beginning (the route identifying) key isn't pushed (step SP34), "the other guide/display processing" of step SP42 is executed and the processing of Figure 27 is ended. When the route identifying key is pushed, if the guide route of the 2nd screen is chosen (step SP36), the screen division of display 33 is canceled, the guide route which is displayed in the 2nd screen is shown in the 1st screen after division cancellation (step SP38), "other guide/display processing" is executed and information according to the chosen guide route is displayed and reported and so on (step SP42). The above "route identifying", i.e. the choice of the guide route also depends on the on/off position of the touch switch 34.

Further, the screen division of display 33 is also canceled when the guide route of the 3rd screen is chosen, the guide route which is chosen is shown in the single screen of display 33 (step SP40), "other guide/display processing" is executed and information according to the chosen guide route is displayed and reported and so on (step SP42). After this, the processing of this Figure 27 is ended and processing returns to the flow chart of Figure 5. Furthermore, the reduced scale of the map after this division cancellation may be the same as or be different from the reduced scale of the map before the division.

Figure 28 shows the screen of display 33 before the division. The first guide route 162 which is searched by the route search processing of Figure 5 is shown in screen 104, the symbol 100 which shows the present position and the direction of the travel of the car that has deviated from this guide route 162 is shown in screen 104 and the icon 174 of "re-searching" which is to be determined in the step SP4 is shown in screen 104.

Figure 29 shows the divided screen of display 33 and shows the screen of the display 33 immediately after the step SP10 of Figure 27 is executed. The return route 178 which is identified by the search processing of the surrounding route of the step SP10 is displayed in 2nd screen 108 and the guide route 162 which is displayed in Figure 28 is shown in 3rd screen 110. Further icons 174, 176 and 168 are shown in the 2nd screen 108 and the 3rd screen 110, the icon 174 designates the "re-identifying" key and the icon 176 designates the "guidance beginning" which is to be determined in the step SP34 and the icon 168 designates "RETURN" key which is the object of determination of the step SP18, i.e. a return key.

Figure 30 shows the screen of the display 33 immediately after the step SP30 of Figure 27 is executed. The guide route 180 which is identified newly in the step SP30 and the guide route 162 which is identified for the first time are shown at 2nd screen 108 and the return route 178 which was displayed in the 2nd screen of Figure 29 is shown in the 3rd screen. Furthermore, icons 174 and 168 have a function which is the same as that of the icon of Figure 29 and icon 166 is a route identifying key and corresponds to the "guidance beginning" icon of Figure 29. Further two guide routes are displayed in the 2nd screen 108 of Figure 30 but only guide route 180 may be shown.

Figure 31 shows the screen of the display 33 which is returned to the single screen in the step SP40 of Figure 27. For example, if icon 166 is pushed in Figure 30 and the return route 178 of 3rd screen 110 is chosen, the screen division is canceled and the return route 178 and the guide route 162 are shown wholly in the single 1st screen 104. Furthermore, the icon 174 is also shown in the screen 104 after this division cancellation.

Figure 32 shows the other example of Figure 24 and Figure 25 of the 4th embodiment and Figure 30 of the 5th embodiment. In this example, a distance and time information 186 are shown with the guide route. This distance and time information indicates a distance and the required time to the end point of guide route. For example this distance and time information are the distance according to the route and the required time to travel this distance at the prescribed speed, when the guide route 182 is travelled to the end point of guide route in Figure 32.

The travelling distance to the end point of the guide route 184 and traveling time are also shown in the 3rd screen 110 of Figure 32 as the distance and time information 186. Figure 33 shows the guide route which is changed from Figure 32 when the step SL26 etc. of Figure 22 is executed. The distance and time information 186 of this Figure 33 indicate the travelling distance and the required time to the end point of the guide route 188. Furthermore, the 3rd screen 110 of Figure 33 is copied from the 2nd screen of Figure 32.

Further in the Figures 32 and 33 the distance and time information 186 may include the VICS information (construction information or information at the congestion road in the route etc.) which is received by data sending and data transmitter/receiver unit 27 and may include the number of right or left turns in this route and so on. This VICS information can include congestion information at a parking lot around the route and so on.

Moreover, names of central roads (name of national highway and prefecture road, etc.) which composes the guide route and names of main intersections (intersection having a name) may be shown. These road name and intersection names, etc. can be shown in list form, when the icon key of "route information" is pushed. This is displayed on the screen. In this case, the detailed information (road name and so on) of each guide route which is displayed in the 2nd and the 3rd screen, for example, the distance and the required time of the guide route to the destination and VICS information, etc. are shown. In this way, more information which contributes to choose the route is displayed and therefore the comparison and the examination of each route become easy.

Further in each "search processing of another route", "search processing of surrounding route" and "search processing of the whole route" of 4th and the 5th embodiment, the traffic information of VICS, etc. which is received from outside may be taken into account in the searching cost.

Therefore, the road which is crowded becomes difficult to be chosen based on the congestion information and the route which goes around the congestion road is searched. Further, in the 4th and in 5th embodiment the travel direction image and the north image of each divided screen may point to the right, the left or down.

18. Guide/display processing of 6th embodiment

Figure 34 shows the flow chart of the guide/display processing of the 6th embodiment. In the 6th embodiment, the screen is divided when the car deviates from the first guide route. The road map which includes the part of the deviating guide route and the present position of the car is shown on the divided 2nd screen. The previous guide route which is displayed before the division or the new re-searched whole guide route to the destination is shown on the divided 3rd screen. The previous guide route from which the car deviates is searched by the route search processing (step SA4) of Figure 5 or the whole route re-searching (step SR20) which is described later.

Further the return route which returns to the previous guide route isn't shown in the 2nd screen immediately after the division. However if the operator orders the guidance on the return route, the return route is shown on the screen. Furthermore, the reduced scale of the displayed map of the 2nd screen is adjusted and the whole return route is shown in the 2nd screen.

If the car is first on the guide route (step SQ2) and the screen of display 33 is divided (step SQ14), single screen processing is executed (step SQ16), the screen division of display 33 is canceled and the map which is displayed in the 3rd screen is shown in the whole screen of display 33.

Furthermore the determination processing of the above step SQ2 is executed as follows. Present position information PI and guide route data MW are read from RAM 5. It is determined whether or not the coordinate which is indicated by present position information PI almost agrees with the geographical coordinate of the road which composes a guide route data MW. If the two agreed with each other, the car is traveling on the guide route and if they do not agree with each other, it is not, the car deviates from the guide route. Further determination processing of the above step SQ14 is executed as follows. Screen division of this display 33 is stored in the RAM 5 as the screen condition GJ and it is determined whether display 33 is divided or not by the data of this screen condition GJ.

Moreover, when the car is on the guide route (step SQ2) and the screen is divided (step SQ14) , the car deviates from the guide route once and returns to the guide route again. In other words, when the car deviates from the guide route, the screen is divided. However when the operator doesn't instruct to search a route or change a route, etc. and the car returns to the previous guide route, the processing of steps SQ2, SQ14 and SQ16 is executed.

In the case of an unforseen visit to the facilities in the route neighborhood while the car is traveling the guide route, the car deviates from the guide route temporarily, and returns to the guide route again after the visit is finished. By the way, when a auto re-route mode is set in the conventional navigation device, if the car deviates from the guide route, a new guide route from the present position to the destination is automatically re-searched. However, this new guide route is always the shortest distance to the destination. Rather, if the car returns to the previous guide route, the car can sometimes reach the destination more quickly. In this case, the guide route is not automatically re-searched and it is better that the car is returned to the previous guide route by the operator. Then, in the condition in which the auto re-route mode isn't set, when the car returns to the previous guide route again, the processing of the above steps SQ2, SQ14 and SQ16 is executed. Furthermore, in the auto re-route mode, it is detected that the car deviates from the route in guidance and a route from the present position of the car to the destination is automatically re-searched.

If the screen isn't divided in the Figure 34 (step SQ14) or the screen division is canceled (step SQ16), the other guide/display processing is executed (step SQ26) and various information is displayed and reported and so on according to the chosen guide route. For example, when the car approaches an intersection at which it is to turn right or left, a distance to the intersection is shown in display 33. After this the processing of Figure 34 is ended and the flow returns to the overall processing of Figure 5.

On the other hand, when the car deviates from the guide route (step SQ2), if the return route is the guide route (step SQ3), the single screen choice and the display processing of the 2nd screen and the 3rd screen since step SQ20 are executed. In this step SQ3 based on the return route which is identified by "processing to deviating route" which is described later, it is determined whether this is done during the return to the previous route or not. When the processing of Figure 34 is repeatedly executed, the determination of this step SQ3 is executed to prevent "processing to deviating route" from being executed by mistake. Furthermore, the processing since this step SQ20 is described later.

When the return route is not processed during guide processing, a subroutine "processing to deviating route" is executed (step SQ4). In this processing, the screen of display 33 is divided at the center into the right and the left sides in the beginning, the screen on the left side of the screen becomes a 2nd screen and the screen in the right side becomes a 3rd screen. In this case this video memory is divided into two areas, independent image data is written in each division area and the display screen of display 33 is divided. Furthermore, the display 33 may be originally composed of two display devices.

After a screen is divided into two, the return route which returns to the route which was the guide route before deviation is searched. Furthermore, when a road map around the present position of the car is displayed in one of the screens (the 2nd screen) formed as result of the division, this return route is used. If the navigation device is set in the auto re-route mode, a route from the present position of the car to the end point of guide route is automatically re-searched. Furthermore, a return route isn't displayed in the 2nd screen immediately after the division and a road map around the present position of the car is shown.

Figure 40 shows the condition of the display 33 immediately after the car has deviated from the guide route 146 which is searched first. Symbol 100 designates the present position and the traveling direction of the car. The screen of display 33 before this division is a 1st screen. Icons 250, 256 and 252 with the letter "reduction", "magnification" and "whole route" and so on are shown in the lower part of the 1st screen. When the "reduction" icon 250 is touched by the operator, the reduced scale of the map which is displayed in the 1st screen is made smaller and a wide area map is shown.

Further, when the "magnification" icon 256 is touched by the operator, the reduced scale of the map which is displayed in the 1st screen is enlarged and a detailed map or a house map is shown. Moreover, when "whole route" icon 252 is touched by the operator, a guide route from the present position of the car to the end point of guide route is re-searched.

Further, Figure 41 shows the display screen of the display 33 immediately after the "processing to deviating route" is executed. The car which deviated from guide route 146 and the guide route 146 is shown as symbol 100 in the 2nd screen 108. The map which was displayed in the 1st screen which is the screen before the division is shown in the identical reduced scale in the 3rd screen 110. Furthermore, in the lower part of the 2nd screen 108, the "whole route" icon 252, the "guidance beginning" icon 255, the "reduction" icon 250 and the "magnification" icon 256 are shown. The "guidance beginning" icon 255 is used for the instruction that guidance by the return route should begin.

When "processing to deviating route" of the subroutine is executed at Figure 34 and the return route or the whole route is searched, it is determined whether the pushing of the guidance beginning key is detected or not (step SQ6). This guidance beginning key is shown as the icon of letter "guidance beginning" in the 2nd screen which is described above. Then it is determined by a switch signal which is outputted from the touch switch 34 whether a display part of this "guidance beginning" is touched by the operator or not.

It is decided by the pushing of this "guidance beginning" key whether the guiding process by the return route which returns to the previous guide route is executed or not. Therefore processing since step SQ18 of Figure 34 is executed if the "guidance beginning" key is pushed. In other words, a return route is displayed in the 2nd screen and specified guiding processing is executed. However, if the pushing of the "guidance beginning" key is not detected (step SQ6), the determination of the following condition is executed. That is, it is determined whether a whole route which is re-searched from the present position of the car to the destination is specified or not (step SQ8). The re-searching of this whole route is executed when the auto re-route mode is set or the re-searching is ordered by the operator.

When this new whole route is chosen, the guide route for which the guiding processing has been executed is stored as a new guide route in the RAM 5 (step SQ10). Moreover, the division of display 33 is canceled and this new guide route is shown on the whole screen (step SQ12). In other words, the screen which was divided into two is restored to one screen and a new guide route is shown in this single screen. After this, "Other guide/display processing" by which information along the new guide route is reported and displayed is executed (step SQ26). Then, the processing of Figure 34 is ended and the flow is returned to the overall processing of Figure 5. Furthermore, a reduced scale before the division (the 1st screen) is used as the reduced scale of the new guide route which is displayed in the single screen.

On the other hand, when the "guidance beginning" key is pushed (step SQ6), the return route which is searched when the screen was divided is shown in the 2nd screen (step SQ18). Next, it is determined whether this return route is displayed in one screen or not (step SQ20). In this determination, it is determined whether the icon of "division cancellation" (example) which is displayed in the screen of display 33 is touched or not by the operator. Single screen processing is executed if screen cancellation is chosen (step SQ12).

In this single screen processing, screen division by display 33 is canceled and a return route and the previous guide route are shown in the single screen. Further, the reduced scale of the map which was displayed in the 2nd screen or the reduced scale of the map which was displayed in the 1st screen before the division is used as the reduced scale of the return route which is displayed in this single screen. After single screen processing, the other guide/display processing (step SQ26) is executed and the processing of Figure 34 is ended.

Further, when the display of the return route isn't chosen with the single screen (step SQ20), subroutine "display adjustment of 2nd screen" showing the movement of the car is executed (step SQ22). In this "display adjustment of 2nd screen", the position of the car which is displayed or the reduced scale of the map in the 2nd screen is adjusted. In other words, the return route and the car are shown by the following two display ways in the 2nd screen. The return route where the car is in the center is shown on the whole 2nd screen by the 1st way of displaying. A return route is displayed at the whole 2nd screen by the 2nd way of displaying and is shown for the car to move on the return route. In other words, in the 2nd way of displaying, the display position of the car moves on the 2nd screen as the car travels. Furthermore "display adjustment of 2nd screen" by this 1st or 2nd way of displaying is described later.

After "display adjustment of 2nd screen", the subroutine "display processing of 3rd screen" is executed (step SQ23). In this subroutine "display processing of 3rd screen", the map which was displayed in the 1st screen before the screen division is shown in the 3rd screen. Furthermore, a displayed map is also scrolled on this 3rd screen as the car travels. After this, "guide processing of chose route" is executed and sound information, etc. by the return route are reported (step SQ24).

Furthermore, the orientated or travel direction map which is executed in the 2nd embodiment is shown in the 3rd screen. After the above step SQ24 is executed, the "other guide/display processing" is executed (step SQ26). Then the processing is returned to the main flow chart of Figure 5. Furthermore, the reduced scale of the map of the above 3rd screen may change with the traveling position of the car.

19. Processing to deviating route of 6th embodiment

Figure 35 shows the flow chart of the subroutine "processing to deviating route" of Figure 34. First it is determined whether or not the car which deviated from the guide route is traveling the return route which returns to this route (step SR2). Then after the processing series of Figure 35 is executed, the return route is already identified, if the route isn't chosen by the operator, the processing of Figure 35 is repeatedly executed. Further "searching processing of return route" is executed when the car isn't traveling on the return route (step SR4).

Furthermore, the condition that the car is not traveling the return route which has been identified also includes the condition that a return route is not searched (identified) at all. This is the condition immediately after the car deviates from the previous route. But if the car is travelling on the already identified return route, the searching of the return route isn't executed. In this "search processing of return route", the processing which is the same as the search processing of surrounding route of the 5th embodiment of the above guide/display processing is executed.

In other words, the route which connects to the guide route from which the car has deviated is searched. Moreover, in the case of this return route searching, weight is put on the selection of the road which connects to the previous guide route and this road has priority in the selection.

For example, in the case of the opposite road to the direction of the moving of the car, a fixed searching cost value is added to the total searching cost and the total searching costs become big. Similarly, in the case of the opposite road to progresses direction of the road which connects to the guide route, a specified value is added to the searching cost to become big. As a result, a road which runs to the guide route is primarily selected.

Then, the shortest route which links the intersection nearest to the destination which is the nearest point of the guide route from which the car has deviated and the present position of the car is searched. But when the route which links the present position of the car and the above intersection can not be discovered, the route which links the intersection that is next nearest to the destination and the car is searched. In this way, the return route which links the present position of the car and the intersection of the previous guide route that is nearest to the destination at the point at which the car has deviated from is searched.

If a return route is searched or the car is traveling on a return route already, it is determined whether the screen of display 33 is divided or not (step SR6). If the screen isn't divided, the screen division processing of display 33 is executed (step SR8). In other words, the area of the image memory in which the displayed image data is written is divided and the display screen is divided. In this case, as with the above embodiments, the center of display 33 is made a boundary and the screen is divided into the right and the left sides.

Then the screen on the left side is made the 2nd screen and the screen in the right is made the 3rd screen. Furthermore, the screen before the division is the 1st screen. If display 33 is divided, the screen division processing of step SR8 isn't executed (step SR6). In other words, the screen of display 33 is divided once the car deviate from the guide route and the processing of Figures 34 and 35 is executed. After that, when the choice of a route and so on is not made, the screen division is maintained. In this case the screen division processing of this step SR8 isn't executed.

When the screen is divided by the processing of step SR8, the subroutine "initial showing of 2nd screen" is executed (step SR10). In this "initial showing of the 2nd screen", the car and the guide route from which the car deviated are shown in the optimally reduced scale on the 2nd screen. In other words, the car and the connection point (the intersection and so on) of the return route which is identified by the step SR4 and the previous guide route are shown in the optimally reduced scale in the 2nd screen. Furthermore, in this "initial showing on the 2nd screen", the return route itself is not displayed. But if the guidance beginning key isn't pushed in the step SQ6 of Figure 34, the return route isn't shown in the 2nd screen. This "initial showing of 2nd screen" is described later.

After the "initial showing of 2nd screen", it is determined whether the navigation device of this embodiment is set in an auto re-route mode or not (step SR12). If the auto re-route mode is set, it is determined whether the present position of the car is on the re-searched route or not (step SR16). In the processing of the steps SR12 and SR16, when the navigation device is set in the auto re-route mode, and the route isn't specified by the operator after the new whole route is re-searched, the processing of Figures 34 and 35 is repeated. Therefore it is prohibited that the new whole route is re-searched by repeating the processing of the step SR16.

When the car isn't traveling the re-searched route, this can also mean that the whole route isn't re-searched at all. Therefore if the car isn't traveling the re-searched new route, the whole route to the end point of guide route from the present position of the car is re-searched (step SR20). Then, the re-searched new whole route is shown in the 3rd screen. Furthermore, the previous guide route from which the car deviates may be also shown in this 3rd screen. The reduced scale display of this 3rd screen may be the same as the reduced scale display of the 1st screen before the division. When the new whole route is displayed, the reduced scale is adjusted and the whole route may be shown on the screen. When this newer whole route is displayed, as in Figure 32 and 33 of the 5th embodiment, the peculiar information in the newly searched route also may be also shown. In other words, the information of the distance with the full length of the route from the present position of the car to the destination, the expected required traveling time, the name of the principal road, the name of the principal intersection and so on may be shown together. The peculiar information in this new route may be shown in the list form according to the operator's choice.

When the re-searched whole route is displayed in the 3rd screen, the processing of Figure 35 is ended and the flow is returned to the processing of Figure 34. Further, when the auto re-route mode (step SR12) is not set, the map which is displayed in the screen (the 1st screen) of display 33 before the division is shown in the 3rd screen (step SR14). In other words, the car that has deviated from the previous route is shown in the center of the map of the 3rd screen. Furthermore, the reduced scale of the map before the division is used as the reduced scale of the displayed map of this 3rd screen. Moreover, the map which includes the car, the destination and the previous guide route may be shown in this 3rd screen. In other words, the reduced scale of the map may be adjusted and the previous whole route may be shown. Or the map may be shown in the 3rd screen at the reduced scale which is the same as the reduced scale of the map which is displayed in the 2nd screen.

When the display of the map of the 3rd screen ends (step SR14), it is determined whether the whole route key is pushed or not (step SR18). The on/off position of this whole route key is determined by the operator's touch of the icon "the whole route" which is displayed in display 33. This touch or non-touch is determined by the detection signal of touch switch 34. "Re-searching processing of whole route" which is mentioned above is executed if the "whole route" key is pushed (step SR20). After this, the re-searched whole route is shown in the 3rd screen (step SR22). If the whole route key isn't pushed, the processing of Figure 35 is terminated and the flow is returned to the processing of Figure 34.

20. 1st embodiment of initial showing of 2nd screen

Figure 36 shows the 1st embodiment of the "initial showing of the 2nd screen" of Figure 35. In the "initial showing of 2nd screen" of Figure 36, a map is displayed in the 2nd screen at the reduced scale where the whole return route can be displayed and the present position of the car becomes the screen center.

This return route is searched as the map information to return to the previous route. But, the return route itself is not shown in the 2nd screen.

The node coordinate values of the roads which compose a return route and a part of the previous route from which the car has deviated is read from the node data file F3 etc. (step ST2). From the coordinate values of each node which was read in step ST2, the maximum value (Emax, Nmax) and the minimum value (Emin, Nmin) of the east longitude direction and the north latitude direction are retrieved (step ST4). The maximum and the minimum value of the direction of this east longitude and the north latitude are explained below using Figure 47.

For example, the route PC10 which is linked with node P24 from node P20 at Figure 47 is a part of the previous guide route and the route PC12 of the dotted line and the route PC11 of the chain line are the return route. In other words, the point (the estrangement point, the leaving point) where the car deviated from the previous route is node P22. The junction (the return point) of the identified return route and the previous guide route is node P12. From the present position P10 of the car to node P12 at the confluence is an un-travelled part in the return route. Further, a route PC11 to the present position P10 of the car from the node P22 of the leaving points is supposed to be the journey on which the car has deviated from the previous guide route. Furthermore, the destination of the previous guide route is in the direction of node P24. The north which is a absolute azimuth points to the upper margin of Figure 47. Furthermore, when the car deviates from the previous route, the return route is searched at once. Therefore, actually route PC11 also is a part of the return route. Here for convenience of the explanation, it is supposed that the car moved to the present position P10 on the return route.

When the return route of this Figure 47 is displayed in the 2nd screen, the route which joins the whole return route of route PC12 and route PC11 and each of the following nodes is shown. The previous route which links node P28 on the side of the starting place and node P24 on the side of the destination on the both sides of node P12 at the junction is shown together with the return route on the 2nd screen. Further in the showing of the return route in this 2nd screen, the whole return route and the previous route from the node P22 of the leaving point to node P12 at the confluence may be shown in the 2nd screen.

By the way, in the return route (route PC11 and route PC12) of Figure 47, the node which has the maximum east longitude becomes node P24. Therefore, the coordinate value of the east longitude of node P24 is stored in the RAM 5 as Emax. Similarly if the node which has the maximum north latitude is node P12, the coordinate value of the north latitude of this node P12 is stored in the RAM 5 as Nmax.

Further if the node which has the minimum value of the east longitude is node P14, the coordinate value of the east longitude of this node P14 is stored in the RAM 5 as Emin. If the node which has the minimum value of the north latitude is node P16, the coordinate value of the north latitude of this node P16 is stored in the RAM 5 as Nmin.

Furthermore, when the previous route is also displayed in the 2nd screen, this route may include the following node and a route. That is, the previous route which links the node P24 on the side of the destination from the confluence P12 and the node P26 on the side of the starting place from the node P22 of the leaving point may be shown in the 2nd screen together with the return route. In this case, the node P24 has the maximum of the east longitude, the node P20 has the maximum of the north latitude, the node P26 has the minimum of the east longitude and node P16 has the minimum of the north latitude. Then, the coordinate value of each node is stored in the RAM 5 as the maximum (Emax, Nmax) and minimum value (Emin, Nmin) of the east longitude and the north latitude.

As mentioned above, the following expression is computed based on the coordinate (GX, GY) of the present position P10 of the car when the maximum values (Emax, Nmax) and minimum value (Emin, Nmin) are detected.

$$|GX - Emax| \qquad (1)$$

$$|GX - Emin| \qquad (2)$$

An absolute value is found by the expressions (1) and (2). Then the bigger value of the computation result of expressions (1) and (2) is stored in the RAM 5 as east longitude width WE (step ST6).

Moreover the following expressions are computed.

$$|GY - Nmax| \qquad (3)$$

$$|GY - Nmin| \qquad (4)$$

An absolute value is also found by the expressions (3) and (4). Then the bigger value of the computation result of the expressions (3) and (4) is also stored in the RAM 5 as north latitude width WN (step ST8).

Then, the reduced scale of the map which can display the above east longitude width WE and north latitude width WN is found using the numerical value calculation table etc. which is stored in the information memory unit 37. In other words, the road map which includes a return route with the car being situated on the center of the screen is shown in the 2nd screen. The reduced scale of this displayed road map is found using the numerical value calculation table (step ST10).

It is concretely explained using Figure 48. Divided display 33 is shown in Figure 48. The area which can be effectively displayed in this 2nd screen 108 is a range according to the horizontal width HC6 and the perpendicular height HC14. Then the road map which includes the return route etc. is shown in the area which is about 5 percent smaller than the area of this effective display.

The area which is about 5 percent smaller has the horizontal width HC4 and the perpendicular height HC10. The reduced scale of the map is found for the above east longitudinal width WE to be settled within width HC2 of the half with this horizontal width HC4 and for north latitudinal width WN to be settled within height HC8 of the half of perpendicular high HC10. In this way, the area which displays the map which includes the return route is made smaller than the area of the effective display, i.e. the largest display area and therefore important information is prevented from being displayed at the end of the screen. When the important information is displayed at the end of the screen, it is difficult to see the information.

The value of the east longitudinal width WE and north latitudinal width WN and each reduced scale value of the map are made to correspond to each other and are stored in the numerical value calculation table. The reduced scale value which corresponds to the east longitude width WE and north latitude width WN is found from the numerical value calculation table after the east longitudinal width WE and the north latitude width WN are found by each of the above expressions. Furthermore, this map of reduced scale may be found by the calculation of the proportional expression and so on.

For example, if the map of reduced scale is "MSA", the geographical distance of the map which can be displayed with the actual size of the 2nd screen is proven. Therefore, the vertical geographical distance of the map which was displayed in the 2nd screen becomes "MYA" and the lateral side geographical distance becomes "MXA" when the map of reduced scale is "MSA". If the geographical distance which can be shown is proven in these maps of reduced scale, the proper reduced scale to display a road map with the above east longitudinal width WE and north latitudinal width WN is found by the following expression.

$$MSA \times WE/MXA \quad (5)$$

$$MSA \times WN/MYA \quad (6)$$

The high value (the reduced scale in which the wide area map can be displayed) of the reduced scales which is found by the expression (5) and (6)is selected as the proper reduced scale. The reduced scale of the map that is calculated from the east longitude width WE and north latitude width WN by the expression (5) and (6) is stored in the above numerical value calculation table. Furthermore, when an orientated map is displayed in the 2nd screen, the calculation by the expression (5) and (6) is executed.

When a travel direction map is displayed, the following value is calculated in the revision by each east longitude width WE and north latitude WN. In other words, the cosine value of the relative azimuth data D $\theta$ which indicates an angle to the direction of the moving of the car to the absolute azimuth is found. Then, the above cosine value is multiplied by the distance of the oblique side of the triangle which consists of the east longitude width WE and north latitude width WN. The map of reduced scale in which this multiplication value is settled within the width HC2 and the height HC8 of Figure 48 is found.

The "whole route", "guidance beginning" icons and so on are shown in interval HC12 of the lower part in the 2nd screen of Figure 48. The road map and so on may be also displayed in the background of the icon in this interval HC12 and the map information is perhaps not shown. Further, the area where a return route is displayed isn't limited to the area which is about 5 percent smaller than the effective display area of the 2nd screen. In other words, it may be smaller than 5 percent or may be 1-5 percent smaller than the effective display area.

When a map of reduced scale is found in the step ST10 of Figure 36, the map which includes the return route in this reduced scale is shown in the 2nd screen (step ST12) with the car being in the center of the screen. Furthermore, here the return route itself is not yet shown. After this, the flow is returned to in Figure 35 and the display processing and so on of the 3rd screen is executed.

Furthermore when the return route PC12 is displayed in the 2nd screen in the above embodiment, a previous party route linking nodes P28 and P24 in the both sides of the node P12 of a confluence is also shown. However the return route PC12 may be shown in the 2nd screen only for node P12 at the confluence to be displayed. Moreover the map in the range which includes the whole return route from the node P22 of the leaving point to confluence P12 may be shown in the 2nd screen.

21. 2nd embodiment of "initial showing of 2nd screen"

Figure 37 shows the flow chart of the 2nd embodiment of "initial showing of 2nd screen" of Figure 35. At the 2nd embodiment of this "initial showing of 2nd screen", the present position of the car doesn't always become the center of the screen. In other words, the map which includes the whole return route which was found first is displayed as a whole in the 2nd screen and this display is maintained. Therefore, it is shown for the car moving on the map which is displayed in the 2nd screen.

Firstly the node coordinate values of each road which compose the return route are read (step SU2). The maximum (Emax, Nmax) and minimum value (Emin, Nmin) of the east longitude and the north latitude are retrieved from the coordinate values of each node which is read in the step SU2 and the coordinate values of the present position of the car (step SU4). This processing is the same as the step ST4 of Figure 36. Furthermore, in this embodiment the return route is also composed of route PC11 and route PC12. Further, when the map which includes the return route is displayed in the 2nd screen, a part (Figure 47) of the previous route between node P28 and P24 is also shown.

Furthermore, the previous route between this node P28 and P24 doesn't have to be shown and the map in the range which includes only route PC12 to the node P22 of the leaving point or the present position P10 of the car from node P12 at the confluence may be shown. Moreover the map in the range which includes the whole return route and the previous route to node P24 from node P26 as in the case of the "initial showing of 2nd screen" of the 1st embodiment may be shown in the 2nd screen. The case in which the previous route between the above node P28 and P24 and the return route to node P12 at the confluence from the node P22 of the leaving point is displayed in the 2nd screen is explained below.

For example, in the return route (route PC11 and route PC12) of Figure 47, node P24 has the maximum east longitudinal value. Therefore the coordinate value of the east longitude of the node P24 is stored in the RAM 5 as Emax. Similarly, node P12 has the maximum north latitudinal value. Therefore the coordinate value of the north latitude of the node P12 is stored in the RAM 5 as Nmax.

Node P14 or node P22 has the minimum east longitudinal value. Therefore the coordinate value of the east longitude of node P14 is stored in the RAM 5 as minimum value Emin. Node P16 has the minimum value of the north latitude. Therefore the coordinate value of the north latitude of node P16 is stored in the RAM 5 as minimum value Nmin.

Then, the following expression is computed based on each maximum and minimum value of each east longitude and north latitude (step SU6).

$$Emax - Emin = XE \quad (7)$$

$$Nmax - Nmin = YN \quad (8)$$

Then the reduced scale in which the map in the interval XE of this east longitude and the interval YN of the north latitude can be displayed in the screen is found using the numerical value calculation table which is beforehand stored in information memory unit 37 (step SU8). The map of reduced scale in which the interval XE of the east longitude is settled within the horizontal width HC4 and the interval YN of the north latitude is settled within the perpendicular height HC10 of Figure 48 is found by the numerical value calculation table as in the case of the "initial showing of the 2nd screen" according to the 1st embodiment.

Furthermore, when the interval XE of east longitude and the interval YN of the north latitude are supplied, the reduced scale value by which the return route and the part of the previous route can be correctly displayed in the display area of the 2nd screen which is defined by horizontal width HC4 and the perpendicular height HC10 is stored in the numerical value calculation table. In other words, the reduced scale value which corresponds to the interval XE of the east longitude and the interval YN of the north latitude is stored in the numerical value calculation table. Furthermore, this reduced scale value may be directly found for by calculation. For example, when a map is displayed in the 2nd screen at the optionally reduced scale, a geographical distance i.e. a distance of the direction of the east longitude and a distance of the direction of the north latitude are proven from the actual size of the 2nd screen. Therefore, the map of reduced scale where the interval XE of the specific east longitude and the interval YN of the north latitude are correctly shown in the 2nd screen can be calculated by a proportional expression. Correspondence relation among the map of reduced scale and the interval YN of the north latitude and the interval XE of the east longitude is stored in the above numerical value calculation table.

Furthermore, the areas defined by the horizontal width HC4 and the perpendicular height HC10 are about 5 percent smaller than the effective display area as in the case of the "initial showing of 2nd screen" of the 1st embodiment. A map in the range which includes the return route is shown in the 2nd screen (step SU10) , in the reduced scale which was found in the step SU8, for the east longitude coordinate (Emin + XE/2) and the north latitude coordinate (Nmin + YN/2) and is the screen center. After this the flow is returned to Figure 35. Furthermore, in this 2nd embodiment the map which includes the return route is shown in the oriented condition.

Figure 41 shows the state of display 33 immediately after the car deviates from the guide route. In other words, the previous route 146 and the present position 100 of the car are shown in the 2nd screen 108. But the searched return route itself isn't shown and the guiding of the route based upon the return route isn't executed. Furthermore, icons 252 and 255 are shown together. Icon 252 designates the switch which instructs the re-search processing of the whole route of Figure 35 to be begun. Further icon 255 designates the switch by which the instruction of the beginning of guidance by the return route is given. Icons 250 and 256 are switches to change the map of reduced scale of the 3rd screen manually.

Figure 42 shows the state in which the return route 258 is displayed in the 2nd screen. This Figure 42 shows the state of the display 33 when a guidance beginning key (icon 255) is pushed in the display condition of Figure 41. In other words, the return route is shown by dotted line 258 in the condition in which the return route isn't displayed as shown in Figure 41. Furthermore, in the actual display screen, the return route is displayed in a different color from or the same color as the previous guide route 146. Furthermore, Figures 41 and 42, also show the previous guide route linking the node on the side of the starting place of the guide route which is next to the leaving point (the intersection point 261 of Figure 42) and the node on the side of the destination of the guide route which is next to the confluence (the intersection point 259 of Figure 42).

Figure 43 shows the state in which the car has deviated farther from the guide route than in the state in the display condition of Figure 41. In other words, in the condition of Figure 41, the return route is searched once. After this, when the car deviates from this return route once again, a new return route is searched by the processing of steps SR2 and SR4 of Figure 35. Then the road map which includes this new return route is shown in the 2nd screen 108. But because the guidance beginning key isn't pushed in this Figure 43, the return route isn't displayed and the route guidance based on the return route isn't executed. When the guidance beginning key is pushed in the condition of this Figure 43, the return route is shown by dotted line 260 as shown in Figure 44.

Figure 44 shows the state of the return route which is displayed by dotted line 260 in the 2nd screen. This Figure 44 shows the state of the display 33 when the guidance beginning key (icon 255) is pushed in the display condition of Figure 43. In other words, the return route is shown by dotted line 260 from the condition in which the return route isn't displayed as shown in Figure 43. Furthermore, in the actual display screen, the return route is displayed on the different color from or the same color as the previous guide route 146.

Figure 45 shows an application example of return route 260. In other words, when the guidance beginning key is pushed, only the return route 260 which joins confluence 263 and the present position (position of symbol 100) of the car and the guide route 146 to the destination from confluence 263 are shown in the 2nd screen. Therefore the unnecessary part of the guide route, i.e. the part already traveled and so on aren't shown in the 2nd screen.

22. 1st embodiment of "display adjustment of 2nd screen" (step SQ22 of Figure 34)

Figure 38 shows the flow chart of the display adjustment (step SQ22) of the 2nd screen of the 6th embodiment (Figure 34). In "the display adjustment of the 2nd screen" of Figure 38, the display position of the return route of the 2nd screen is adjusted during the travel of the car. In other words, when the car travels along the return route, the return route from the present position of the car to the confluence and the guide route etc. in the confluence neighborhood is shown by the maximum in the 2nd screen. Furthermore, in "the display adjustment of the 2nd screen" of Figure 38, in the road map which includes the return route the car is in the screen center and is shown.

Firstly each road data which composes a remaining route in the return route i.e. an un-travelled route is read from the information memory unit 37. Then each node coordinate value of the read road data is read from node data file F3 etc. (step SV2). The maximum (Emax, Nmax) and minimum value (Emin, Nmin) of the east longitude and the north latitude are retrieved (step SV4) from the coordinate value of the each node which is read in the step SV2.

The processing of this step SV4 is the same as in step ST4 of Figure 36. Then the following expression is computed based on the present position coordinate (GX, GY) of the car and each maximum (Emax, Nmax) and minimum value (Emin, Nmin).

$$|GX - Emax| \quad (9)$$

$$|GX - Emin| \quad (10)$$

Furthermore, in the expressions (9) and (10), the absolute value of the computation result is found. Then the bigger one of the computation values of the expressions (9) and (10) is stored in the RAM 5 as east longitude width WE (step SV6).

Moreover the following expression is computed.

$$|GY - Nmax| \quad (11)$$

$$|GY - Nmin| \quad (12)$$

Furthermore, in expressions (11) and (12), the absolute value of the computation result is found. Then the bigger one of the computation value of the expressions (11) and (12) is stored in the RAM 5 as north latitude width WN (step SV8).

Further, the reduced scale KAP of the map which is displayed at present at the 2nd screen is distinguished (step SV10). Then, the geographical distance RE in the direction of the east longitude and the geographical distance RN in the direction of the north latitude which can be displayed by the discriminated reduced scale KAP are found (step SV12). Furthermore, these distances RE and RN may be found using the numerical value calculation table which is stored in the information memory unit 37 or in the ROM 4 and may be found by proportional arithmetic expression etc.. This numerical value calculation table is the same as the numerical value calculation table which is explained in the above "initial showing of the 2nd screen". In other words, when a map is displayed in the 2nd screen by each reduced scale, the geographical distance which can be shown in the perpendicular direction and the horizontal direction of the 2nd screen corresponds to the above reduced scale and is stored. Then the above distances RE and RN are found using this numerical value calculation table (step SV12).

Next, the comparison between the east longitude width WE and the distance RE and the comparison between the north latitudinal width WN and the distance RN are executed. Then if the east longitudinal width WE is longer than the distance RE or the north latitude width WN is longer than the distance RN, the reduced scale KAP is changed into the value by which the map can be displayed in the wider geographical range (step SV16). In other words, when the remaining return route cannot be displayed on the 2nd screen by the movement of the car, the processing of the step SV16 is executed.

However when the east longitudinal width WE is shorter than the distance RE and the north latitudinal width WN is shorter than the distance RN, it is determined whether the east longitudinal width WE and the north latitudinal width WN can be appropriately displayed by the reduced scale KAP (step SV18). In other words, it is determined whether the east longitudinal width WE is shorter than the distance RE or the north latitude width WN is shorter than the distance RN or not. The East longitudinal width WE $<<$ the distance RE or the north latitudinal width WN $<<$ the distance RN indicate that the geographical range in the return route which should be displayed in the 2nd screen became narrower than the moving car. In this case, a reduced scale KAP value is changed to the value by which the map can only display the narrower geographical range (step SV20). In other words, a map of reduced scale is exchanged for a detailed map to be displayed in a bigger scale.

When the reduced scale KAP is adjusted by the steps SV16 and SV20, determination processing by the steps SV14 and SV18 is executed once again. In other words, the value of the reduced scale KAP is fluctuated for the east longitude width WE and the north latitude width WN to be shown most appropriately. Then when the proper reduced scale KAP is found in the steps SV14 and SV18, the remaining part of the return route is shown in the 2nd screen (step SV22) with the car being in the screen center. After this, the processing is returned to the guide/display processing of Figure 34. After guidance by the return route is chosen in this way, when the car travels, the remaining part of the return route to the confluence decreases. Therefore at the 1st embodiment of "the display adjustment of the 2nd screen", the map reduced of scale is adjusted according to the decreasing remaining part of the return route. For example, when the remaining part of the return route becomes short and the geographical range to be displayed becomes narrow, the reduced scale of the displayed map of the 2nd screen is made small. As the result, a more detailed map is shown at the 2nd screen.

Furthermore, the reduced scale KAP of the map may be found using the table which is beforehand recorded in the information memory unit 37. The reduced scale KAP in which the car becomes the center of the 2nd screen and the remaining return route is efficiently shown on the map may be directly found using the numerical value calculation table which is stored in the information memory unit 37 and so on. Furthermore, the reduced scale KAP becomes the value by which the remaining return route etc. can be appropriately displayed in the area which is a little smaller than the effective display area of the 2nd screen. This is the same as in the case of the processing of "initial showing of 2nd screen" in Figures 36 and 37.

23. 2nd embodiment of "display adjustment of 2nd screen" (step SQ22 of Figure 34)

Figure 39 shows the flow chart of the 2nd embodiment of "display adjustment of 2nd screen". The 2nd embodiment of this "display adjustment of 2nd screen" corresponds to the "initial showing of 2nd screen" of Figure 37. In other words, the remaining part of the return route decreases as the car travels and the map of reduced scale by which this remaining part is displayed efficiently in the 2nd screen is found at any time. Data of un-travelled road to the confluence in the return route from the present position of the car is read from the information memory unit 37 in Figure 39. The node coordinate values of each road which compose a route in the confluence neighborhood of the previous guide route and this remaining return route is read from the node data file F3 (step SW2). The coordinate values of each node which are read in the step SW2 and the maximum (Emax, Nmax) and minimum values (Emin, Nmin) in the direction of the east longitude and the direction of the north latitude from the coordinate value of the present position of the car are retrieved (step SW4). This processing is the same as in the step SU4 of Figure 37.

Then the following expression is computed based on the maximum and minimum value in the direction of east longitude and the direction of the north latitude (step SW6).

$$Emax - Emin = XE \quad (13)$$

$$Nmax - Nmin = YN \quad (14)$$

Then the reduced scale of the map which can display the horizontal distance XE and the perpendicular distance YN is found using the numerical value calculation table which is beforehand recorded in the information memory unit 37 (step SW8). In other words, the reduced scale by which the remaining part of the return route is appropriately displayed in the 2nd screen is found. Furthermore, the calculation of this appropriate reduced scale is the same as "initial showing of 2nd screen" of Figure 37. The map which is displayed in the 2nd screen is fixed on this embodiment and the car moves on the return route of the displayed map. But as the car moves the reduced scale of the map sometimes changes.

When a reduced scale for the map is found in the step SW8, the un-travelled return route and the part of the previous guide route which is centered on the confluence are shown in the 2nd screen (step SU10), and in this display the east longitude coordinate (Emin + XE/2) and the north latitude coordinate (Nmin + YN/2) become the screen center. Then the flow is returned to Figure 34. Furthermore, when the return route which is displayed in the 2nd screen is displayed by the "initial showing of 2nd screen" of Figure 27, "display adjustment of 2nd screen" of this embodiment is executed as the step SQ22 of Figure 34. Further when the map which includes the return route is displayed by the processing of "initial showing of 2nd screen" of Figure 37, "display adjustment of 2nd screen" of Figure 39 doesn't have to be executed. In other words, the reduced scale of the map which includes the return route etc. which is displayed first in the 2nd screen is fixed and the adjustment of the map of reduced scale doesn't have to be executed as the car moves.

Figure 46 shows an application example of the display of the 2nd screen. For example, the return route is shown by arrow 268. Further when the return route isn't displayed in the 2nd screen, only the confluence which the return route and the previous route cross may be shown by mark 262. Further, the confluence may be also shown by mark 262 when the return route is displayed. Moreover, the direction of the destination in the previous guide route may be shown by a direction mark 264 of the destination.

The display processing of the above direction mark 264 of the destination is simply explained below. The intersection point of the previous guide route displayed in the 2nd screen and the edge of the map screen which is displayed in the 2nd screen 108 of display 33 is computed. In this processing, the road data which is included in the coordinate range which is displayed in display 33 is read by image processor 9 from each road which composes the above guide route data MW. Then the road which is the nearest entry destination TP is found from the road data. In this way the road number data which is linked to the entry destination from the guidance beginning point is arranged in the order, in which the guide route data MW is composed. Therefore the road number which has this highest order (address number) indicates the road which is nearest to the entry destination.

Moreover the node in the coordinate range which is displayed in display 33 is read from the node which composes the road. Then node ND1 which has the highest order (the address number) is selected in each of these nodes. Coordinate data in the intersection point of the straight line which links this node ND1 and the node ND2 of the following address number and the screen edge of display 33 is found. This coordinate data is stored in RAM4 as the intersection point data CP.

Next, the processing which find the direction of the destination of the guide route which is displayed in display 33 is executed. This various processing is also thought of.

For example, the inclination corner (Tan θ1) to the absolute azimuth of the straight line which links the coordinate of the above intersection point data CP (or the coordinate of node ND1) and the coordinate of the above node ND2 becomes the direction of the destination.

Next, the processing to display the direction mark 264 of the destination which shows the direction of the destination in the computed intersection point CP is executed. For example, this processing is executed as follows. The character pattern data of the arrow which is used for the direction mark of the destination is stored in the information memory unit 37 or the ROM 4. Then the character pattern of the arrow is used to show the above direction of the destination according to the above intersection point data CP. This character pattern data is sent to image processor 9 and is changed into the image data. Therefore the direction mark of the destination 264 is shown in the coordinate which is designated by the intersection point data CP. Actually as the tip of the arrow agrees with the coordinate of the intersection point data CP, a deviation to the intersection point data CP is provided for the coordinate of the direction mark of the destination.

As the above explanations show, when the car deviates from the guide route in the 6th embodiment of the guide/display processing, the return route to this guide route is searched once. Then a road map in the neighborhood of the car is shown by the reduced scale in which the return route and so on are appropriately displayed in the 2nd screen. Then guidance processing to the previous guide route using the return route according to the operator's choice is executed. Further, in the guidance processing of this return route, 2 screens or 1 screen is shown according to the choice of the operator. Moreover when the return route doesn't fit the request of the operator, the whole route searching is executed according to the direction of the operator and a guide route to the destination is searched newly. In other words, it is possible to choose the guide route according to the traveling position of the car.

Furthermore, the operation such as the guidance beginning, searching the return route and identifying the route etc. of each of the above embodiments is possible only when the car stops or travels at a very slow speed.

According to this above described embodiment, even if the car deviates from the guide route and travels temporarily in accordance with the intention of the operator, the road map which includes the previous guide route and the car neighborhood is shown in one of the screens of divided display 33. The road map in this car neighborhood is shown by the appropriately reduced scale when the return route to the point at which the previous route was deviated from is displayed. This return route is a recommended route to the recommended confluence of the previous guide route at the point at which the previous route was deviated from or the present position of the car and is automatically searched by the navigation device.

Then even if the car deviates from the guide route in accordance with the intention of the operator, the necessary map information with the position relation etc. of the present position of the car and the previous guide route can be quickly confirmed. Moreover, if a guidance beginning is instructed, the guidance processing to return to the previous route is begun together with the display of the return route. Therefore while the car is traveling the guide route, even if the car deviates temporarily from the route for urgent business, the car can return to the guide route quickly.

Further the map which was displayed before the division is shown at the same reduced scale in the other one of the divided screen and therefore a confusion which accompanies a changing of the map display is prevented. In other words, when the map which is displayed in display 33 is changed, generally a lot of time is necessary to understand the displayed present position of the car and the displayed map information, therefore attention can be concentrated on the screen. As a result, there is no lack of attention ahead of the vehicle. Further because the map which was displayed before the division is shown in the other screen after the division just as it is, lack of attention to the above screen is prevented.

Moreover when the map around the present position of the car is displayed in the conventional single screen, the guide route sometimes disappears completely from the screen with some display in reduced scale. In other words, when the detailed map is displayed in the screen before the division, the guide route disappears sometimes from the screen as the car moves far from the guide route. In this case, it doesn't understand the direction of the previous guide route from the present position of this car and the previous route can not be quickly returned to. Further in such a case, even if the guide route from the present position of the car to the destination is re-searched, it takes more time to travel by the new guide route and it is sometimes better to return to the previous guide route. However according to this embodiment, because the relative position of the deviating previous route and the car is correctly shown in one of the divided screens, the position and the direction of the previous guide route from the present position of the car can be correctly grasped. In other words, the comparison between the condition in the case the previous route is returned to and the condition of the new guide route is easy.

Furthermore, in this 6th embodiment, the kind of the map which is displayed in the divided 2nd screen isn't especially limited and the displayed map may be the road map and the house map. Furthermore, the house map is the road map which includes information of the facilities such as the buildings and so on. Moreover in this 6th embodiment, the map of reduced scale of the 2nd screen is decided as the value by which the whole return route is displayed fully, but it may be a value which is higher or lower. In other words, the map in the wide range which includes the return route may be shown in the 2nd screen. Moreover the route may be searched based on the information (for example VICS information) which is transmitted from outside and so on in the searching of the return route. Therefore, a congested road isn't selected as the return route based on the information of the road congestion (jam) and so on.

Further a traveling route is cumulatively stored after the car deviates from the previous route and the map which includes the traveling route and the return route may be shown in the 2nd screen. In other words, after the optional time passes after the car deviates from the previous route, it isn't always traveling the return route which was searched immediately after the car deviated from the previous route. Therefore when it is detected that the car deviated from the previous route, the change of the present position of the car is sequentially stored in the RAM 5 as the movement coordinate of the east longitude and the north latitude. Then the above change is stored as the maximum coordinate and the minimum coordinate in the direction of the east longitude and the maximum coordinate and the minimum coordinate in the direction of the north latitude. In other words, the geographical movement range of the car is stored as the maximum and the minimum value in the direction of the east longitude and the north latitude. Then when the map which includes the return route and so on in the 2nd screen is displayed, the map may be shown which includes a geographical range in which the car has moved to the present position from the point at which it deviated from the previous route.

24. Setting processing of nearest facilities

Figure 49 shows the flow chart of the setting processing of nearest facilities of the 7th embodiment of this invention. The setting processing of nearest facilities is executed with the destination-setting processing or the other processing of the Figure 5. In the nearest facility processing, the retrieving and the choosing of drop in facilities except the last destination are executed. These facilities are in the neighborhood of the present position of the car or the way of the guide route. The drop-in facilities are as follows. For example, they are gasoline stations for the fuel replenishment, restaurant, banks, post offices or supermarkets for the purchase and so on. In other words, they are facilities except the last destination and they are various facilities to finish a necessary occupation in the daily life.

When the setting processing of the nearest facilities of Figure 49 is required, the genre to specify the first drop-in facility is shown in display 33. Then one genre is specified using this genre list. The facilities which correspond to the specified genre are shown on the map of the 2nd screen. At this time, the list of the names of the sales articles which is a condition for squeezing of the retrieving facilities is shown in the 3rd screen. When a specific article is specified from the list of the name of the sales article of the 3rd screen, the list of the name of the above sales article is shown in the 2nd screen.

Moreover only the facilities which correspond to the name of this sales article are shown on the map of the 3rd screen. When specifying drop-in facilities in this way, the specification is changed in order from the large category to the narrower category. Moreover the retrieving result achieved by this specification is shown in the divided screen. Additionally a retrieving result or a retrieving condition achieved by the category which is specified immediately before is also shown.

Next, Figure 49 is explained. Firstly it is determined whether the choosing of the genre is requested by the operator or not (step SX2). By that the icon "drop-in place setting" etc. which is displayed in display 33 is pushed, the request of the genre choosing is inputted. The processing of Figure 49 is ended when genre choosing isn't required and then the flow is returned to the overall processing of Figure 5. However if genre choosing is required, the list for the genre choosing is shown in the screen of display 33 (step SX4).

Figure 50 shows the example of the genre list which is displayed in the 1st screen 104 of display 33. The name of the genre is shown in each column of the list 270 which is shown in Figure 50. For example this genre comprises drugstores, restaurants and gasoline stations and so on.

When the genre list is displayed, it is determined whether one genre is chosen from this genre list or not (step SX6). When the choosing of a genre isn't executed, in other words, if the operation of touch switch 34 isn't executed during a specified time, the processing of Figure 49 is compulsorily ended (step SX6). Then the flow is returned to the overall processing of Figure 5. However when a specific genre is specified, the facilities which correspond to the specified genre in the area with a specified distance from the present position of the car are retrieved from facility data file F16 (step SX8). In other words, only the facilities which correspond to the specified genre of each facility in facility data file F16 are retrieved. A geographical straight distance between the present position of the car and the facilities is calculated based on east longitude coordinate SEO and north latitude coordinate SNO of each retrieved facility.

The discriminating number of the facility by which this calculated straight distance is smaller than the specified distance is temporarily stored in the RAM 5 as retrieving facility number GBn. When the extraction of the facilities which corresponds to the choosing of the genre ends, the division processing of the display screen of display 33 is executed (step SX10). Then each of the facilities which are extracted in the step SX8 are shown on the map of the 2nd screen (step SX12). Moreover, the list of the names of the sales article and the brand name are shown in the 3rd screen. For example, if a gasoline station in the genre is chosen in the 1st screen which is shown in Figure 50, the list of the brands (the names of the goods) of the gasoline stations, i.e. the names of the sales articles, is shown in the 3rd screen as shown Figure 51 (step SX14). Further if a bank is specified as the genre, the list of the name of each bank is shown in the 3rd screen by the processing of step SX14. Furthermore, before the list of the shop name of each restaurant is displayed when a restaurant is specified, the list of the kind, i.e. Chinese food, Japanese cuisine or Western dish may be previously shown. In this case, the pile (the 18th prize step SX) of the retrieving condition to be described later is repeated.

Figure 51 shows the condition where the screen of display 33 is divided. The facilities which correspond to the genre which is specified by the 1st screen are extracted and shown on the map which is centered on the car of 2nd screen 108. Further, the list 272 of the brands (the name of the sales articles) of the gasoline station which is specified in the 1st screen is shown in the 3rd screen.

Next, it is determined whether a return to the screen is requested or not (step SX16). As a result of this return request the contents which have been displayed on the previous screen are returned to from the information which is shown in display 33. When a return request is inputtd (step SX16), the display of the genre list of the step SX4, is returned to i.e. the 1st screen of Figure 50. Furthermore, when the above return request is inputted, the genre list which is displayed in the 1st screen of Figure 50 may be shown in the 2nd screen or the 3rd screen of Figure 51. Further, the input of the return request depends on whether or not the icon which is displayed in display 33 is pushed.

If the return isn't required, it is determined whether the brands of the gasoline station, i.e. is the sales articles, are specified or not using the list 272 which is displayed in the 3rd screen (step SX18).

Furthermore, the specification of step SX18 corresponds to the retrieving condition which is used in the 2nd retrieving. The squeezing of the specific facilities is executed by the specification of this 2nd retrieving.

When the brands (the sales articles) of the gasoline station are specified in step SX18, the list of the brands (the names of the sales articles) of the gasoline station is shown in the 2nd screen (step SX20). Then, only the facilities to sell the brands (the sales article) of the specified gasoline station are shown on the map of the 3rd screen (step SX22). The processing result of step SX20 is shown in the 2nd screen 108 of Figure 52. Likewise, the processing result of step SX22 is shown in the 3rd screen 110 of Figure 52. The list 272 of the 3rd screen which is shown in Figure 51 is shown in 2nd screen 108. Only the facilities 279 which correspond to the brands (the sales articles) 278 of the gasoline station of list 272 are shown on the map in the 3rd screen 110 of Figure 52.

Next, it is determined whether the return is requested or not (step SX24). As a result of this return request, the contents which have been displayed on the previous screen are returned to from the information which is displayed in display 33. When the return request is inputted (step SX24), the flow is returned to the processing of the step SX12. In other words, it is returned to the display condition of Figure 51 when the return request is executed in the display condition of Figure 52.

However, if a return isn't required, it is determined whether the specification of the facilities is operated or not (step SX26). In other words, it is determined whether the facilities are specified or not using the display of the 3rd screen as shown in Figure 52. If facilities are specified, the information of the coordinate value etc. of the specified facilities is read from the information memory unit 37 and is stored in RAM 5 as drop-in place DP (step SX28).

On the other hand, when one facility isn't specified using the display of 3rd screen 110 or the touch switch 34 isn't operated during the specified time, the cancellation processing of screen division and so on are executed (step SX30). In other words, the setting processing of the nearest facilities which is shown in Figure 49 is compulsorily ended. Furthermore, when facilities are also specified as described above, screen division is canceled (step SX30).

In this way, at the specification of the facilities such as the drop-in place and so on in the setting processing of the nearest facilities of Figure 49, as is done by the name of the genre and the brand (the sales article), the squeeze of the condition that facilities are retrieved is executed in order. Moreover when the squeeze of this retrieving condition is executed, the facilities which the condition agrees with and the following retrieving condition (the list of the sales articles and so on) is shown in parallel in the divided screen of display 33. Therefore the change of the retrieving condition and the retrieving result as the condition changes can be confirmed at once on the divided screen. The facilities about the drop-in place or the destination can be quickly and accurately specified.

Further when the specification of the brands (the sales articles) of the gasoline station is executed in step SX18 of Figure 49, as shown in Figure 73, the map of all the facilities which correspond to the genre which is chosen in the step SX12 may be shown in 2nd screen 108. In this processing, all gasoline stations which are in the specific area are shown in the 2nd screen. Moreover, only the gasoline station which carries the specific brand (the sales article) which is specified in the step SX18 is shown at the map of the 3rd screen.

In the above embodiment, the specification of the genre is executed as the 1st retrieving condition. The specification of the name of the brand (the sales article) is executed as the 2nd retrieving condition. However this invention isn't limited to this retrieving condition. For example, the retrieving condition whichextracts the only facilities which are within the specified distance from the searched guide route may be replaced with the 2nd retrieving condition or the 3rd retrieving condition. Moreover, the processing same as the setting processing of the nearest facilities of Figure 49 may be executed in case of destination setting and so on. That is, in the specification of the destination, each of the facilities may be specified by the condition of the various choosing such as the genre choosing, the chain shop name choosing and the sales article choosing and so on. Moreover the extraction (Figure 53) of the following facilities along the route and/or the extraction (Figure 54) of the shortest straight distance between the guide route and the facilities may be added to the retrieving condition of each facility.

25. The extraction of the facilities along route

Figure 53 shows the subroutine of the extraction of the facilities along the route. Based on the geographical coordinate data at each of the retrieved facilities, in this subroutine, a geographical shortest straight distance to the guide route from the facilities is calculated (step SX32). Then the only facilities with the shortest straight distance which is within the specified value is extracted. Furthermore, the subroutine of this calculation of the shortest straight distance is shown in Figure 54. The above guide route means the guide route data MW which is found by the route search processing in the overall processing of Figure 5. Figure 55 explains the position relation between the detected facilities and the guide route. A route to destination from guidance beginning point ε is found by the route search processing (step SA4).

In the extraction processing of the facilities along route of Figure 53, firstly a shortest straight distance to the guide route from each of the facilities is calculated (step SX32). This shortest straight distance is about 150 m (step SX34). Then it is determined whether each of the facilities extracted in the step SX34 are on the right or left side in the moving direction of the car on the guide route (step SX36). Figure 56 explains the processing of step SX36.

In the Figure 56, coordinate (X1, Y1) indicates the coordinate of the node of the guide route which is near the facilities of the objective coordinate (Xb, Yb). Coordinate (X1, Y1) corresponds to the node SAS1 of the guide route which is shown in Figure 55. Further, as shown in Figure 55, standard coordinate (X0, Y0) corresponds to the coordinate of the node SAS2 of the guide route or the present position of the car. Therefore, the standard vector a=(ax, ay) which links coordinate (X1, Y1) and basis coordinate (X0, Y0) corresponds to the branch 300 of Figure 55. Furthermore, standard vector a is a=(ax, ay)=(X1-X0, Y1-Y0). The node of the coordinate which is the nearest objective coordinate (Xb, Yb) of the facilities is selected from each of the road data which compose a guide route data MW as this coordinate (X1, Y1) and standard coordinate (X0, Y0).

Orthogonal vector c=(-ax, ay) which turns counterclockwise by 90 degrees to this standard vector is defined. Further, the objective vector b which links the standard coordinate (X0, Y0) and the objective coordinate (Xb, Yb) of the facilities shifts to the orthogonal vector c in angle θ. Furthermore, the objective vector b is b=(Xb-X0, Yb-Y0).

The inner product of such the orthogonal vector c and the objective vector b is defined as follows.

$$c \cdot b = |c| \times |b| \times \cos\theta$$

By the way, it is 0 < cos θ < 1 when the angle is -90 degrees < e < 90 degrees. Further it is -1 < cos θ < 0 for - 180 degrees < θ < -90 degrees and 90 degrees < θ < 180 degrees. Therefore, if the value of the inner product of the above vectors c and b is positive, the above facilities are on the left side in the moving direction of the car on the guide route. If the above inner product value is negative, the facilities are on the right side in the moving direction of the car. In this way, the position on either side of the extracted facilities relative to the guide route is determined by the positive (plus) and the negative (minus) quality of the vector inner product (step SX36).

Therefore if the positive and negative quality of the calculation result of the inner product is determined, it can be easily decided whether the object is on the right or left side. This determined right or left data RL is stored in the above RAM 5. Furthermore, the standard coordinate (X0, Y0) which is shown in Figure 56 is the coordinate (node SAS2 in the Figure 55) of the node which is near the starting point in two nodes of the guide route which is the nearest facilities of the retrieving object. Conversely, the coordinate (X1, Y1) is the node coordinate (node SAS1 in the Figure 55) which is near the destination. Furthermore, the above orthogonal vector c may be turned clockwise by 90 degrees to standard vector a. The relative position of each of the facilities to the moving direction of the car of the guide route may be detected by the exterior product (|a| x |b| x sinE) of the standard vector a and the objective vector b. But, E of sinE is an angle between the standard vector a and the objective vector b and the clockwise turn to standard vector a is plus (positive).

Moreover, the direction of standard vector a may be the north, the south, the east, the west, the moving direction of the present position of the car, the direction to the destination from the car or the direction which the operator set and so on. Therefore the position on either side of each of the facilities to the direction which is specified is determined.

When a position on either side of each of the extracted facilities to the guide route is detected in the step SX36 of Figure 53 and the facility-destination distance Zn from the extracted facilities to the destination is calculated (step SX38). This facility-destination distance Zn is the distance along the guide route and means the distance along route to destination from the point PP1 which is shown in Figure 55. Therefore in case of Figure 55, each straight distance of branches 364, 365 and 366 is added to the straight distance to node SAS1 from point PP1 and this is facility-destination distance Zn. Further, the shortest straight distance, i.e. the value which is found in step SX32 of Figure 53 may be added to this facility-destination distance Zn.

Then the extracted facility data is replaced in line based on the found facility-destination distance Zn (step SX40). For example, each of the facilities is arranged from the biggest facilities-destination distance Zn. Then the extracting condition of facilities may be set by this facility-destination distance Zn. By the comparison between the distance from the car to the destinations and the facility-destination distance Zn, the facilities which are farther away than the specified distance or are farther away from the present position of the car than the specified distance may be excluded from the destination.

26. Calculation of the shortest straight distance

Figure 54 shows the subroutine (step SX32) of the calculation of the shortest straight distance between the retrieving facilities at Figure 53 and the guide route. Figure 55 explains the relative geographical position relation between the facility which is along the guide route and this guide route. Figure 57 explains the calculation of the shortest straight distance. As described above, a route from the guidance beginning at point θ which is shown in Figure 55 to destination α is found by the route search processing (step SA4 of Figure 5).

Further the nodes SAS1 and SAS2 which are shown in Figure 57 correspond to the nodes SAS1 and SAS2 which are shown in Figure 55. A geographical shortest straight distance between coordinate PP2 of one retrieved facility and the guide route is found as follows. The nodes SAS1 and SAS2 of the guide route which is the nearest coordinate PP2 at these facilities are selected (step SX42 of Figure 54). Furthermore, two nodes which are nearest to each of the aimed facilities in the nodes which are in this guide route are detected by the following processing. First a straight distance between each node of the guide route and coordinate PP2 is calculated. The nodes which have a straight distance with a minimum value and the next small value in each calculated straight distance are detected. These two nodes are made the node which is nearest to the guide route.

Next each coordinate of JJ1 and JJ2 ... of the halfway point which divides in m equally, the straight line which links these two nodes SAS1 and SAS2 is calculated from the geographical coordinate of each node SAS1 and node SAS2 (step SX44). The geographical straight distance of the straight line RR1 and RR2 ... which links respectively halfway point JJ1 and JJ2 ... and coordinate PP2 of the aimed facilities are calculated (step SX46).

Next the distance value of straight line RR1 is set as minimum value Rmin in the setting of an initial value. Moreover initial value "2" is set as condition variable NS (step SX48). This condition variable NS indicates the number of the above straight lines RR1 and RR2 .... A geographical distance of the NS-th straight line RR (NS) which is specified by this condition variable NS and the above minimum value Rmin are compared with each other (step SX50). If the value of the straight line RR (NS) is smaller than minimum value Rmin, the distance value of straight line RR (NS) is set as minimum value Rmin (step SX52). After substitution for this numerical value, the condition variable NS is increased by one (step SX54).

However, if the minimum value Rmin is smaller than the distance value of straight line RR(NS), the processing of step SX52 isn't executed and only "1" increase (step SX54) of the condition variable NS is executed. It is determined whether this condition variable NS became bigger or not than the number of the halfway points that divide nodes SAS1 and SAS2 into the regular intervals (step SX56). If the result of this step SX56 is NO, processing from step SX50 is executed once again. However if the condition variable NS is bigger than the number of the halfway points which divide nodes SAS1 and SAS2 into the regular intervals, the processing of steps SX50 to SX56 is ended.

By the processing of above steps SX50 to SX56, the numerical value which is equal approximately to the shortest straight distance to coordinate PP2 of the aimed facilities from the straight line which links nodes SAS1 and SAS2 is set as minimum value Rmin. The minimum value Rmin which is found by the above processing is made the shortest facility-route distance Rmin between the facilities and the guide route. This minimum value Rmin indicates the distance of the perpendicular line to the straight line which links the nodes SAS1 and SAS2 from the objective facility. Furthermore, the calculation processing of this shortest straight distance may be executed as follows. First a straight distance from node SAS1 or node SAS2 to the objective facilities is calculated. Moreover, an angle between the straight line which links nodes SAS1 and SAS2 and the straight line which links the node and facilities is found. The shortest straight distance may be found using the triangle function based on this angle and the straight distance between the node and the facility.

Further, by the position on either side to the guide route which is found for by the processing of Figure 53, the following extracting condition may be added. That is, when a median strip exists in the road, it is impossible to turn left at the place except the intersection. Therefore, the facilities on the left side of such a road at which a car can not turn left may be excluded. In this case, an extracting means of the road condition to extract environment at each road in the guide route which is searched is provided. It is determined whether or not to exclude the facilities which are extracted by the facility exception means using the result of the step SX36 of Figure 53 by the road condition read by this extracting means. In other words, it is determined whether the facilities are on the right side or left side of the guide route in the step SX36. If the road environment and a position on either side of the facilities are compared here, the above extracting processing is possible.

Processing by the extracting means of the above road condition is executed as follows. That is, road attribute data and attention point data and so on are read from the road data file F4 of each road. The road environment of the guide route which is nearest to the extracted facilities is determined using this read road attribute data and so on. In other words, it is determined whether the drop-in to the facilities is difficult or not by the facility exception means. It is possible to prevent that the facility which is very difficult to drop in is chosen as the destination or the drop-in place.

Moreover the transmitted information is taken from the outside system of VICS and ATIS etc. and this information may be made an extracting condition of the drop-in facilities. For example, when a parking lot around the destination is extracted as the drop-in facility and so on, the following processing is executed. By the outside information made available VICS and ATIS etc., the full or the empty condition of each parking lot or the congestion situation of the road in the this facility neighborhood is added to the extracting condition of the facilities. In other words, the extracting condition by the information which is sent from outside for example VISC or ATIS etc. may be added in the setting of the destination or the drop-in place. This can prevent the choosing of the facilities which neighbor a full parking lot or a traffic jam (crowded) road. In other words, the mistake of the facility choosing is minimized. Furthermore, when the car is traveling more than constant speed, the instruction to begin the setting processing of the nearest facilities and destination-setting processing cannot be given.

As mentioned above, when the user wants to drop in the facilities on the way etc. of the guide route to the destination which is set at first, the facilities and the distance along the guide route are retrieved considering the present position of the car. Therefore, the extracting condition of the drop-in facilities becomes more appropriate and the choosing of optimal facilities becomes possible. In other words, the drop-in facilities which is far left from the guide route is generally difficult to read. Therefore it is better that the information of the facilities which is far left from such a guide route isn't displayed on display 33. Further, if facilities along the route are extracted, it can be prevented that unnecessary information is displayed in the screen and it can be prevented that the facilities are miss-choosen.

Moreover, when there are no drop-in facilities which agree with the request on the way of the route from the present position of the car to the destination, the following condition is possible. The facilities which agree with the request exist in a point already passed a short while ago. In this case, in the above embodiment, the facilities which the car has already passed along guide route are retrieved and therefore it is possible to choose such facilities.

Further, when plural drop-in facilities are extracted, as mentioned above, if a squeeze condition (the straight distance from the guide route) is made severe, only the drop-in facilities which agree with the request of the user are shown and the time which facility choosing takes is reduced.

In the above facility setting processing, the facilities may be retrieved in the whole area of the map information based on the guide route and the retrieving may be executed only in the specific area which is described later. In cases where the facilities are along the guide route, the person who is traveling such a route can drop in the requested facilities without deviating far from the route. Further, if facilities within the requested range from the standard point (the present place, the destination or the cursor position and so on) are chosen and shown, the required information and the required retrieving result are provided quickly and clearly to the user. Further, when an extracting result of the facilities is displayed in the screen, if various information of distance and position relation between each of the facilities and the guide route or distance from each of the facilities to the destination and so on are shown together, the position of the required facilities relative to the guide route can be grasped clearly.

## 27. Postcode choosing data 50

In the above setting of the drop-in facilities or the destination, after a specific area is specified by the area specification number of the following postcode and so on, the facilities may be extracted in order in the specified area. Figure 58 to Figure 63 show the structure of various data which is stored in the information memory unit 3.7. These data are used with the destination-setting processing of Figure 64. Postcode choosing data 50 is shown in Figure 58. This postcode data 50 is composed of postcode RDN, street list address LA, size LD, facility genre list address NA, size ND, the east longitude coordinate PEO of the representative point, the north latitude coordinate PNO of the representative point and area shape data address EA. One area is specified by one postcode RDN. Various data about this specified area is stored in order from the address in the information memory unit 37 which is specified by street list address LA and facility genre list address NA etc..

For example, the memory start address and the memory size in which a street list is stored are specified by the street list address LA and the size LD. Likewise, the memory start address and the memory size of a genre list to which each of the facilities belongs are specified by the facility genre list address NA and size ND. Furthermore, the genre indicates the classification of the destination or the drop-in place, a field, a purpose, a use or business contents or facilities such as the public facilities, traffic facilities, sports/leisure facilities or the shopping facilities such as the gas station, the museum, the golf course, the bookstore, the pharmacy, the restaurant etc..

The east longitude coordinate PEO of the representative point and the north latitude coordinate PNO of the representative point indicate a center approximately in the area according to postcode RDN. When the map data in the information memory unit 37 is displayed in display 33, the geographical coordinates which are specified by the east longitude coordinate PEO of the representative point and the north latitude coordinate PNO of the representative point are approximately made the center of the display 33. Therefore, the area which corresponds to the specified postcode is approximately shown in the center of the display 33. In other words, the map data which corresponds to the postcode area is approximately shown in the center of the display 33 by the east longitude coordinate PEO of the representative point and the north latitude coordinate PNO of the representative point. Furthermore, the end or the edge of the area is sometimes cut in the display of reduced scale.

Data which specifies the outward form of an area which is specified by a postcode RDN is stored from a memory start address in the information memory part 37 which is specified by the area shape data address EA. Then, data is stored in a memory area which is specified by the size ED. Latitude data and longitude data (geographical coordinates) of plural places which circumscribe the area are stored from the memory address in the information memory part 37 which is specified by address EA. One postcode area is specified in map data of an information memory part 37 by latitudes and longitudes of plural places (geographical coordinates). If all latitudes and all longitudes are displayed on display 33 in a reduced scale, a specified postcode area is completely displayed in a display 33.

Postcode choice data 50 of a Figure 58 is composed of a postcode RDN, a street list address LA, a facility genre list address NA, east longitude coordinate PEO of a representative point, north latitude coordinate PNO of a representative point and an area shape data address EA. A postcode RDN is made an index data. Therefore, if postcode RDN is specified, one area is specified in the map data information memory part 37. This specified postcode (the telephone number) area is displayed approximately in the center of the display output means (display 33) based on the representative point data in this area. Further in case of area display, the optimal display reduced scale may be chosen based on the shape data in the area. In other words, a reduced scale is adjusted and the whole area may be totally displayed in display 33.

Moreover, postcode RDN was used to specify an area. It may be specified by the telephone number, the city administration management area number or the personally set number and so on. By the part (the part of the higher rank figure) of postcode and telephone number, the specific area which has the east longitude coordinate of the representative point and the north latitude coordinate of the representative point may be chosen. In other words, if a part with postcode and telephone number is inputted, the area which corresponds to the inputted partial postcode and the telephone number is specified. For example, when higher rank 2-digit "12" from the 3-digit postcode "123" is inputted, the area which corresponds to the higher rank "12" of this inputted postcode may be displayed. Moreover, as with the postcode and the telephone number, the area may be specified by the specific distinguishing number by which every area is distinguished, or may be classified or divided by the fixed condition. For example, it is a prefecture, a city, a number of a city or village, the number of a state, the number of a time difference area or the number of a country of the European collective and so on.

In this way, after an area is specified by the postcode and so on, the nearest facility setting processing of Figure 49 may be executed. Moreover, after area specification, the following street specification is done, and moreover the nearest facility setting processing of Figure 49 may be done.

28. Street list data 55

Figure 59 shows the data structure of street list data 55. This street list data 55 is composed of the group data of the number SS(m) of the streets. This list data 55 is stored from the address at the head of the information memory part 37 which is specified by street list address LA. One piece of street list data 55 is composed of street name SSN, the east longitude coordinate SEO of the display representative point, the north latitude coordinate SNO of the display representative point, shape data address SEA and size SED.

Street name SSN indicates the name of the street of the for example m-th turn eyes. This street name may include a national highway name (the national highway number), a local road name (the local road number) or an expressway name (the expressway number). By the east longitude coordinate SEO of the display representative point and the north latitude coordinate SNO of the display representative point, the longitude and the latitude (the geographical coordinate) of the representative point at this street are indicated. This representative point is made a point in the center of the street, but may be made a point at the end in the north, south, east or west of the street or at the start point or the end point of the street.

The memory start address of the geographical coordinate data of each node which composes this street is specified by shape data address SEA. The memory size where street shape data is stored is specified by size SED. The outward form of this street is decided by the geographical coordinate data of each of these nodes. Using the geographical coordinate data of the east longitude coordinate SEO and the north latitude coordinate SNO of these display representative points and each node, a street diagram is displayed in display 33.

When one street extends over several postcode areas, every postcode area is memorized in the street list data 55 about this street. Because the partial shape of the street in each area is different, the east longitude coordinate SEO of the display representative point, the north latitude coordinate SNO of the display representative point, and the shape data address SEA and size SED are different. In other words, when one street extends over two areas, each street in each area is different. Therefore, the display representative point at the street in each area is also different. As a result, the east longitude coordinate SEO of the display representative point north latitude coordinate SNO of the display representative point at the street in each area are recorded as the street data. Further, each street name SSN is the same.

29. Facility genre list data 60

Figure 60 shows the data structure of facility genre list data 60.This facility genre list data 60 is composed of the data group of facility genre number NC(k). One piece of facility genre list data 60 is composed of facility genre name NM, facility restoration address NLA and size SED. Facility genre name NM indicates the name of the genre.

To the memory area which is specified by size NLD from the memory start address which is specified by facility restoration address NLA, list data at the facilities which belong to this genre is memorized. By the data which was read from the memory which is specified by this facility restoration address NLA and size NLD thereof, the geographical coordinate at each of the facilities and the peculiar name of the facilities which belong to this facility genre name NM are distinguished.

30. Street shape data 65

Figure 61 shows the data structure of street shape data 65. This street shape data 65 is composed of the data group of the number ES(t) of the nodes. One piece of street shape data 65 is composed of east longitude coordinate EEO, north latitude coordinate ENO, address ENO and street name SSN. The geographical position of the node about the map data in information memory part 37 is decided by the east longitude coordinate EEO and north latitude coordinate ENO. Moreover address ENO indicates the address data of the address of this node. When a street is displayed in display 33, this address ENO is displayed with the street (or the node). This can distinguish each address based on the street.

31. Facility list data 70

Figure 62 shows the data structure of the facility list data 70. This facility list data 70 is composed of the data group of the number IS(u) of the facilities. This facility list data 70 indicates plural facilities which belong to one genre of one piece of facility genre list data 60 which is shown in Figure 60.

One piece of the facility list data 70 is composed of facility name IM, east longitude coordinate IEO, north latitude coordinate INO and address IB. Facility name IM is the particular name of the facilities. East longitude coordinate IEO and north latitude coordinate INO show the longitude and the latitude (the geographical position) of these facilities. The position on the map of these facilities is specified by this east longitude coordinate IEO and north latitude coordinate INO. Also address IB indicates the address of the address.

Street name SSN is the name of the road which these facilities are close to. But when there is not a neighbor road, the name of the nearest street is chosen. Further, this street name SSN may be the name of the road which is made the object for the guidance which is nearest to these facilities. Therefore, when plural streets (or guidable roads) exist around the facilities, plural street names SSN is memorized in one piece of facility data. Moreover, this street name SSN is the same as the street name SSN of the street list data 55 which is shown in Figure 59. Further, the guidable road is the road which is used by the route search processing.

32. Area shape data 75

Figure 63 shows the structure of area shape data 75. This area shape data 75 specifies an outer edge (periphery) of the postcode area on the map. Therefore, an area range on the map is specified by area shape data 75. A geographical position of the periphery in the geographical range of the area is specified by plural nodes. One piece of area shape data 75 consists of longitude and latitude, i.e. east longitude coordinate AEO and north latitude coordinate ANO. Moreover, node number data ANC(v) shows the number of the nodes. In other words, the number of the nodes which model a periphery in the area is node number data ANC(v).

33. Destination-setting processing (step SA5)

Figure 64 to 65 show the flow chart of the destination-setting processing which is executed with the navigation device of this invention. The screen of display 33 is divided first in Figure 64 (step SX60) . Then the input screen of the postcode is displayed in the 2nd screen (step SX62). The example of the input screen of this postcode is shown in the 2nd screen 108 of Figure 68. Moreover a picture for the choice item is displayed in the 3rd screen 110 (step SX64).

As shown in Figure 68, input number display columns 402, number 408 of 0-9 and the "END" letter 410 which chooses that the number input is complete is displayed in the 2nd screen 108. Moreover, the mouse cursor 406 which can be freely moved in this screen 108 is also displayed. When this mouse cursor 406 is moved onto each number 408 and a fix input key is pushed, a number is recognized with the navigation device. Further, the fix input key is prepared onto the navigation device.

Mouse cursor 406 may be moved by the small joystick. The fix input key may be the switching mechanism into which this joystick is pushed. Moreover, mouse cursor 406 doesn't have to be displayed in the 3rd screen 110. In this case, each display item in screen 110 is chosen by pushing the joystick into the top or the bottom position. Then, in the frame with the chosen display item, the color is selected and a choice condition is distinguished. By the push of the fix input key after this, the choice of the item which is displayed in reverse is decided upon.

The numerical value which is inputted using the input screen of the 2nd screen 108 of Figure 68 is used as postcode RDN. When this postcode RDN is inputted, based on this postcode RDN, postcode choice data 50 (the Figure 58 reference) is retrieved from the information memory part 37. From the data group of postcode choice data 50, one piece of postcode choice data which agrees with the inputted postcode RDN is read from information memory part 37.

For example, the letter 418 of "representative point map display", the letter 420 of "street name input", the letter 422 of "facility name input" and the letter 424 of "destination setting by another item" are displayed in the item choice screen (Figure 68) of the 3rd screen 110. The following processing is executed when the fix key is pushed after the mouse cursor 406 which is displayed in the screen of display 33 is moved by the operator. When the fix key is pushed, the relative position of mouse cursor 406 on the screens 108 and 110 is detected (step SX66). That is, when the fix key is pushed, a position on the screen of mouse cursor 406 is distinguished by CPU2. Then the information contents which are displayed in the position of this mouse cursor 406 are chosen. For example, if the fix key is pushed when the mouse cursor 406 is overlapped and displayed on letter 418 of "representative point map display", the processing of a map display by this representative point is chosen.

Next, the choice of "destination setting by another item" is determined (step SX68). The processing of Figure 64 is ended when this "destination setting by another item" is chosen. The processing by which a destination is set from the area which is specified by the postcode is canceled. Therefore, when the determination result of the step SX68 is "YES", setting processing subroutine of the destination which is based on another item is executed (step SX70). In the example of the destination setting which is based on another item, the destination is selected straight from the address of the destination. When the subroutine of this step SX70 is ended, the flow is returned to the overall processing of Figure 5.

However when the determination result of the step SX68 is "NO", processing since the step SX72 is executed. In the item choice processing by the steps SX64 and SX66, when either the representative point map display processing, or the street name input processing or the facility name input processing is chosen, this choice result is memorized in the RAM 5 as mode set data MD.

If "destination setting by separate section eyes" isn't selected and the other processing, e.g. "representative map display" are specified, the item choice picture which was displayed in the 3rd screen is displayed in the 2nd screen (step SX72) . After this, the mode which is chosen in the 3rd screen of Figure 68 is determined. In other words, the selection of the mode to display a representative point map is determined by the mode set data MD (step SX74). If "representative point map display and the destination setting" is selected subroutine is executed (step SX76).

However, if the representative point map mode isn't selected or if the processing of "representative point map display and destination setting" of the step SX76 is ended, the determination of the following step SX78 is executed. In other words, it is determined whether the mode selection is a street input mode or not (step SX78). If the street input mode is chosen, the "display of street name and destination setting" subroutine is executed (step SX80).

When the "display of street name and destination setting" subroutine is ended or the determination result of the step SX78 is "NO", the determination of the step SX82 is executed. That is, it is determined whether setting mode by genre is chosen or not (step SX82). If the setting mode by genre is chosen, the "genre list display and the destination setting" subroutine is executed (step SX84). If the subroutine of this step SX84 is ended or the result of the step SX82 is "NO", the push of the return key is determined (step SX86). If a return key is pushed, processing since the step SX62 is executed once again. In other words, a picture for the postcode input is displayed in the 2nd screen. However if a return key isn't pushed, the flow is returned to the overall processing of Figure 5. In other words, if the return key is pushed, the display condition of display 33 is returned to the previous condition.

34. Subroutine of map display of representative point and destination setting

Figure 65 shows the subroutine of the map display of the representative point and the destination setting. First the postcode choice data 50 which is specified by postcode RDN is read from information memory part 37. Further, this postcode RDN is inputted in the step SX62 of Figure 64. Moreover the area shape data address EA and size ED which is recorded in this postcode choice data 50 are extracted.

From the memory area which is specified by this area shape data address EA and size ED, the east longitude coordinate AEO and north latitude coordinate ANO (the Figure 63 reference) of each node are read in order to set an outer edge (the periphery) of the area. Then, a maximum and a minimum value of the east longitude coordinate AEO of each node (step SX90) are extracted. Likewise, the maximum and minimum values of the north latitude coordinate ANO of each node are extracted.

From the maximum and the minimum values of each of the these east longitude coordinates AEO and each of north latitude coordinate ANO, the reduced scale when displaying a map in display 33 is found (step SX92). For example, a geographical distance to the direction of the east longitude is calculated from the maximum and the minimum values of the east longitude. Likewise, the geographical distance to the direction of the north latitude is calculated from the maximum and the minimum values of the north latitude. Further, by an optionally reduced scale from the actual size of the screen, a geographical distance to the direction of the east longitude and the north latitude which can be displayed in the divided screen of display 33 is understood. The reduced scale to display the geographical distance to the direction of the north latitude and east longitude in the specified area is calculated backward from the geographical distance which can be displayed in the screen. When this reduced scale is found, a specified area is wholly displayed in the divided screen.

In other words, the end of the area which is specified by postcode RDN is not broken, the whole area is displayed in the 3rd screen 110 of display 33 (step SX94). Further a geographical range in the specified area of postcode RDN is decided by area shape data 75. Moreover, the map data which is displayed in display 33 is memorized in information memory part 37.

An example of the specified area which is displayed in this appropriate reduced scale is shown in Figure 69. This specified area is the range which is surrounded by the dotted line 456 of Figure 69. Further, the turning points 460 and 462 which are shown in this Figure 69 indicate a node. Moreover symbol 452 indicates the present position of the car. Curves 458 and 459 indicate roads. Further, the shapes of all the streets or the main streets in the specified area are together displayed in the step SX94. In this case, street shape data 65 in each area of this Figure 61 is used.

Further, the choice processing of the appropriately reduced scale in the step SX92 may be omitted and the reduced scale may be chosen manually by the operator. Moreover, the map in the wide range which includes the area which was specified by postcode RDN may be displayed in the 3rd screen 110. In other words, the map (the wide area map) may be displayed at the reduced scale which is bigger than the properly reduced scale where the specified area can be effectively displayed in the 3rd screen. Further when the processing of step SX92 is saved, the area map which is displayed in display 33 is expanded most and is displayed. Moreover, the east longitude coordinate PEO of the representative point and the north latitude coordinate PNO (the Figure 58) of the representative point in the specified area are centered in the 3rd screen 110.

When an area map is displayed in the 3rd screen 110 of display 33, all facilities are displayed in the specified area using the figure symbol which was memorized in the flash memory 3 (step SX96) . The facility list data 70 of Figure 62 is used in the display of these facilities. A specific symbol is displayed in the geographical coordinate of each of the facilities. For example, this symbol is a star, a circle, a triangle, a square, a fork, a glass, a bag, a flag and a house and so on. Further, only when the area map which was most expanded is displayed on the 3rd screen of display 33, may these facilities be displayed.

After this, an optional point in the display map area is specified using the mouse cursor 406 which is displayed in display 33. In other words, by the operation of the operator, mouse cursor 406 is moved and a fix key is pushed. The display position of the mouse cursor 406 when this fix key is pushed is made the request destination of the operator. Therefore, the display position of the mouse cursor 406 when the fix key is pushed is acquired (step SX98). A actual geographical coordinate position is calculated from this cursor display position by the calculation which used a map reduced scale etc.. The geographical coordinate position which was found by this calculation is memorized in the RAM 5 as the entry destination data TP (step SX100).

When the processing of this step SX100 is ended, the flow is returned to the destination setting processing of Figure 64. Further, the drop-in place may be also set according to the procedure which is the same as the above. When the drop-in place is set by the processing which is the same as the processing of Figure 64, a geographical coordinate in the drop-in place is memorized in the RAM 5 as drop-in place DP.

35. Display of street name and destination setting subroutine

Figure 66 shows a display of the street name and a destination setting subroutine. When the determination result of step SX78 is YES in Figure 64, the processing of this Figure 66 is executed. First, all streets in the area which isspecified by the postcode RDN are read (step SX110). The list of all these streets is made using the street list data 55 of Figure 59. Street names in the area which is specified by postcode RDN are memorized in this street list data 55. Only street names are extracted from this street list data 55 and a street list is made.

The list of the street names which is made in the step SX110 is displayed in the 3rd screen 110 of display 33 (step SX112). Further when there are many street numbers SS(m), all the streets can not be displayed together in display 33. In this case, the screen of display 33 is scrolled and the street names of the remainder are displayed in order. The display example of the street list is shown in Figure 70. Also, when this street list is displayed, each street name may be reported by sound.

When a street list is displayed in the step SX112, the mouse cursor 406 is also displayed in the screen 108 of display 33. Then, the display position of mouse cursor 406 when the fix key is pushed is acquired (step SX114). It is distinguished which street is chosen by the display position of this mouse cursor 406 (step SX116).

The east longitude coordinate SEO of the display representative point and the north latitude coordinate SNO of the display representative point of the street which is chosen in this step SX116 is read from street list data 55 (step SX118). Moreover, street shape data 65 of the chosen street is read from information memory part 37. This street shape data 65 consists of the east longitude coordinate EEO and north latitude coordinate ENO of each node and the shape of this street is decided. Therefore, from the east longitude coordinate EEO and north latitude coordinate ENO of this each node, the maximum and minimum values are detected (step SX120) .

The detection of the maximum and the minimum values of the directions of the east longitude and the north latitude of this node coordinate is a processing as in the step SX90 in case of the above area map display. By the found maximum and the minimum values of the directions of each of the east longitude and the north latitude, the appropriate reduced scale of the map which is displayed in the display 33 is found. In other words, the reduced scale in which the specified whole street can be completely displayed in the divided screen is found. By this, thus found reduced scale, a street is displayed in the 3rd screen 110 of display 33 (step SX122). When this street is displayed, each address is displayed together with this street. Further, this street name may be reported by the sound with the display of this street.

With the street display in the 3rd screen, the street list is displayed in the 2nd screen (step SX123). An example of the street which is displayed in the 3rd screen 110 of display 33 is shown in Figure 71. The chosen street is distinguished from the other roads in the 3rd screen 110 as shown in this Figure. In this Figure 71, it is shown by thick line 500. Further, the color of this specified street is different from the other road and it can be easily distinguished. Also, the chosen street names are displayed by letter 504 in display area 502 at the upper part of the 3rd screen 110. Further, these displayed street names are used by the street name SSN of street list data 55. Letter 506 in Figure 71 indicates an address. For this displayed address, the data of the address ENO of street list data 55 is used.

The calculation of the appropriate reduced scale in the step SX122 may be omitted. In this case, a map displayed for a street to be most expanded or a map (wide area map) in the wide range is displayed. Moreover, it is adjusted to the representative point of the street to become the center of screen 100. The representative point of this street is decided by the east longitude coordinate SEO and the north longitude coordinate SNO of the display representative point in the street list data 55.

When a specified street is displayed in the 3rd screen 110 in this way, the optional spot along the street is specified as the destination by mouse cursor 406. That is, a position of the mouse cursor 406 on screen 110 when the fix key is pushed is detected (step SX124). Also, it is determined whether the return key is pushed or not (step SX125). If the return key is pushed, the display condition of display 33 is returned to the previous condition in processing. In other words, processing is returned to the step SX72 of Figure 64. Also, if the return key isn't pushed, an actual geographical coordinate position when the fix key is pushed is calculated from the displayed cursor position. The geographical coordinate position which is found by this calculation is memorized in the RAM 5 as entry destination data TP (step SX126) .

When the processing of this step SX126 is ended, the flow is returned to the destination-setting processing of Figure 64. Furthermore the setting of a drop-in place may be also done according to the procedure which is the same as the above. In other words, an area is specified by postcode RDN. A specific street is chosen from all the streets in this specified area, and moreover a specific spot is chosen on the map of the displayed street. This specified spot is memorized in the RAM 5 as drop-in place DP.

All the streets in the specification area are put on the list in the display of the street names of Figure 66 and the destination setting in this way. Then one street where the destination exists is selected from the list of street names. A map of the selected street is displayed in the screen. And then on the map of this street, a specific spot is chosen as the destination by the mouse cursor. Therefore the destination or the drop-in place can be easily specified from the name of the street. Further when the street is displayed in the step SX122, the whole specification area which includes this street may be displayed.

36. Genre list display and destination setting subroutine

Figure 67 shows a genre list display and a destination setting subroutine. In this Figure 67, first, the genres of each of the facilities in the area which is specified by postcode RDN are put on the list (step SX130).

This genre is put on the list using the facility genre list data 60 of Figure 60. A memory area in the information memory part 37 of this facility genre list data 60 is specified in the facility genre list address NA of postcode choice data 50 and size ND.

Next, the facility genre number NC(k) of the facility genre name NM is read from facility genre list data 60. Then the genre list is displayed in the 3rd screen of display 33 (step SX132). A screen display example of this genre list is shown in Figure 72. After this, the display position of mouse cursor 406 in the screen 110 when the fix key is pushed is acquired (step SX134). In other words, the genre name of the display position of the mouse cursor when the fix key is pushed is made a choice genre. Also, it is determined whether the return key is pushed or not (step SX135). If the return key is pushed, the flow is returned to the step SX62 of Figure 64 from the processing of Figure 67.

If the return key isn't pushed, it is determined that the genre which is displayed in the position of the cursor 406 is chosen (step SX136). The facilities which belong to this specified genre are put on the list (step SX138). In other words, the facilities which correspond to the chosen genre are put on the list using the facility list data 70 of Figure 62. The memory area of facility list data 70 is specified by the facility list address NLA and size NLD. Facility list address NLA and size NLD are included in facility genre list data 60. In other words, if the genre is specified, the list of the facilities in the specified area and belonging to the genre is, at once, read from the information memory part 37.

Next, only the facility name IM of facility list data 70 is extracted and the list is displayed in the 3rd screen of display 33 (step SX140). Moreover, the genre list is displayed in the 2nd screen (step SX141). Then, the display position of mouse cursor 406 in the screen 110 when the fix key is pushed is acquired (step SX142). The facilities of the display position of this cursor 106 are set as the destination (step SX144). In other words, chosen facilities are memorized in the RAM 5 as entry destination data TP.

Also, it is determined whether the return key is pushed or not (step SX145). If the return key is pushed, the processing is returned to the step SX72 of Figure 64. However if the return key isn't pushed, the processing since the step SX146 is executed. In other words, when the return key is pushed, the display condition of display 33 is returned to the previous display condition.

If the return key isn't pushed, east longitude coordinate IEO and north latitude coordinate INO of the chosen facilities in the step SX144 are read from facility list data 70.

A map around the specified facilities is displayed in the 3rd screen of display 33 based on this east longitude coordinate IEO and north latitude coordinate INO (step SX146). Moreover, the facility list is displayed in the 2nd screen (step SX147). Further, the reduced scale of this displayed map may be the reduced scale by which a map is displayed to the maximum or the reduced scale which is chosen by the operator. Moreover the facility name may be reported by sound together with the display of the map of these specified facilities and neighborhood. Further, the processing of the steps SX146 and SX147 may be omitted.

It is determined whether the return key is pushed or not after the display of the step SX147 (step SX148). If the return key is pushed, the processing of the step SX140 is again executed. However if the return key isn't pushed, the flow is returned to the destination-setting processing of Figure 64. In this way, the genre is specified from the specified area in the genre list display and the destination setting of figure 67. Then the requested destination is specified from the list of the specified genre. In this way, at the destination-setting processing of this embodiment, a specific area is specified by the postcode RDN and plural kind (three kinds, 3 modes) pieces of information are displayed in display 33. Then a destination is specified from the map or the list etc. which is displayed in each mode. For example, a street is specified in the specified area. Because this specified street is displayed in the map, a spot is specified as the destination on the street of the map. Because the retrieving of a destination is done step-by-step through the area specification, the street specification, the genre specification and so on in this way, the specification of the destination is simpler. Also, when the return key is the pushed in each display condition of the embodiment, the display is returned to the previous choice screen.

37. Application example of destination setting or drop-in place setting processing

The destination setting processing may be implemented as follows. First an area is specified by the postcode. Next, a specific street is chosen from all the streets in the area. Moreover, when the genre is specified, the facilities which correspond to the specified genre and are around the choice street are put on the list. Lastly, the requested destination is chosen from the facility name that is put on this list. Therefore, the required destination can be retrieved from the street and neighborhood and the specific genre.

Moreover, the destination setting processing may be executed as follows. An area is specified by the postcode. Next, a specific street is chosen from the streets in the area. The facilities along the chosen street are put on the list. Lastly, a required destination is chosen from the facility name that is put on this list. Therefore, a required destination is extracted along the specific street in the specific area.

Moreover, the destination setting processing may be again executed as follows. First, an area is specified by the postcode RDN. After this, a specific genre is chosen. Next the street name where each of the facilities corresponding to the specified identical genre exists is enumerated. Then facilities are chosen based on this street name list. When a destination is set, it can be retrieved in the order of the area, the genre and the street.

This invention isn't limited to the above embodiments, and various changes and modifications are possible in the range which doesn't deviate from the object of this invention. For example, in the street choice in the step SX116 of Figure 66, the street list is displayed in display 33 as shown in Figure 70 but this may be done as follows. That is, an area is displayed in the divided screen of display 33 as shown on the 2nd screen 110 of Figure 69 and each street name is also displayed on the screen. Then, when an optional geographical coordinate on the display area is chosen by mouse cursor 406, an expansion figure which particularly includes the choice part is displayed at once. In case of the display of the expansion figure, the facilities in the possible display range of display 33 are also displayed together. Therefore, each of the facilities along the specific street in the specific area can be retrieved while the map is seen.

Further an area is specified by the postcode in the each embodiment, but this postcode can be replaced with the whole or the higher rank part of the telephone numbers. That is, an area is specified only by the outskirt telephone number and an area is specified using an outskirt telephone number and several digits of the remainder of the telephone number which exclude the outskirt telephone number. That is, an area is specified only by the outskirt telephone exchange number. Further, the higher rank part or all the postcodes may be inputted.

Moreover after the step SX94 or SX96, the processing may jump to the step SX110 or step SX130. By this, a list or a diagram of the streets, a list or a position of the facilities in the displayed area is outputted by display and/or by sound. Also, the processing of the step SX94 may be executed in the step SX112. Moreover the facility list display in the step SX140 may be again replaced by the map display of the facilities in the step SX96, the positions of the facilities may be displayed on the map together with the facility list display. By this, the diagram of the street in the specified area or the position of the facilities in the specified area is displayed. Further, the order of step SX146 and step SX144 may be the exchanged.

Moreover the choice by the mouse cursor may be executed by the sound from the operator. In this case, the item (a genre, a street name, a facility name and so on) which is required from a list that is outputted by a display and/or by sound is specified by being pronounced by the operator.

In each embodiment, the retrieving processing of the destination or the drop-in place based on the input of the postcode RDN is executed before route search processing (step SA4). However this retrieving processing of the destinations or drop-in places may be executed on the way by the guide/display processing of the step SA5. In other words, on the way of the guide route, according to the request of the operator, a new drop-in place or a destination is set. But this operation is executed on the condition that the car stops or goes slowly. By this, the destination or the drop-in place is easily changed and set. Moreover, the extraction of each of the facilities may be executed by a business time in the choice of the destination and the dropping in place. For example, the facilities which are doing business from 11 AM to 11 PM may be extracted.

Moreover, again an address of a prefecture name, a state name, a city name, a town name and a village name may be used for the retrieving condition of the destination or the drop-in place. A field, a kind of business, a brand, a sales list of articles and a sales article may be used as the genre of the retrieving condition. Each of the facilities may be classified or retrieved by the price, the achievements, or the results of the concrete sales article at each shop. In other words, all the kind of internal information which shows the internal characteristic of the facilities by which each facility is extracted may be what is on one of the sales list of articles and so on. The internal information is a category of business, a brand, a list of articles, a price, achievements, results, business time and so on.

Moreover, the retrieving or the extraction may be done by the outward information which shows the outward characteristic of the building, for example, the number of the floors, the floor area, the height, the advertisement body, the color, the site, the zoning, the plane shape or the solid shape. Also the ground or the underground building such as the facilities, as the building does not only correspond to the destination and the drop-in place but also to the guidable spot such as the detailed place name or the address and so on. A start point or the start spot at which guidance can begin and so on are included in the present position of the car which is made the retrieving start point of the guide route or the cardinal point in case of map display.

Also, the street in the area is specified by the extraction of the facilities of the above embodiment. In other words, the facilities in the specific street and neighborhood in the area are extracted but this may be done as follows. For example, the famous facilities in the specific area, e.g. the facilities which are within the fixed distance from every station of the bus, the streetcar, the subway and so on may be extracted. Moreover, an agency, an intersection name, commemoration facilities in the prefecture, towns and villages and so on, e.g. Tokyo Tower, Olympia Park, Imperial Palace, a castle, Washington Monument and so on are included in the famous facilities.

In the destination-setting processing or the drop-in place setting processing, the extraction of the facilities by the new retrieving condition is executed according to each retrieving result. However, the various retrieving conditions to extract these facilities may be compounded by plural retrieving conditions. For example, when extracting facilities in the area, the extraction of the facilities by the genre and so on and the extraction of the facilities along the street may be overlapped and executed at the same time.

Also, in the above embodiment, the retrieving condition and the extraction result by the retrieving condition are combined respectively in order and displayed in the 2nd screen and the 3rd screen. For example, when the retrieving condition is displayed in the 2nd screen, an extraction result by the previous retrieving condition is displayed in the 3rd screen. Then when the choice of the retrieving condition in the 2nd screen is executed, the retrieving condition which was displayed in the 2nd screen is displayed in the 3rd screen and a new retrieving result is displayed in the 2nd screen.

In other words, the latest information at the time of each operation is displayed in the 2nd screen. Moreover when the choice of the retrieving condition is operated, the information of the 2nd screen is moved to the 3rd screen and the new retrieving result and so on are displayed in the 2nd screen. However this may be done as follows. That is, each retrieving condition, e.g. the list for the choice of the genre or the street and so on and the facility extraction result for each retrieving condition may be displayed in the 2nd and the 3rd screen in an optional combination. For example, the retrieving condition may be displayed in the 3rd screen and the past facility extraction result which is extracted by this retrieving condition may be displayed in the 2nd screen.

Also, the screen division of the display 33 is executed by the operator's choice operation of the retrieving condition and so on in the above embodiment but may be executed by the following environmental change. For example, it may be executed simultaneously with the direction that the retrieving processing should be started and may be executed when the retrieving condition is inputted or the retrieving result of the chosen retrieving condition is displayed. Also, it may be executed when the divided screen display is demanded by the operator, a change of the running condition of the car, a change of the speed of the car, a change of the direction of the car, a advanced change of the car, a change of the distance to the destination or the drop-in place, the destination is changed or the car deviates from or enters the range of the house map which is stored in the information memory part 37. It may be executed when a change of a running time, a change of a temperature of a drive source (a engine, a motor), a change of a number of rotations of the drive source, a change of the time, a change of remain value of fuel or a change of a voltage or a electric current of a battery (an accumulator, a cell) occurs. It may be executed when an environment change (a change of a light (after a sunset, in a sunset or in a daytime), a temperature, a humidity, a wind pressure, a amount of rainfall (a rainfall, a snow quantity or a noise)) occurs.

Similarly the cancellation of the screen division may be executed by a change in the operation by the operator, the choice of the retrieving condition, retrieving processing ending or display of the retrieving result. Moreover, it may be executed when a change of a running condition of the car, a change of a speed of the car, a change of a direction of the car, a late change of the car, a change of the distance to the destination or the dropping in place is made, the destination is changed or the car deviates from or enters the range of the house map which is stored in the information memory part 37.

It may be executed when a change of a running time, a change of a temperature of a drive source (a engine, a motor), a change of a number of rotations of the drive source, a change of the time, a change of remain value of fuel or a change of a voltage or a electric current of a battery (an accumulator, a cell) occurs. It may be executed when an environment change (a change of a light (after a sunset, in a sunset or in a daytime), a temperature, a humidity, a wind pressure, a amount of rainfall (a rainfall, a snow quantity or a noise)) occurs. As explained in detail above, in the destination-setting processing of this invention, a screen is divided and a retrieving condition and a retrieving result are displayed in parallel in each port of the divided screen. Therefore, because a retrieving condition of a destination is squeezed step-by-step, it has the effect that the destination can be more handily retrieved and so on. Especially when an address in the required destination and so on is not understood and clear, the destination can be retrieved based on the number which specifies an area.

38. Application example of all embodiments

The screen division of the display 33, division cancellation (the combining of the screen) or the changing of a navigation operation is executed by the choice operation of the operator or the change of the present position of the car in each of the above embodiments but may be executed by the following environmental change. For example, it may be executed when a change of a running condition of the car, a change of a speed of the car, a change of a direction of the car, a late change of the car, a change of the distance to the destination or the drop-in place occurs, the destination is changed or the car deviates from or enters the range of the house map which is stored in the information memory part 37. It may be executed when a change of a running time, a change of a temperature of a drive source (a engine, a motor), a change of a number of rotations of the drive source, a change of the time, a change of remain value of fuel or a change of a voltage or a electric current of a battery (an accumulator, a cell) occurs. It may be executed when an environmental change (a change of a light (after a sunset, in a sunset or in a daytime), a temperature, a humidity, a wind pressure, a amount of rainfall (a rainfall, a snow quantity or a noise)) occurs. Further, the various sensors are necessary to detect the environmental change. For example, the light sensor which is equipped with the photoelectric change device and so on is used for the detection of the light change of the environment.

A division position is not limited especially in the screen of the display 33 in this invention. Moreover in the above embodiments, the screen of the display 33 is divided in the vertical direction and the 2nd screen and the 3rd screen have equal areas. However, the display area of the 2nd screen may be smaller than the display area of the 3rd screen. Conversely, the display area of the 2nd screen may be bigger than the display area of the 3rd screen. Also, when the display screen of display 33 extends in the vertical direction, the screen is cut in the horizontal direction and the 3rd screen may be a screen above and the 2nd screen may be a screen below. Further, the 3rd screen in this case means the screen which displays higher necessity map information for the operator. Moreover, in each embodiment, the screen is divided in two but may divided into more than two screens. For example, the 2nd screen of the above embodiment is divided in the level direction and the 2nd screen divides into the upper side and the under side. Then the geographical information which is different from may be displayed in each part of the divided screen.

Moreover, in the each embodiment, the geographical information is displayed in each of the 2nd screen and the 3rd screen. It may be done as follows. For example, a television picture is displayed in the 2nd screen. The map information and so on may be displayed in the 3rd screen. Further when the screen division cancellation is indicated by the user in the each embodiment, one map is displayed on the whole screen of display 33. In case of this division cancellation, the map which was displayed in the 3rd screen may be displayed in the whole screen of display 33.

(1) In addition to the above, the screen may be divided up/down or top of the slant/below the slant and so on except to the left/right, and the display area of both screens may be different. In this case, the image memory 10 is divided according to these division forms and the addressing of each image memory device is also divided according to these division forms. Also, the number of the divided screens may exceed two, and division number of image memory 10 is increased according to this and the number of the palette RAM 204 and 208 of Figure 18, 208 is also increased.

(2) The information which is displayed in the 3rd screen 110 (or the 2nd screen 108) of Figure 10 or Figure 14 may be the simple map of Figure 17 in addition to the above (1). In this case, the processing of the step SK16 or SK24 is executed in the steps SC8, SC20, SD12 and SD14 or the steps SC6, SC18, SB18, SB22, SK8 and SK12.

In addition to the above, in the step SK4, the operation of the touch switch on the icon which is displayed in display 33 or the switch which corresponds to this icon may be distinguished. This icon is "direction of map".

The operation by the operator according to the icon may be also distinguished in the steps SB4, SB10, SE4, SE12, SG10 and SG4 in addition to the above matter. This icon is "whole route display" in the step SG10, "fore route display" in the step SE12, "reduced scale change" in the step SG4 and SE4, "screen division" in the step SB10 and "division cancellation" in the step SB4.

The map which is displayed in each screen in case of screen division processing of Figure 8 may be chosen manually. In this case, when "details" which are displayed by the icon are chosen, the whole screen which displays mainly only the turnpike (the guidable road) is changed to the divided screen which contains a non-turnpike (the backlane or the non-guidable road) and the divided screen which displays only the turnpike (the guidable road) from. Also when "outline" which is displayed by the icon is chosen, the whole screen which contains a non-turnpike is changed to the divided screen which displays only the turnpike and the divided screen which contains a non-turnpike.

Also, the condition of the display map may be chosen manually in the step SD4 of the 3rd screen processing of Figure 11. In this case, when "intersection" which is displayed by the icon is chosen, the whole screen of the road map is changed to the divided screen which shows the turn direction on either side in the intersection or in the turning spot and the divided screen of the road map. By the above, the display contents before the screen division are displayed in one screen after the division and the contents which the operator wants to have displayed by the display changing are displayed in the other screen after the division.

(3) In addition to the (1) and (2), the changing to the division display may accept the change of the azimuth of the car. In this case, based on the information from the absolute azimuth sensor 21 or the relative azimuth sensor 22, the processing enters the step SK12 → SK14 →···, the step SK8 → SK10 →···, the step SK20 → SK24 →···, the step SK22 → SK24 → ··, if the azimuth of the car shift s the fixed angle (e.g. ±45 degree or ±30 degrees) from "the north". Or it may be determined whether or not the distance to the destination or the drop-in place from the car became less than a fixed distance in the step SD2 of Figure 11. In this case, the category of business, the brand, the price, the name, the telephone number and so on of the destination or the drop-in place are displayed in the 3rd screen in the step SD4.

(4) The detailed oriented road map which contains the backlane may be displayed in the 2nd screen 108 of Figure 10, Figure 14 or Figure 16 (or the 3rd screen 110) in addition to the (1) (2) and (3) .

In addition to the above, the step SK2 may be omitted, and as the divided screen by each processing of Figure 6 is displayed, the processing may enter the step SK6 → SK7 →···. Or as the divided screen by each processing of Figure 19 or Figure 21 is displayed, the processing may enter the step SD2 or the step SD10. The display contents of the divided screen are changed at the same time by this.

In addition to the above, in every divided screen, the icon of "details", "outline", "intersection", "direction of map", "screen division", "reduced scale change", "fore route display", "whole route display" and so on may be displayed, a switch according to this icon may be operated by the operator and the display contents may be individually switched to every divided screen.

(5) As the screen is divided by each processing of Figure 6, Figure 19 or Figure 21, it may return to the single screen display in addition to (1) (2) (3) and (4). In this case, the map information which is displayed in this single screen may be the map information which was displayed in either part of the divided screen, or was not displayed in both parts of the divided screen or may be previous map information before the screen division.

In this case, the changing to the single screen based on a change of the distance from the turning spot or the intersection to the car may be performed by a changing operation of the operator as mentioned above, a change of the travelling condition of the car, a change of the speed of the car, a change of the azimuth of the car, a change of the distance to the destination or the drop-in place or so on.

According to this display changing, the steps SK16, SK24, SD4, SC6, SC8, SC18, SC20, SK8, SK10, SK12, SK14, SK20, SK22 and SK24 are the executed. In this case, display information is not displayed on a divided screen but is displayed in the whole screen of display 33.

(6) In the Figure 10, Figure 14, Figure 16, Figure 20, Figure 24, Figure 25, Figure 30, Figure 32, Figure 33, Figure 41, Figure 42, Figure 43, Figure 44, Figure 51, Figure 52, and Figure 68 to Figure 73 of the above embodiments, the screen which is nearer the driver is the 3rd screen 110. However, this 3rd screen 110 and 2nd screen 108 may be exchanged depending on whether the car has the steering wheel on the left side and the right side or depending on the change of the travelling condition of the car. In this case, based on a change of the distance from the turning spot or the intersection to the car, the changing operation of the above operator, a change of the travelling condition of the car, a change of the speed of the car, a change of the azimuth of the car, a change of the distance to the destination or the drop-in place or so on, the change of the computer program of the flow chart of Figure 6, Figure 19, Figure 21, Figure 22, Figure 27, Figure 34, Figure 35, Figure 36, Figure 37, Figure 38, Figure 39, Figure 49, Figure 64, Figure 65, Figure 66 and Figure 67 is executed.

In this change, the information which is displayed in each portion of the divided screen is exchanged in the display processing of the stepsSC6, SC8, SC18, SC20, SD12, SD14, SE120, SG16, SK12, SK14, SK8, SK10, SK20, SK22, SK24, SL12, SL34, SL36, SP14, SP38, SP40, SQ26, SQ28, ST12, ST14, SU12, SV22, SX12, SX14, SX20, SX22, SX62, SX64, SX72, SX94, SX112, SX122, SX123, SX132, SX140, SX141, SX146 and SX147.

Or the information which is displayed in the 2nd screen 108 is moved to the 3rd screen 110, the information which is displayed in the 3rd screen 110 is moved to the 2nd screen 108 and both display screens are switched in the steps SC6 and SC8, the steps SC18 and SC20, the steps C18 and SC20, the steps SK12 and SK14, the steps SK8 and SK10, the steps SK20 and SK22, the step SK20 and the SK24 etc.. Therefore the display contents of each part of the divided screen can be exchanged with each other.

(7) In addition to the above matter, the map which is displayed in the 2nd screen of the 1st embodiment may be the map which ranges to north direction, northeastern direction, eastern direction, southeastern direction, south direction, west direction, southwestern direction or northwestern direction of the map which is displayed in the 3rd screen. In this case for example, it is determined whether or not the mode which is determined in the step SB16 of the 1st embodiment is the map display mode which connects with (ranges to) the directions.

Then if the mode is the mode which corresponds to this step SB16, the map display which fits in this mode is executed in the step SB18. For example the map which is displayed in the 3rd screen is made the screen oriented in the north direction.

In this case, the map display mode which ranges for east is chosen. Further geographical coordinate detection in the map ranging part is executed in the step SD20 that crossing point CSP in the edge part of the 3rd screen in Figure 11 (the 3rd screen display processing) is detected. In other words, the geographical coordinate of the east edge of the map which is displayed in the 3rd screen is detected in this step SD20. Then the map which is connected with the east edge of the map which is the displayed in this 3rd screen is displayed in the 2nd screen in the step SB18 of Figure 6 according to the mode choice. Moreover this operation may be detected based on the operation of the operator, the operation of the installation person or so on in the map display of the 2nd screen.

Moreover the position of the operator (driver) may be detected by the object detection sensor, e.g. the infrared sensor prepared for the navigation device surface and neighborhood or so on. Then, the map display processing of the 2nd screen may be executed by the position of this operator. Moreover the map display processing of the 2nd and 3rd screens may be executed by a change of the travelling condition of the car or a change of the speed of the car which is detected by a speed sensor or so on. Moreover, the map display of the 2nd and 3rd screens may be executed by a change of the azimuth of the car which is detected by a relative azimuth sensor. The change of the distance from the turning spot or the intersection to the car, the change of the distance to the destination or the drop-in place are detected by the travelling position of the guide route and the display of the 2nd and 3rd screens may be executed according to the detection result.

(8) In addition to the above, the map which is displayed in the 3rd screen may be the map information which shows the area around the car, the start point, the destination, the drop-in place or the chosen optional part. Then the map which connects with one azimuth of all the azimuths of the map which is displayed in this 3rd screen may be displayed in the 2nd screen. In other words, a map around the destination (the drop-in place, the specification place or so on) is displayed in the 3rd screen. Moreover the map which is connected with the map of this 3rd screen and contains the guide route which connects from the start point to the destination may be displayed in the 2nd screen.

Processing in this case is also executed in the step SD20 of the 3rd screen display processing of Figure 11 as in (7). In other words, the geographical coordinate which corresponds to the edge of the map which is displayed in the 3rd screen is detected in the step SD20. Then the map which connects with the geographical coordinate of the edge of this 3rd screen is displayed in the 2nd screen in the step SB18 of Figure 6.

Moreover the map which connects with the 3rd screen and is displayed in the 2nd screen may be the map which connects to the prolongation of the car. In other words, a map around the destination is displayed in the 3rd screen when the car isn't running on the guide route. The map which connects with the 3rd screen is displayed in the 2nd screen.

However, because the car isn't running on the guide route, the guide route doesn't have to be included in the 2nd screen. Additionally, the map in the direction which is unrelated to the position of the car or the guide route may be displayed in the 2nd screen. Moreover, again the display center of the maps which are displayed in the 2nd and 3rd screens may be switched around. The display ranges of each map of the 2nd and the 3rd screen do not overlap each other and the geographically left maps may be displayed in these screens. Each part of the maps which are displayed in the 2nd and 3rd screens may overlap. This invention is not limited to the above embodiments and it is possible to change some kinds in the range which doesn't deviate from the spirit of this invention.

For example the memory medium to store the various data which is shown in Figure 2 may be the memory medium e.g. a floppy disk or so which can be written on. Moreover, the navigation device may be equipped with the voice input device which is equipped with the analog/digital converter. Then each operation may be executed by sound direction which is inputted by this voice input device. Also, in each embodiment, the screen of one display 33 is divided into two display screens.

It may be implemented by two display devices. In other words, two liquid crystal displays are adjacent neighbor and are arranged in the inside of one box. Then before the division, one map is displayed by two liquid crystal displays. When division is directed, the different map information is displayed in each liquid crystal display. Moreover in the navigation device of this invention, all or partial processing of the above flow charts may be executed in the information management center of VICS or ATIS etc..

This processing result (the processing information) is received with the data transmitter/receiver unit 27. For example the destination setting processing (step SA3) of Figure 5 and route search processing (step SA4) and so on are executed in the information processing center where map information is accumulated. Then identified guide route data is transferred to the navigation device of this invention through the data transmitter/receiver unit 27. In the navigation device of this invention, the processing of a guidance display is executed based on the guide route data sent.

In other words, the information of the retrieving condition of the destination or drop-in facilities and the route search condition and so on is sent from the navigation device of this invention to the information management center. In the information management center, the retrieving of the required facilities and the search of the route to the destination are executed based on this condition. Then information about the retrieving, extraction and search result is transmitted to the navigation device from the information management center with the map information and so on. In the navigation device, based on this received retrieving, the extraction and the search result, retrieved facilities are displayed in the display 33. In this way, the retrieving, the extraction, the search of each of facilities are possibly based on the details and latest information about each of the facilities around the present position of the car.

Also in case of this facility retrieving, the retrieving which is considered the environment change of the circumference road (establishment of the one-way traffic road and so on) is possible. Further in this case, the information about each of the facilities which are accumulated in the information management center must be always renewed. Moreover the information memory part 37 which stores each program which is explained by this invention and the information of the map and the display symbol and so on may be used by the general computer device. In other words, the program which is memorized in information memory part 37 is made the program which can be executed in the general computer.

Then, this navigation processing can be also executed by this computer device, if the device which can detect the present position by GPS reception device 25 and this information memory part 37 are connected with the carry-type computer device. Moreover, this invention can be applied to vehicles other than a car as a navigation device of a ship, or the aircraft and the map which is used for navigation may be a chart and a submarine map and so on in addition to a road map. Moreover, again this invention may be applied to the carry-type navigation device in addition to the navigation device which is attached to moving bodies such as the car. In other words, this invention may be applied to the small navigation device which can accompany by the human and which is used in cycling, travelling, mountaineering, hiking, fishing or so on.

## Claims

**1.** A device for displaying a map, comprising:

1st means for dividing a screen (104), which displays map information including road classification, into a plurality of concurrent screens;
2nd means for showing stored or received $1^{st}$ map information in at least one (108) of the plurality of screens; and $3^{rd}$ means for displaying $2^{nd}$ map information including road classification which is different from said displayed $1^{st}$ map information in another screen (110) different from said one screen in which said $1^{st}$ map information is displayed, wherein
the scale (136) and the location area of the $1^{st}$ map information are the same as the scale (140) and the location area of the $2^{nd}$ map information; and
the road classification of the $1^{st}$ map information is different from the road classification of the $2^{nd}$ map information.

**2.** The device for displaying a map according to claim 1, wherein said road classification is information about a guidable road and a non-guidable road for navigation,
the 1st map information is an information of the guidable road and the non-guidable road for navigation,
and the 2nd map information is information only about the guidable road for navigation.

**3.** The device for displaying a map according to any one of claims 1 and 2, wherein the 1st map information is displayed by a map oriented in the north direction (north-up map),
and the 2nd map information is displayed by a map oriented in the travel direction (head-up map).

**4.** The device for displaying a map according to any one of claims 1 to 3, which detects a change in the display contents of the screen which displays said map information,
makes a map information which is displayed before the 1st map information is changed on account of said detection result,
and makes a map information which should be displayed after the change to the 2nd map information is made on account of said detection result.

**5.** The device for displaying a map according to any one of claims 1 to 4, wherein a display screen is divided or not divided, before said display contents are changed
and a change of said display contents is made in response to a change made by the operator, a change of a travel condition of the car, a change of the car speed, a change of the azimuth of the car, a change of the distance from a turning point or an intersection to the car and/or a change of the distance to a destination or a drop-in place.

**6.** The device for displaying a map according to any one of claims 1 to 5, wherein said 1st map information and/or 2nd map information is changed to another map information in succession,
wherein a part of or all display contents of said divided screen are changed individually in succession or at the same time,
or in accordance with a further change in the display contents of the screen, said divided screen is made a single screen,
the map information which is displayed in the single screen may be the 1st map information, the 2nd map information, a map information other than the 1st map information and the 2nd map information and/or a previous map information before screen division,
and the change of said display contents is made in response to a change made by the operator, a change of the travel condition of the car, a change of the car speed, a change of the azimuth of the car, a change of the distance from a turning point or an intersection to the car and/or a change of the distance to a destination or a drop-in place.

**7.** The device for displaying a map according to any one of claims 1 to 6, wherein the screens where the 1st map information and the 2nd map information are displayed exchange their contents,
this exchange is made in response to a change of a distance from a point, an operation by the operator or an installation person, the driver's detection of the position, a change in the travel condition of the car, a change of the car speed, a change of the azimuth of the car, a change in the distance from an intersection or turn point to the car and/or a change in the distance to a destination or a drop-in place,
and the 1st map information or the 2nd map information is shown in the part of the divided screen which is near the driver.

**8.** The device for displaying a map according to any one of claims 1 to 7, which searches a route to the neighborhood of a destination or a drop-in place from the neighborhood of a starting place or the present position of a car,
said map information is related to said searched route,
the 1st map information is information of a simple map which designates the geographical relation between the neighborhood of the starting place or the present position of the car and the neighborhood of a destination or a drop-in place,
the 2nd map information is detailed geographical information around the present position of the car,
or the 1st map information is based on the travel information of the car in a searched route,
the 2nd map information is detailed geographical information near the present position of a car,
or the 1st map information is information about a turnpike and a non-turnpike or an object road and a non-object road of navigation, and
the 2nd map information is information only about a turnpike or an object road of navigation,
or the 1st map information is displayed by as a map oriented in the north direction (north up map) and the 2nd map information is displayed as a map oriented in the direction of travel (head up map),
or the 1st map information is information of a map which maintain the north as an absolute azimuth in to the direction of either one of the screens,
and the 2nd map information is information of a map which maintains the moving direction of a car to the direction of either one of the screens.

**Patentansprüche**

1. Vorrichtung zum Darstellen einer Karte, mit:

   einer ersten Einrichtung zum Teilen eines Bildschirms (104), in dem Karteninformation dargestellt wird, die eine Straßenklassifizierung beinhaltet, in mehrere gleichzeitig dargestellte Bildschirmfenster;
   einer zweiten Einrichtung zum Darstellen gespeicherter oder empfangener erster Karteninformation in mindestens einem (108) der mehreren Bildschirmfenster; und
   einer dritten Einrichtung zum Darstellen zweiter Karteninformation, die eine Straßenklassifizierung beinhaltet und sich von der dargestellten ersten Karteninformation unterscheidet, in einem anderen Bildschirmfenster (110), das sich von dem einen Bildschirmfenster unterscheidet, in dem die erste Karteninformation dargestellt ist; wobei
   der Maßstab (136) und der Orts- oder Gebietsbereich der ersten Karteninformation dem Maßstab (140) und dem Orts- oder Gebietsbereich der zweiten Karteninformation gleichen; und
   die Straßenklassifizierung der ersten Karteninformation sich von der Straßenklassifizierung der zweiten Karteninformation unterscheidet.

2. Vorrichtung nach Anspruch 1, wobei die Straßenklassifizierung Information über eine führbare Straße und eine nicht führbare Straße für eine Navigation darstellt;
   die erste Karteninformation Information über die führbare und die nicht führbare Straße für die Navigation darstellt; und
   die zweite Karteninformation Information ausschließlich über die führbare Straße für die Navigation darstellt.

3. Vorrichtung nach einem der Ansprüche 1 oder 2, wobei die erste Karteninformation in einer Karte dargestellt wird, die in der Nordrichtung ausgerichtet ist (Karte, bei der die Nordrichtung nach oben ausgerichtet ist); und
   die zweite Karteninformation in einer Karte dargestellt wird, die in der Fahrtrichtung ausgerichtet ist (Karte, in der die Fahrtrichtung nach oben ausgerichtet ist).

4. Vorrichtung nach einem der Ansprüche 1 bis 3, wobei die Vorrichtung eine Änderung der Displayinhalte des Bildschirmfensters erfasst, das die Karteninformation darstellt;
   Karteninformation erzeugt, die dargestellt wird, bevor die erste Karteninformation aufgrund des Erfassungsergebnisses geändert wird; und
   Karteninformation erzeugt, die dargestellt werden sollte, nachdem aufgrund des Erfassungsergebnisses auf die zweite Karteninformation umgeschaltet wurde.

5. Vorrichtung nach einem der Ansprüche 1 bis 4, wobei ein Bildschirm geteilt oder nicht geteilt wird, bevor die Displayinhalte geändert werden; und
   die Displayinhalte in Antwort auf eine durch eine Bedienungsperson vorgenommene Operation, eine Änderung eines Fahrzeugfahrtzustands, eine Änderung der Fahrzeuggeschwindigkeit, eine Änderung des Azimuts des Fahrzeugs, eine Änderung des Abstands von einem Abbiegepunkt oder einer Kreuzung zum Fahrzeug und/oder eine Änderung des Abstands zu einem Ziel oder einem anzufahrenden Ort geändert werden.

6. Vorrichtung nach einem der Ansprüche 1 bis 5, wobei die erste Karteninformation und/oder die zweite Karteninformation aufeinanderfolgend auf eine andere Karteninformation umgeschaltet wird;
wobei ein Teil der Displayinhalte oder die gesamten Displayinhalte des geteilten Bildschirms aufeinanderfolgend oder gleichzeitig individuell geändert werden;
oder gemäß einer weiteren Änderung der Displayinhalte des Bildschirms veranlaßt wird, dass der geteilte Bildschirm auf ein einzelnes Bildschirmfenster geschaltet wird;
wobei die Karteninformation, die im einzelnen Bildschirmfenster dargestellt wird, die erste Karteninformation, die zweite Karteninformation, eine von der ersten und der zweiten Karteninformation verschiedene Karteninformation und/oder eine vorangehende Bildschirminformation sein kann, die vor der Teilung des Bildschirms bereitgestellt wurde;
und die Displayinhalte in Antwort auf eine durch eine Bedienungsperson vorgenommene Operation, eine Änderung des Fahrzeugfahrtzustands, eine Änderung der Fahrzeuggeschwindigkeit, eine Änderung des Azimuts des Fahrzeugs, eine Änderung des Abstands von einem Abbiegepunkt oder einer Kreuzung zum Fahrzeug und/oder eine Änderung des Abstands zu einem Ziel oder einem anzufahrenden Ort geändert werden.

**7.** Vorrichtung nach einem der Ansprüche 1 bis 6, wobei die Bildschirmfenster, in denen die erste Karteninformation und die zweite Karteninformation dargestellt werden, mit ausgetauschten Inhalten dargestellt werden;
wobei dieser Austauschvorgang in Antwort auf eine Änderung eines Abstands zu einem Punkt, eine durch eine Bedienungsperson oder eine mit der Installation betraute Person vorgenommene Operation, eine Positionsbestimmung durch den Fahrer, eine Änderung des Fahrzeugfahrzustands, eine Änderung der Fahrzeuggeschwindigkeit, eine Änderung des Azimuts des Fahrzeugs, eine Änderung des Abstands von einer Kreuzung oder einem Abbiegepunkt zum Fahrzeug und/oder eine Änderung des Abstands zu einem Ziel oder einem anzufahrenden Ort erfolgt; und
die erste Karteninformation oder die zweite Karteninformation in dem Teil des geteilten Bildschirms dargestellt wird, der sich in der Nähe des Fahrers befindet.

**8.** Vorrichtung nach einem der Ansprüche 1 bis 7, wobei die Vorrichtung ausgehend von der Umgebung eines Ausgangs-oder Startorts oder der Ist-Position eines Fahrzeugs eine Route zur Umgebung eines Ziels oder eines anzufahrenden Ortes sucht;
die Karteninformation mit der gesuchten Route in Beziehung steht;
die erste Karteninformation Information einer einfachen Karte darstellt, die die geografische Beziehung zwischen der Umgebung des Startortes oder der Ist-Position des Fahrzeugs und der Umgebung eines Ziels oder eines anzufahrenden Ortes darstellt;
die zweite Karteninformation detaillierte geografische Information über die Umgebung der Ist-Position des Fahrzeugs darstellt; oder
die erste Karteninformation auf der Fahrtinformation des Fahrzeugs in einer gesuchten Route basiert;
die zweite Karteninformation detaillierte geografische Information über die Umgebung der Ist-Position des Fahrzeugs darstellt; oder
die erste Karteninformation Information über eine mautpflichtige Straße oder eine nicht mautpflichtige Straße oder eine Straße darstellt, die Gegenstand der Navigation bzw. nicht Gegenstand der Navigation ist; und
die zweite Karteninformation Information nur über eine mautpflichtige Straße oder eine Straße darstellt, die Gegenstand der Navigation ist; oder
die erste Karteninformation als Karte dargestellt wird, die in der Nordrichtung ausgerichtet ist (Karte, bei der die Nordrichtung nach oben ausgerichtet ist), und die zweite Karteninformation als Karte dargestellt wird, die in der Fahrtrichtung ausgerichtet ist (Karte, in der die Fahrtrichtung nach oben ausgerichtet ist); oder
die erste Karteninformation Information über eine Karte darstellt, in der Norden als absoluter Azimut zur Richtung eines der Bildschirmfenster beibehalten wird; und
die zweite Karteninformation Information über eine Karte darstellt, in der die Bewegungsrichtung eines Fahrzeugs zur Richtung eines der Bildschirmfenster beibehalten wird.

## Revendications

**1.** Appareil d'affichage d'une carte, comprenant :

des premiers moyens pour diviser un écran (104), qui affiche des informations de carte comprenant une classification routière, en une pluralité d'écrans existant simultanément ;
des deuxièmes moyens pour montrer des premières informations de carte enregistrées ou reçues sur au moins un (108) de la pluralité d'écrans ;

et des troisièmes moyens pour afficher des deuxièmes informations de carte comprenant une classification routière qui sont différentes desdites premières informations de carte affichées sur un autre écran (110) qui est différent dudit écran sur lequel lesdites premières informations de carte sont affichées ; dans lequel :
l'échelle (136) et la zone d'emplacement des premières informations de carte sont les mêmes que l'échelle (140) et la zone d'emplacement des deuxièmes informations de carte ; et
la classification routière des premières informations de carte est différente de la classification routière des deuxièmes informations de carte.

**2.** Appareil d'affichage d'une carte selon la revendication 1, dans lequel ladite classification routière constitue des informations relatives à une route permettant un guidage et à une route non permettant un guidage pour la navigation ;
les premières informations de carte sont des informations relatives à une route permettant un guidage et à une route non permettant un guidage pour la navigation ;
et les deuxièmes informations de carte sont informations relatives uniquement à la route permettant un guidage pour la navigation.

**3.** Appareil d'affichage d'une carte selon l'une quelconque des revendications 1 et 2, dans lequel les premières informations de carte sont affichées par une carte orientée dans la direction du Nord (carte dirigée vers le Nord);
et les deuxièmes informations de carte sont affichées par une carte orientée dans la direction du déplacement (carte dirigée vers l'avant).

**4.** Appareil d'affichage d'une carte selon l'une quelconque des revendications 1 à 3, qui détecte un changement dans le contenu d'affichage de l'écran qui affiche lesdites informations de carte ;
qui crée des informations de carte qui sont affichées avant que les premières informations de carte ne soient modifiées sur la base dudit résultat de détection ;
et qui crée des informations de carte qui devraient être affichées après que les deuxièmes informations de carte ont été modifiées sur la base dudit résultat de détection.

**5.** Appareil d'affichage d'une carte selon l'une quelconque des revendications 1 à 4, dans lequel un écran d'affichage est divisé ou non divisé, avant que ledit contenu d'affichage soit modifié ;
et un changement dudit contenu d'affichage est fait en réponse à un changement opéré par le conducteur, un changement d'une condition de déplacement de la voiture, un changement de la vitesse de la voiture, un changement de l'azimut de la voiture, un changement de la distance entre un point de changement de direction ou une intersection et la voiture et/ou un changement de la distance par rapport à une destination ou une position d'arrêt.

**6.** Appareil d'affichage d'une carte selon l'une quelconque des revendications 1 à 5, dans lequel lesdites premières informations de carte et/ou lesdites deuxièmes informations de carte sont modifiées pour passer à d'autres informations de carte, en séquence ;
dans lequel une partie ou la totalité du contenu d'affichage dudit écran divisé est modifiée de façon individuelle, en séquence ou en même temps ;
ou bien, en fonction d'un autre changement opéré dans le contenu d'affichage de l'écran, ledit écran divisé devient un seul écran unique ;
les informations de carte qui sont affichées sur l'écran unique peuvent être les premières informations de carte, les deuxièmes informations de carte, des informations de carte autres que les premières informations de carte et les deuxièmes informations de carte, et/ou de précédentes informations de carte antérieures à la division de l'écran ;
et le changement dudit contenu d'affichage est fait en réponse à un changement opéré par le conducteur, un changement de la condition de déplacement de la voiture, un changement de la vitesse de la voiture, un changement de l'azimut de la voiture, un changement de la distance entre un point de changement de direction ou une intersection et la voiture et/ou un changement de la distance par rapport à une destination ou une position d'arrêt.

**7.** Appareil d'affichage d'une carte selon l'une quelconque des revendications 1 à 6, dans lequel les écrans sur lesquels les premières informations de carte et les deuxièmes informations de carte sont affichées échangent leur contenu ;
cet échange est fait en réponse à un changement d'une distance par rapport à un point, une opération accomplie par le conducteur ou un technicien d'installation, la détection de la position par le conducteur, un changement de la condition de déplacement de la voiture, un changement de la vitesse de la voiture, un changement de l'azimut de la voiture, un changement de la distance entre un point de changement de direction ou une intersection et la voiture et/ou un changement de la distance par rapport à une destination ou une position d'arrêt ;
et les premières informations de carte ou les deuxièmes informations de carte sont représentées dans la partie de l'écran divisé qui est la plus proche du conducteur.

8. Appareil d'affichage d'une carte selon l'une quelconque des revendications 1 à 7, qui recherche une route vers la proximité d'une destination ou une position d'arrêt à partir d'un voisinage d'un emplacement de départ ou la position actuelle d'une voiture ;
lesdites informations de carte sont liées à ladite route recherchée ;
les premières informations de carte sont des informations d'une simple carte qui désigne la relation géographique entre le voisinage de l'emplacement de départ ou la position actuelle de la voiture et le voisinage d'une destination ou d'une position d'arrêt ;
les deuxièmes informations de carte sont des informations géographiques détaillées autour de la position actuelle de la voiture ;
ou bien les premières informations de carte sont basées sur les informations de déplacement de la voiture sur une route recherchée ;
les deuxièmes informations de carte sont des informations géographiques détaillées proches de la position actuelle de la voiture ;
ou bien les premières informations de carte sont des informations à propose d'une autoroute à péage ou d'une autoroute non à péage, ou une route objet et une route non objet, de navigation ; et
les deuxièmes informations de carte sont des informations uniquement à propos d'une autoroute à péage ou d'une route objet, de navigation ;
ou bien les premières informations de carte sont affichées par une carte orientée dans la direction du Nord (carte dirigée vers le Nord), et les deuxièmes informations de carte sont affichées par une carte orientée dans la direction du déplacement (carte dirigée vers l'avant) ;
ou bien les premières informations de carte sont des informations d'une carte qui garde le nord comme un azimut absolu par rapport à la direction de l'un ou l'autre des écrans ;
et les deuxièmes informations de carte sont des informations d'une carte qui garde la direction de déplacement d'une voiture par rapport à la direction de l'un ou l'autre des écrans.

FIG. 1

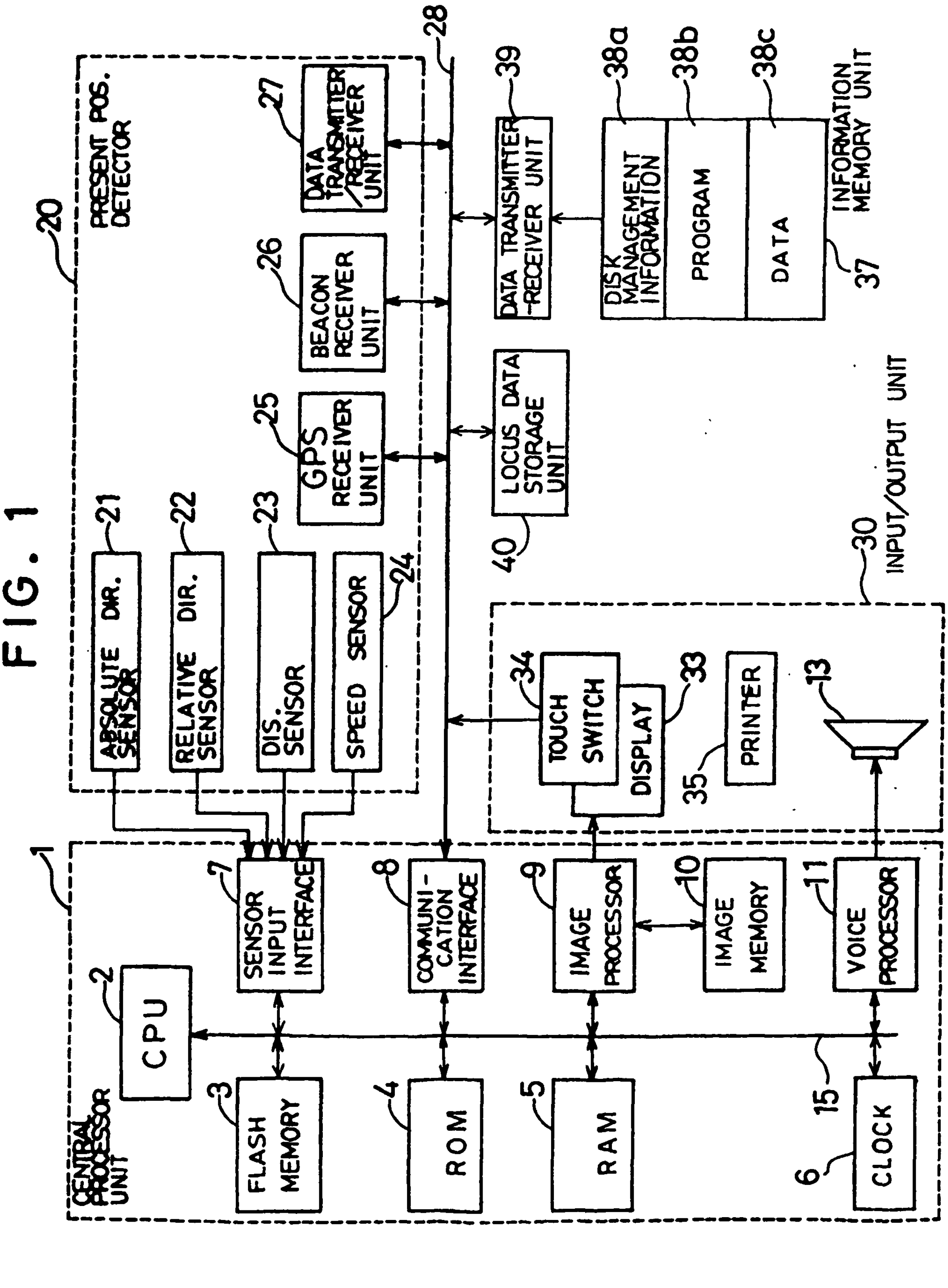
PRESENT POS. DETECTOR
ABSOLUTE DIR. SENSOR
RELATIVE DIR. SENSOR
DIS. SENSOR
SPEED SENSOR
GPS RECEIVER UNIT
BEACON RECEIVER UNIT
DATA TRANSMITTER /RECEIVER UNIT
LOCUS DATA STORAGE UNIT
DATA TRANSMITTER -RECEIVER UNIT
DISK MANAGEMENT INFORMATION
PROGRAM
DATA
INFORMATION MEMORY UNIT
INPUT/OUTPUT UNIT
TOUCH SWITCH
DISPLAY
PRINTER
CENTRAL PROCESSOR UNIT
CPU
FLASH MEMORY
SENSOR INPUT INTERFACE
COMMUNI-CATION INTERFACE
ROM
IMAGE PROCESSOR
IMAGE MEMORY
RAM
VOICE PROCESSOR
CLOCK
1
2
3
4
5
6
7
8
9
10
11
13
15
20
21
22
23
24
25
26
27
28
30
33
34
35
37
38a
38b
38c
39
40

FIG. 2

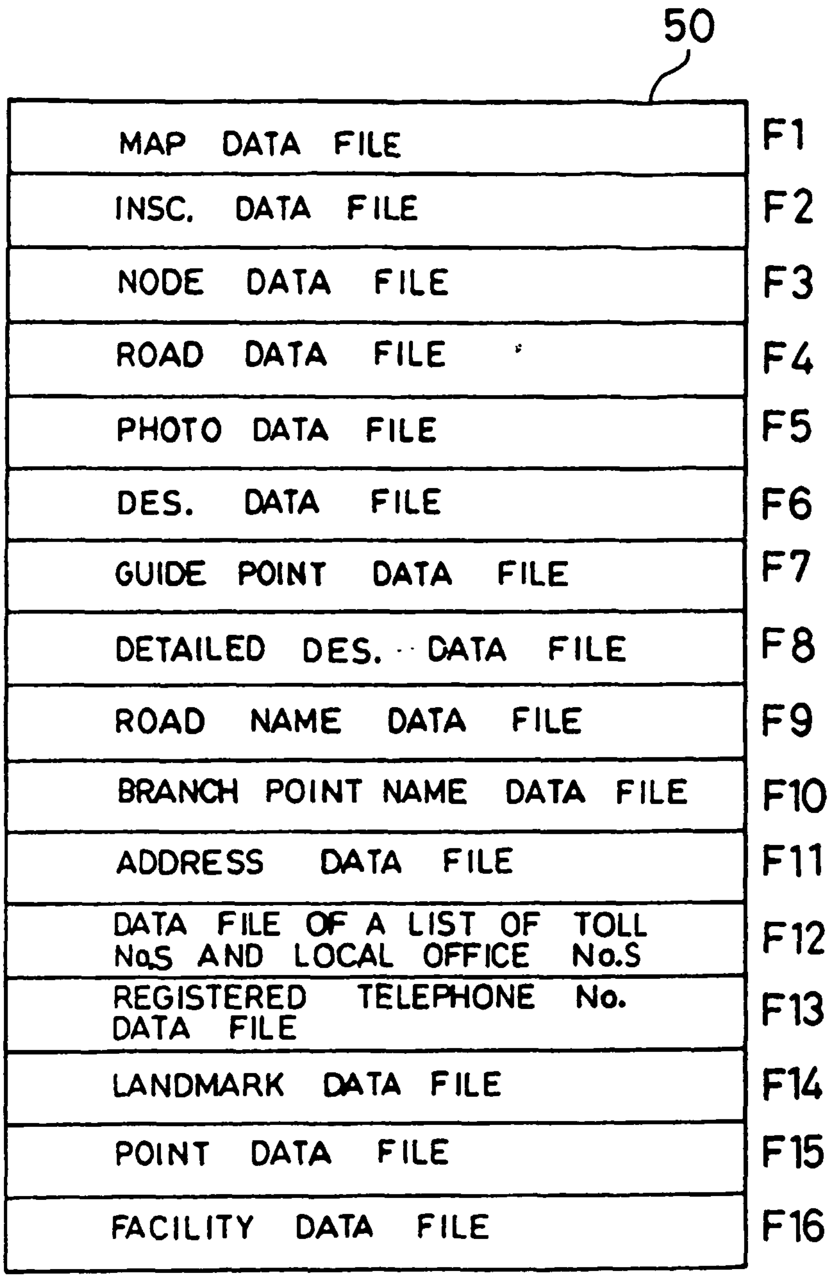
50
MAP DATA FILE
F1
INSC. DATA FILE
F2
NODE DATA FILE
F3
ROAD DATA FILE
F4
PHOTO DATA FILE
F5
DES. DATA FILE
F6
GUIDE POINT DATA FILE
F7
DETAILED DES. DATA FILE
F8
ROAD NAME DATA FILE
F9
BRANCH POINT NAME DATA FILE
F10
ADDRESS DATA FILE
F11
DATA FILE OF A LIST OF TOLL NoS AND LOCAL OFFICE No.S
F12
REGISTERED TELEPHONE No. DATA FILE
F13
LANDMARK DATA FILE
F14
POINT DATA FILE
F15
FACILITY DATA FILE
F16

# FIG. 3

5

RAM

| |
|---|
| PROGRAM AREA PL |
| PRESENT POS. DATA MP |
| ABSOLUTE DIR. DATA ZD |
| RELATIVE DIR. ANGLE DATA Dθ |
| TRAVELED DIS. DATA ML |
| PRESENT POS. DATA PI |
| VICS DATA VD |
| ATIS DATA AD |
| INPUTTED DES. DATA TP |
| START POINT OF ROUTE DATA SP |
| END POINT OF ROUTE DATA ED |
| GUIDE ROUTE DATA MW |
| MODE SET DATA MD |
| DROP POINT DP |
| SCREEN CONDITION GJ |
| CROSSING POINT CSP |
| RED. SCALE WDA OF 1ST SCREEN |
| RED. SCALE WDB OF 2ND SCREEN |
| RED. SCALE WDC OF 3RD SCREEN |
| HORIZONTAL DIS. XLM |
| VERTICAL DIS. YLM |
| POINT NODE NDP |

FIG. 4

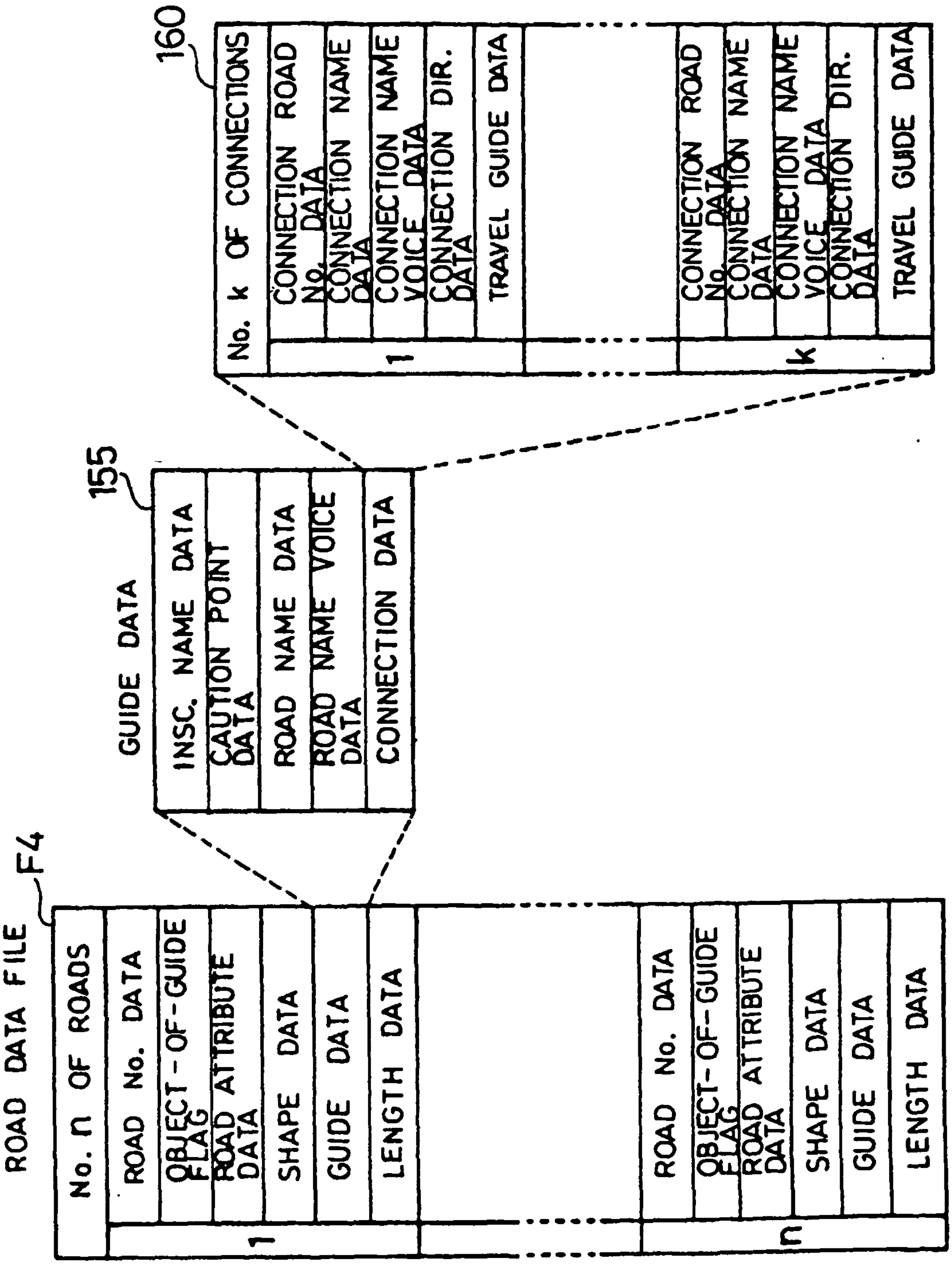
ROAD DATA FILE
F4
No. n OF ROADS
ROAD No. DATA
OBJECT-OF-GUIDE FLAG
ROAD ATTRIBUTE DATA
SHAPE DATA
GUIDE DATA
LENGTH DATA
1
n
GUIDE DATA
155
INSC. NAME DATA
CAUTION POINT DATA
ROAD NAME DATA
ROAD NAME VOICE DATA
CONNECTION DATA
160
No. k OF CONNECTIONS
CONNECTION ROAD No. DATA
CONNECTION NAME DATA
CONNECTION NAME VOICE DATA
CONNECTION DIR. DATA
TRAVEL GUIDE DATA
k

FIG. 5

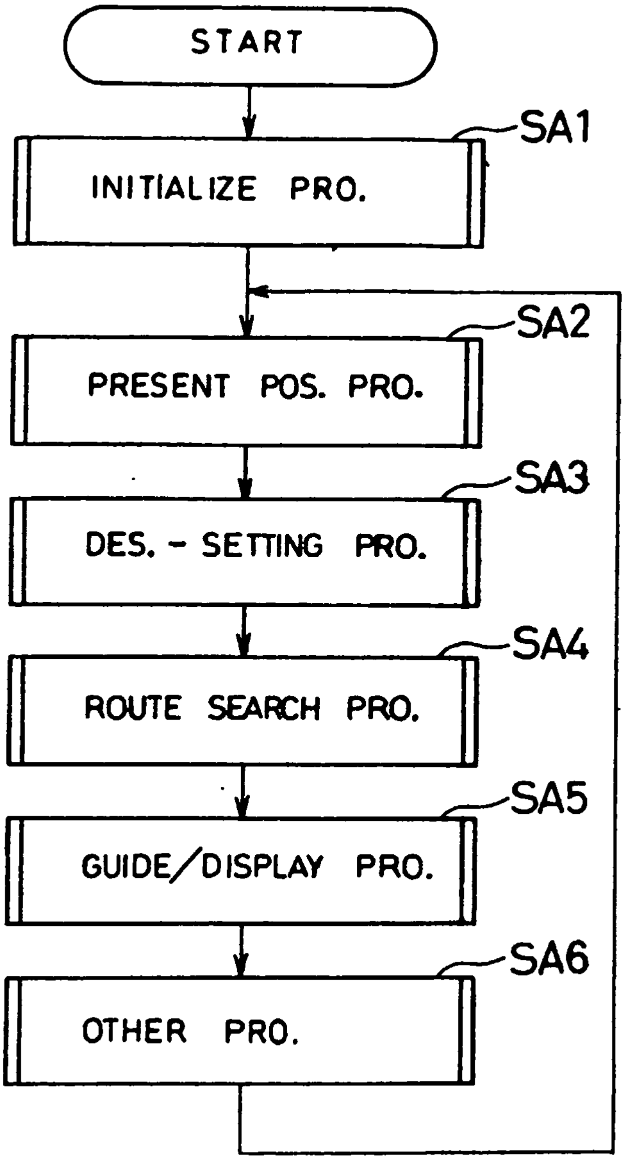
START
SA1
INITIALIZE PRO.
SA2
PRESENT POS. PRO.
SA3
DES. - SETTING PRO.
SA4
ROUTE SEARCH PRO.
SA5
GUIDE/DISPLAY PRO.
SA6
OTHER PRO.

FIG. 6

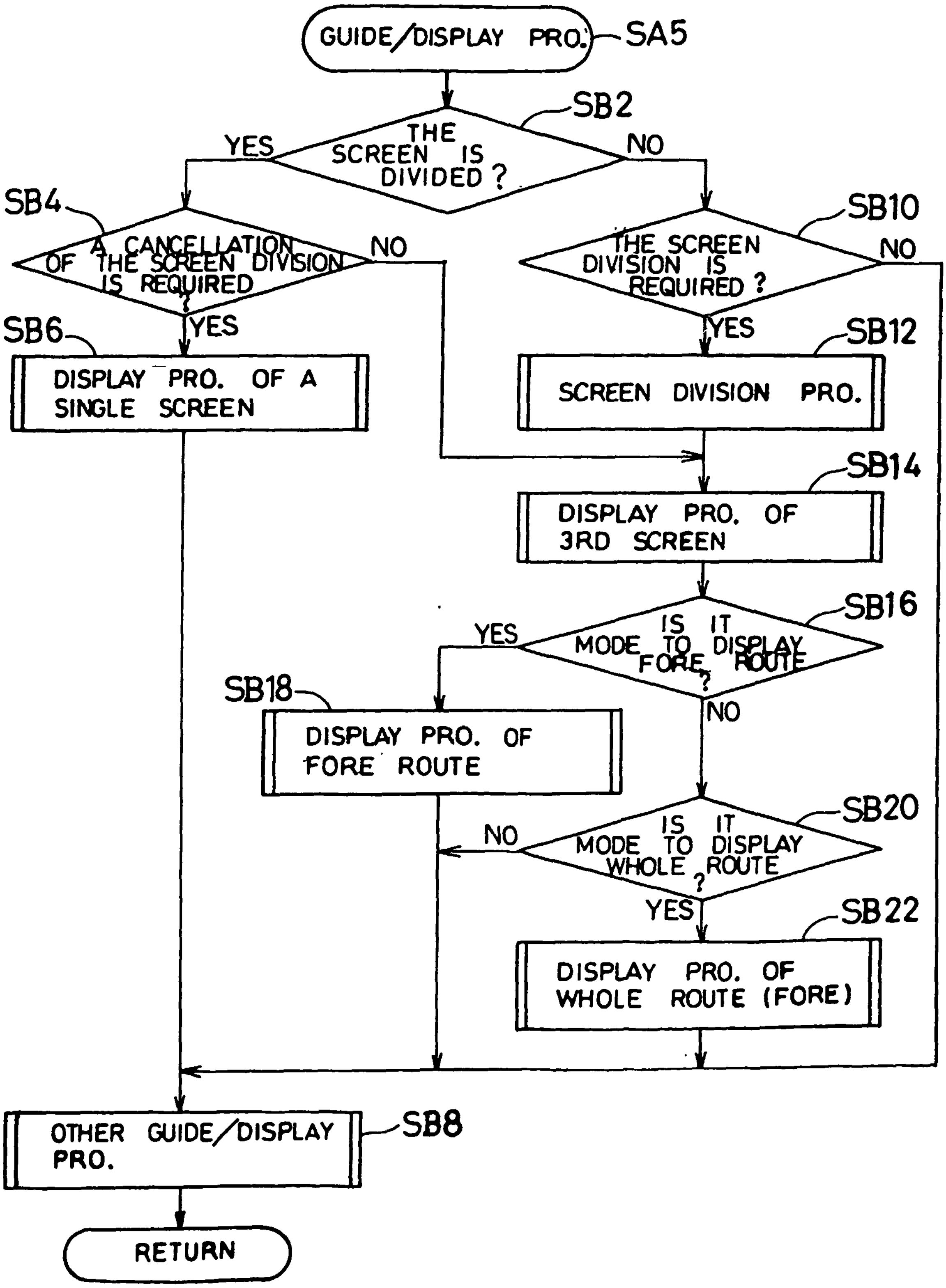
GUIDE/DISPLAY PRO.
SA5
THE SCREEN IS DIVIDED ?
SB2
YES
NO
SB4
A CANCELLATION OF THE SCREEN DIVISION IS REQUIRED ?
NO
YES
SB10
THE SCREEN DIVISION IS REQUIRED ?
NO
YES
SB6
DISPLAY PRO. OF A SINGLE SCREEN
SB12
SCREEN DIVISION PRO.
SB14
DISPLAY PRO. OF 3RD SCREEN
SB16
IS IT MODE TO DISPLAY FORE ROUTE ?
YES
NO
SB18
DISPLAY PRO. OF FORE ROUTE
SB20
IS IT MODE TO DISPLAY WHOLE ROUTE ?
NO
YES
SB22
DISPLAY PRO. OF WHOLE ROUTE (FORE)
OTHER GUIDE/DISPLAY PRO.
SB8
RETURN

FIG. 7

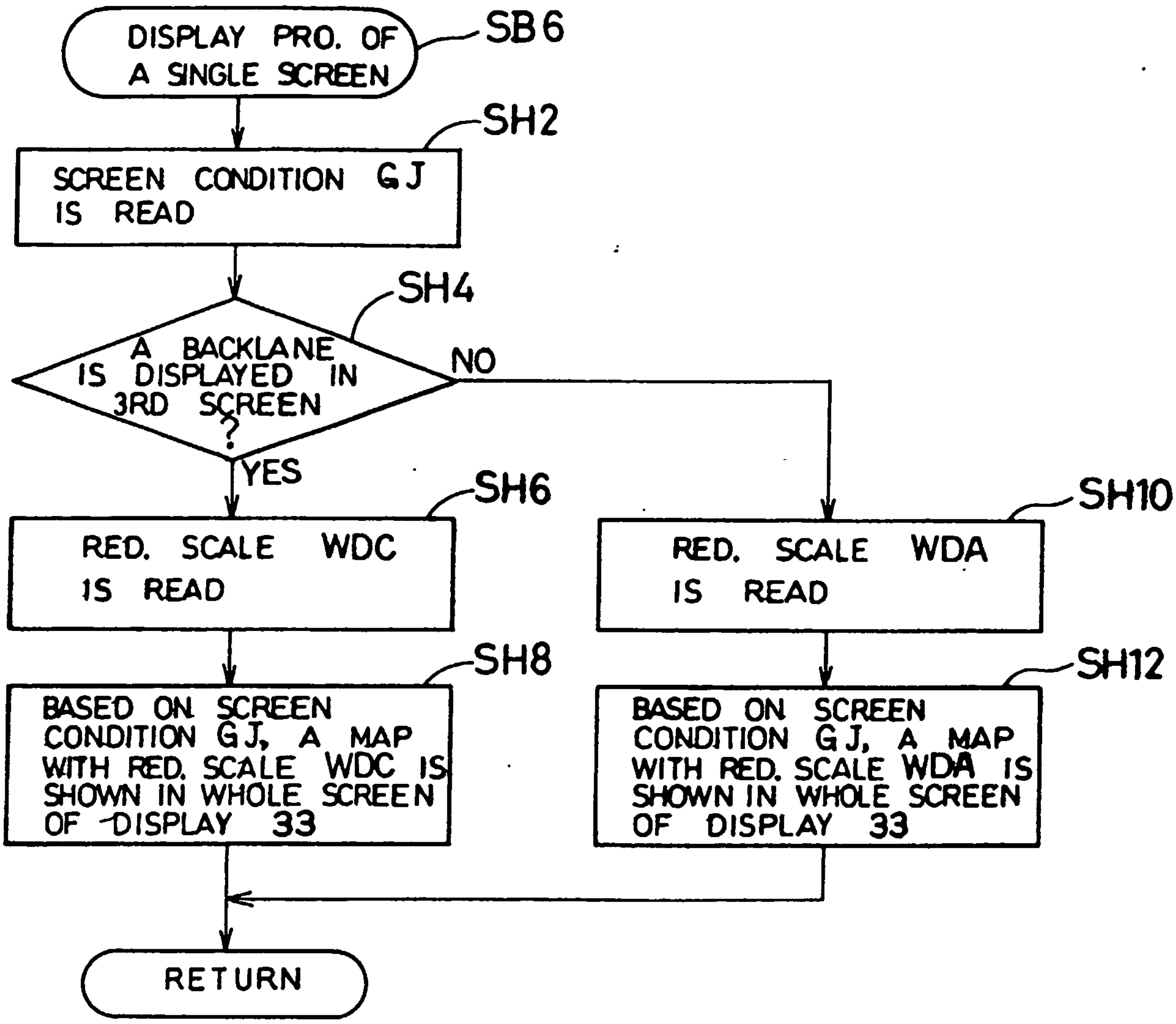
DISPLAY PRO. OF A SINGLE SCREEN
SB6
SH2
SCREEN CONDITION GJ IS READ
SH4
A BACKLANE IS DISPLAYED IN 3RD SCREEN ?
NO
YES
SH6
RED. SCALE WDC IS READ
SH10
RED. SCALE WDA IS READ
SH8
BASED ON SCREEN CONDITION GJ, A MAP WITH RED. SCALE WDC IS SHOWN IN WHOLE SCREEN OF DISPLAY 33
SH12
BASED ON SCREEN CONDITION GJ, A MAP WITH RED. SCALE WDA IS SHOWN IN WHOLE SCREEN OF DISPLAY 33
RETURN

FIG. 8

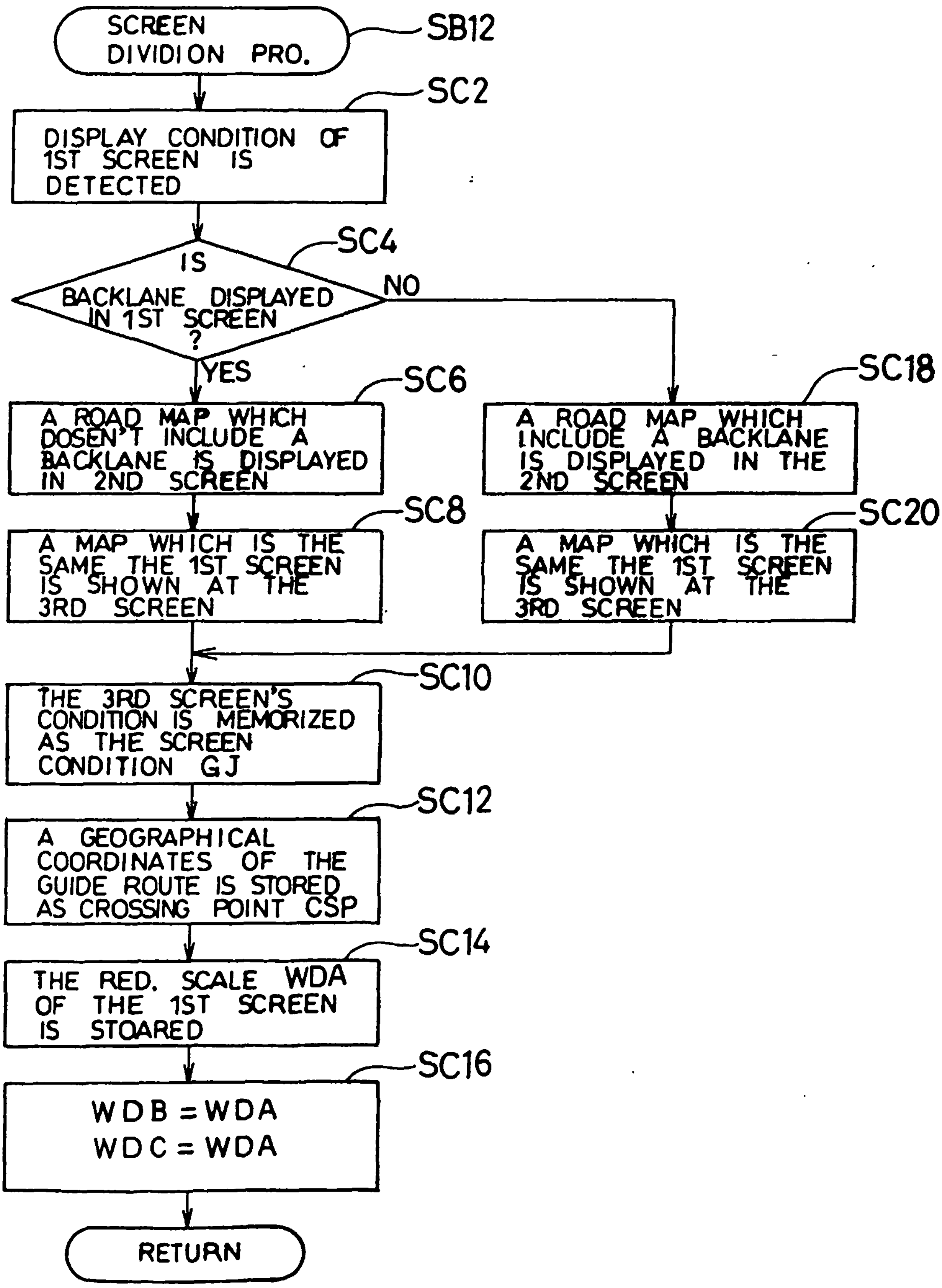
SCREEN DIVIDION PRO.
SB12
DISPLAY CONDITION OF 1ST SCREEN IS DETECTED
SC2
IS BACKLANE DISPLAYED IN 1ST SCREEN ?
SC4
NO
YES
A ROAD MAP WHICH DOSEN'T INCLUDE A BACKLANE IS DISPLAYED IN 2ND SCREEN
SC6
A ROAD MAP WHICH INCLUDE A BACKLANE IS DISPLAYED IN THE 2ND SCREEN
SC18
A MAP WHICH IS THE SAME THE 1ST SCREEN IS SHOWN AT THE 3RD SCREEN
SC8
A MAP WHICH IS THE SAME THE 1ST SCREEN IS SHOWN AT THE 3RD SCREEN
SC20
THE 3RD SCREEN'S CONDITION IS MEMORIZED AS THE SCREEN CONDITION GJ
SC10
A GEOGRAPHICAL COORDINATES OF THE GUIDE ROUTE IS STORED AS CROSSING POINT CSP
SC12
THE RED. SCALE WDA OF THE 1ST SCREEN IS STOARED
SC14
WDB = WDA
WDC = WDA
SC16
RETURN

FIG. 9

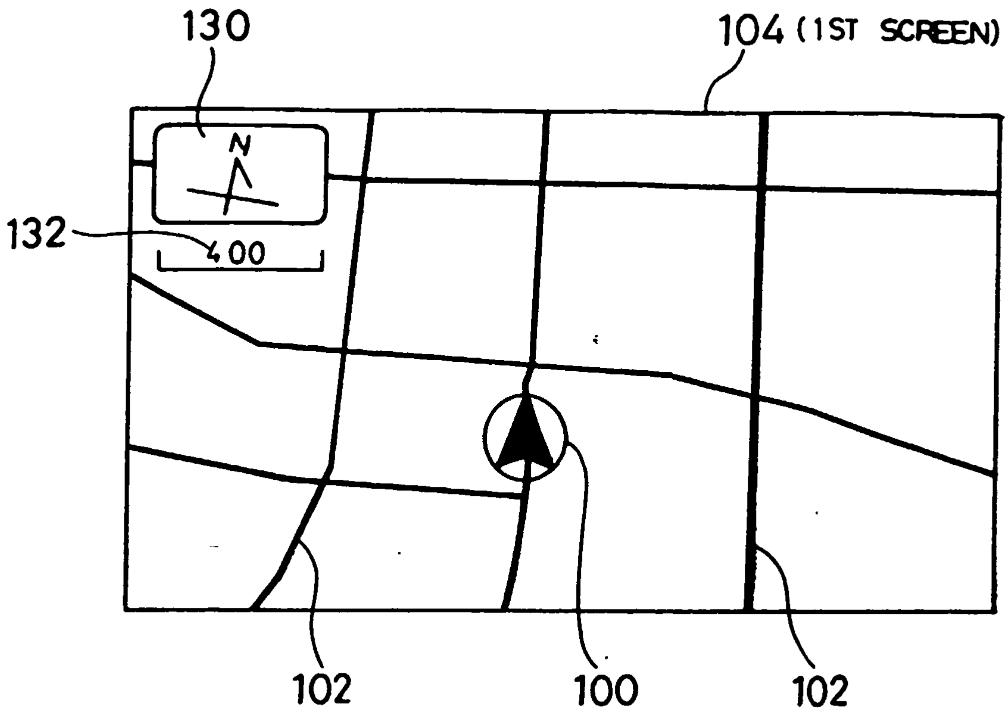
130
104 (1ST SCREEN)
132
400
N
102
100
102

FIG. 10

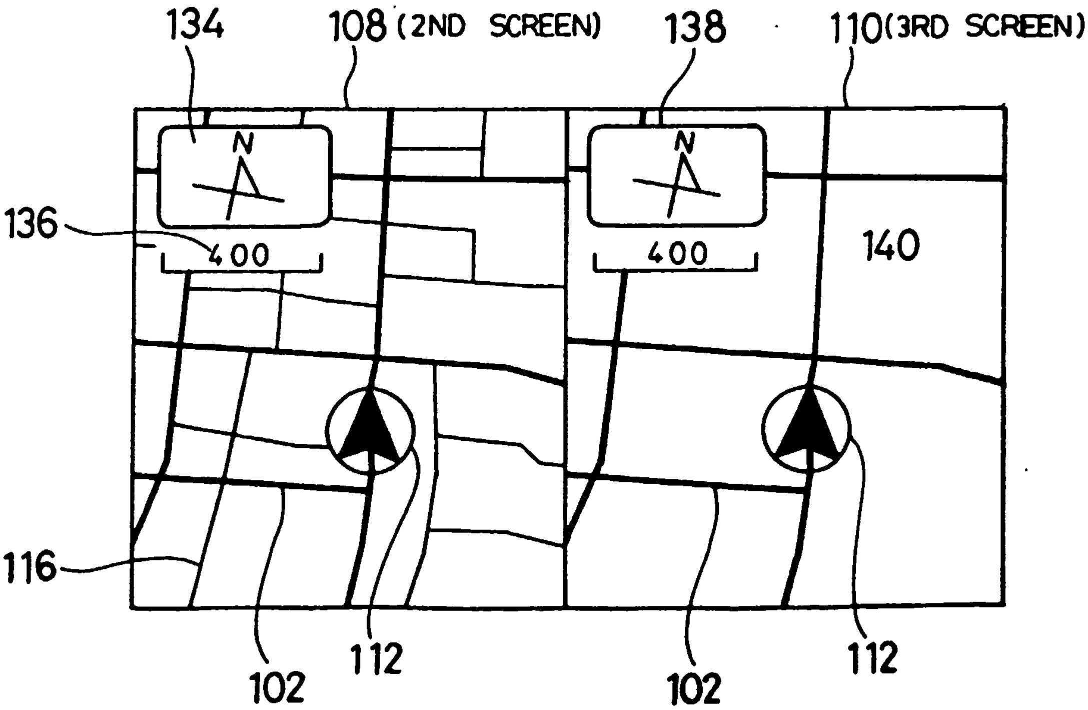
134
108 (2ND SCREEN)
138
110(3RD SCREEN)
136
400
N
400
N
140
116
102
112
102
112

FIG. 11

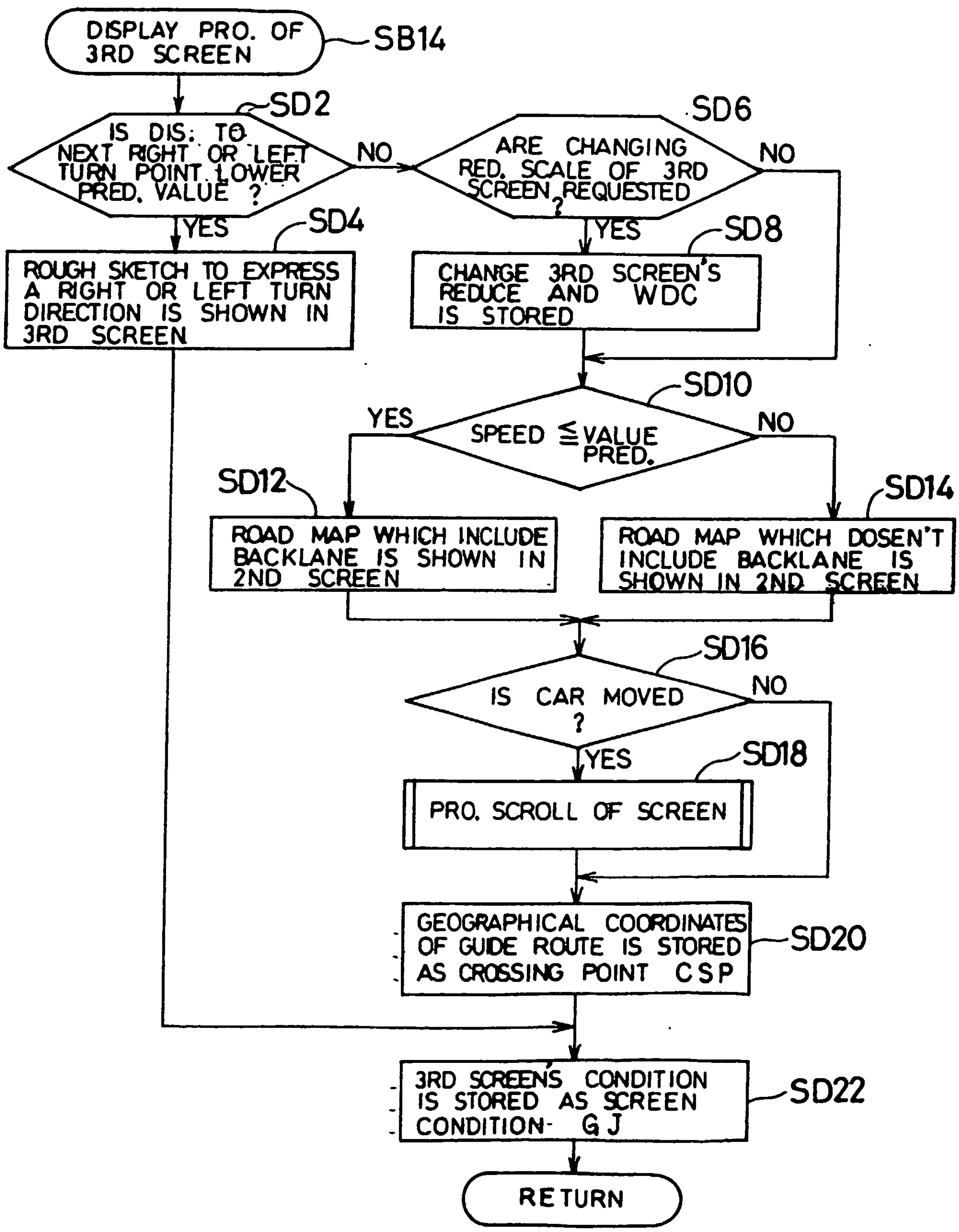
DISPLAY PRO. OF 3RD SCREEN
SB14
IS DIS. TO NEXT RIGHT OR LEFT TURN POINT LOWER PRED. VALUE ?
SD2
NO
YES
ROUGH SKETCH TO EXPRESS A RIGHT OR LEFT TURN DIRECTION IS SHOWN IN 3RD SCREEN
SD4
ARE CHANGING RED. SCALE OF 3RD SCREEN REQUESTED ?
SD6
NO
YES
CHANGE 3RD SCREEN'S REDUCE AND WDC IS STORED
SD8
SPEED ≦ VALUE PRED.
SD10
YES
NO
ROAD MAP WHICH INCLUDE BACKLANE IS SHOWN IN 2ND SCREEN
SD12
ROAD MAP WHICH DOSEN'T INCLUDE BACKLANE IS SHOWN IN 2ND SCREEN
SD14
IS CAR MOVED ?
SD16
NO
YES
PRO. SCROLL OF SCREEN
SD18
GEOGRAPHICAL COORDINATES OF GUIDE ROUTE IS STORED AS CROSSING POINT CSP
SD20
3RD SCREEN'S CONDITION IS STORED AS SCREEN CONDITION- GJ
SD22
RETURN

FIG. 12

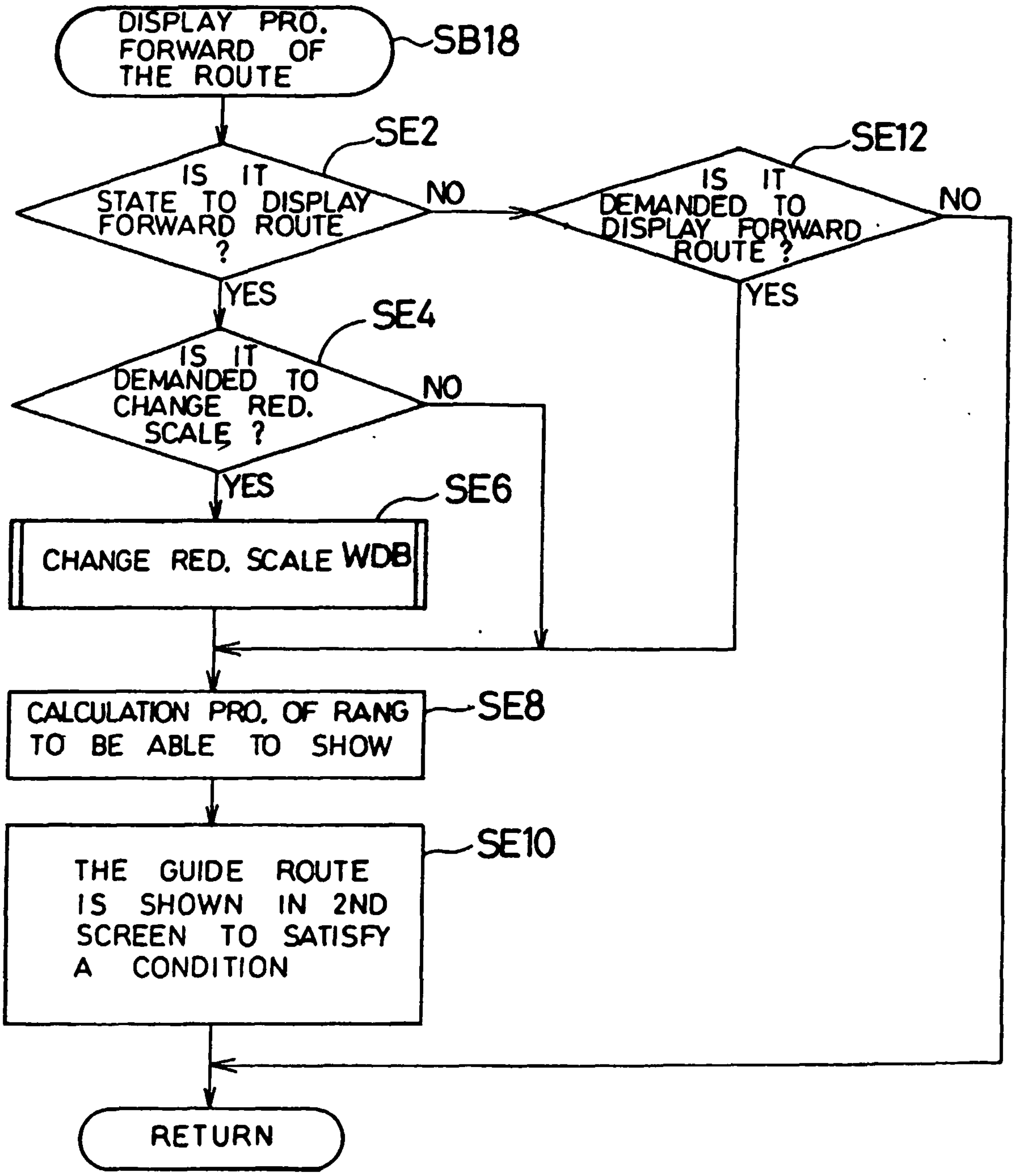
DISPLAY PRO. FORWARD OF THE ROUTE
SB18
IS IT STATE TO DISPLAY FORWARD ROUTE ?
SE2
NO
IS IT DEMANDED TO DISPLAY FORWARD ROUTE ?
SE12
NO
YES
YES
IS IT DEMANDED TO CHANGE RED. SCALE ?
SE4
NO
YES
CHANGE RED. SCALE WDB
SE6
CALCULATION PRO. OF RANG TO BE ABLE TO SHOW
SE8
THE GUIDE ROUTE IS SHOWN IN 2ND SCREEN TO SATISFY A CONDITION
SE10
RETURN

FIG. 13

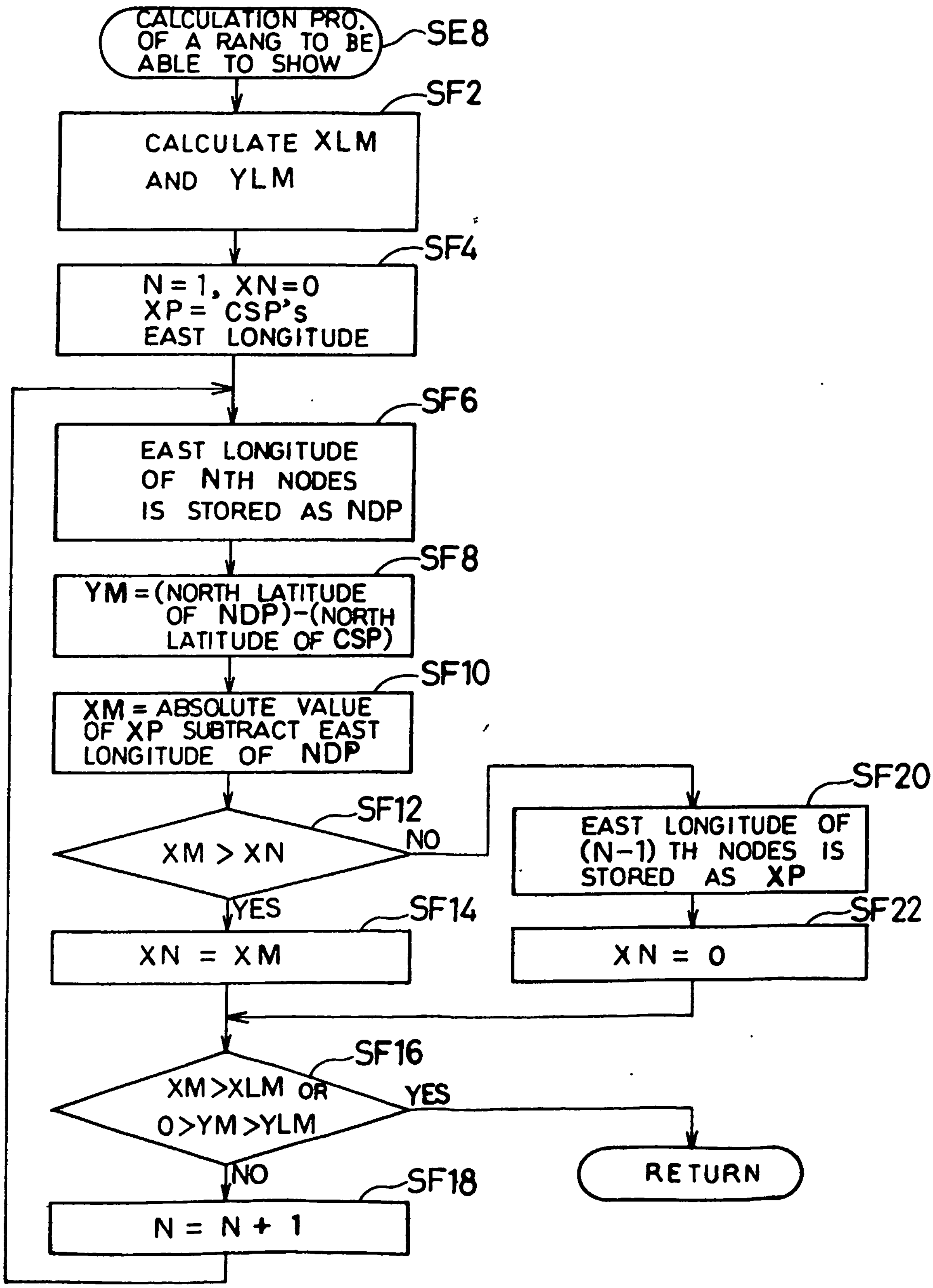
CALCULATION PRO. OF A RANG TO BE ABLE TO SHOW
SE8
SF2
CALCULATE XLM AND YLM
SF4
N = 1, XN=0
XP = CSP's EAST LONGITUDE
SF6
EAST LONGITUDE OF NTH NODES IS STORED AS NDP
SF8
YM = (NORTH LATITUDE OF NDP)−(NORTH LATITUDE OF CSP)
SF10
XM = ABSOLUTE VALUE OF XP SUBTRACT EAST LONGITUDE OF NDP
SF12
XM > XN
NO
YES
SF20
EAST LONGITUDE OF (N−1) TH NODES IS STORED AS XP
SF14
XN = XM
SF22
XN = 0
SF16
XM>XLM OR 0>YM>YLM
YES
NO
RETURN
SF18
N = N + 1

FIG. 14

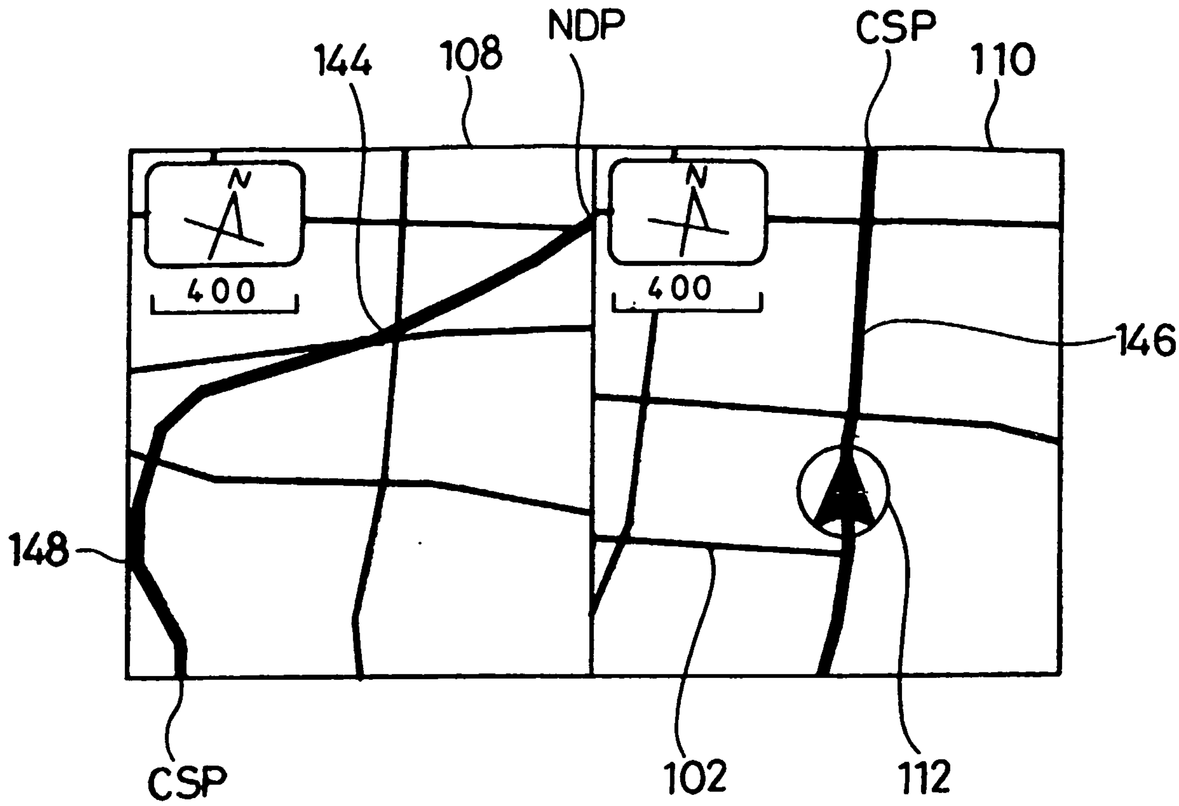

FIG. 15

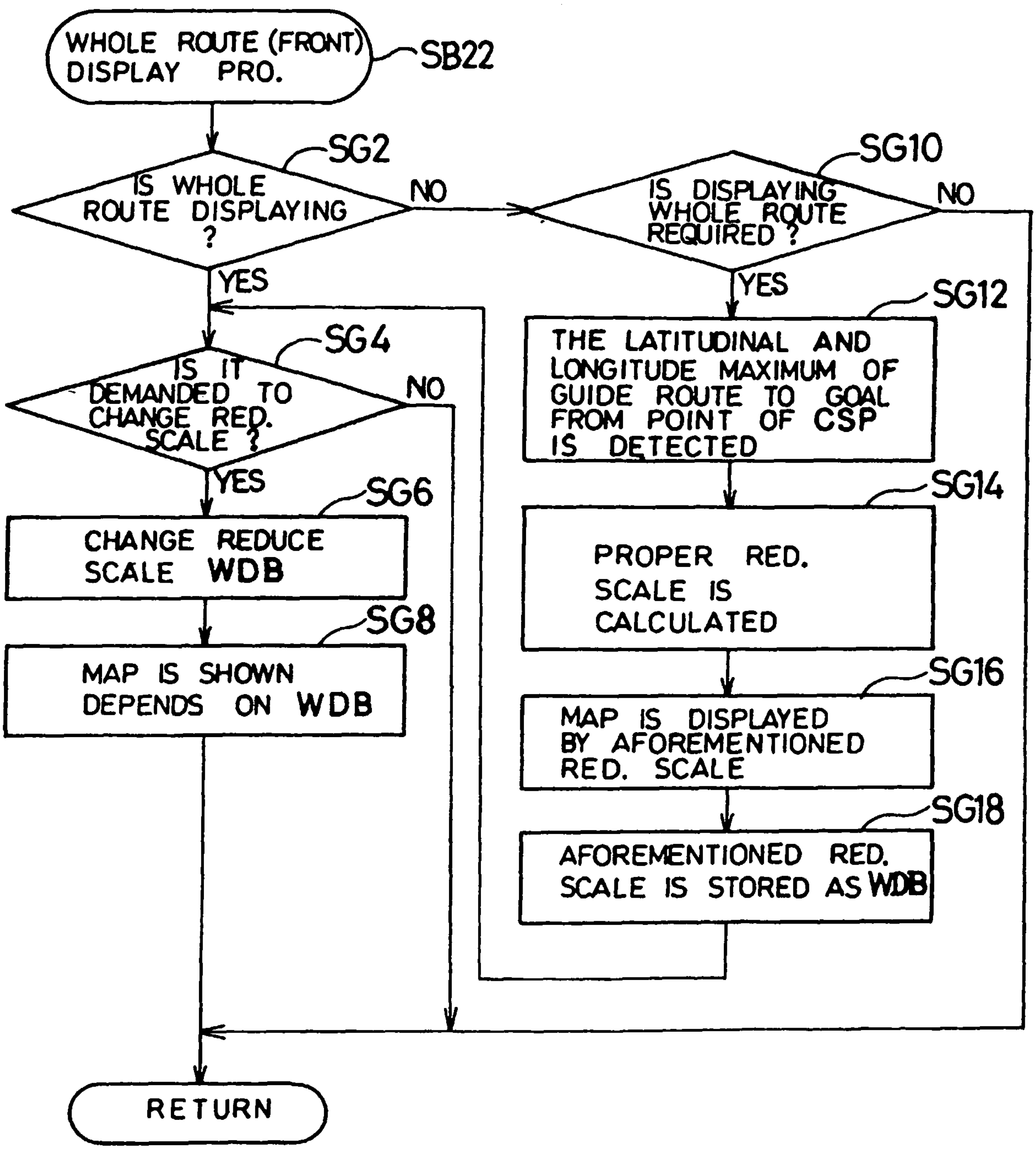
WHOLE ROUTE (FRONT) DISPLAY PRO.
SB22
IS WHOLE ROUTE DISPLAYING ?
SG2
NO
YES
IS DISPLAYING WHOLE ROUTE REQUIRED ?
SG10
NO
YES
THE LATITUDINAL AND LONGITUDE MAXIMUM OF GUIDE ROUTE TO GOAL FROM POINT OF CSP IS DETECTED
SG12
IS IT DEMANDED TO CHANGE RED. SCALE ?
SG4
NO
YES
CHANGE REDUCE SCALE WDB
SG6
MAP IS SHOWN DEPENDS ON WDB
SG8
PROPER RED. SCALE IS CALCULATED
SG14
MAP IS DISPLAYED BY AFOREMENTIONED RED. SCALE
SG16
AFOREMENTIONED RED. SCALE IS STORED AS WDB
SG18
RETURN

FIG. 16

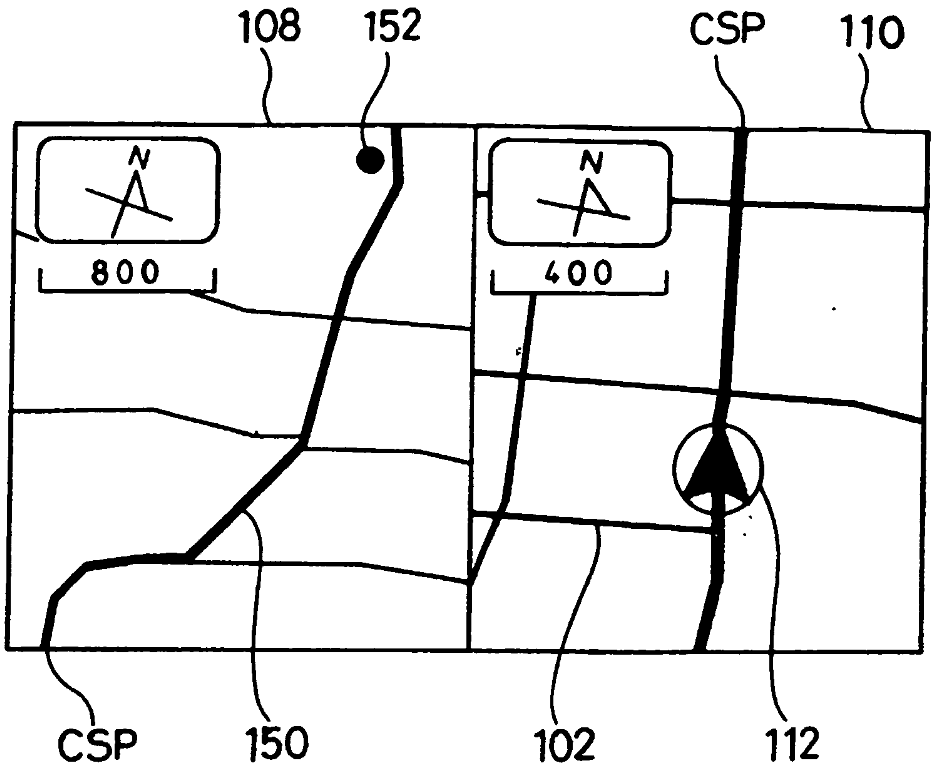
108
152
CSP
110
N
800
N
400
CSP
150
102
112

FIG. 17

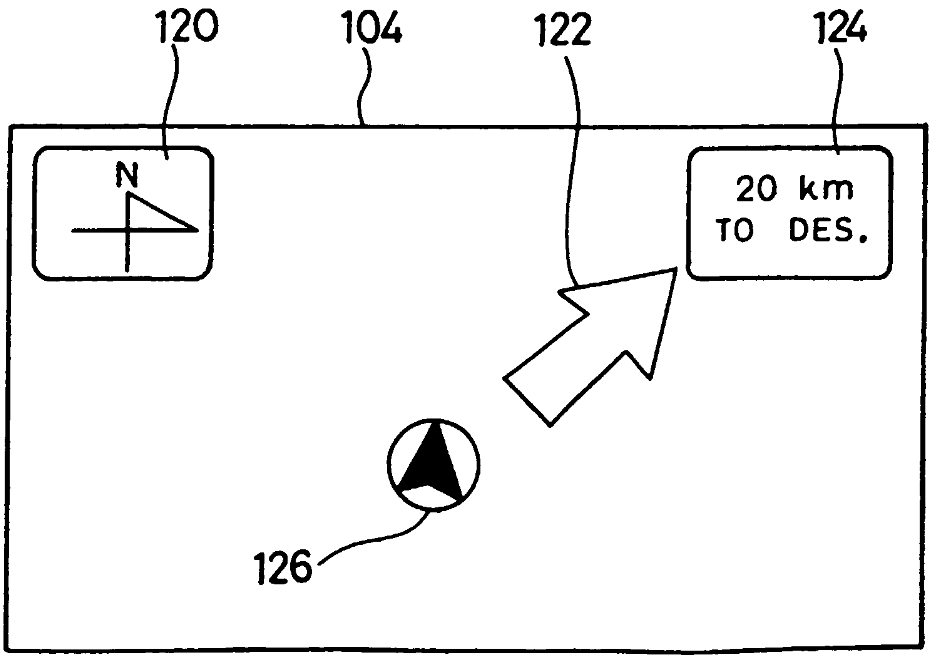
120
104
122
124
N
20 km
TO DES.
126

FIG. 18

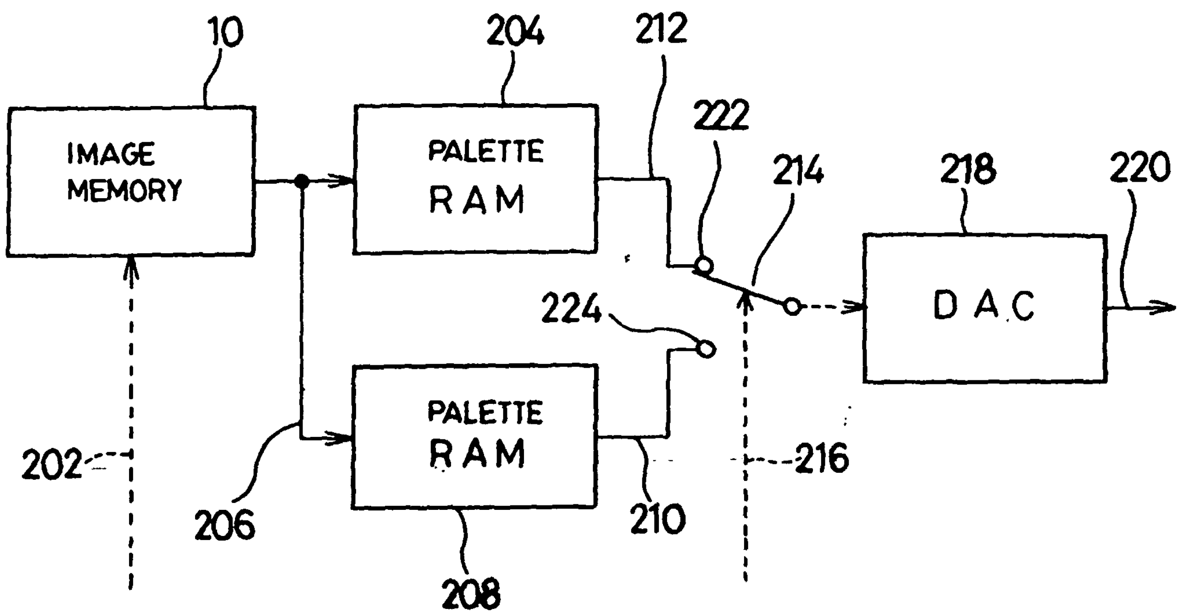
10
204
212
222
214
218
220
IMAGE MEMORY
PALETTE RAM
D A C
224
PALETTE RAM
202
206
208
210
216

FIG. 19

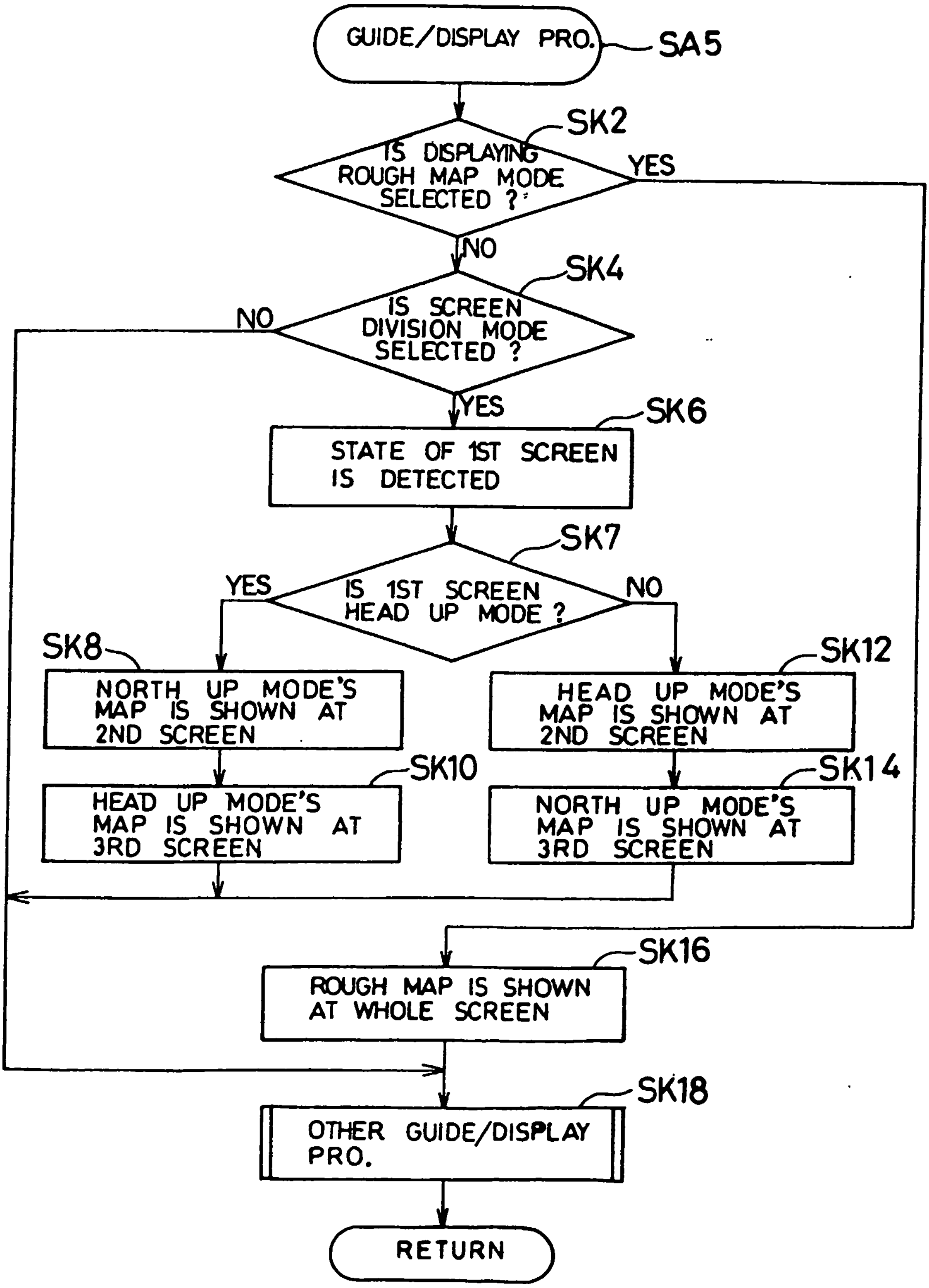
GUIDE/DISPLAY PRO.
SA5
SK2
IS DISPLAYING ROUGH MAP MODE SELECTED ?
YES
NO
SK4
IS SCREEN DIVISION MODE SELECTED ?
NO
YES
SK6
STATE OF 1ST SCREEN IS DETECTED
SK7
IS 1ST SCREEN HEAD UP MODE ?
YES
NO
SK8
NORTH UP MODE'S MAP IS SHOWN AT 2ND SCREEN
SK10
HEAD UP MODE'S MAP IS SHOWN AT 3RD SCREEN
SK12
HEAD UP MODE'S MAP IS SHOWN AT 2ND SCREEN
SK14
NORTH UP MODE'S MAP IS SHOWN AT 3RD SCREEN
SK16
ROUGH MAP IS SHOWN AT WHOLE SCREEN
SK18
OTHER GUIDE/DISPLAY PRO.
RETURN

# FIG. 20

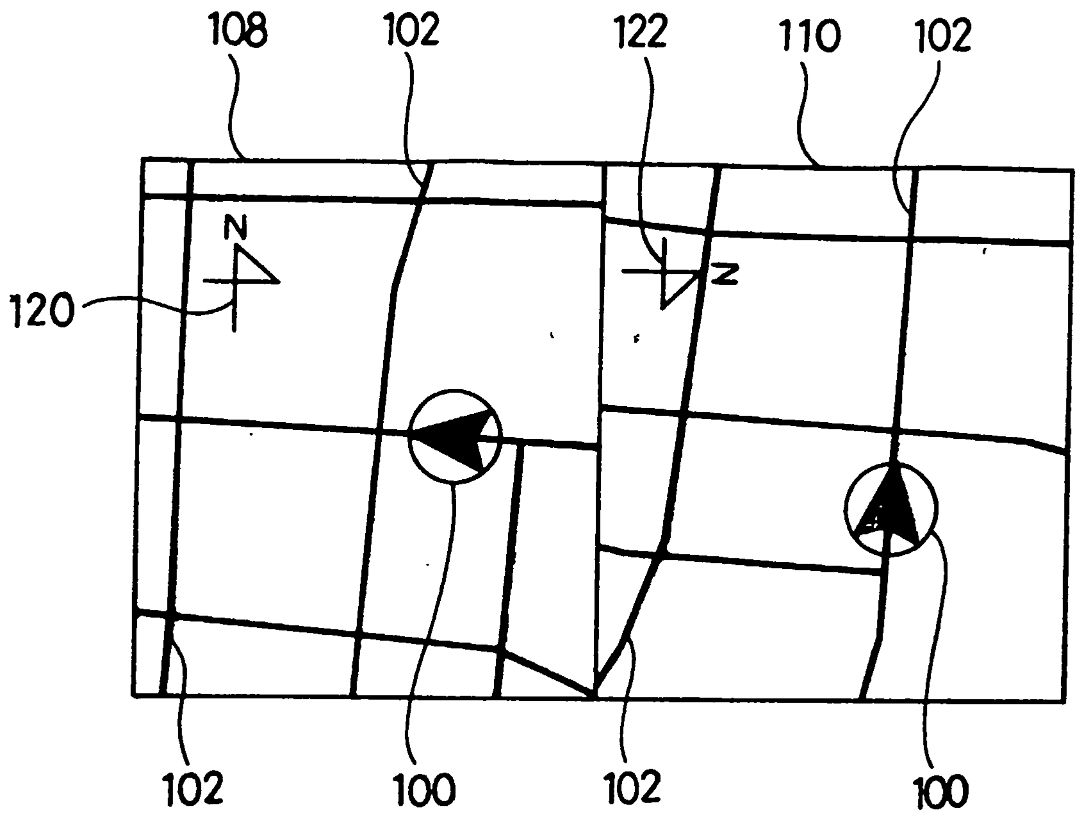

FIG. 21

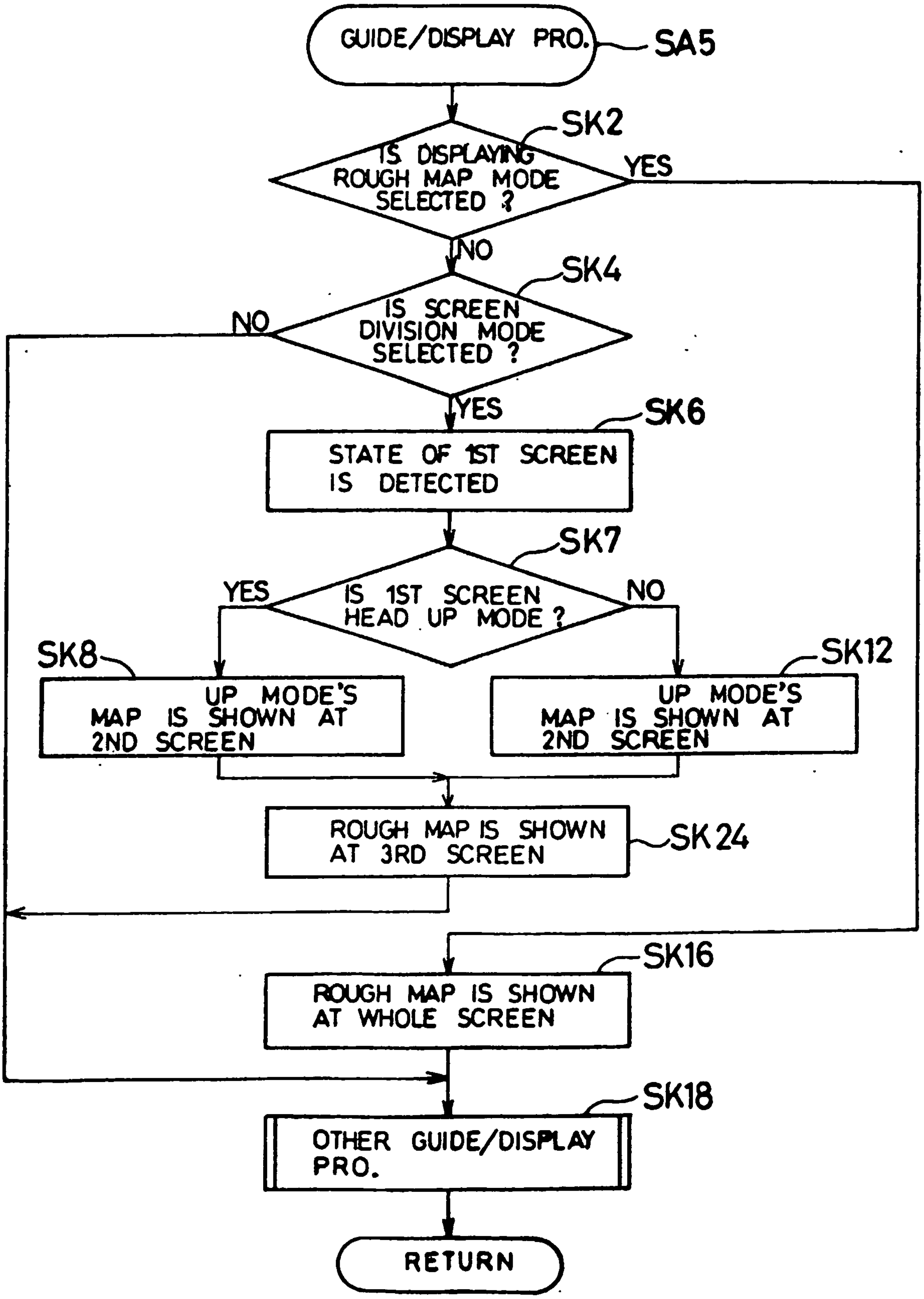
GUIDE/DISPLAY PRO.
SA5
SK2
IS DISPLAYING ROUGH MAP MODE SELECTED ?
YES
NO
SK4
IS SCREEN DIVISION MODE SELECTED ?
NO
YES
SK6
STATE OF 1ST SCREEN IS DETECTED
SK7
IS 1ST SCREEN HEAD UP MODE ?
YES
NO
SK8
UP MODE'S MAP IS SHOWN AT 2ND SCREEN
SK12
UP MODE'S MAP IS SHOWN AT 2ND SCREEN
ROUGH MAP IS SHOWN AT 3RD SCREEN
SK24
SK16
ROUGH MAP IS SHOWN AT WHOLE SCREEN
SK18
OTHER GUIDE/DISPLAY PRO.
RETURN

FIG. 22

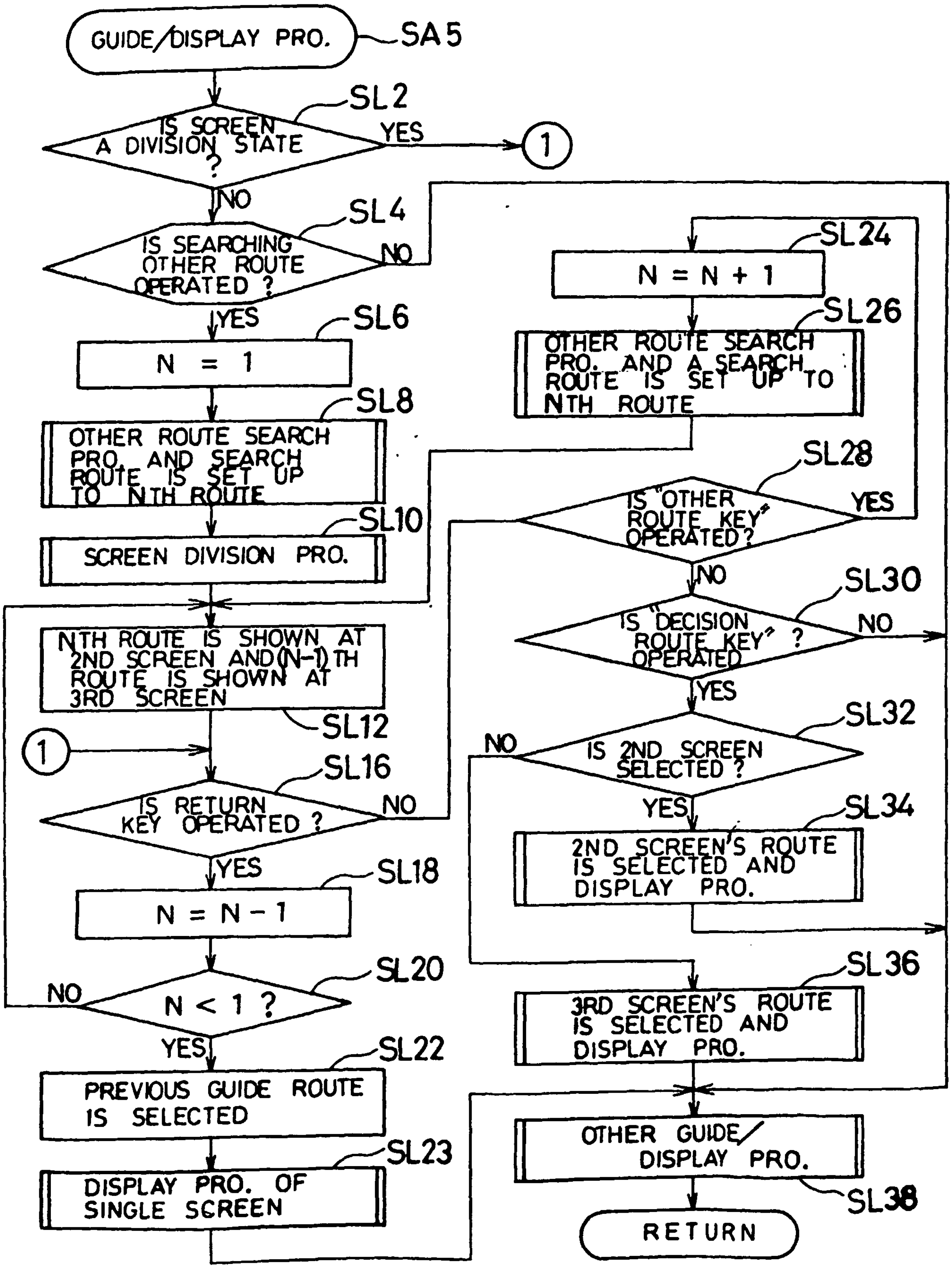
GUIDE/DISPLAY PRO.
SA5
SL2
IS SCREEN A DIVISION STATE ?
YES
NO
SL4
IS SEARCHING OTHER ROUTE OPERATED ?
NO
YES
SL6
N = 1
SL8
OTHER ROUTE SEARCH PRO. AND SEARCH ROUTE IS SET UP TO NTH ROUTE
SL10
SCREEN DIVISION PRO.
NTH ROUTE IS SHOWN AT 2ND SCREEN AND (N-1) TH ROUTE IS SHOWN AT 3RD SCREEN
SL12
SL16
IS RETURN KEY OPERATED ?
NO
YES
SL18
N = N - 1
SL20
N < 1 ?
NO
YES
SL22
PREVIOUS GUIDE ROUTE IS SELECTED
SL23
DISPLAY PRO. OF SINGLE SCREEN
SL24
N = N + 1
SL26
OTHER ROUTE SEARCH PRO. AND A SEARCH ROUTE IS SET UP TO NTH ROUTE
SL28
IS "OTHER ROUTE KEY" OPERATED ?
YES
NO
SL30
IS "DECISION ROUTE KEY" ? OPERATED
NO
YES
SL32
IS 2ND SCREEN SELECTED ?
NO
YES
SL34
2ND SCREEN'S ROUTE IS SELECTED AND DISPLAY PRO.
SL36
3RD SCREEN'S ROUTE IS SELECTED AND DISPLAY PRO.
OTHER GUIDE/ DISPLAY PRO.
SL38
RETURN

FIG. 23

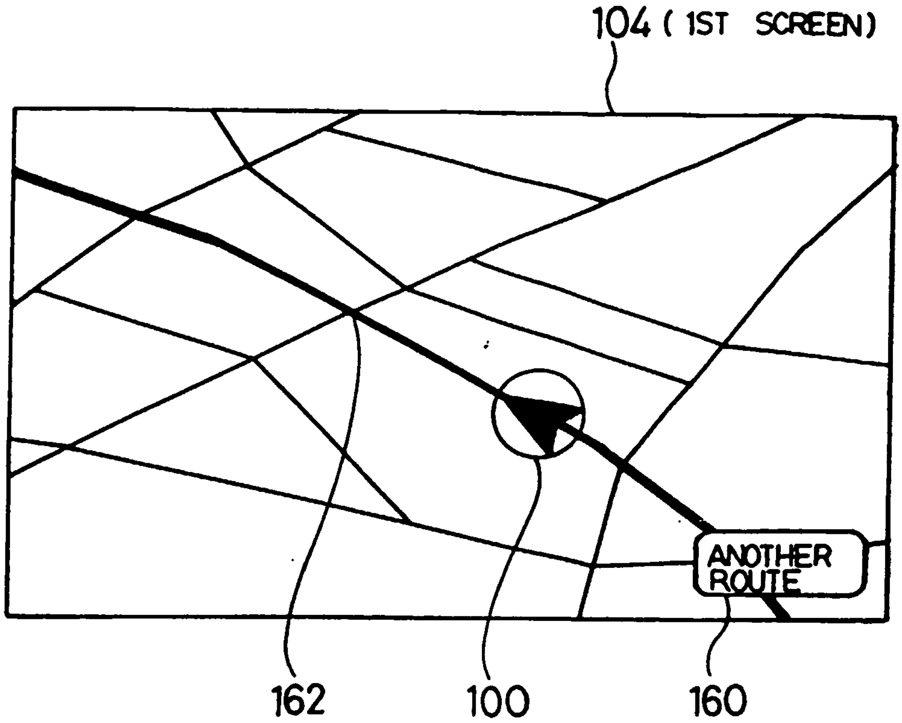
104 ( 1ST SCREEN)
ANOTHER ROUTE
162
100
160

FIG. 24

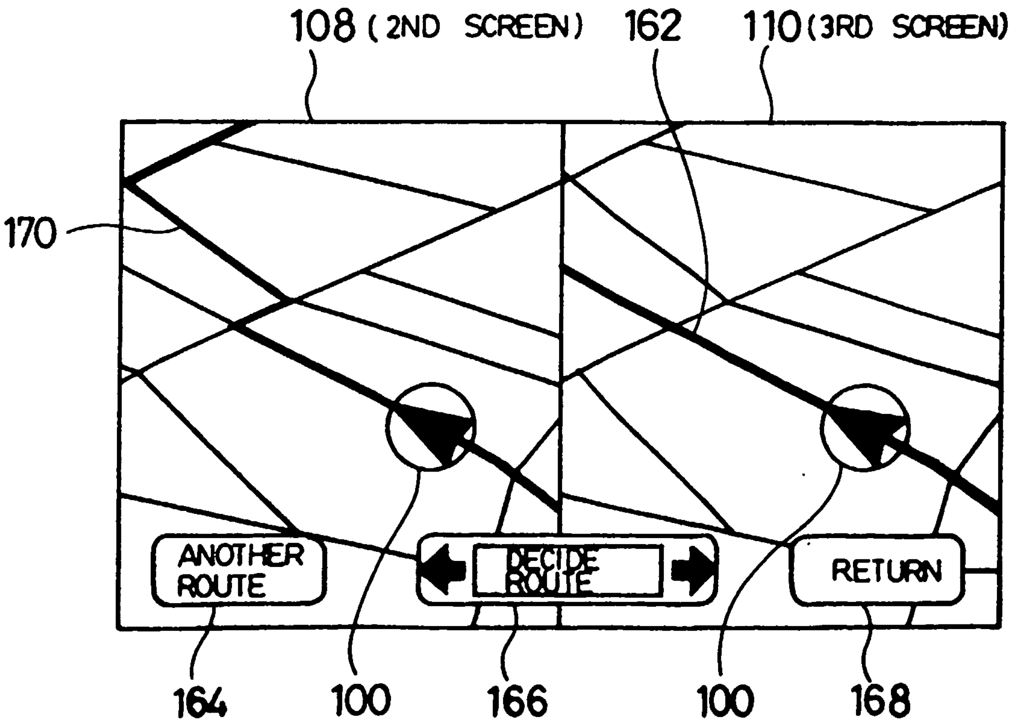
108 ( 2ND SCREEN)
162
110 (3RD SCREEN)
170
ANOTHER ROUTE
DECIDE ROUTE
RETURN
164
100
166
100
168

FIG. 25

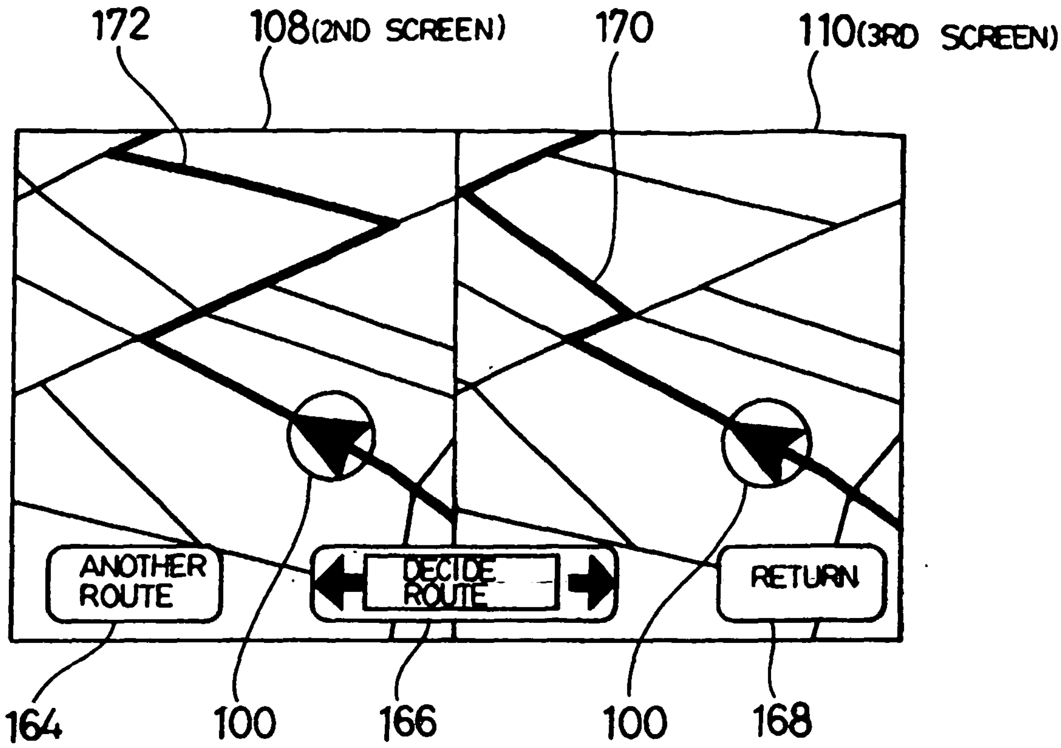
172
108(2ND SCREEN)
170
110(3RD SCREEN)
ANOTHER ROUTE
DECIDE ROUTE
RETURN
164
100
166
100
168

FIG. 26

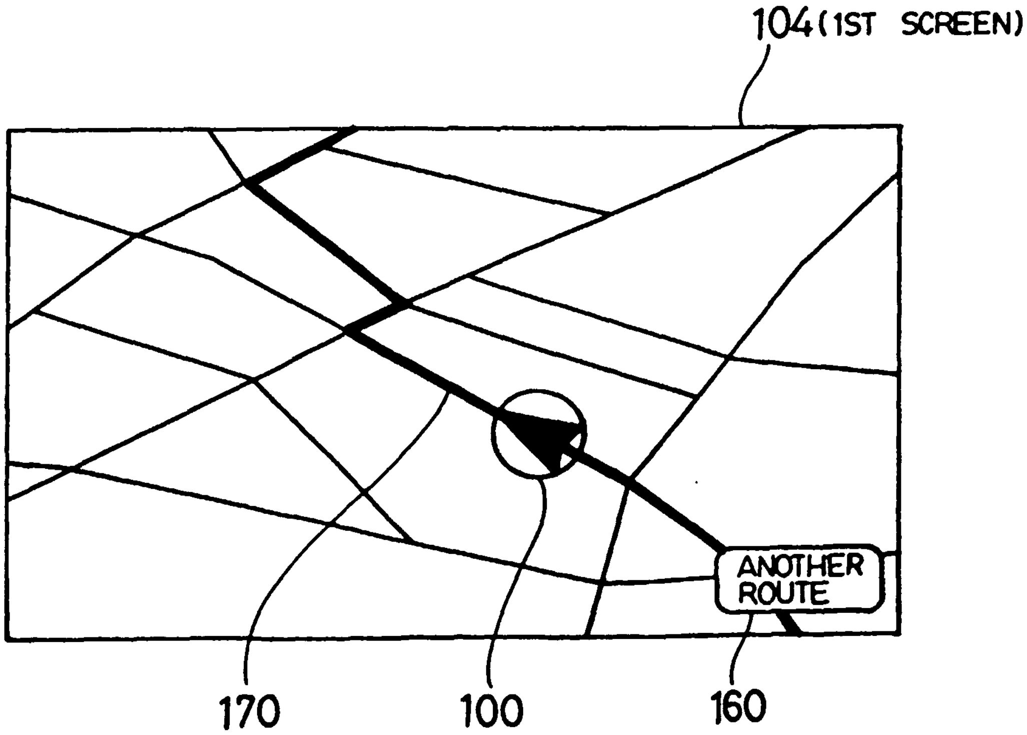
104(1ST SCREEN)
ANOTHER ROUTE
170
100
160

FIG. 27

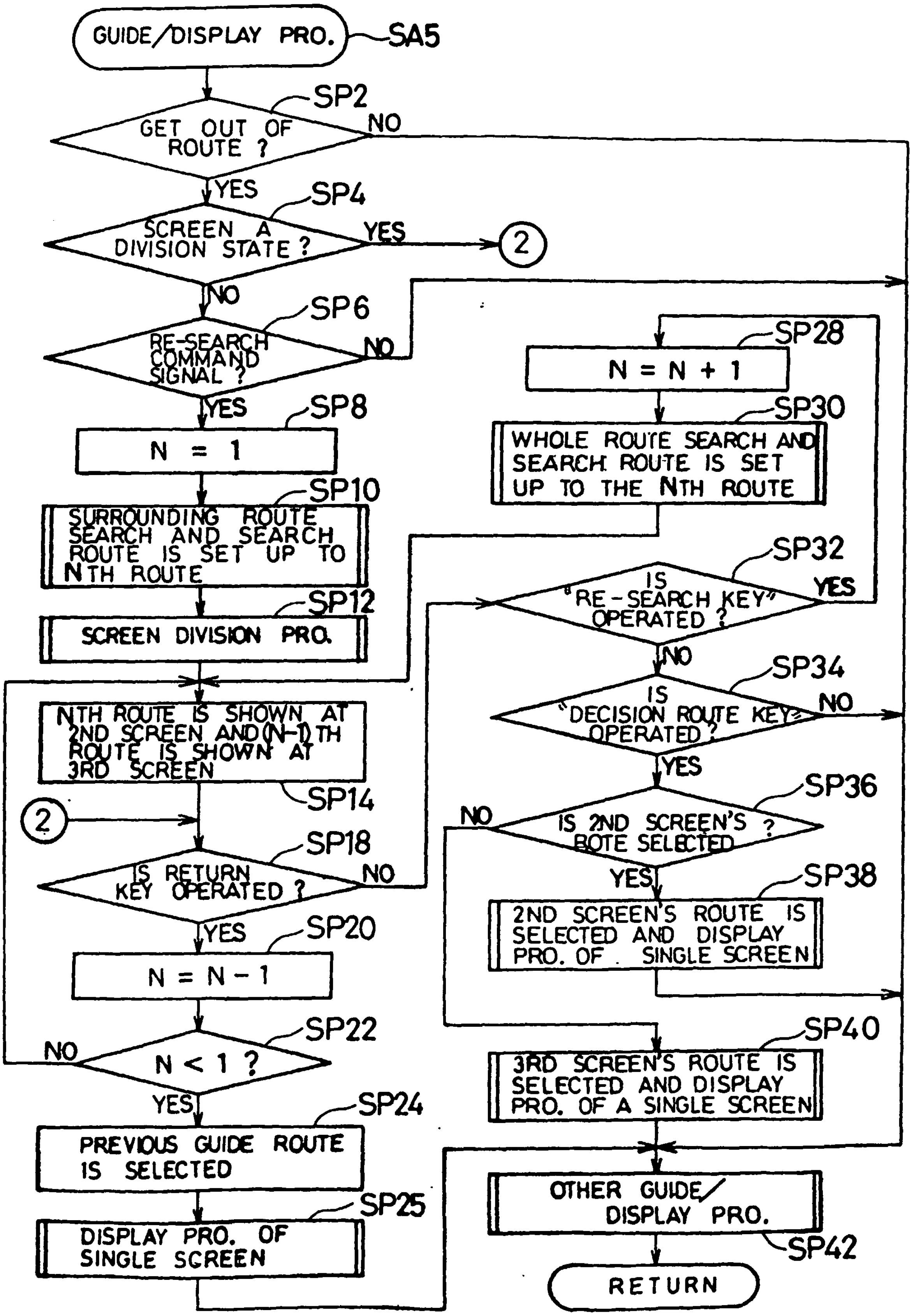
GUIDE/DISPLAY PRO.
SA5
SP2
GET OUT OF ROUTE ?
NO
YES
SP4
SCREEN A DIVISION STATE ?
YES
2
NO
SP6
RE-SEARCH COMMAND SIGNAL ?
NO
YES
SP8
N = 1
SP10
SURROUNDING ROUTE SEARCH AND SEARCH ROUTE IS SET UP TO NTH ROUTE
SP12
SCREEN DIVISION PRO.
NTH ROUTE IS SHOWN AT 2ND SCREEN AND (N-1) TH ROUTE IS SHOWN AT 3RD SCREEN
SP14
2
SP18
IS RETURN KEY OPERATED ?
NO
YES
SP20
N = N - 1
SP22
N < 1 ?
NO
YES
SP24
PREVIOUS GUIDE ROUTE IS SELECTED
SP25
DISPLAY PRO. OF SINGLE SCREEN
SP28
N = N + 1
SP30
WHOLE ROUTE SEARCH AND SEARCH ROUTE IS SET UP TO THE NTH ROUTE
SP32
IS "RE-SEARCH KEY" OPERATED ?
YES
NO
SP34
IS "DECISION ROUTE KEY" OPERATED ?
NO
YES
SP36
IS 2ND SCREEN'S ROUTE SELECTED ?
NO
YES
SP38
2ND SCREEN'S ROUTE IS SELECTED AND DISPLAY PRO. OF SINGLE SCREEN
SP40
3RD SCREEN'S ROUTE IS SELECTED AND DISPLAY PRO. OF A SINGLE SCREEN
OTHER GUIDE/ DISPLAY PRO.
SP42
RETURN

FIG. 28

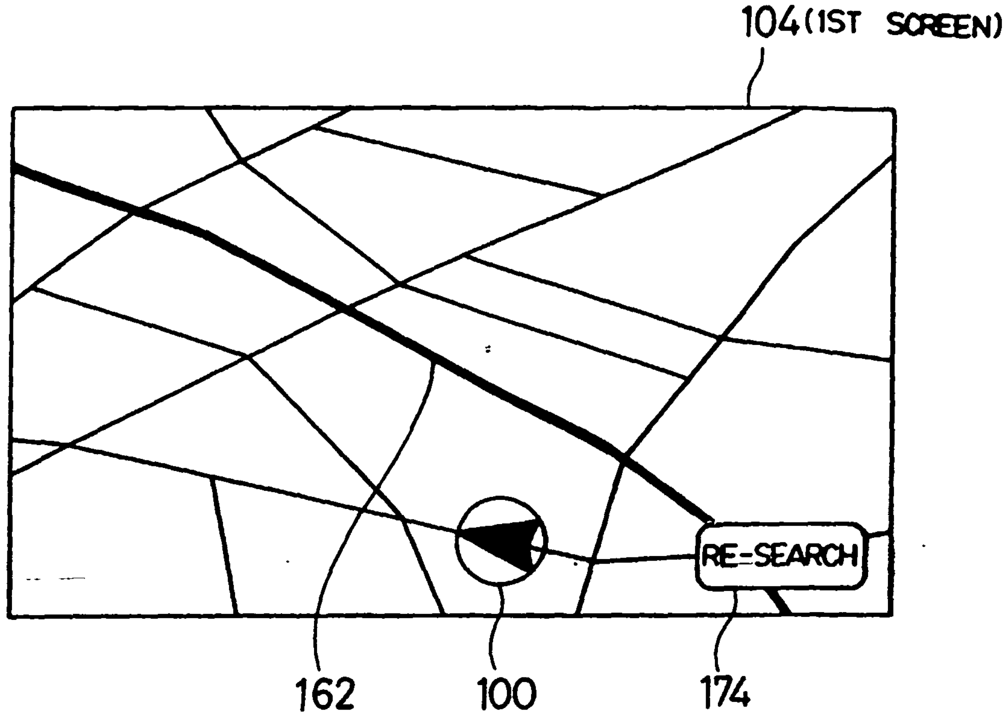
104(1ST SCREEN)
RE-SEARCH
162
100
174

FIG. 29

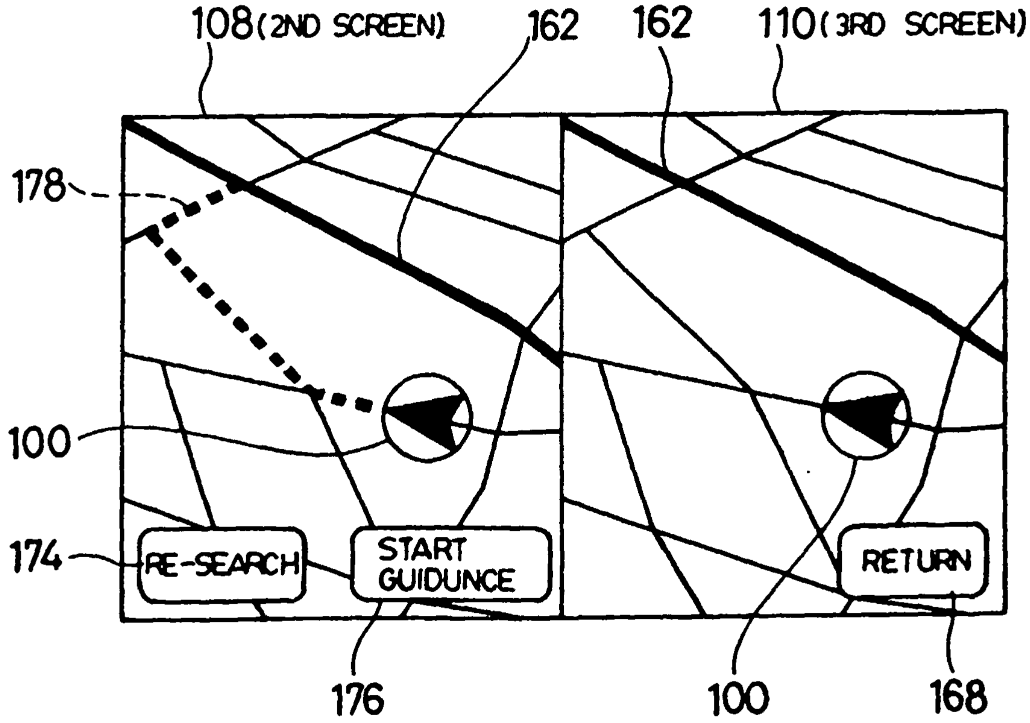
108(2ND SCREEN)
162
162
110(3RD SCREEN)
178
100
174
RE-SEARCH
START GUIDUNCE
RETURN
176
100
168

FIG. 30

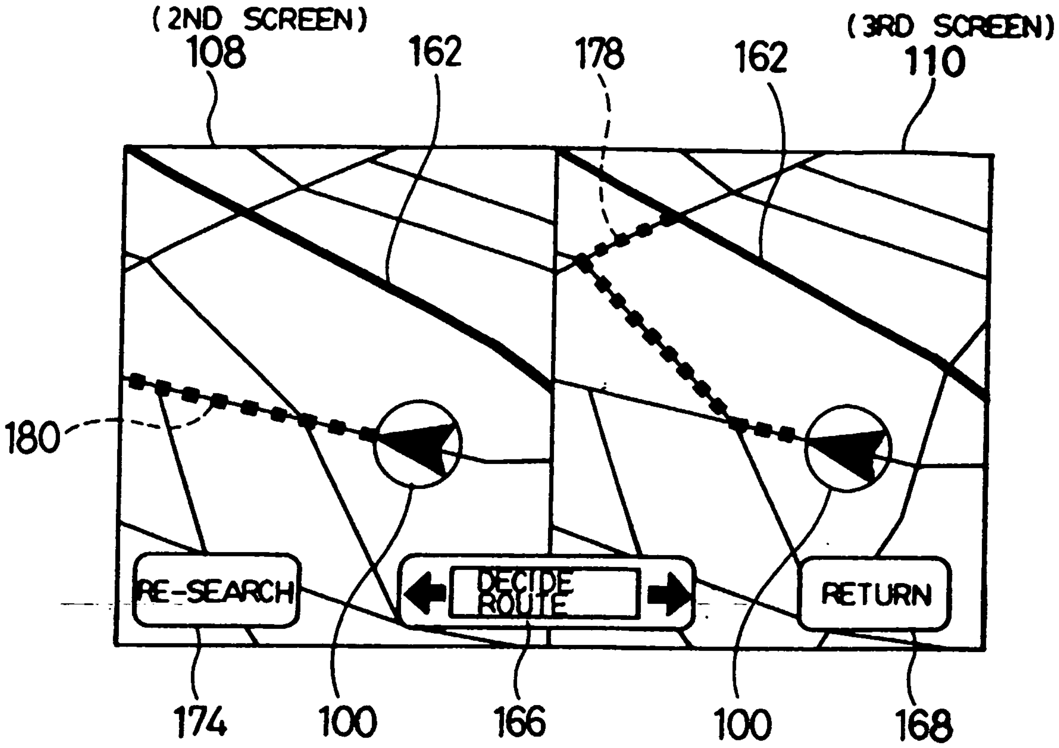
(2ND SCREEN)
108
162
178
162
(3RD SCREEN)
110
180
RE-SEARCH
DECIDE ROUTE
RETURN
174
100
166
100
168

FIG. 31

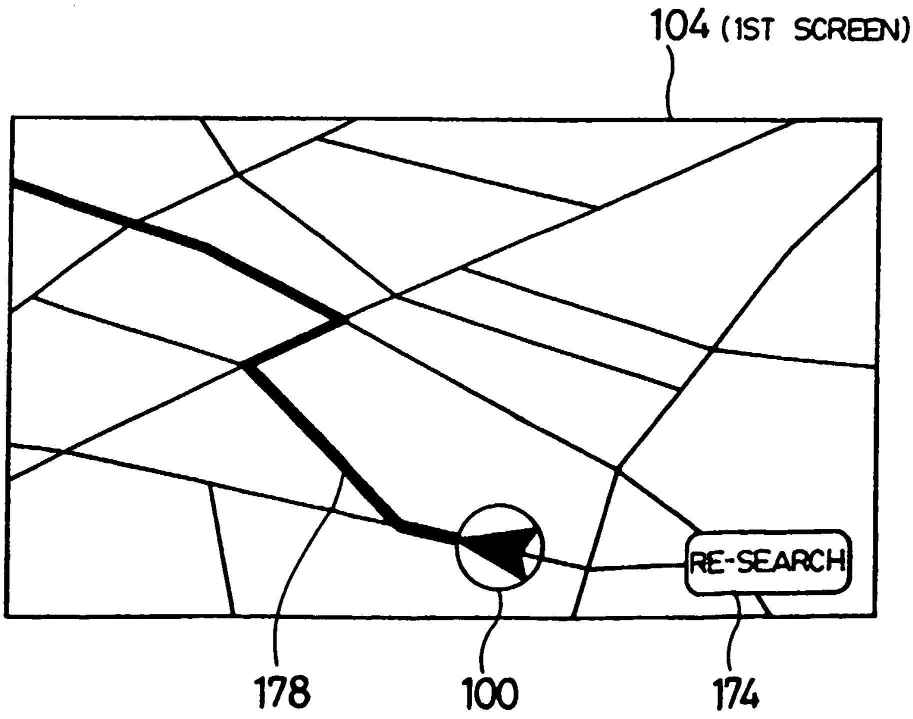
104 (1ST SCREEN)
RE-SEARCH
178
100
174

FIG. 32

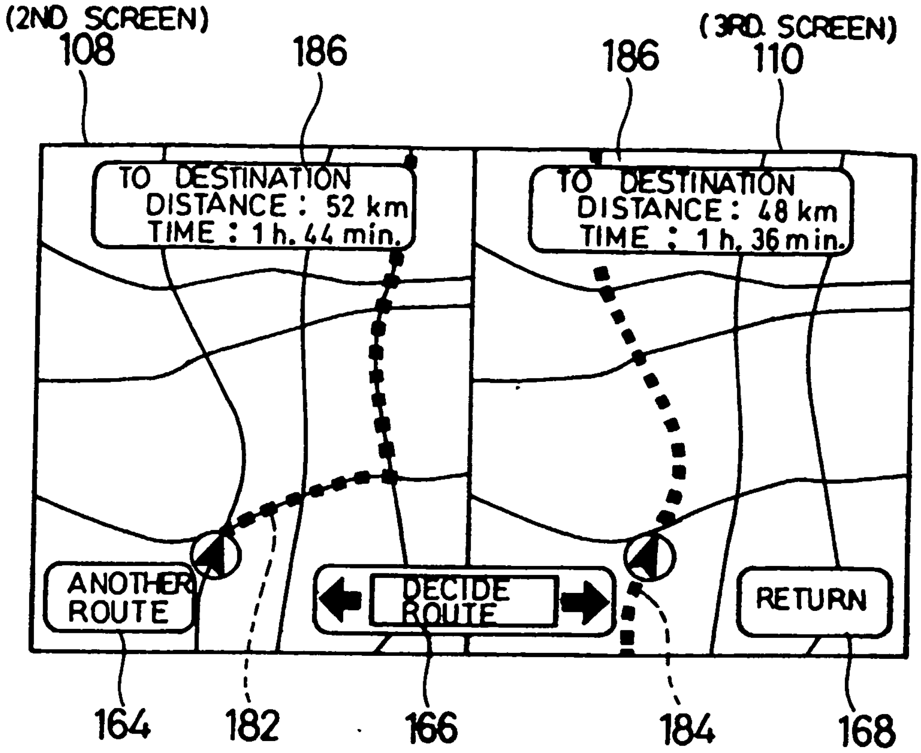
(2ND SCREEN)
108
186
186
(3RD. SCREEN)
110
TO DESTINATION
DISTANCE : 52 km
TIME : 1 h. 44 min.
TO DESTINATION
DISTANCE : 48 km
TIME : 1 h. 36 min.
ANOTHER ROUTE
DECIDE ROUTE
RETURN
164
182
166
184
168

FIG. 33

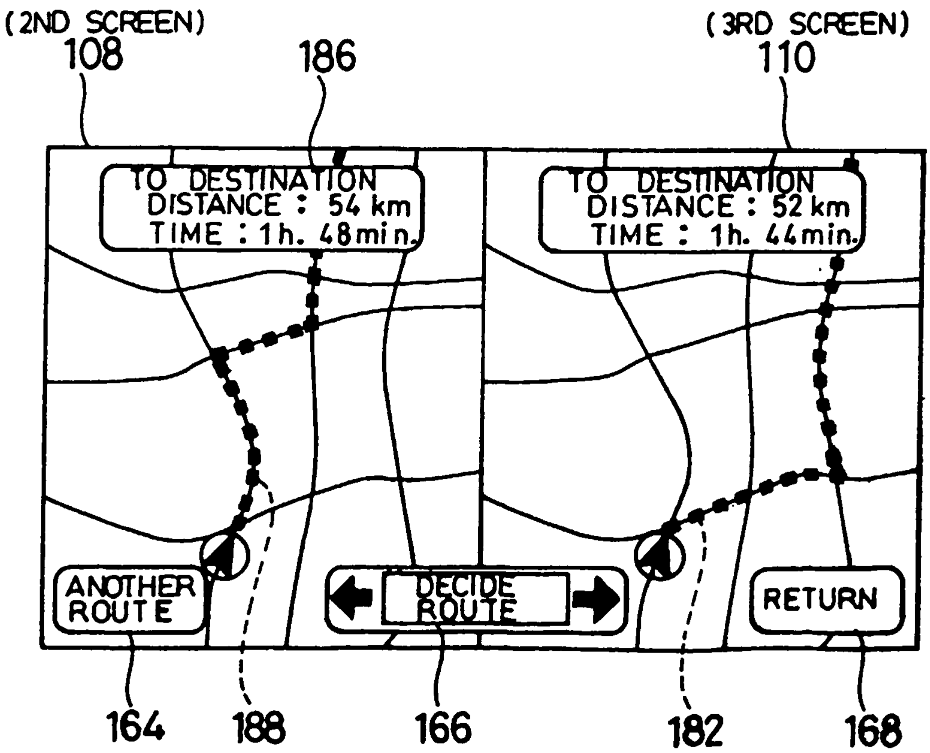
(2ND SCREEN)
108
186
(3RD SCREEN)
110
TO DESTINATION
DISTANCE : 54 km
TIME : 1h. 48min.
TO DESTINATION
DISTANCE : 52 km
TIME : 1h. 44min.
ANOTHER ROUTE
DECIDE ROUTE
RETURN
164
188
166
182
168

FIG. 34

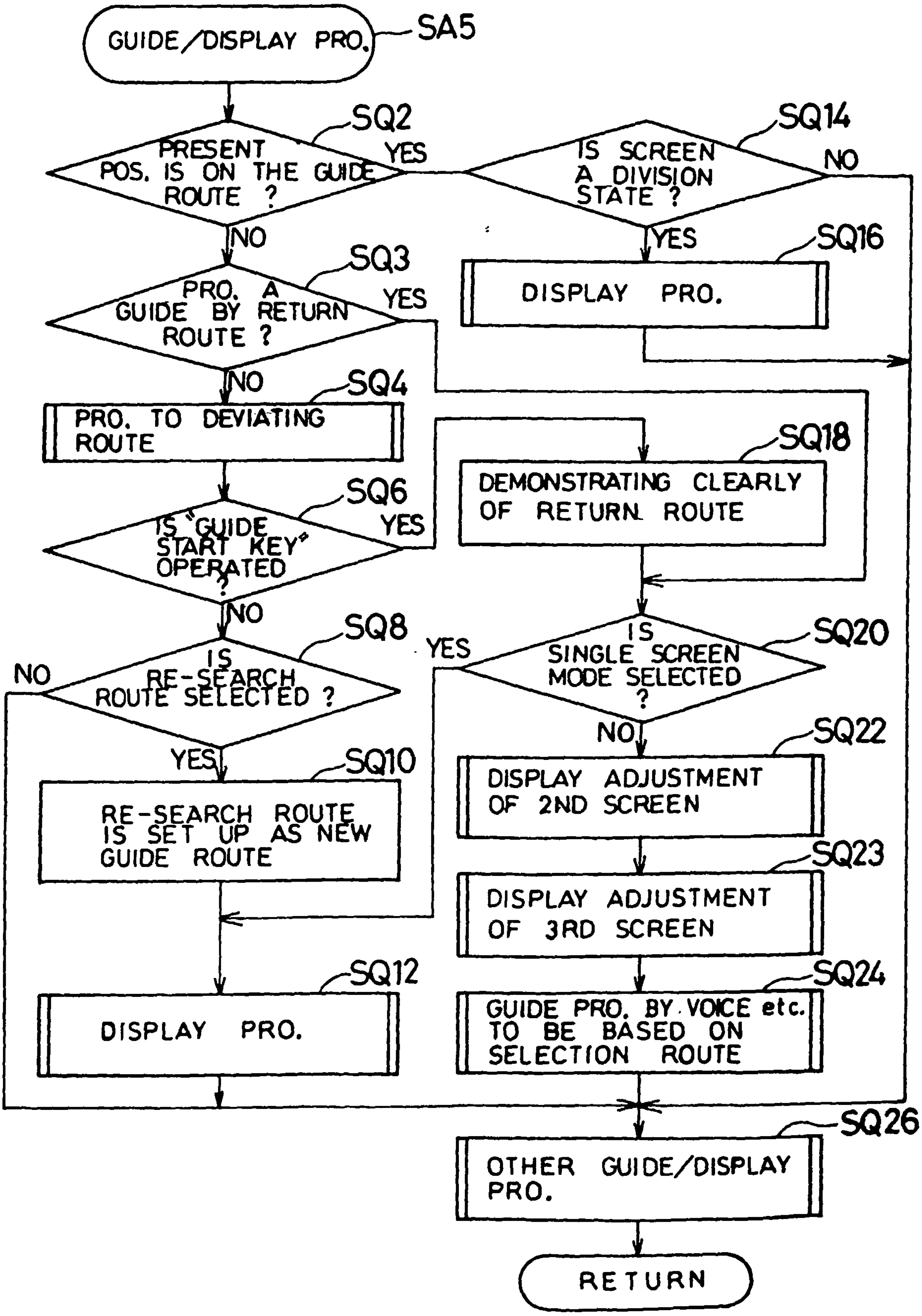
GUIDE/DISPLAY PRO.
SA5
PRESENT POS. IS ON THE GUIDE ROUTE ?
SQ2
YES
NO
IS SCREEN A DIVISION STATE ?
SQ14
NO
YES
DISPLAY PRO.
SQ16
PRO. A GUIDE BY RETURN ROUTE ?
SQ3
YES
NO
PRO. TO DEVIATING ROUTE
SQ4
DEMONSTRATING CLEARLY OF RETURN ROUTE
SQ18
IS "GUIDE START KEY" OPERATED ?
SQ6
YES
NO
IS RE-SEARCH ROUTE SELECTED ?
SQ8
NO
YES
IS SINGLE SCREEN MODE SELECTED ?
SQ20
YES
NO
RE-SEARCH ROUTE IS SET UP AS NEW GUIDE ROUTE
SQ10
DISPLAY ADJUSTMENT OF 2ND SCREEN
SQ22
DISPLAY ADJUSTMENT OF 3RD SCREEN
SQ23
DISPLAY PRO.
SQ12
GUIDE PRO. BY VOICE etc. TO BE BASED ON SELECTION ROUTE
SQ24
OTHER GUIDE/DISPLAY PRO.
SQ26
RETURN

FIG. 35

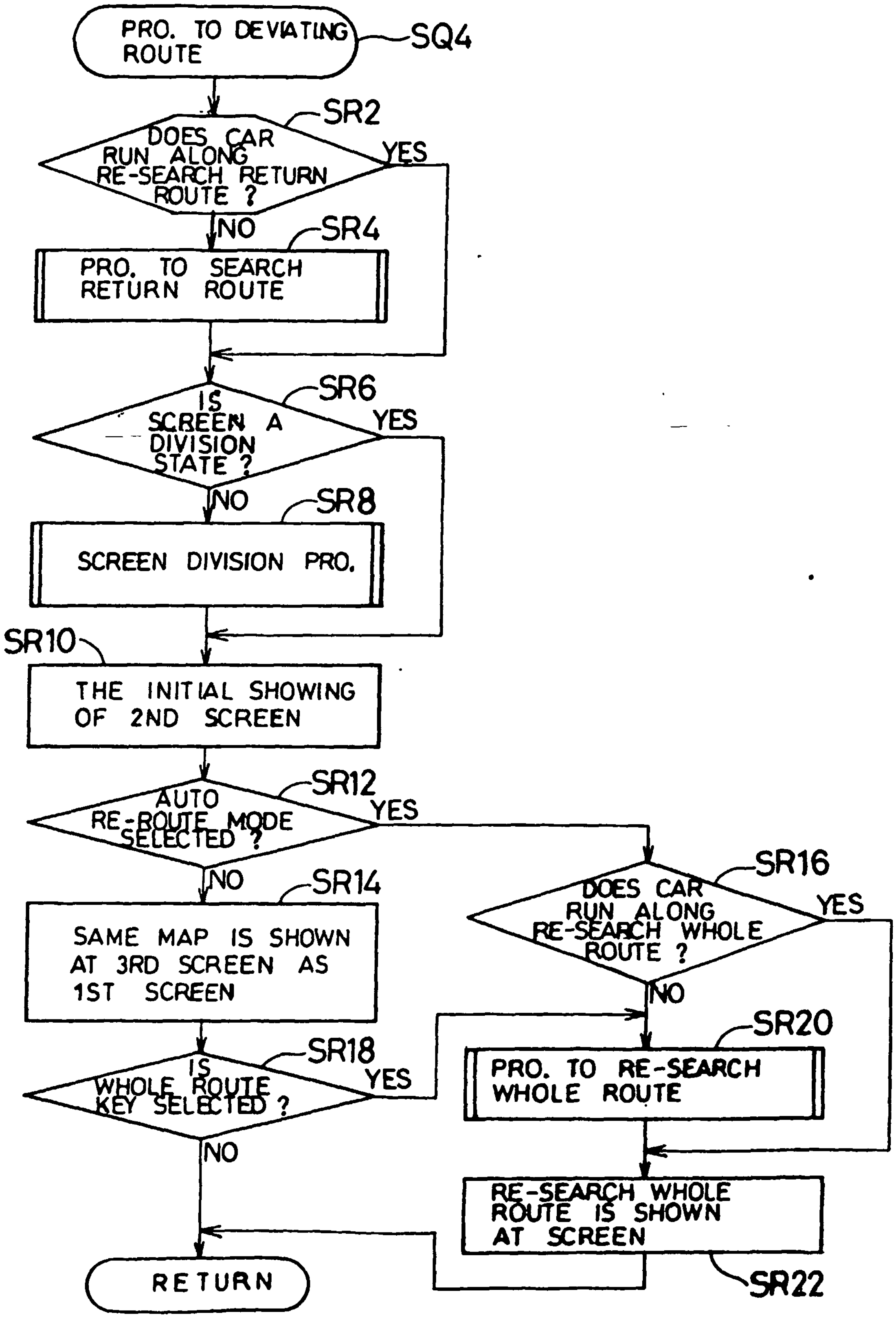
PRO. TO DEVIATING ROUTE
SQ4
DOES CAR RUN ALONG RE-SEARCH RETURN ROUTE ?
SR2
YES
NO
SR4
PRO. TO SEARCH RETURN ROUTE
IS SCREEN A DIVISION STATE ?
SR6
YES
NO
SR8
SCREEN DIVISION PRO.
SR10
THE INITIAL SHOWING OF 2ND SCREEN
AUTO RE-ROUTE MODE SELECTED ?
SR12
YES
NO
SR14
SAME MAP IS SHOWN AT 3RD SCREEN AS 1ST SCREEN
DOES CAR RUN ALONG RE-SEARCH WHOLE ROUTE ?
SR16
YES
NO
SR20
PRO. TO RE-SEARCH WHOLE ROUTE
IS WHOLE ROUTE KEY SELECTED ?
SR18
YES
NO
RE-SEARCH WHOLE ROUTE IS SHOWN AT SCREEN
SR22
RETURN

FIG. 36

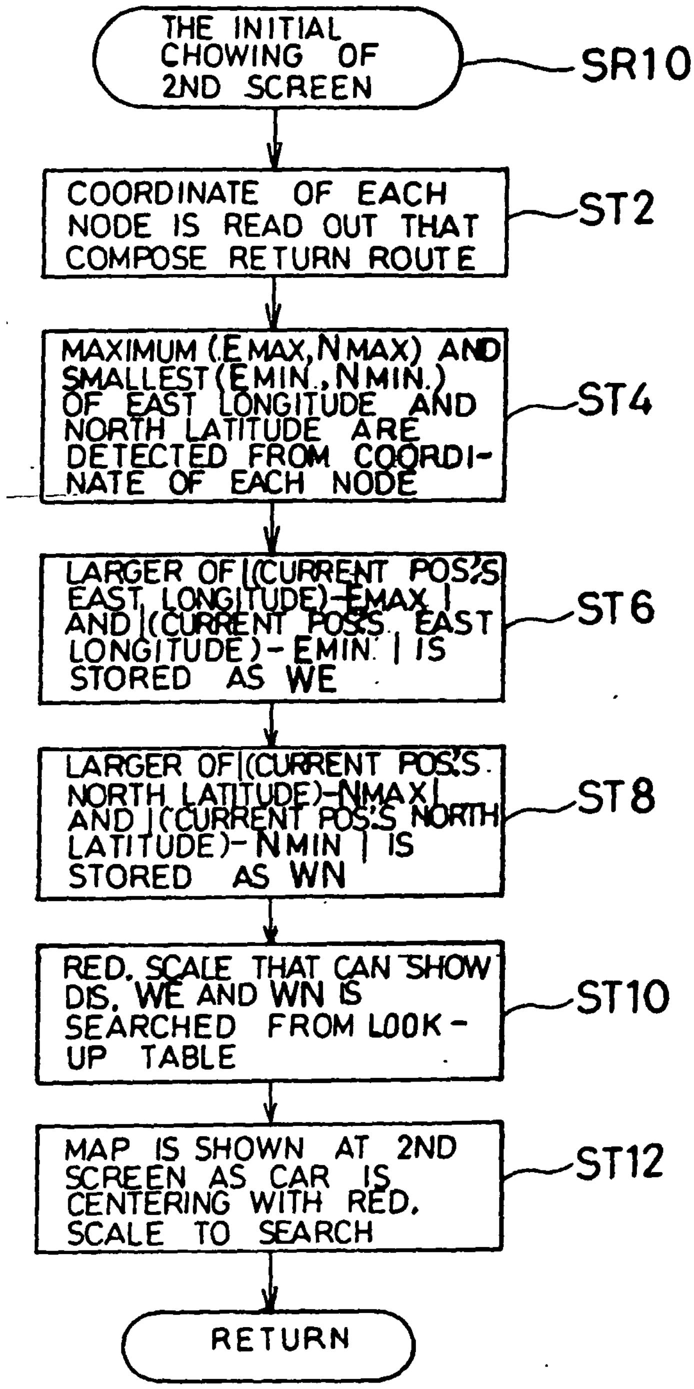
THE INITIAL CHOWING OF 2ND SCREEN
SR10
COORDINATE OF EACH NODE IS READ OUT THAT COMPOSE RETURN ROUTE
ST2
MAXIMUM (EMAX, NMAX) AND SMALLEST (EMIN., NMIN.) OF EAST LONGITUDE AND NORTH LATITUDE ARE DETECTED FROM COORDINATE OF EACH NODE
ST4
LARGER OF |(CURRENT POS'S EAST LONGITUDE)-EMAX| AND |(CURRENT POS'S EAST LONGITUDE)-EMIN| IS STORED AS WE
ST6
LARGER OF |(CURRENT POS'S NORTH LATITUDE)-NMAX| AND |(CURRENT POS'S NORTH LATITUDE)-NMIN| IS STORED AS WN
ST8
RED. SCALE THAT CAN SHOW DIS, WE AND WN IS SEARCHED FROM LOOK-UP TABLE
ST10
MAP IS SHOWN AT 2ND SCREEN AS CAR IS CENTERING WITH RED. SCALE TO SEARCH
ST12
RETURN

FIG. 37

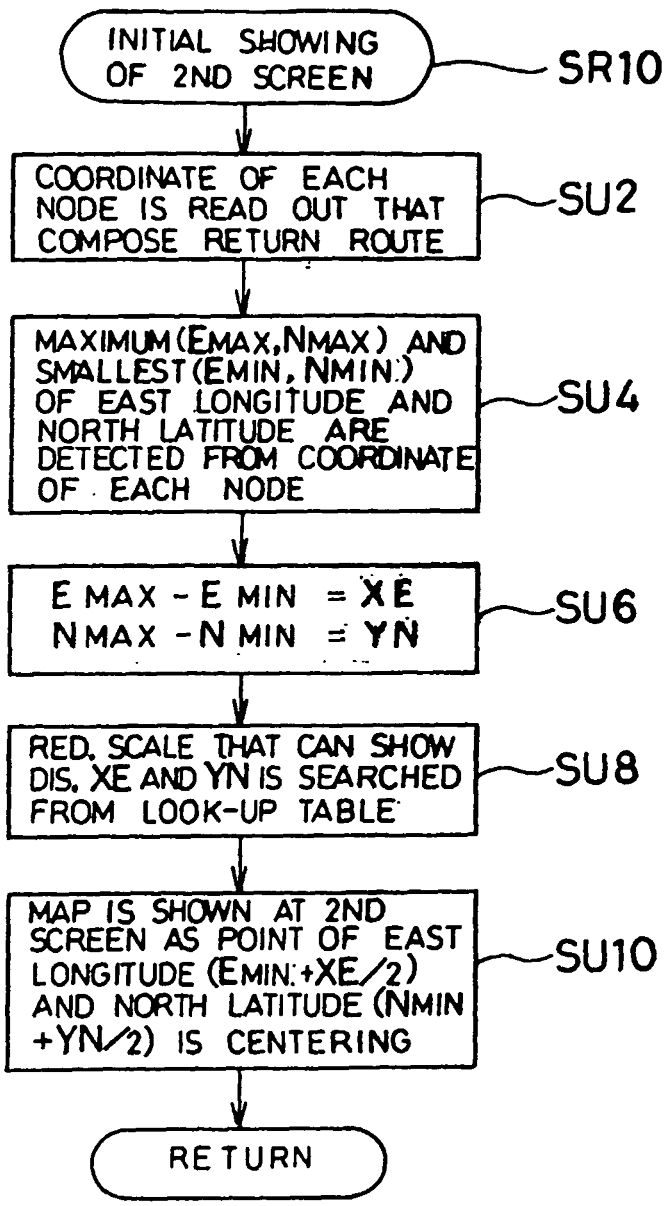
INITIAL SHOWING OF 2ND SCREEN
SR10
COORDINATE OF EACH NODE IS READ OUT THAT COMPOSE RETURN ROUTE
SU2
MAXIMUM (EMAX, NMAX) AND SMALLEST (EMIN, NMIN) OF EAST LONGITUDE AND NORTH LATITUDE ARE DETECTED FROM COORDINATE OF EACH NODE
SU4
E MAX - E MIN = XE
N MAX - N MIN = YN
SU6
RED. SCALE THAT CAN SHOW DIS. XE AND YN IS SEARCHED FROM LOOK-UP TABLE
SU8
MAP IS SHOWN AT 2ND SCREEN AS POINT OF EAST LONGITUDE (EMIN +XE/2) AND NORTH LATITUDE (NMIN +YN/2) IS CENTERING
SU10
RETURN

FIG. 38

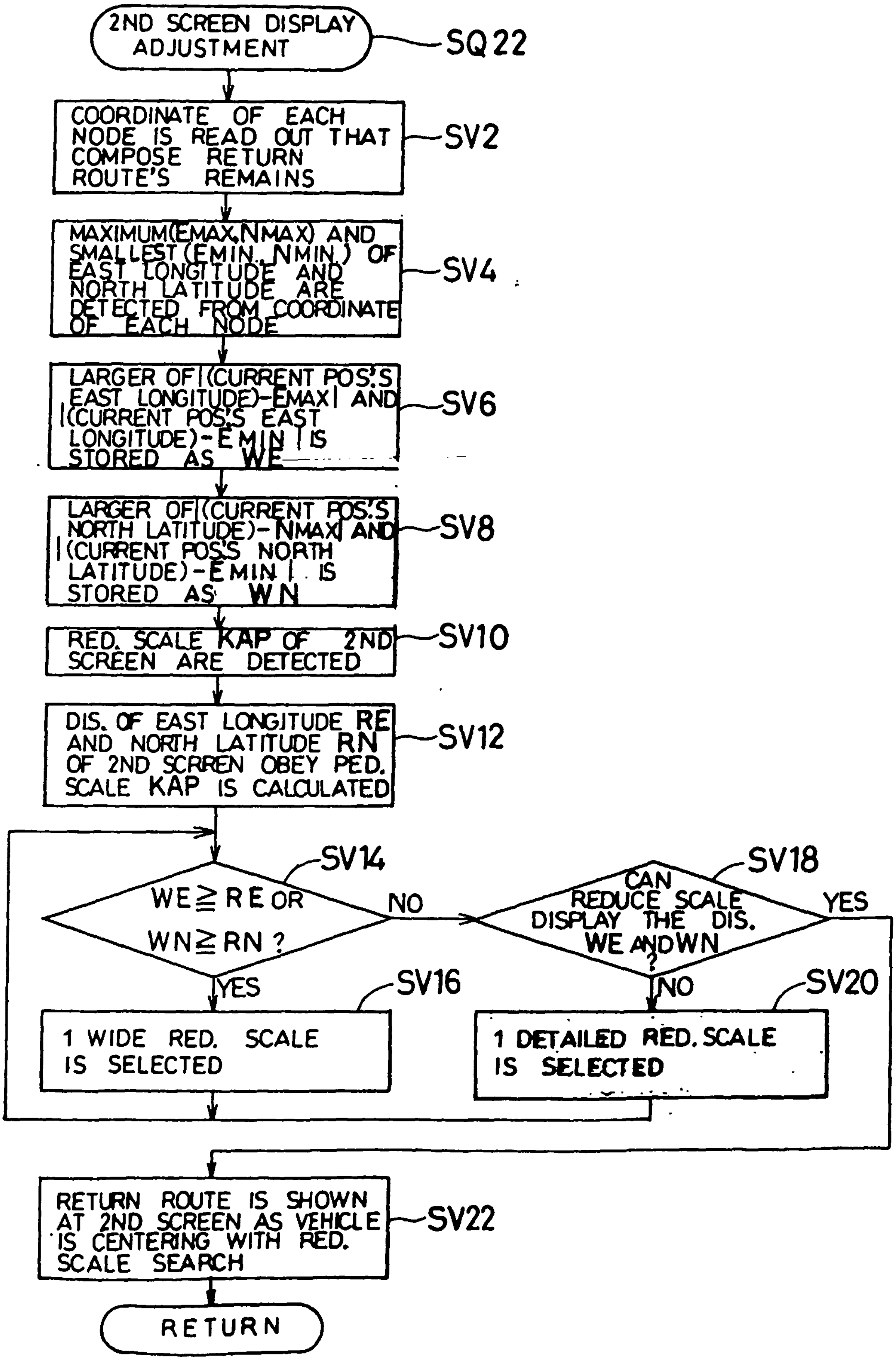
2ND SCREEN DISPLAY ADJUSTMENT
SQ22
COORDINATE OF EACH NODE IS READ OUT THAT COMPOSE RETURN ROUTE'S REMAINS
SV2
MAXIMUM(EMAX,NMAX) AND SMALLEST(EMIN, NMIN) OF EAST LONGITUDE AND NORTH LATITUDE ARE DETECTED FROM COORDINATE OF EACH NODE
SV4
LARGER OF |(CURRENT POS'S EAST LONGITUDE)-EMAX| AND |(CURRENT POS'S EAST LONGITUDE)-EMIN| IS STORED AS WE
SV6
LARGER OF |(CURRENT POS'S NORTH LATITUDE)-NMAX| AND |(CURRENT POS'S NORTH LATITUDE)-EMIN| IS STORED AS WN
SV8
RED. SCALE KAP OF 2ND SCREEN ARE DETECTED
SV10
DIS. OF EAST LONGITUDE RE AND NORTH LATITUDE RN OF 2ND SCRREN OBEY PED. SCALE KAP IS CALCULATED
SV12
WE≧RE OR WN≧RN ?
SV14
NO
YES
CAN REDUCE SCALE DISPLAY THE DIS. WE AND WN ?
SV18
YES
NO
1 WIDE RED. SCALE IS SELECTED
SV16
1 DETAILED RED. SCALE IS SELECTED
SV20
RETURN ROUTE IS SHOWN AT 2ND SCREEN AS VEHICLE IS CENTERING WITH RED. SCALE SEARCH
SV22
RETURN

FIG. 39

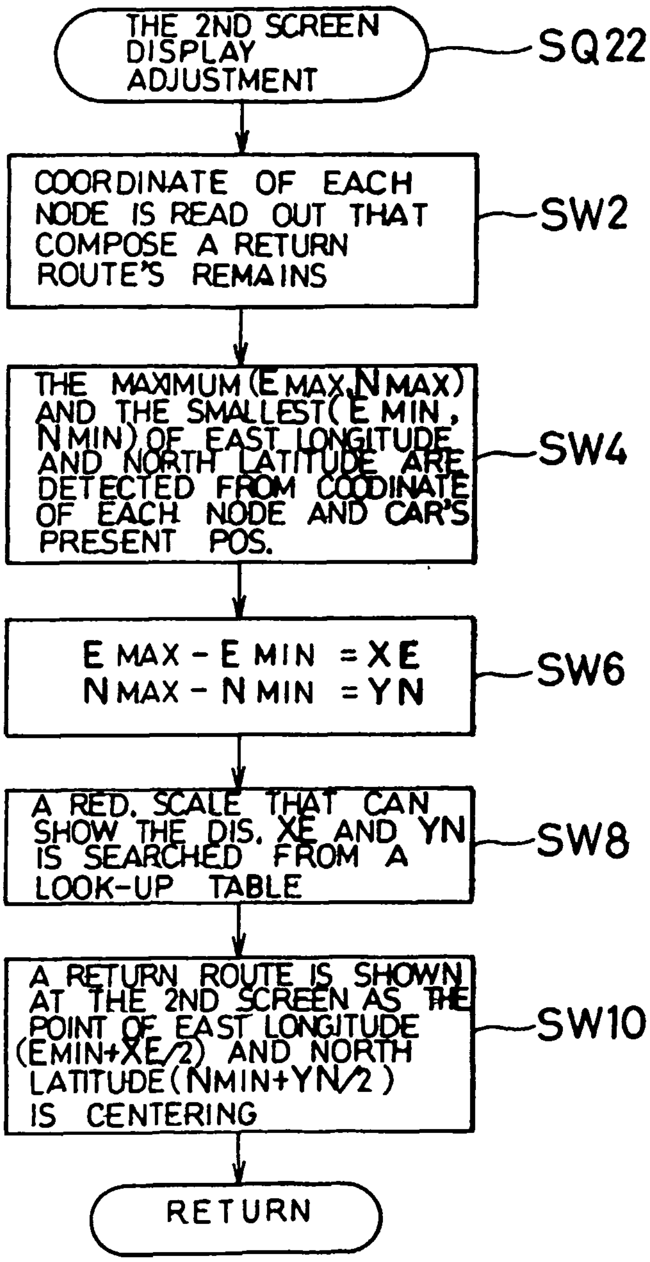
THE 2ND SCREEN DISPLAY ADJUSTMENT
SQ22
COORDINATE OF EACH NODE IS READ OUT THAT COMPOSE A RETURN ROUTE'S REMAINS
SW2
THE MAXIMUM (E MAX, N MAX) AND THE SMALLEST (E MIN, N MIN) OF EAST LONGITUDE AND NORTH LATITUDE ARE DETECTED FROM COODINATE OF EACH NODE AND CAR'S PRESENT POS.
SW4
E MAX - E MIN = XE
N MAX - N MIN = YN
SW6
A RED. SCALE THAT CAN SHOW THE DIS. XE AND YN IS SEARCHED FROM A LOOK-UP TABLE
SW8
A RETURN ROUTE IS SHOWN AT THE 2ND SCREEN AS THE POINT OF EAST LONGITUDE (EMIN+XE/2) AND NORTH LATITUDE (NMIN+YN/2) IS CENTERING
SW10
RETURN

FIG. 40

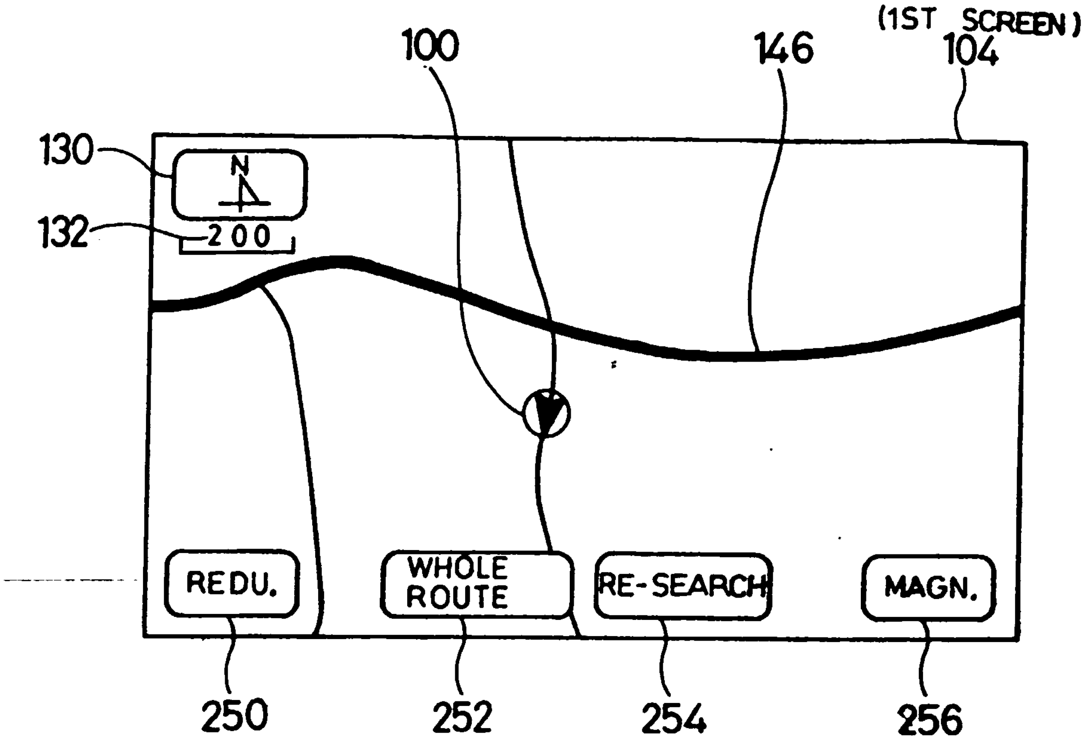
(1ST SCREEN)
104
100
146
130
132
200
N
REDU.
WHOLE ROUTE
RE-SEARCH
MAGN.
250
252
254
256

FIG. 41

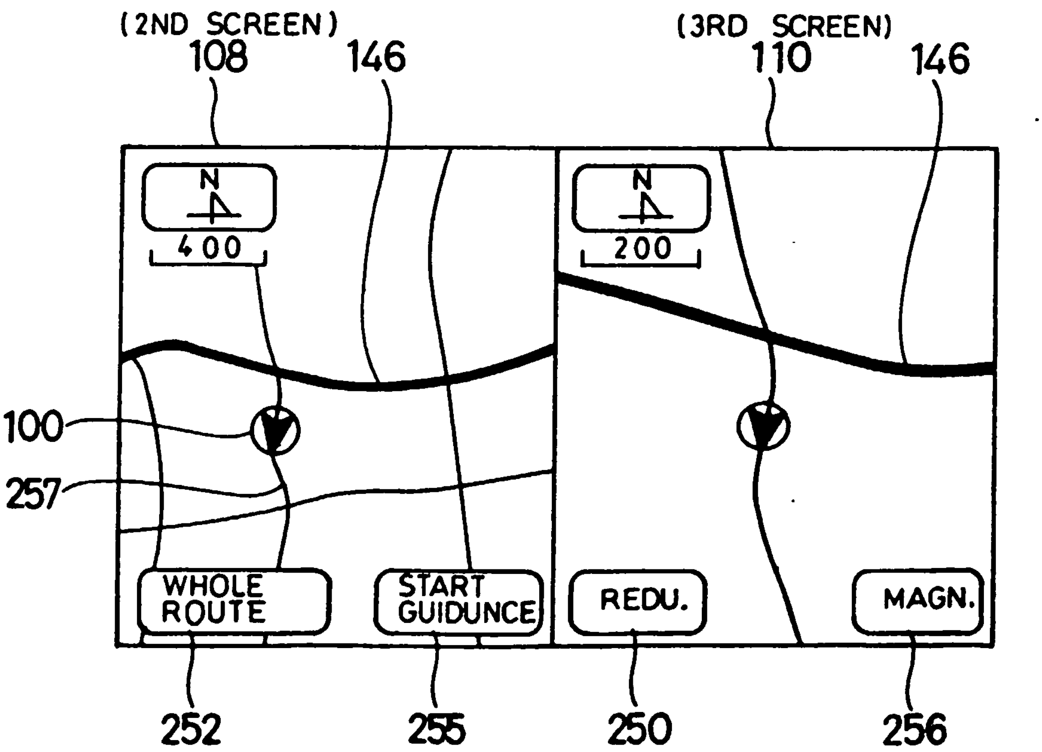
(2ND SCREEN)
108
146
(3RD SCREEN)
110
146
N
400
200
100
257
WHOLE ROUTE
START GUIDUNCE
REDU.
MAGN.
252
255
250
256

FIG. 42

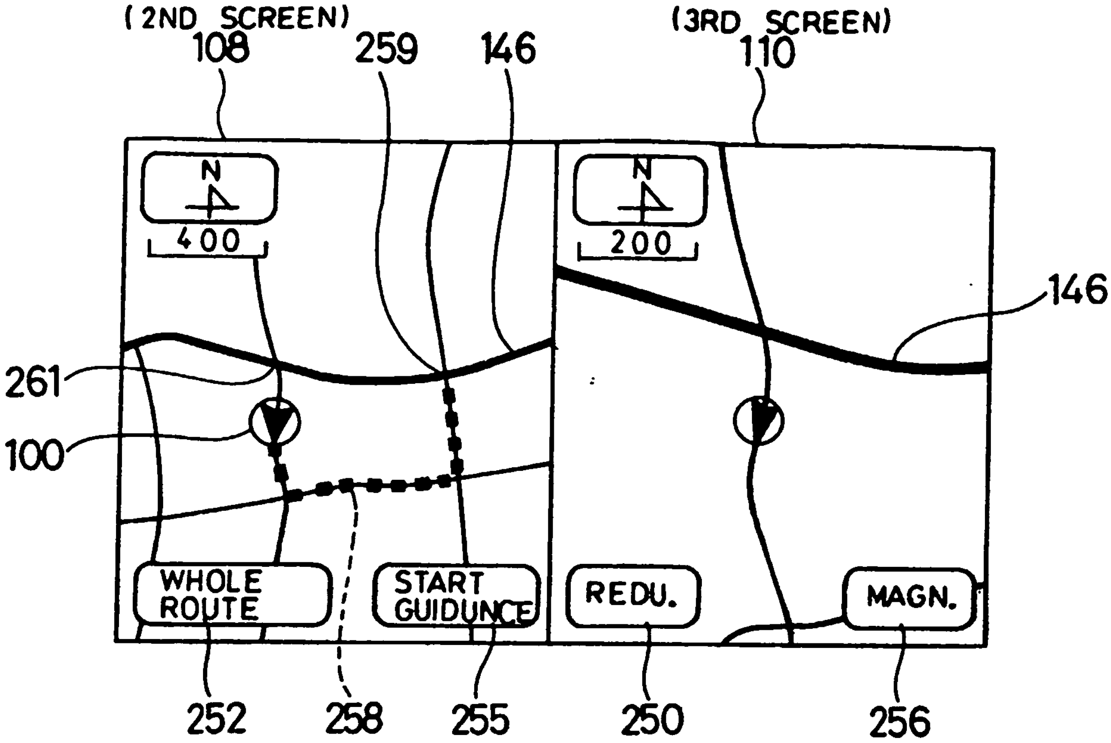

(2ND SCREEN)
108
259
146
(3RD SCREEN)
110
N
400
N
200
146
261
100
WHOLE ROUTE
START GUIDUNCE
REDU.
MAGN.
252
258
255
250
256


FIG. 43

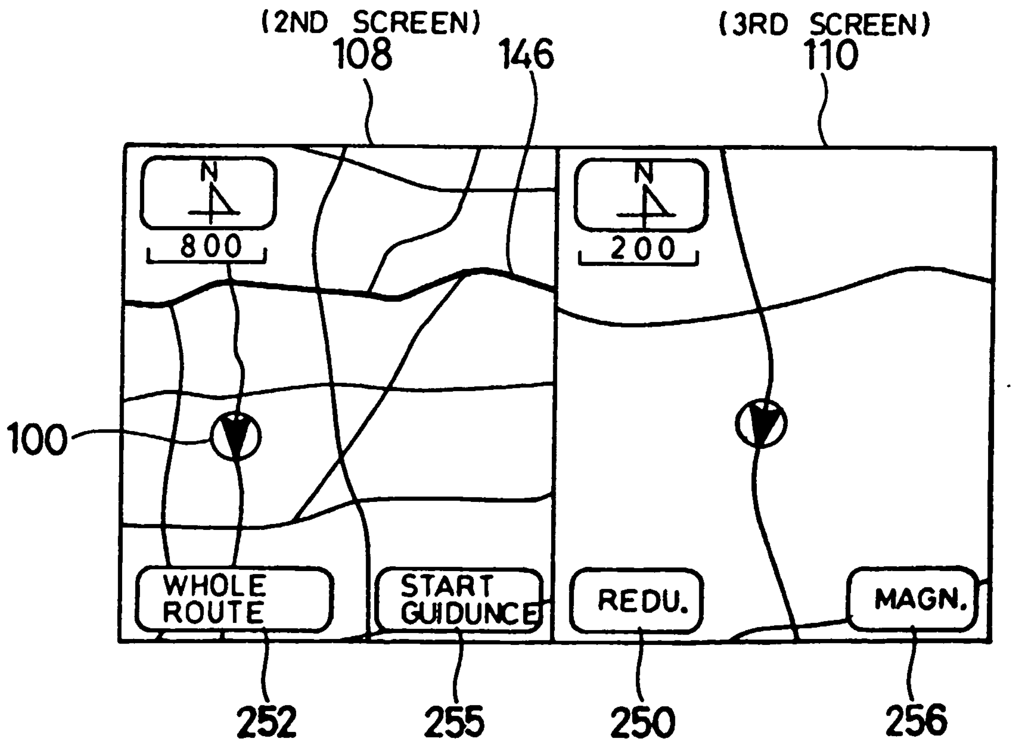

(2ND SCREEN)
108
146
(3RD SCREEN)
110
N
800
N
200
100
WHOLE ROUTE
START GUIDUNCE
REDU.
MAGN.
252
255
250
256

FIG. 44

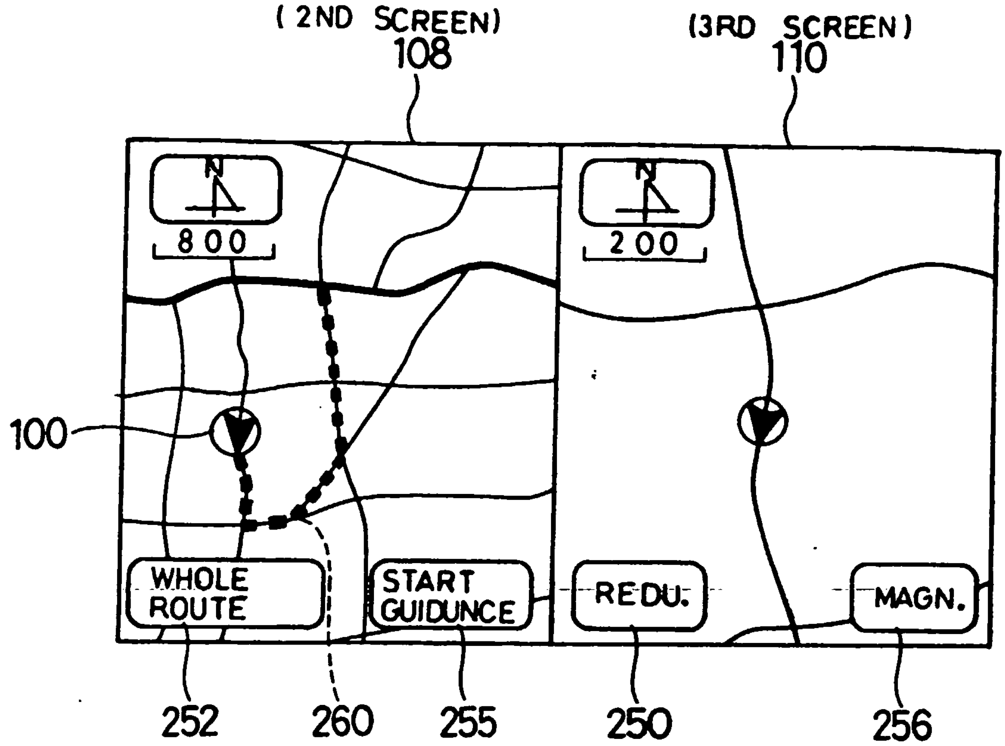
(2ND SCREEN)
108
(3RD SCREEN)
110
N
800
N
200
100
WHOLE ROUTE
START GUIDUNCE
REDU.
MAGN.
252
260
255
250
256

FIG. 45

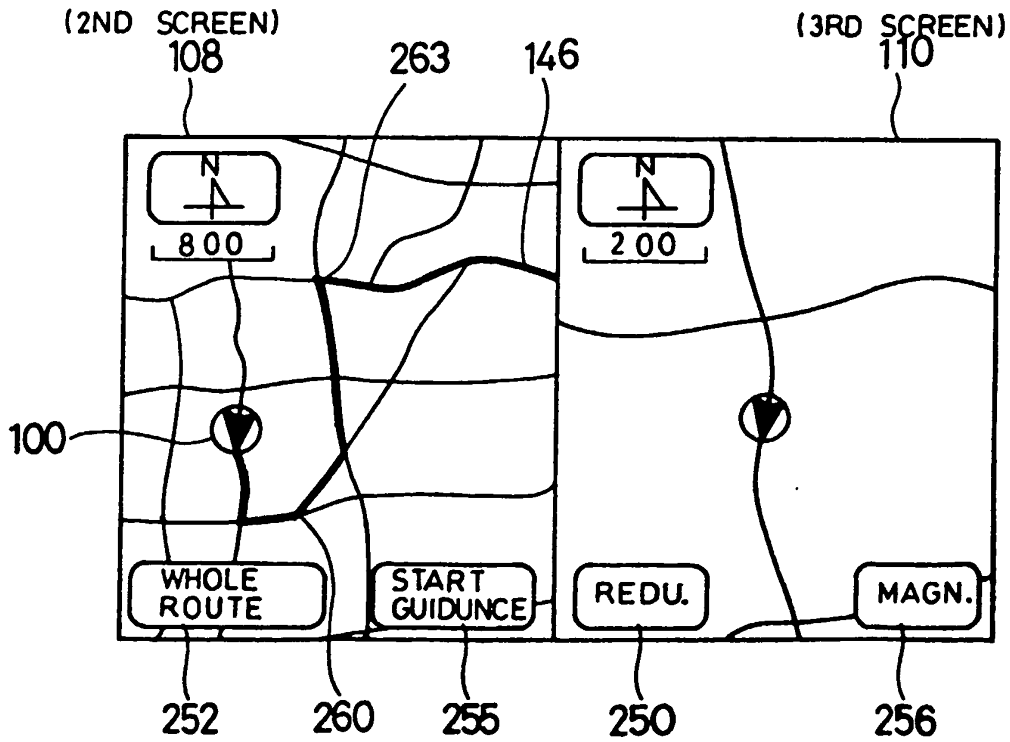
(2ND SCREEN)
108
263
146
(3RD SCREEN)
110
N
800
N
200
100
WHOLE ROUTE
START GUIDUNCE
REDU.
MAGN.
252
260
255
250
256

FIG. 46

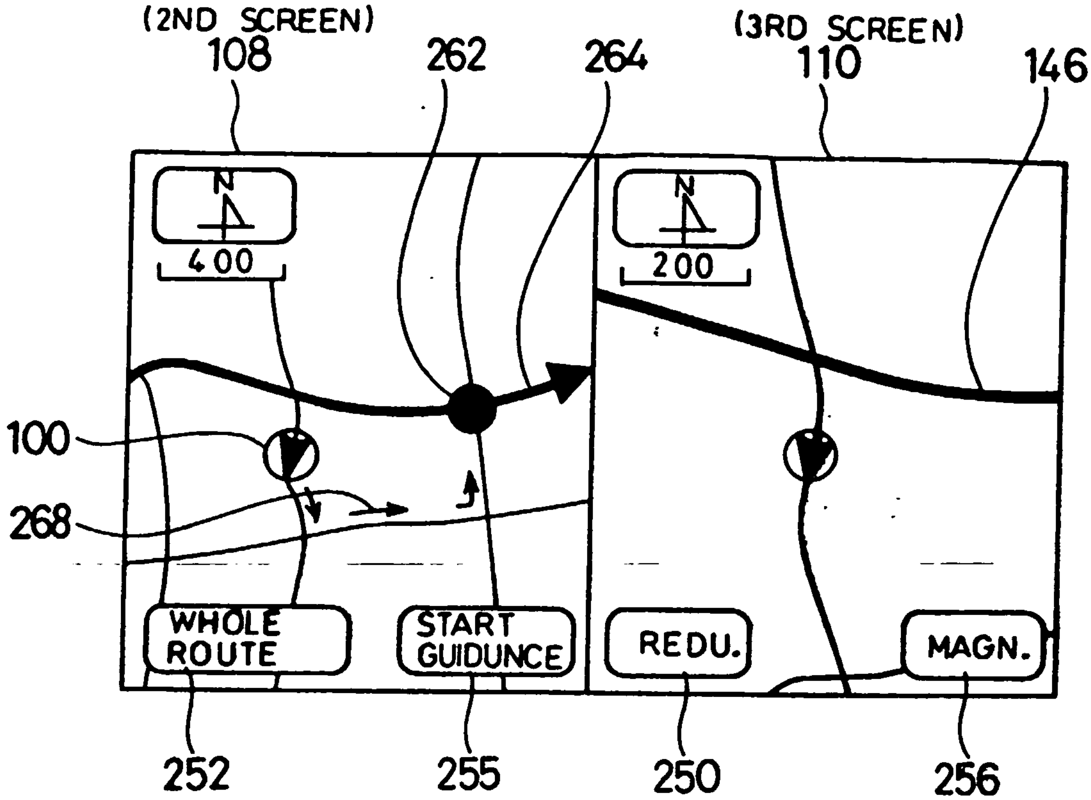
(2ND SCREEN)
108
262
264
(3RD SCREEN)
110
146
N
400
N
200
100
268
WHOLE ROUTE
START GUIDUNCE
REDU.
MAGN.
252
255
250
256

FIG. 47

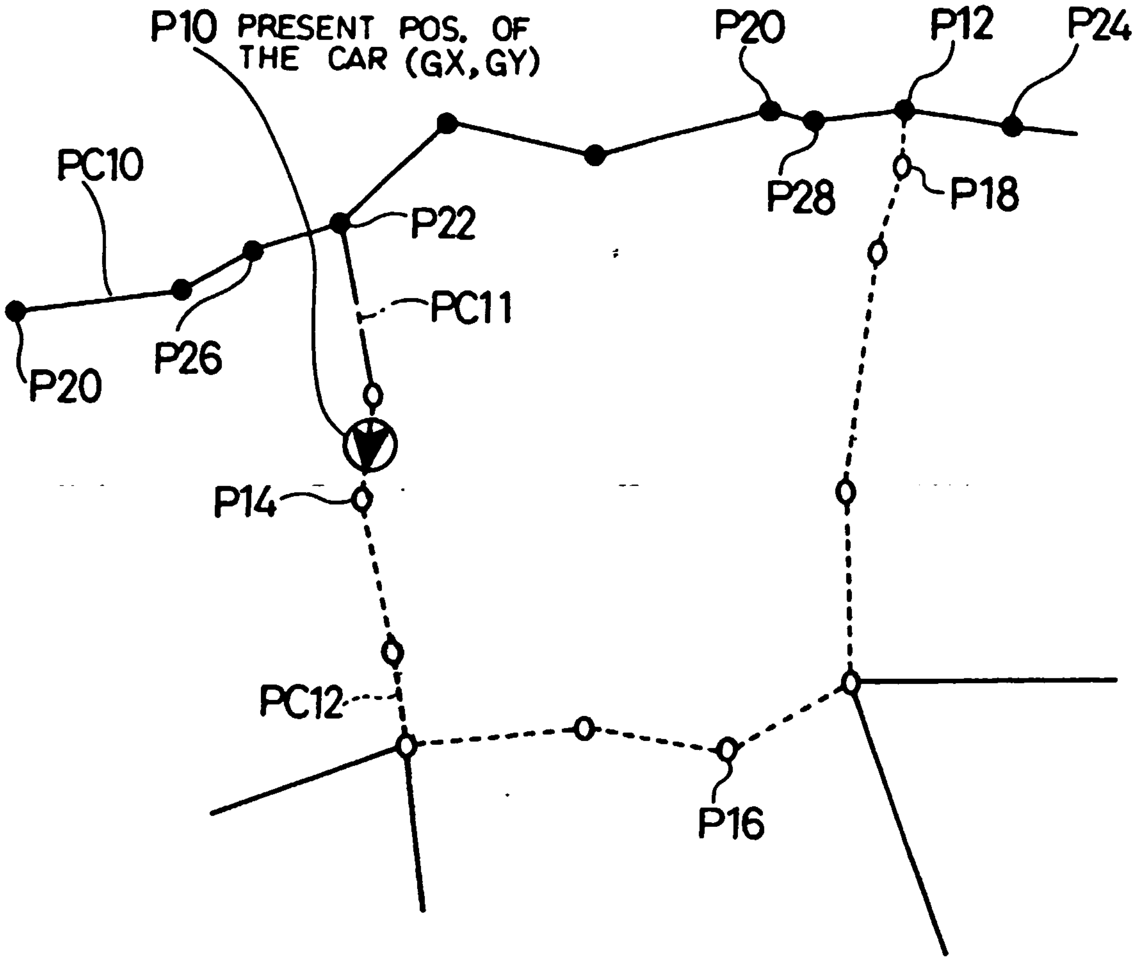
P10 PRESENT POS. OF THE CAR (GX, GY)
P20
P12
P24
PC10
P28
P18
P22
PC11
P26
P20
P14
PC12
P16

FIG. 48

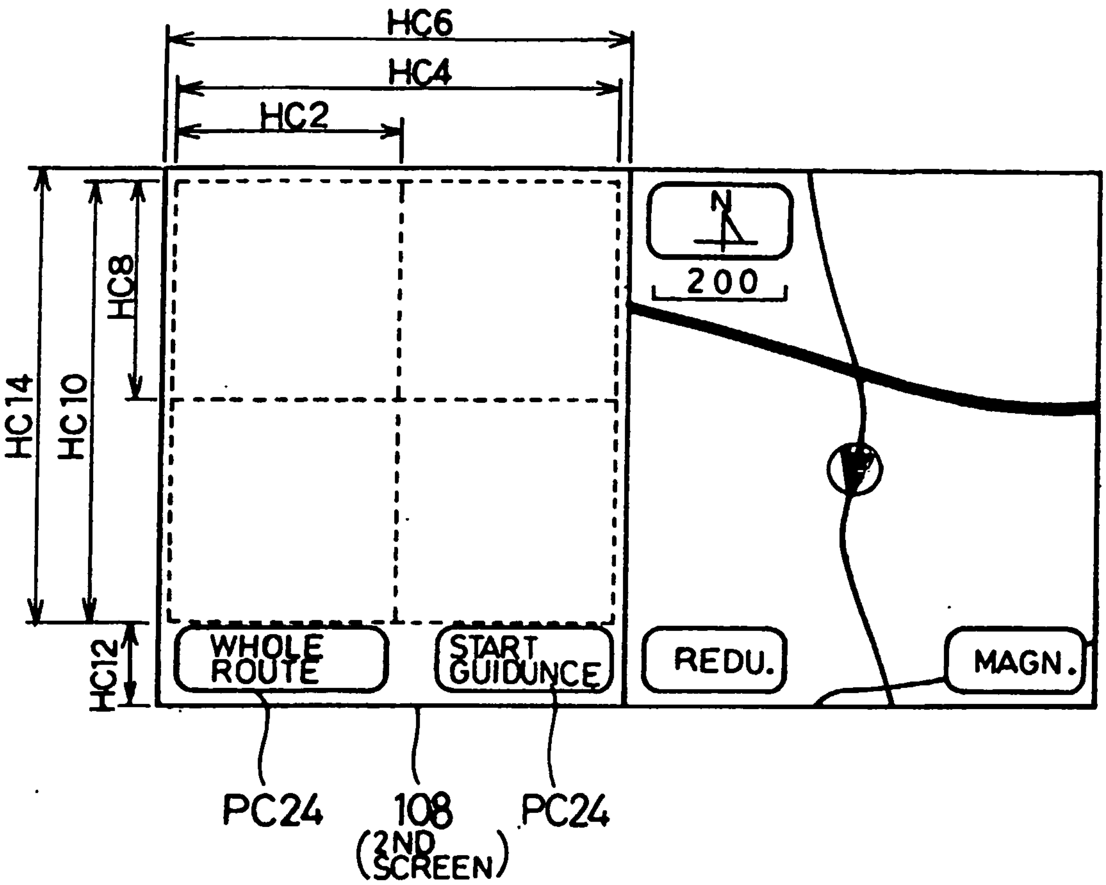
HC6
HC4
HC2
HC8
HC14
HC10
HC12
N
200
WHOLE ROUTE
START GUIDUNCE
REDU.
MAGN.
PC24
108 (2ND SCREEN)
PC24

FIG. 49

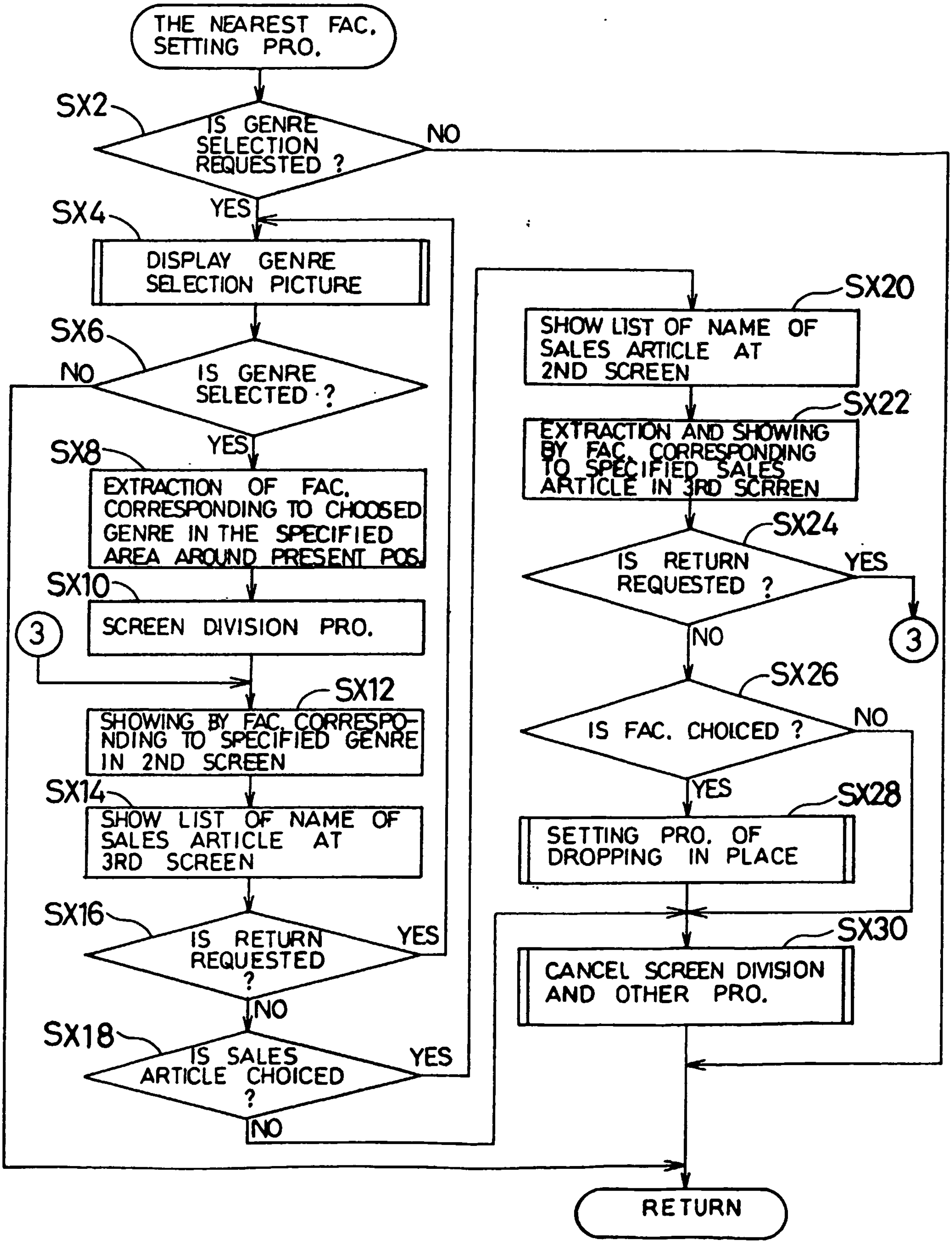
THE NEAREST FAC. SETTING PRO.
SX2
IS GENRE SELECTION REQUESTED ?
NO
YES
SX4
DISPLAY GENRE SELECTION PICTURE
SX6
IS GENRE SELECTED ?
NO
YES
SX8
EXTRACTION OF FAC. CORRESPONDING TO CHOOSED GENRE IN THE SPECIFIED AREA AROUND PRESENT POS.
SX10
SCREEN DIVISION PRO.
3
SX12
SHOWING BY FAC. CORRESPONDING TO SPECIFIED GENRE IN 2ND SCREEN
SX14
SHOW LIST OF NAME OF SALES ARTICLE AT 3RD SCREEN
SX16
IS RETURN REQUESTED ?
YES
NO
SX18
IS SALES ARTICLE CHOICED ?
YES
NO
SX20
SHOW LIST OF NAME OF SALES ARTICLE AT 2ND SCREEN
SX22
EXTRACTION AND SHOWING BY FAC. CORRESPONDING TO SPECIFIED SALES ARTICLE IN 3RD SCRREN
SX24
IS RETURN REQUESTED ?
YES
3
NO
SX26
IS FAC. CHOICED ?
NO
YES
SX28
SETTING PRO. OF DROPPING IN PLACE
SX30
CANCEL SCREEN DIVISION AND OTHER PRO.
RETURN

FIG. 50

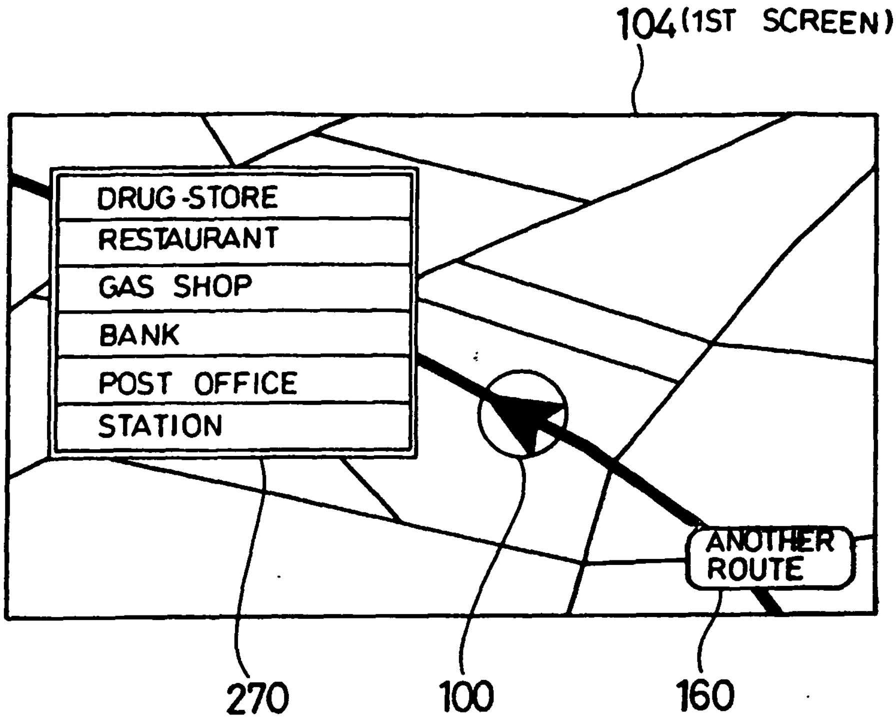
104 (1ST SCREEN)
DRUG-STORE
RESTAURANT
GAS SHOP
BANK
POST OFFICE
STATION
ANOTHER ROUTE
270
100
160

FIG. 51

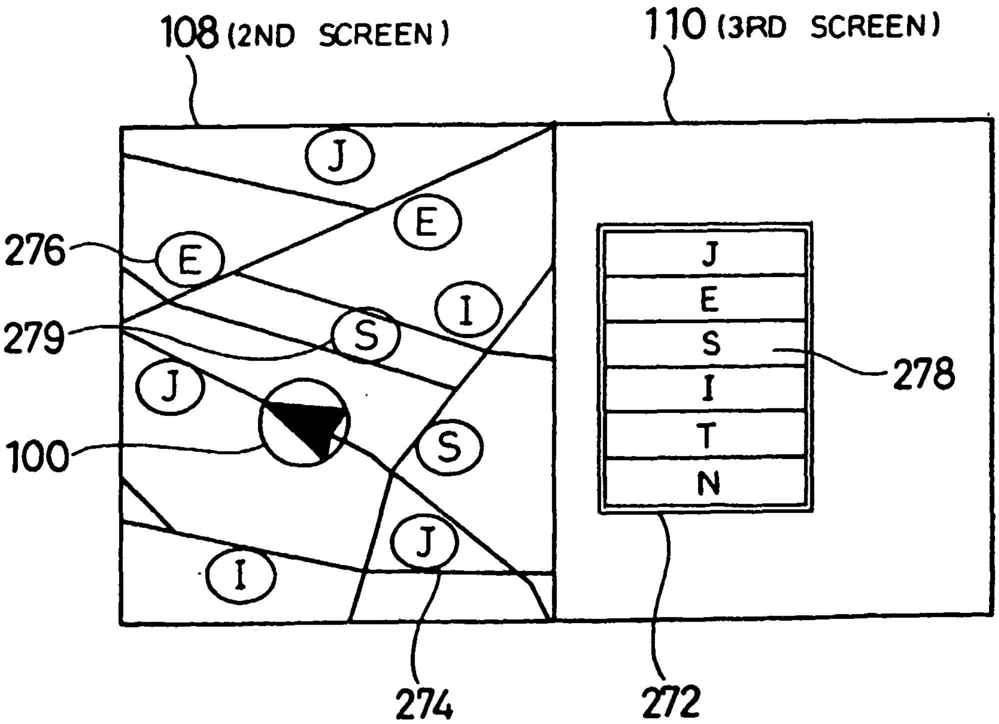
108 (2ND SCREEN)
110 (3RD SCREEN)
276
279
100
J
E
S
I
T
N
278
274
272

FIG. 52

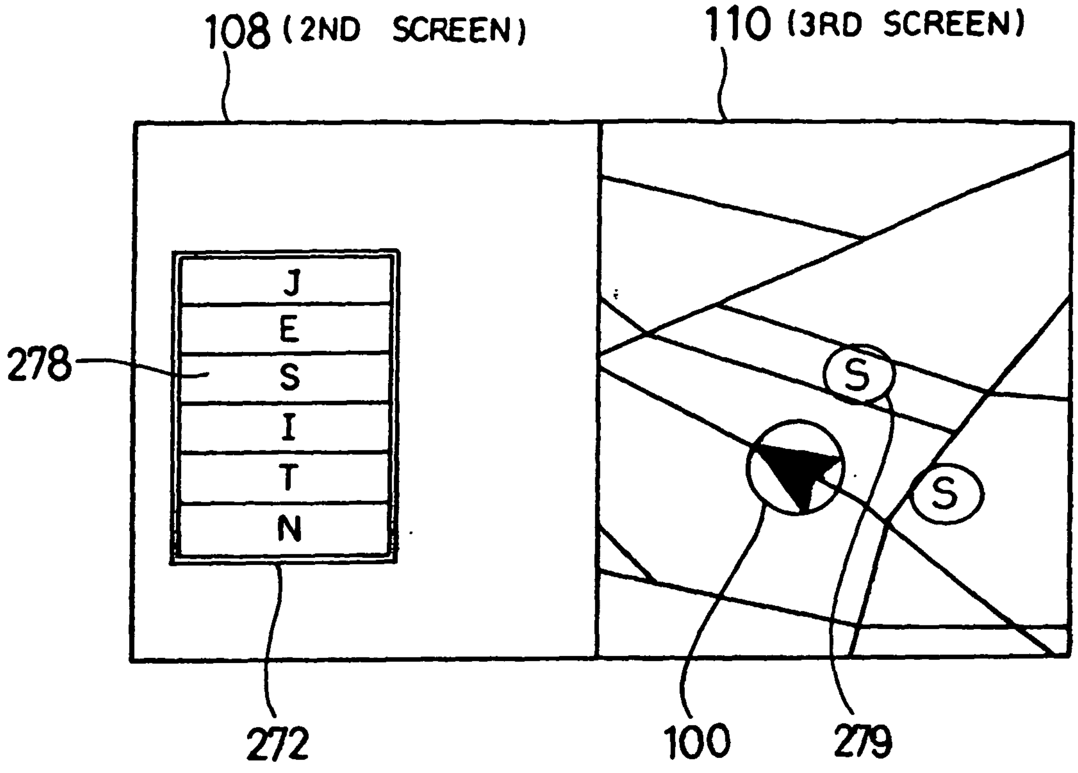

FIG. 53

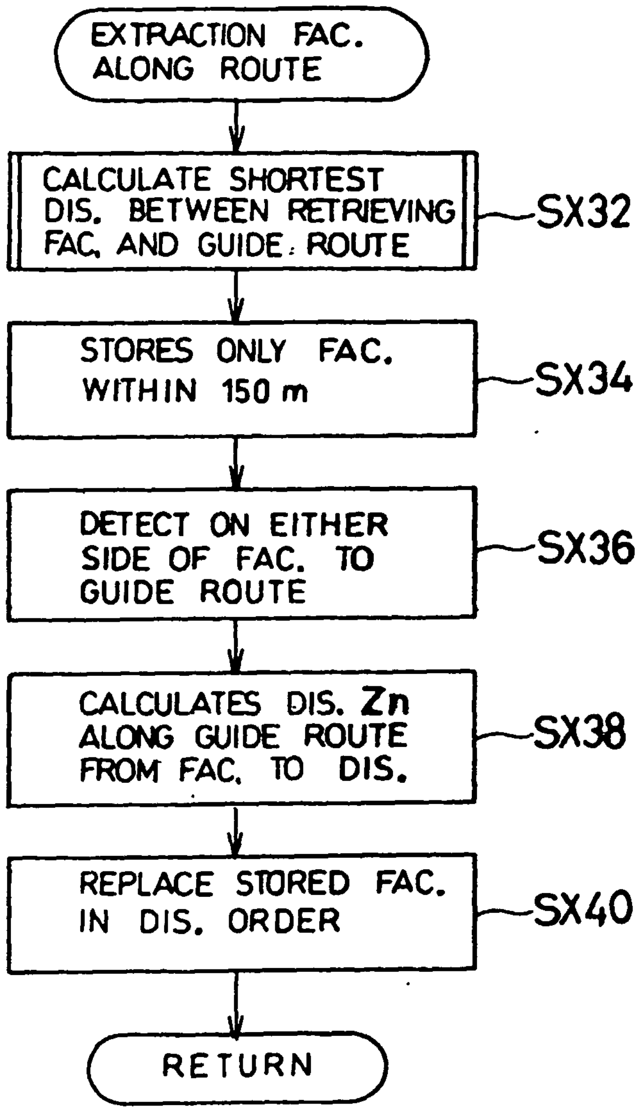
EXTRACTION FAC. ALONG ROUTE
CALCULATE SHORTEST DIS. BETWEEN RETRIEVING FAC. AND GUIDE ROUTE
SX32
STORES ONLY FAC. WITHIN 150 m
SX34
DETECT ON EITHER SIDE OF FAC. TO GUIDE ROUTE
SX36
CALCULATES DIS. Zn ALONG GUIDE ROUTE FROM FAC. TO DIS.
SX38
REPLACE STORED FAC. IN DIS. ORDER
SX40
RETURN

FIG. 54

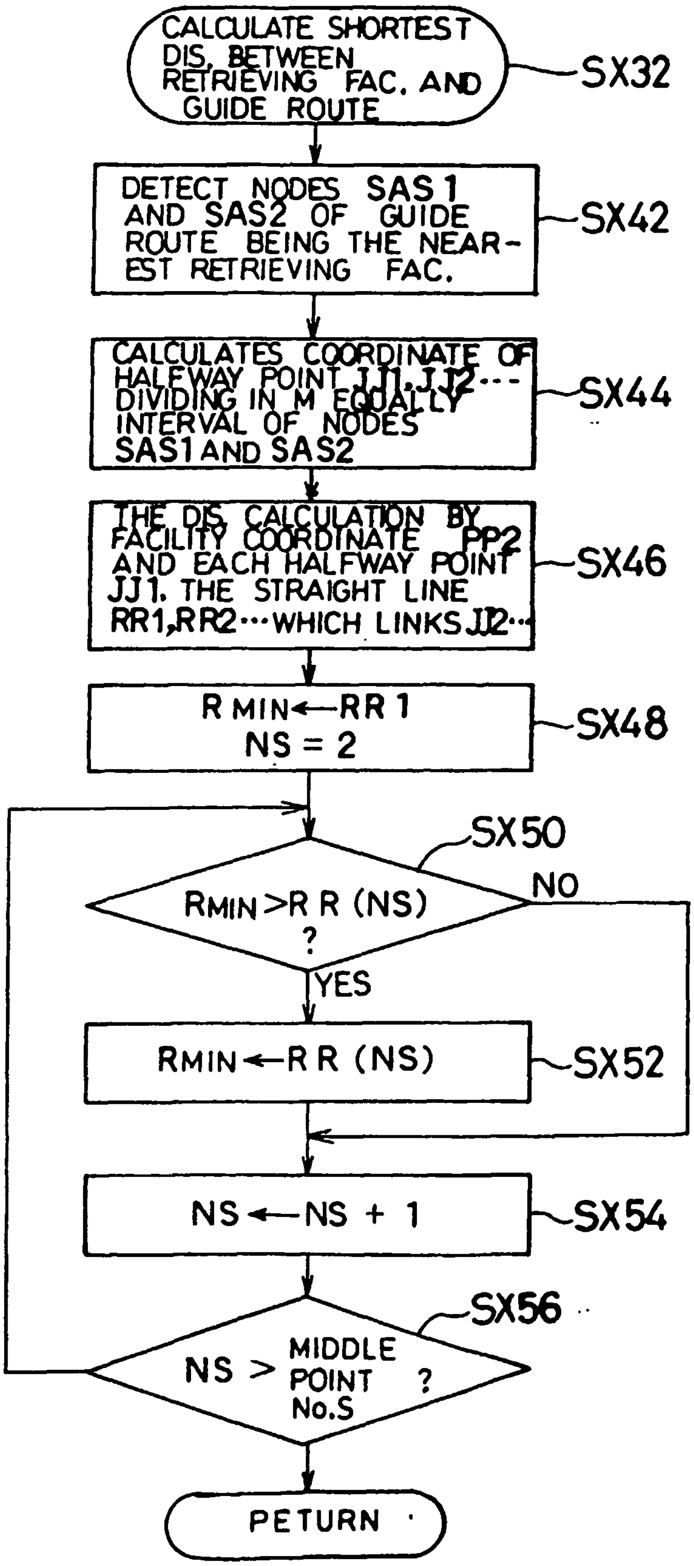
CALCULATE SHORTEST DIS. BETWEEN RETRIEVING FAC. AND GUIDE ROUTE
SX32
DETECT NODES SAS1 AND SAS2 OF GUIDE ROUTE BEING THE NEAREST RETRIEVING FAC.
SX42
CALCULATES COORDINATE OF HALFWAY POINT JJ1,JJ2··· DIVIDING IN M EQUALLY INTERVAL OF NODES SAS1 AND SAS2
SX44
THE DIS. CALCULATION BY FACILITY COORDINATE PP2 AND EACH HALFWAY POINT JJ1. THE STRAIGHT LINE RR1,RR2···WHICH LINKS JJ2···
SX46
R MIN←RR1
NS = 2
SX48
SX50
RMIN>RR (NS) ?
NO
YES
RMIN←RR (NS)
SX52
NS←NS + 1
SX54
SX56
NS > MIDDLE POINT No.S ?
PETURN

FIG. 55

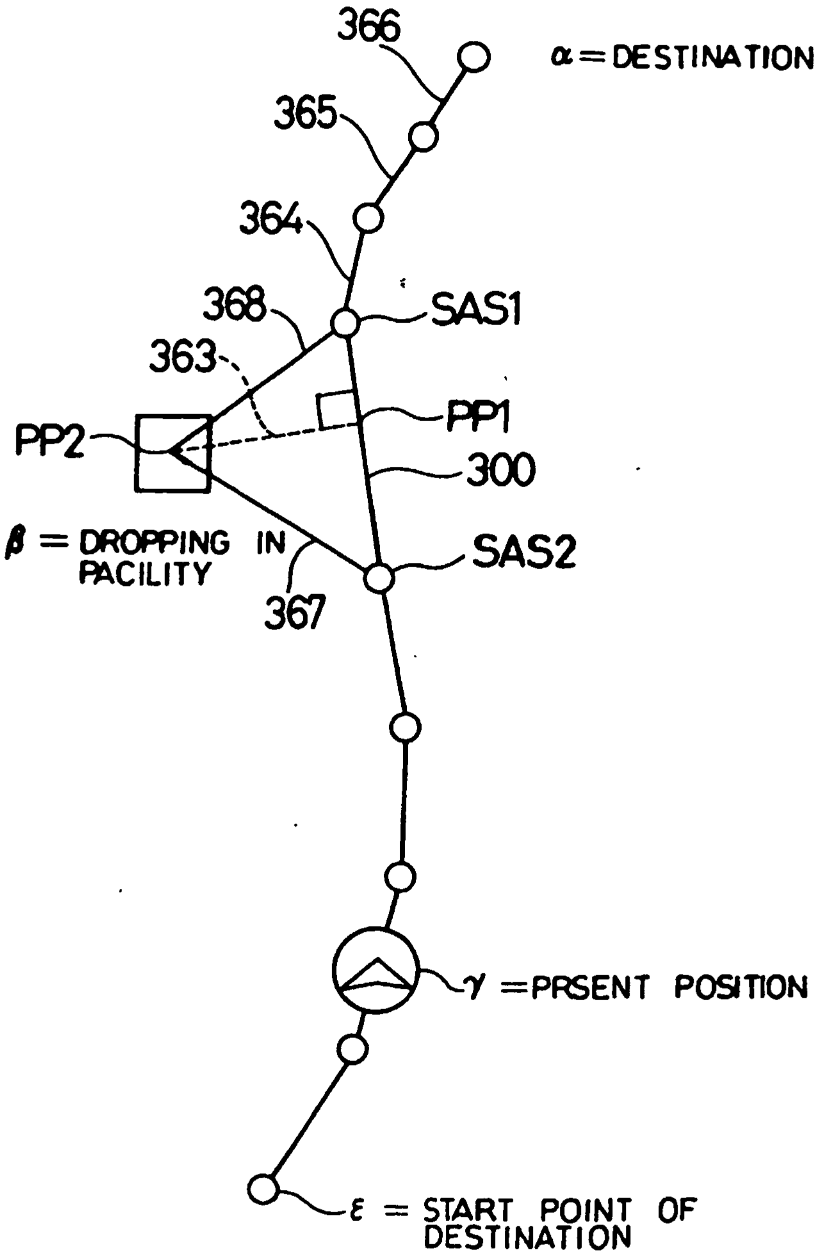
366
α = DESTINATION
365
364
368
SAS1
363
PP1
PP2
300
β = DROPPING IN PACILITY
SAS2
367
γ = PRSENT POSITION
ε = START POINT OF DESTINATION

FIG. 56

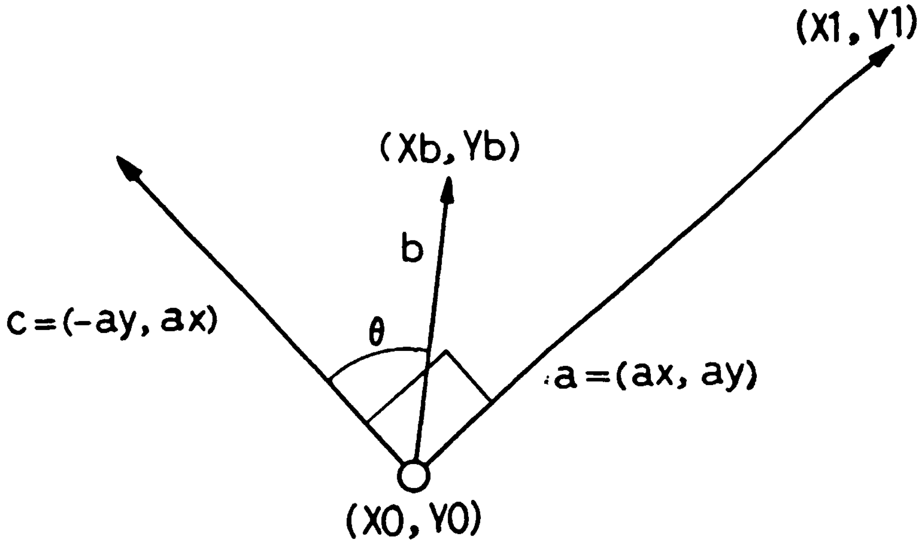
(X1, Y1)
(Xb, Yb)
b
c=(-ay, ax)
θ
a=(ax, ay)
(X0, Y0)

FIG. 57

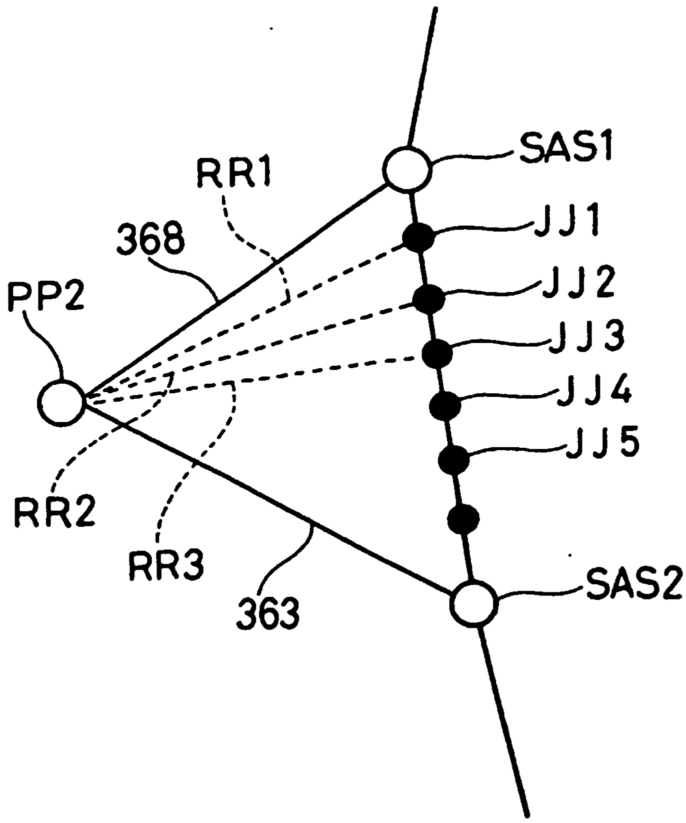
SAS1
RR1
368
JJ1
JJ2
PP2
JJ3
JJ4
JJ5
RR2
RR3
363
SAS2

FIG. 58

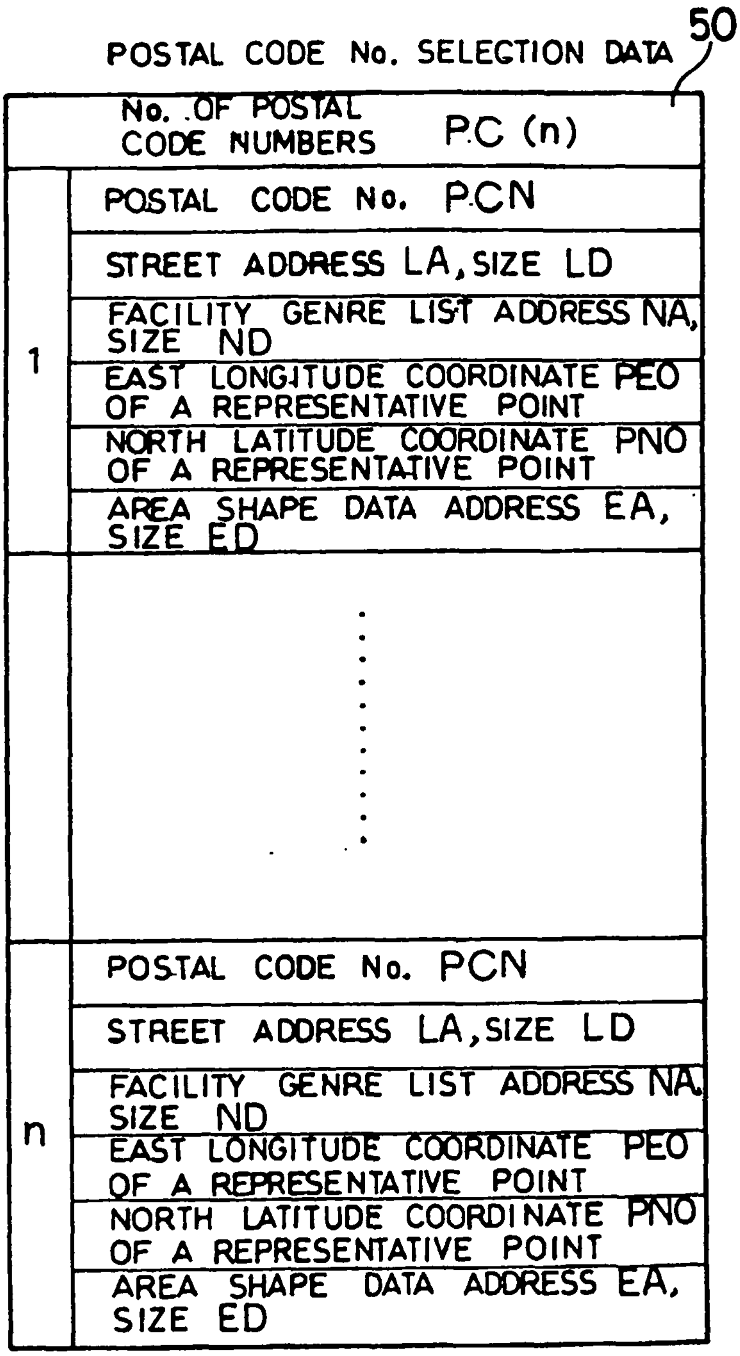
POSTAL CODE No. SELECTION DATA
50
No. OF POSTAL CODE NUMBERS P.C (n)
1
POSTAL CODE No. PCN
STREET ADDRESS LA, SIZE LD
FACILITY GENRE LIST ADDRESS NA, SIZE ND
EAST LONGITUDE COORDINATE PEO OF A REPRESENTATIVE POINT
NORTH LATITUDE COORDINATE PNO OF A REPRESENTATIVE POINT
AREA SHAPE DATA ADDRESS EA, SIZE ED
n
POSTAL CODE No. PCN
STREET ADDRESS LA, SIZE LD
FACILITY GENRE LIST ADDRESS NA, SIZE ND
EAST LONGITUDE COORDINATE PEO OF A REPRESENTATIVE POINT
NORTH LATITUDE COORDINATE PNO OF A REPRESENTATIVE POINT
AREA SHAPE DATA ADDRESS EA, SIZE ED

# FIG. 59

STREET LIST DATA 55

| | |
|---|---|
| | No. OF STREETS SS (m) |
| 1 | STREET NAME SSN |
| | EAST LONGITUDE COORDINATE SEO OF A REPRESENTATIVE POINT |
| | NORTH LATITUDE COORDINATE SNO OF A REPRESENTATIVE POINT |
| | SHAPE DATA ADDRESS SEA, SIZE SED |
| | ⋮ |
| m | STREET NAME SSN |
| | EAST LONGITUDE COORDINATE SEO OF A REPRESENTATIVE POINT |
| | NORTH LATITUDE COORDINATE SNO OF A REPRESENTATIVE POINT |
| | SHAPE DATA ADDRESS SEA, SIZE SED |

# FIG. 60

FACILITY GENRE LIST DATA 60

| | |
|---|---|
| | No. OF FACILITY GENRES NC (k) |
| 1 | FACILITY GENRE NAME NM |
| | FACILITY LIST ADDRESS NLA, SIZE NLD |
| 2 | FACILITY GENRE NAME NM |
| | FACILITY LIST ADDRESS NLA, SIZE NLD |
| | ⋮ |
| k | FACILITY GENRE NAME NM |
| | FACILITY LIST ADDRESS NLA, SIZE NLD |

# FIG. 61

ST. SHAPE DATA

65

| | |
|---|---|
| | No. OF NODE ES (t) |
| 1 | EAST LONGITUDE EEO |
| | NORTH LATITUDE ENO |
| | ADDRESS ENO |
| ⋮ | ⋮ |
| t | EAST LONGITUDE EEO |
| | NORTH LATITUDE ENO |
| | ADDRESS ENO |

FIG. 62

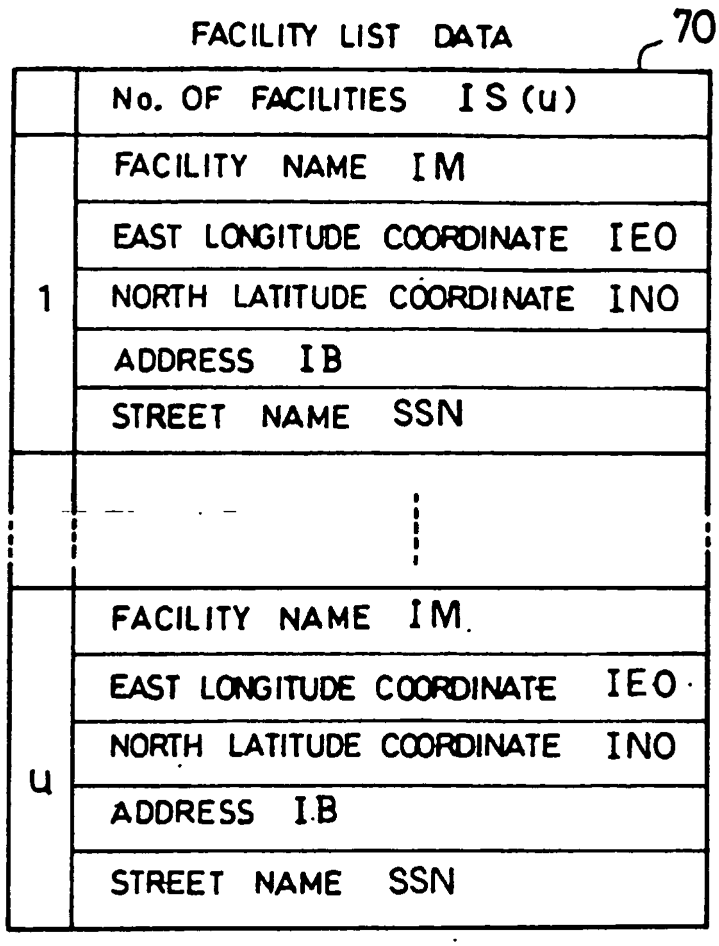
FACILITY LIST DATA
70
No. OF FACILITIES IS(u)
1
FACILITY NAME IM
EAST LONGITUDE COORDINATE IEO
NORTH LATITUDE COORDINATE INO
ADDRESS IB
STREET NAME SSN
u
FACILITY NAME IM
EAST LONGITUDE COORDINATE IEO
NORTH LATITUDE COORDINATE INO
ADDRESS IB
STREET NAME SSN

FIG. 63

75

AREA SHAPE DATA

| | |
|---|---|
| | No. OF NODE ANC (v) |
| 1 | EAST LONGITUDE AEO |
| | NORTH LATITUDE ANO |
| 2 | EAST LONGITUDE AEO |
| | NORTH LATITUDE ANO |
| | ⋮ |
| v | EAST LONGITUDE AEO |
| | NORTH LATITUDE ANO |

FIG. 64

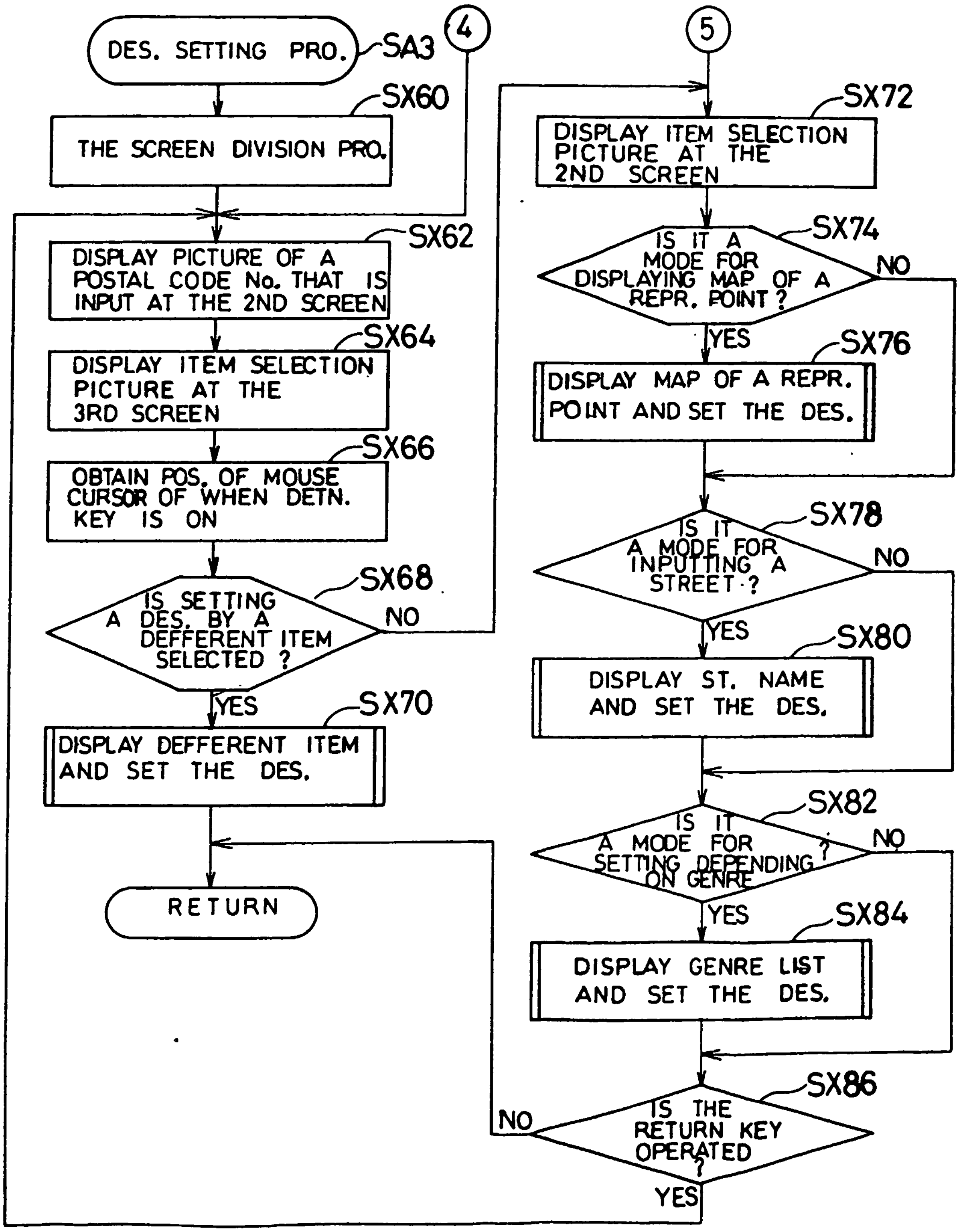
DES. SETTING PRO.
SA3
4
5
SX60
THE SCREEN DIVISION PRO.
SX62
DISPLAY PICTURE OF A POSTAL CODE No. THAT IS INPUT AT THE 2ND SCREEN
SX64
DISPLAY ITEM SELECTION PICTURE AT THE 3RD SCREEN
SX66
OBTAIN POS. OF MOUSE CURSOR OF WHEN DETN. KEY IS ON
SX68
IS SETTING A DES. BY A DEFFERENT ITEM SELECTED ?
NO
YES
SX70
DISPLAY DEFFERENT ITEM AND SET THE DES.
RETURN
SX72
DISPLAY ITEM SELECTION PICTURE AT THE 2ND SCREEN
SX74
IS IT A MODE FOR DISPLAYING MAP OF A REPR. POINT ?
NO
YES
SX76
DISPLAY MAP OF A REPR. POINT AND SET THE DES.
SX78
IS IT A MODE FOR INPUTTING A STREET ?
NO
YES
SX80
DISPLAY ST. NAME AND SET THE DES.
SX82
IS IT A MODE FOR SETTING DEPENDING ON GENRE ?
NO
YES
SX84
DISPLAY GENRE LIST AND SET THE DES.
SX86
IS THE RETURN KEY OPERATED ?
NO
YES

FIG. 65

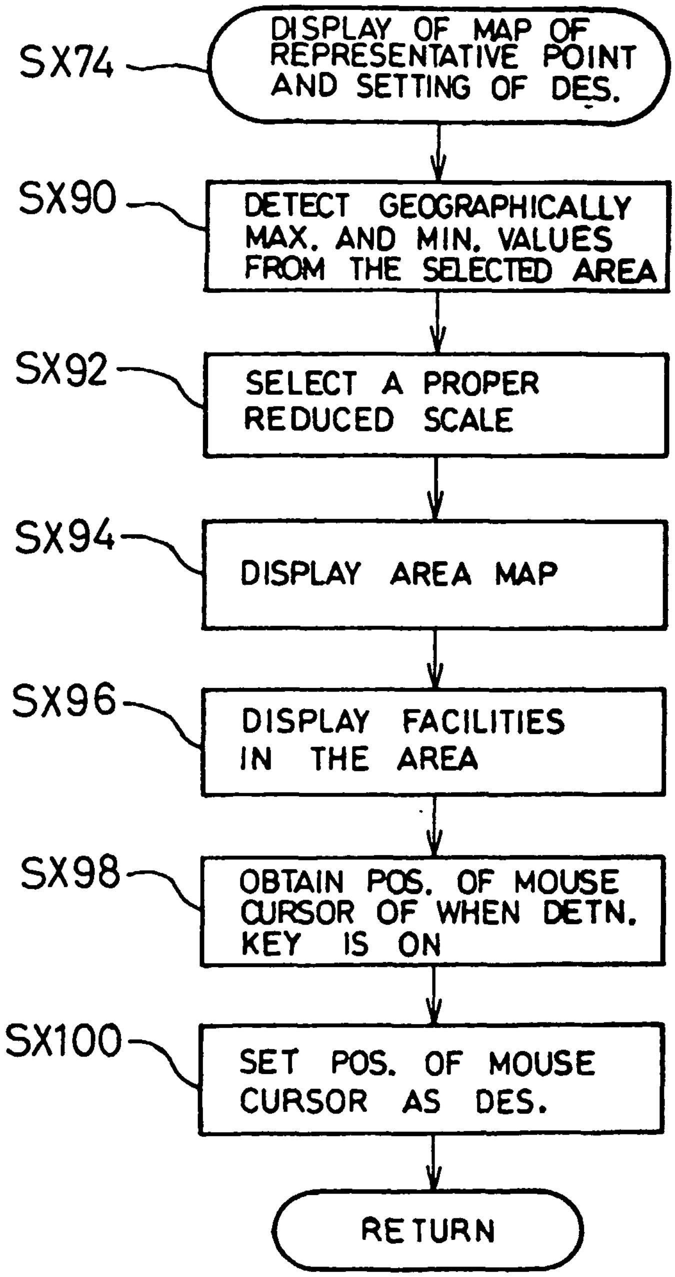
SX74
DISPLAY OF MAP OF REPRESENTATIVE POINT AND SETTING OF DES.
SX90
DETECT GEOGRAPHICALLY MAX. AND MIN. VALUES FROM THE SELECTED AREA
SX92
SELECT A PROPER REDUCED SCALE
SX94
DISPLAY AREA MAP
SX96
DISPLAY FACILITIES IN THE AREA
SX98
OBTAIN POS. OF MOUSE CURSOR OF WHEN DETN. KEY IS ON
SX100
SET POS. OF MOUSE CURSOR AS DES.
RETURN

FIG. 66

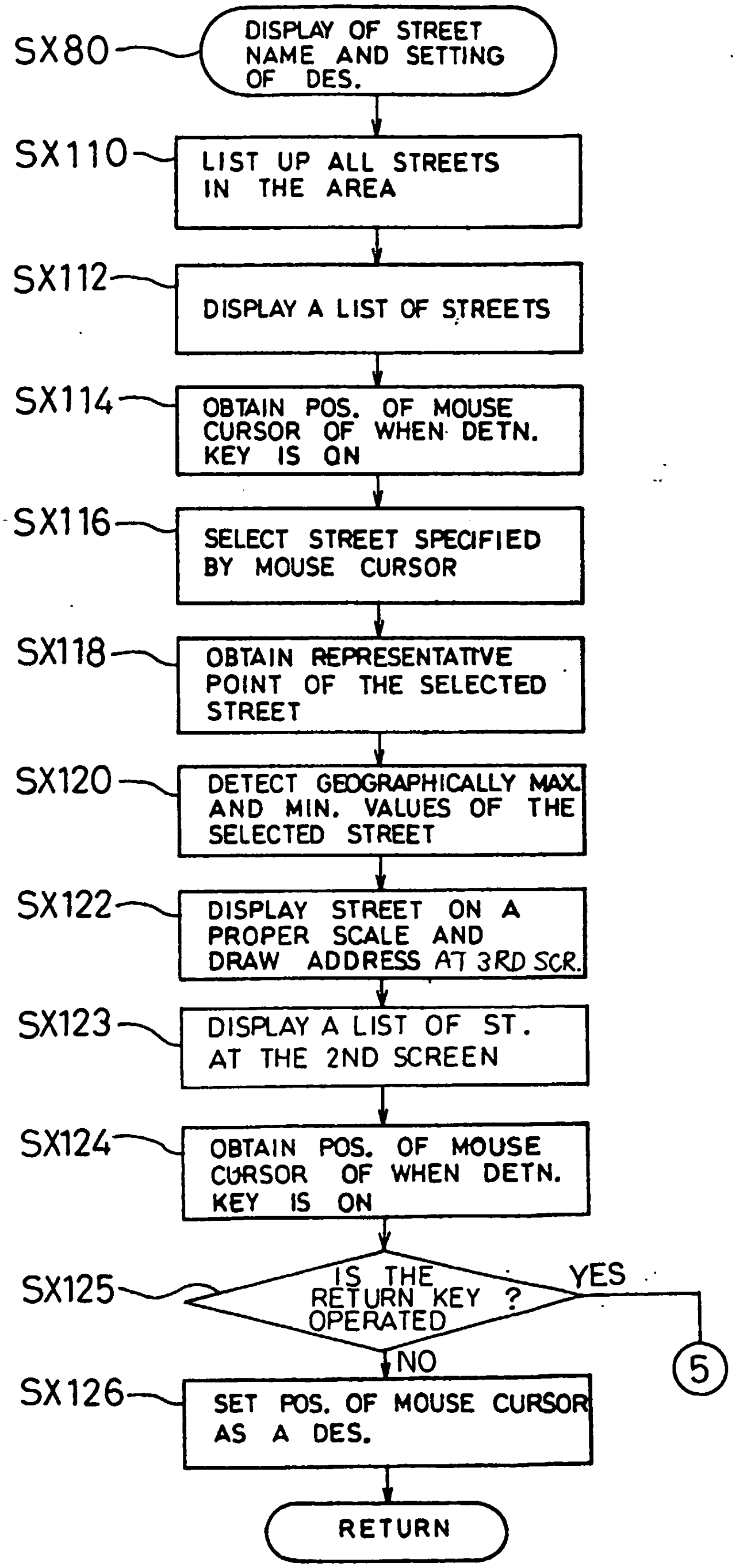
SX80
DISPLAY OF STREET NAME AND SETTING OF DES.
SX110
LIST UP ALL STREETS IN THE AREA
SX112
DISPLAY A LIST OF STREETS
SX114
OBTAIN POS. OF MOUSE CURSOR OF WHEN DETN. KEY IS ON
SX116
SELECT STREET SPECIFIED BY MOUSE CURSOR
SX118
OBTAIN REPRESENTATIVE POINT OF THE SELECTED STREET
SX120
DETECT GEOGRAPHICALLY MAX. AND MIN. VALUES OF THE SELECTED STREET
SX122
DISPLAY STREET ON A PROPER SCALE AND DRAW ADDRESS AT 3RD SCR.
SX123
DISPLAY A LIST OF ST. AT THE 2ND SCREEN
SX124
OBTAIN POS. OF MOUSE CURSOR OF WHEN DETN. KEY IS ON
SX125
IS THE RETURN KEY OPERATED ?
YES
5
NO
SX126
SET POS. OF MOUSE CURSOR AS A DES.
RETURN

FIG. 67

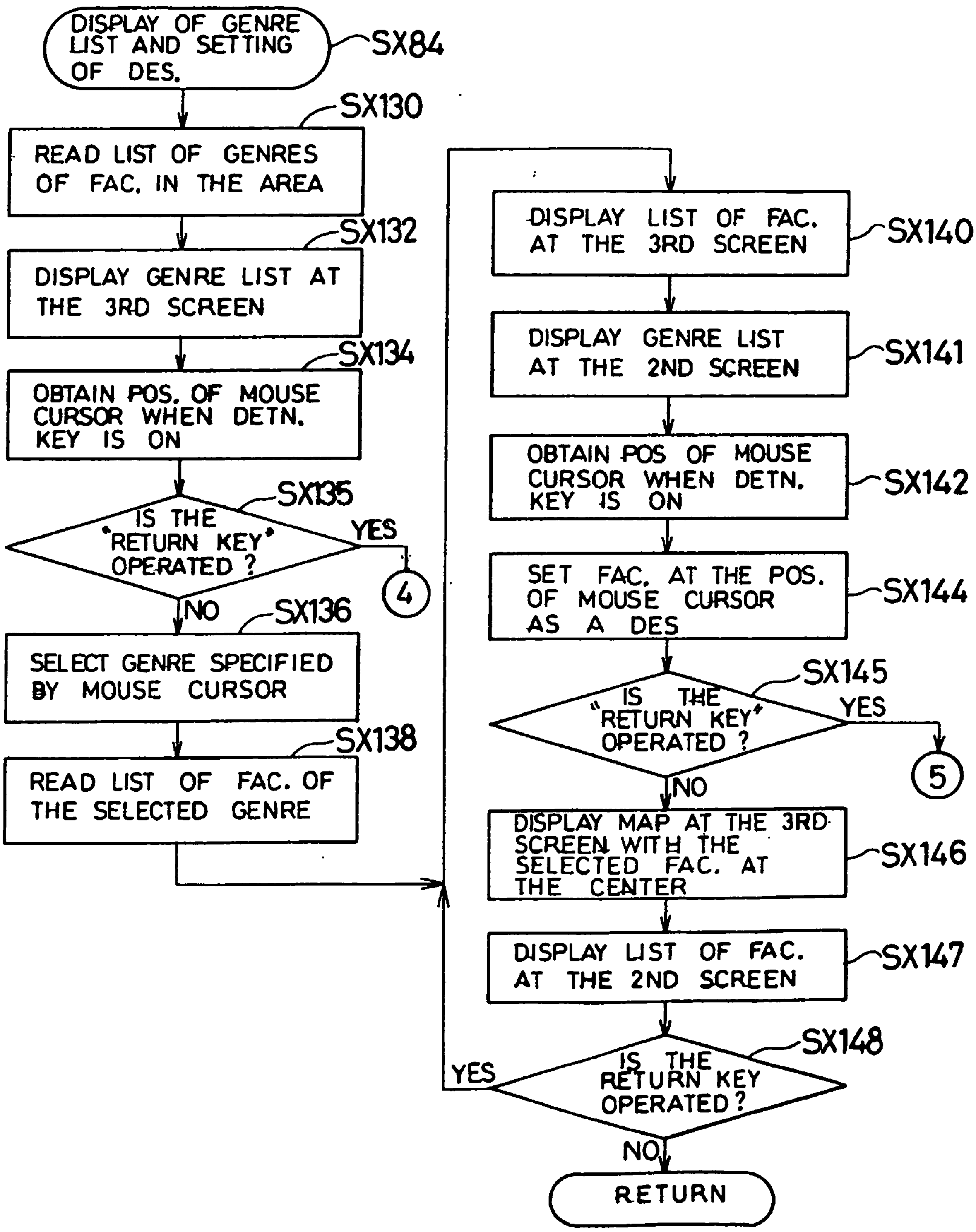
DISPLAY OF GENRE LIST AND SETTING OF DES.
SX84
READ LIST OF GENRES OF FAC. IN THE AREA
SX130
DISPLAY GENRE LIST AT THE 3RD SCREEN
SX132
OBTAIN POS. OF MOUSE CURSOR WHEN DETN. KEY IS ON
SX134
IS THE "RETURN KEY" OPERATED ?
SX135
YES
NO
4
SELECT GENRE SPECIFIED BY MOUSE CURSOR
SX136
READ LIST OF FAC. OF THE SELECTED GENRE
SX138
DISPLAY LIST OF FAC. AT THE 3RD SCREEN
SX140
DISPLAY GENRE LIST AT THE 2ND SCREEN
SX141
OBTAIN POS OF MOUSE CURSOR WHEN DETN. KEY IS ON
SX142
SET FAC. AT THE POS. OF MOUSE CURSOR AS A DES
SX144
IS THE "RETURN KEY" OPERATED ?
SX145
YES
5
NO
DISPLAY MAP AT THE 3RD SCREEN WITH THE SELECTED FAC. AT THE CENTER
SX146
DISPLAY LIST OF FAC. AT THE 2ND SCREEN
SX147
IS THE RETURN KEY OPERATED ?
SX148
YES
NO
RETURN

FIG. 68

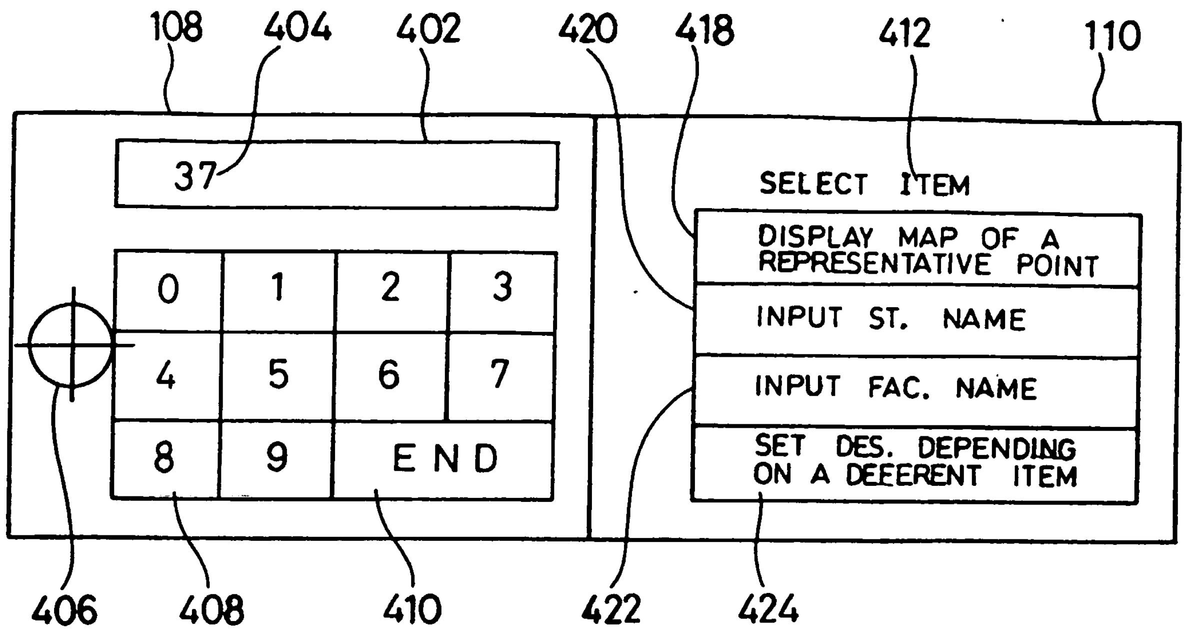
108
404
402
420
418
412
110
37
0
1
2
3
4
5
6
7
8
9
END
SELECT ITEM
DISPLAY MAP OF A REPRESENTATIVE POINT
INPUT ST. NAME
INPUT FAC. NAME
SET DES. DEPENDING ON A DEFERENT ITEM
406
408
410
422
424

FIG. 69

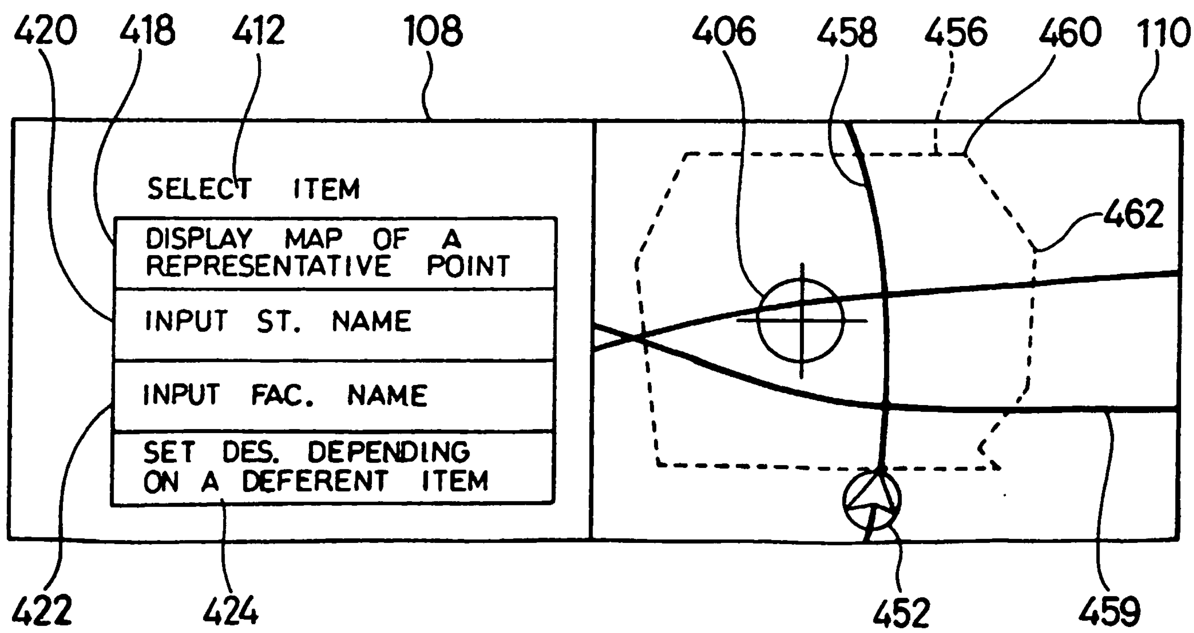
420
418
412
108
406
458
456
460
110
SELECT ITEM
DISPLAY MAP OF A REPRESENTATIVE POINT
INPUT ST. NAME
INPUT FAC. NAME
SET DES. DEPENDING ON A DEFERENT ITEM
462
422
424
452
459

FIG. 70

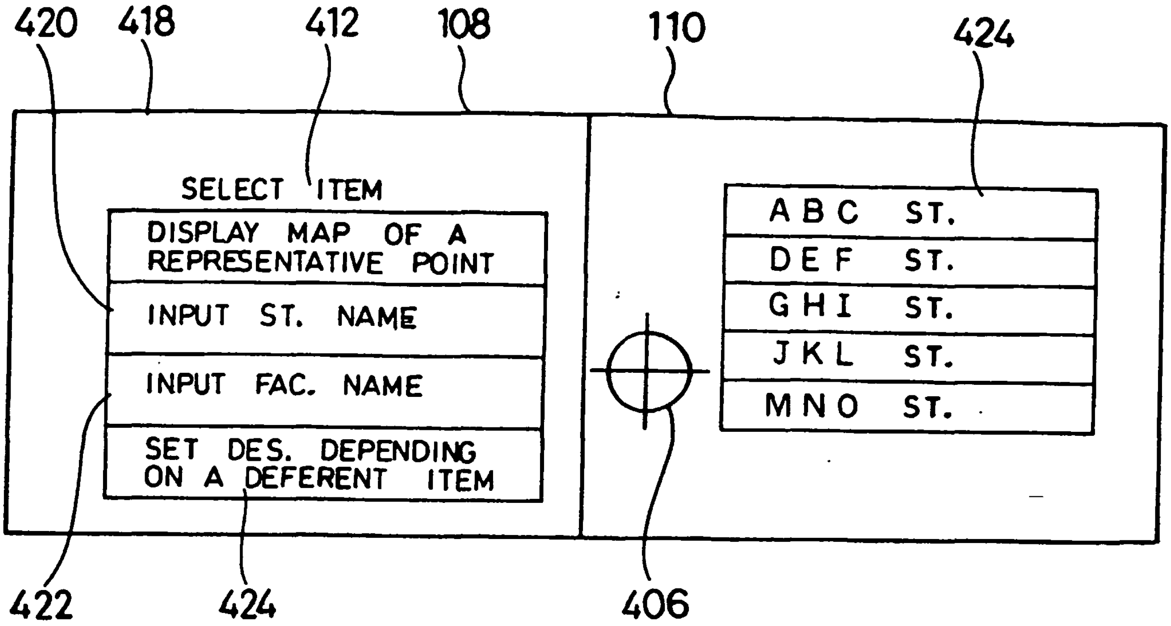
420
418
412
108
110
424
SELECT ITEM
DISPLAY MAP OF A REPRESENTATIVE POINT
INPUT ST. NAME
INPUT FAC. NAME
SET DES. DEPENDING ON A DEFERENT ITEM
ABC ST.
DEF ST.
GHI ST.
JKL ST.
MNO ST.
422
424
406

FIG. 71

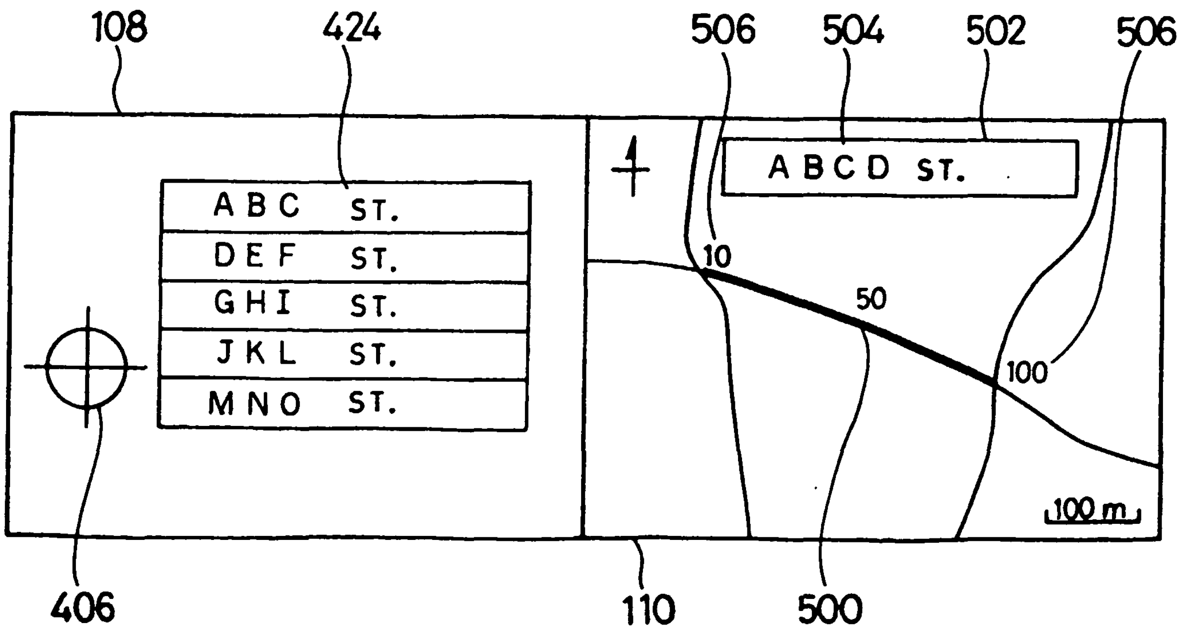
108
424
506
504
502
506
ABC ST.
DEF ST.
GHI ST.
JKL ST.
MNO ST.
ABCD ST.
10
50
100
100 m
406
110
500

FIG. 72

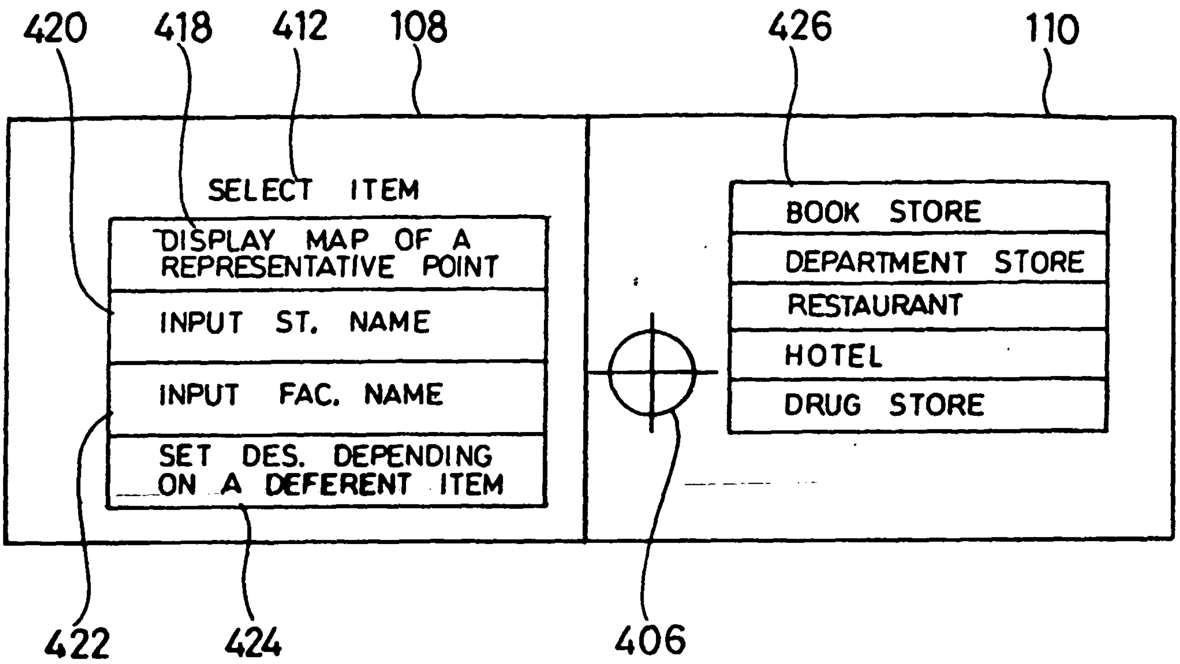
420
418
412
108
426
110
SELECT ITEM
DISPLAY MAP OF A REPRESENTATIVE POINT
INPUT ST. NAME
INPUT FAC. NAME
SET DES. DEPENDING ON A DEFERENT ITEM
BOOK STORE
DEPARTMENT STORE
RESTAURANT
HOTEL
DRUG STORE
422
424
406

FIG. 73

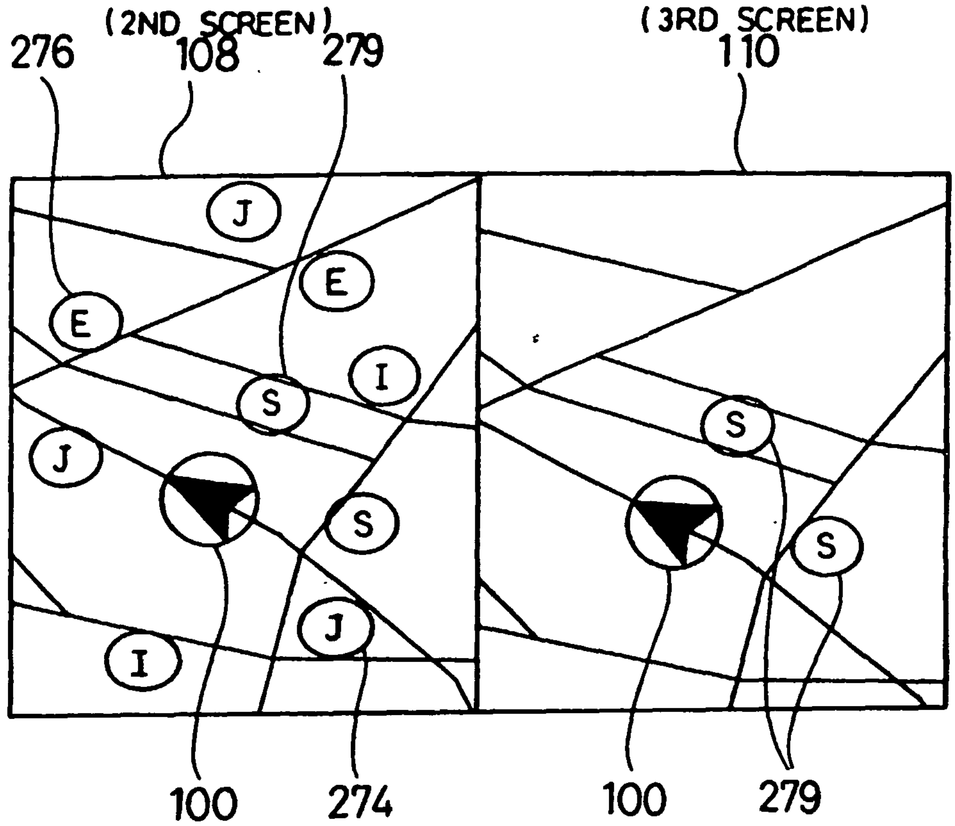
(2ND SCREEN)
(3RD SCREEN)
276
108
279
110
J
E
E
I
S
J
S
J
I
S
S
100
274
100
279